(19) **Europäisches Patentamt / European Patent Office / Office européen des brevets**

(11) **EP 4 686 319 A1**

(12) **EUROPEAN PATENT APPLICATION**
published in accordance with Art. 153(4) EPC

(43) Date of publication:
28.01.2026 Bulletin 2026/05

(21) Application number: 23928041.5

(22) Date of filing: 22.03.2023

(51) International Patent Classification (IPC):
$H04W\ 84/02^{(2009.01)}$    $H04W\ 84/20^{(2009.01)}$

(52) Cooperative Patent Classification (CPC):
H04W 84/02; H04W 84/20

(86) International application number:
PCT/CN2023/083141

(87) International publication number:
WO 2024/192728 (26.09.2024 Gazette 2024/39)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: HUAWEI TECHNOLOGIES CO., LTD.
Shenzhen, Guangdong 518129 (CN)

(72) Inventors:
• WANG, Jun
  Shenzhen, Guangdong 518129 (CN)
• WU, Jianjun
  Shenzhen, Guangdong 518129 (CN)
• PENG, Chenghui
  Shenzhen, Guangdong 518129 (CN)
• WANG, Fei
  Shenzhen, Guangdong 518129 (CN)
• LIU, Zhe
  Shenzhen, Guangdong 518129 (CN)
• HUANG, Huanhuan
  Shenzhen, Guangdong 518129 (CN)
• YAN, Xueqiang
  Shenzhen, Guangdong 518129 (CN)
• ZHAO, Mingyu
  Shenzhen, Guangdong 518129 (CN)
• XI, Yan
  Shenzhen, Guangdong 518129 (CN)
• WU, Shaoyun
  Shenzhen, Guangdong 518129 (CN)
• XING, Weijun
  Shenzhen, Guangdong 518129 (CN)
• LIU, Fei
  Shenzhen, Guangdong 518129 (CN)
• WANG, Donghui
  Shenzhen, Guangdong 518129 (CN)
• SONG, Yurong
  Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **RADIO ACCESS NETWORK ARCHITECTURE AND TERMINAL APPARATUS**

(57)    This application provides a radio access network architecture. In addition to conventional connectivity, the architecture may provide other new features such as computing, data, trustworthiness, and intelligence. These new features are task-based collaboration of cross-node multi-dimensional resources (such as computing, data, an algorithm, and connectivity). Therefore, a centralized inter-station coordination manner can be provided to provide inter-region and intraregion task coordination. The radio access network architecture includes a cluster node and a serving node. The serving node provides task scheduling and executing functions, and the cluster node provides a region-level centralized collaboration function for the serving node and a collaboration function between cross-region cluster nodes. This centralized inter-station coordination manner can improve inter-station collaboration efficiency.

FIG. 6

**Description**

**TECHNICAL FIELD**

Embodiments of this application relate to the communication field, and more specifically, to a radio access network RAN architecture and a terminal apparatus.

**BACKGROUND**

An existing radio access network (radio access network, RAN) architecture, for example, a fifth generation (the fifth generation, 5G) RAN architecture, is a flat architecture. In this architecture, information exchange and negotiation are performed between a base station and a neighboring base station through an Xn interface, that is, distributed collaboration is performed. Inter-station collaboration efficiency is low.

**SUMMARY**

This application provides a radio access network architecture, to improve inter-station collaboration efficiency. In addition, new services can be provided in addition to a connectivity service.

According to a first aspect, a radio access network architecture (or a radio access network device) is provided, is deployed in a radio access network RAN and includes a cluster node and a serving node.

The cluster node is configured to provide a region-level centralized collaboration function for a plurality of serving nodes and a cross-region collaboration function between cluster nodes.

The serving node is configured to provide task scheduling and executing functions.

This technical solution provides a hierarchical RAN architecture. In the RAN architecture, the cluster node (cluster node, cNode) and the serving node (serving node, sNode) jointly form an access network device. The cluster node performs centralized task management and collaboration on serving nodes and supports centralized inter-station collaboration. Compared with a flat RAN architecture, this solution improves inter-station collaboration efficiency.

Optionally, the radio access network architecture in this application may be replaced with descriptions such as a radio access network device, an access network device, a network device, a base station, or an access network apparatus.

Furthermore, this hierarchical RAN architecture can provide connectivity services more efficiently by constructing native (native) collaboration capabilities of integrating and merging multi-dimensional heterogeneous resources. Native capabilities of a network refer to those abilities (or referred to as functions, attributes, or the like) obtained based on intrinsic factors of the network. In addition to basic connectivity services, new services including computing, data, intelligence, and trustworthiness can be also efficiently provided.

In this application, a "region" is a geographical range (that is, a geographical area). The geographical range may be large or small, and may be in a regular or irregular shape, for example, a circle with a specific location as an origin and a radius of 1 km, or a common coverage area of one or more base stations. The cNode may provide centralized collaboration within a region and across regions.

Based on the concept of "region", "cross-region" task collaboration refers to collaboration of tasks in a geographical range corresponding to two or more regions. For example, two base stations in different regions are neighboring cells of each other, and inter-station negotiation needs to be performed across regions to reduce mutual interference.

With reference to the first aspect, in some implementations of the first aspect, the cluster node provides a control plane function for connectivity on an air interface, and the serving node provides a user plane function for connectivity on the air interface; or

the cluster node does not provide a function for connectivity on an air interface, and the serving node provides a control plane function and a user plane function for connectivity on the air interface.

Specifically, this application provides a plurality of options for implementing functions of the foregoing RAN architecture, for example, a connectivity architecture, a task architecture, and a trustworthiness architecture. Based on different RAN architecture options, functions provided by the cluster node and the serving node are different. For details, refer to descriptions in embodiments of this specification.

In this application, the RAN architecture may be a non-SBA based architecture or an SBA based architecture.

With reference to the first aspect, in some implementations of the first aspect, the RAN architecture is a non-service based architecture SBA based architecture;

the non-SBA based architecture includes:

the cluster node and the serving node are connected to each other through a Y1 interface;
the cluster node and another cluster node are connected to each other through a Y2 interface; and

the serving nodes are interconnected through a Y3 interface.

It should be understood that the Y1 interface to the Y3 interface are merely a manner of representing interfaces, the letter "Y" may be replaced with any other letter, and the numbers 1, 2, and 3 are merely used to distinguish between different interfaces. Optionally, these interfaces may also be represented in another manner. For example, the Y1 interface to the Y3 interface may also be represented as a first interface, a second interface, and a third interface respectively. Such an interface representation manner in this specification should not constitute any limitation on the RAN architecture provided in this application. Other interfaces in this specification are similar, for example, a T2 interface to a T9 interface. Details are not described below.

In this application, the non-SBA based RAN architecture is used, and requirements on a plurality of deployment scenarios of a base station may be fully considered. For example, the base station is not deployed on a cloud, or there is no requirement for flexible capacity expansion/reduction.

With reference to the first aspect, in some implementations of the first aspect, the cluster node is connected to a core network through one or more of the following interfaces:

connected to a task control function TCF and a task processing function TPF of the core network through a T2 interface;
connected to the network access function NAF of the core network through a T3 interface; and
connected to a connectivity function-control CF-C of the core network through a T4 interface.

With reference to the first aspect, in some implementations of the first aspect, the serving node is connected to a core network through one or more of the following interfaces:

connected to the network access function NAF of the core network through a T5 interface;
connected to the connectivity function-control CF-C of the core network through a T6 interface; and
connected to a connectivity function-user CF-U of the core network through a T7 interface.

In the foregoing implementation, if the RAN architecture provided in this application uses the non-SBA based architecture, different interfaces are used for connection between cluster nodes, serving nodes, the cluster node and the serving node, and the cluster node or the serving node and different core network elements.

With reference to the first aspect, in some implementations of the first aspect, the RAN architecture is an SBA based architecture; and the SBA based architecture includes:

the cluster node providing a first service-based interface (S-c); and
the serving node providing a second service-based interface (S-s), where
the first service-based interface and the second service-based interface are connected to a service bus of the RAN.

If the RAN architecture provided in this application uses the SBA based architecture, the cluster node and the serving node separately provide a service-based interface, and the cluster node and the serving node separately interact with another network element through their respective service-based interfaces.

The SBA based architecture splits network functions (network functions, NFs), and all NFs can access a communication system through interfaces. Therefore, the SBA based RAN architecture brings the following advantages:

Flexible deployment: NFs are connected through service-based interfaces. The NFs are independent of each other and can be deployed on different servers as required. In addition, the NFs can be independently deployed and maintained.

Simpler capacity expansion/reduction: For capacity expansion, new NFs are only need to be connected to the system, without affecting running of an existing network. For capacity reduction, NFs that can be decommissioned are directly removed from the network.

Easy function expansion: If external service interfaces do not change, functions and performance of an NF can be enhanced and evolved independently without depending on other NFs.

Good openness: Service-based interfaces are used between NFs. Network functions provided by each NF can be invoked by any other network element (or NF). In this way, new NFs can be easily added, which is suitable for NF development and openness.

Reduced maintenance costs: Different NFs are isolated through APIs, facilitating fault locating. The coupling between NFs is low.

Load sharing: Same network functions can be used together to provide network function services, to implement load sharing.

Stronger disaster resilient capability: When a network function is faulty, intelligent network management enables the network function to temporarily exit a service and transfer the service to another network function with a same function, for processing.

With reference to the first aspect, in some implementations of the first aspect, the RAN architecture includes one of the following connectivity architectures:

a first connectivity architecture, where a control plane CP and a user plane UP of an air interface of the first connectivity architecture are separated, the cluster node has a CP function for connectivity, and the serving node has a UP function for connectivity; and

a second connectivity architecture, where a CP and a UP of an air interface of the second connectivity architecture are not separated, the cluster node does not provide a connectivity function, and the serving node provides a CP function for connectivity and a UP function for connectivity.

In this implementation, the RAN architecture may be designed as a connectivity-based architecture. The non-SBA based architecture may specifically further include the first connectivity architecture with CP/UP separated and the second connectivity architecture with CP/UP non-separated.

With reference to the first aspect, in some implementations of the first aspect, the RAN architecture includes a third connectivity architecture, and a CP and a UP of an air interface of the third connectivity architecture are separated;

the cluster node provides the first service-based interface, where the first service-based interface is for invoking by a core network element to transmit control plane signaling for connectivity, and the first service-based interface is further for invoking by another cluster node to provide a mobility signaling function; and

the serving node provides the second service-based interface, where the second service-based interface is for invoking by a core network element to transmit user plane data, and the second service-based interface is further for invoking by another serving node to provide a mobility data forwarding function, where data forwarding between serving nodes is controlled by the cluster node.

With reference to the first aspect, in some implementations of the first aspect, the RAN architecture includes a fourth connectivity architecture, and a CP and a UP of an air interface of the fourth connectivity architecture are not separated;

the serving node provides the second service-based interface, where the second service-based interface is for invoking by a core network element to transmit control plane signaling for connectivity and user plane data; and the second service-based interface is further for invoking by another serving node, to provide mobility signaling exchange and data forwarding functions.

Optionally, the "core network element" in this specification may also be referred to as a network element of a core network, and the network element may also be represented as a node, a function, a network function, a device, or the like. This is not limited.

In the foregoing two implementations, the RAN architecture may be designed as a connectivity-based architecture. The SBA based architecture may be specifically further designed as the third connectivity architecture with CP/UP separated and the fourth connectivity architecture with CP/UP non-separated.

With reference to the first aspect, in some implementations of the first aspect, the RAN architecture is a task architecture for a first function, and the first function includes one or more of computing, data, intelligence, and trustworthiness; and

the task architecture includes:

the cluster node, configured to provide a control plane function and a data processing function of the first function; and

the serving node, configured to provide a part of control plane functions and a part of user plane functions of the first function, where the user plane functions include a task scheduler TS and a task executor TE, where

the cluster node and the serving node perform task management through the Y1 interface, the cluster nodes perform task negotiation through the Y2 interface, the cluster node and a core network element perform task negotiation across network domains through the T2 interface, and the serving nodes perform task signaling or task data exchange between TEs through the Y3 interface.

The "network domain" may be classified into an access network domain, a core network domain, and a network management domain.

In this implementation, in addition to efficiently providing a basic connectivity service, the RAN architecture may further provide new features such as computing, data, intelligence, and trustworthiness. These new services are collectively referred to as the first function in this application. The RAN architecture may be designed as the task architecture based on the new features. Optionally, the task architecture may be specifically designed as a non-SBA based architecture.

With reference to the first aspect, in some implementations of the first aspect, the RAN architecture is a task architecture for a first function, and the first function includes one or more of computing, data, intelligence, and trustworthiness; and

the task architecture includes:

the cluster node provides the first service-based interface, configured to transmit task negotiation signaling and task data across network domains, where the first service-based interface is further configured to be invoked by another cluster node, to transmit task negotiation signaling and task data across regions; and

the serving node provides the second service-based interface, which is used by the cluster node to perform task control signaling exchange and task data transmission for the serving node, where the second service-based interface is further configured to be invoked by another serving node, to perform task data transmission between serving nodes.

In this implementation, the RAN architecture may be designed as a task architecture based on a new feature. Specifically, the task architecture may be designed as an SBA based architecture.

The foregoing task architecture includes the non-SBA based task architecture or the SBA based task architecture. Compared with an existing 5G RAN architecture, native architectural-level support is provided for deep convergence of connectivity, computing, data, and an algorithm (four-element resources). This can coordinate these independent functions and resources in a plurality of facilities, so that on-demand AI, computing, data, and other services can be provided for a network or an application more flexibly, and QoS can be ensured.

With reference to the first aspect, in some implementations of the first aspect, the RAN architecture further includes a trustworthiness engine TWE and a trustworthiness gear TWG, the cluster node includes the TWE and the TWG, and the serving node includes the TWG, where

the TWE is configured to: provide global decision-making and management information of a trustworthiness plane for a network, provide a trustworthiness policy input for the TWG, and activate and manage a trustworthiness service; and

the TWG is configured to receive configuration and management of the TWE to execute a trustworthiness capability.

In this implementation, the RAN architecture may be designed as a trustworthiness architecture based on a trustworthiness plane. In an implementation, the trustworthiness architecture may be specifically designed as a non-SBA based architecture.

With reference to the first aspect, in some implementations of the first aspect, the RAN architecture further includes a trustworthiness enabler function TEF and a trustworthiness gear function TGF, and the TEF and the TGF are separately mounted on the service bus of the RAN;

the TEF is configured to: provide global decision-making and management information of a trustworthiness plane for a network, provide a trustworthiness policy input for the TGF, and activate and manage a trustworthiness service; and the TGF receives configuration and management of the TEF to execute a trustworthiness capability;

the TEF provides a third service-based interface (S-e); and

the TGF provides a fourth service-based interface (S-g), where

both the third service-based interface and the fourth service-based interface provide the following functions:

trustworthiness service invoking, trustworthiness information subscription, and trustworthiness function management.

In this implementation, the RAN architecture may be designed as a trustworthiness architecture based on a trustworthiness plane, and may be specifically designed as an SBA based architecture. Compared with other RAN architectures, the trustworthiness architecture has a new trustworthiness function, and the trustworthiness function is decoupled from the service. This can meet requirements of end-to-end networks and applications for information and network space security, privacy protection, and risk oriented resilience.

With reference to the first aspect, in some implementations of the first aspect, the RAN supports connectivity and the first function excluding the connectivity, and the first function includes one or more of computing, data, and intelligence.

For a relationship between the connectivity and the first function, an air interface protocol stack is designed by using one of the following options:

Option 1: The first function is integrated into a control plane of the connectivity and a user plane of the connectivity.

Option 2: The first function is integrated into the control plane of the connectivity to form a converged control plane, the user plane of the connectivity remains unchanged, and an independent task data plane for the first function is added.
Option 3: A task control plane and a task data plane are added for the first function, and the control plane and the user plane of the connectivity remain unchanged.
Option 4: An independent computing plane, data plane, and intelligence plane are added for the first function, and the control plane and the user plane of the connectivity remain unchanged.

In this implementation, an air interface protocol stack is redesigned, to support the RAN architecture including the cNode/sNode in providing a new service (for example, computing, data, intelligence, AI, and trustworthiness).

In the option 1, all function planes can share one protocol stack, which is easier to implement. In the option 2, the control plane of a new feature is integrated with the control plane of the connectivity, and a user plane of the new feature is designed independently. In the option 3, a protocol stack of a new feature (for example, computing, data, trustworthiness, and intelligent collaboration) is independent of a protocol stack of the connectivity. In the option 4, new features are subdivided. Independent function planes are added for different new features, for example, independent computing planes, data planes, and intelligence planes. The newly added independent function planes are more targeted, are designed more flexibly, and run more efficiently.

For a relationship between new features and connectivity, the foregoing four design manners of the air interface protocol stack, namely, the option 1 to the option 4 exhibit a progression in which functional definitions across various dimensions transition from integrated to independent.

With reference to the first aspect, in some implementations of the first aspect, the Y1 interface includes a Y1 user plane interface Y1-U and a Y1 control plane interface Y1-C;

the Y2 interface includes a Y2 user plane interface Y2-U and a Y2 control plane interface Y1-C;
the Y3 interface includes a Y3 user plane interface Y3-U and a Y3 control plane interface Y3-C;
the T2 interface between the cluster node and the core network includes a T2 user plane interface T2-U and a T2 control plane interface T2-C, where T2-U is an interface between the cluster node and the task processing function TPF of the core network and is configured to transmit task data, and T2-C is an interface between the cluster node and the task control function TCF of the core network and is configured to transmit task signaling;
the T3 interface between the cluster node and the core network includes a T3 control plane interface T3-C, where T3-C is an interface between the cluster node and the network access function NAF of the core network and is configured to transmit connectivity signaling;
the T4 interface between the cluster node and the core network further includes a T4 control plane interface T4-C, configured to transmit connectivity signaling or transparently transmit task signaling;
the T5 interface between the serving node and the core network further includes a T5 control plane interface T5-C, configured to transmit connectivity signaling or transparently transmit task signaling;
the T6 interface between the serving node and the core network further includes a T6 control plane interface T6-C, configured to transmit connectivity signaling or transparently transmit task signaling; and
the T7 interface between the serving node and the core network further includes a T7 user plane interface T7-U, configured to transmit connectivity data or transparently transmit task data.

In this implementation, a network element interface (also referred to as a terrestrial interface) is redesigned, to support the RAN architecture including the cNode/sNode in providing a new service (for example, computing, data, intelligence, AI, and trustworthiness).

With reference to the first aspect, in some implementations of the first aspect, the RAN supports connectivity and the first function excluding the connectivity, and the first function includes one or more of computing, data, and intelligence.

An end-to-end protocol stack uses one of the following options:

Option 1: The first function is integrated into a control plane of the connectivity and a user plane of the connectivity.
Option 2: The first function is integrated into the control plane of the connectivity to form a converged control plane, the user plane of the connectivity remains unchanged, and an independent task data plane for the first function is added.
Option 3: A task control plane and a task data plane are added for the first function, and the control plane and the user plane of the connectivity remain unchanged.
Option 4: An independent computing plane, data plane, and intelligence plane are added for the first function, and the control plane and the user plane of the connectivity remain unchanged.

In this implementation, an end-to-end protocol stack is redesigned, to support the RAN architecture including the cNode/sNode in providing a new feature (for example, computing, data, intelligence, AI, and trustworthiness). For a relationship between new features and connectivity, the foregoing four design manners of the end-to-end protocol stack, namely, the option 1 to the option 4 exhibit a progression in which functional definitions across various dimensions transition from integrated to independent.

With reference to the first aspect, in some implementations of the first aspect, a protocol layer of the air interface includes a layer 2, and the layer 2 includes a sublayer that supports the first function.

In this implementation, the layer 2 of the air interface protocol stack includes the sublayer that supports the first function. Specifically, a new function may be added to an existing function layer, or a sublayer that implements a new function may be added. This is not limited.

With reference to the first aspect, in some implementations of the first aspect, the layer 2 includes at least one of the following sublayers:

a task resource scheduler TRS sublayer;
a task packet data convergence protocol T-PDCP sublayer;
a task service data adaptation protocol T-SDAP sublayer, where
the TRS sublayer provides a logical channel for an RLC sublayer, the T-PDCP sublayer provides a radio bearer for the T-SDAP sublayer, and the T-SDAP provides a quality of service QoS flow for a task and connectivity of the core network;
a task resource data TRD sublayer, where the TRD sublayer includes one or more of the following functions: artificial intelligence AI training, AI inference, and AI model processing, protocol mode parsing and local collaboration parameter processing, procedure execution of a collaboration pattern, and receiving, sending, and processing of collaboration interaction information;
a task PDU sublayer for a task data plane, where the task PDU sublayer is for data transmission of a trustworthiness service between a terminal, the RAN, and the core network;
an RCSP sublayer for a computing plane, functions of the RCSP sublayer include native computing resource addressing, computing data routing and forwarding, computing session identification, and computing session priority;
a DFCP sublayer for an independent data plane, configured to process control signaling and service data of the independent data plane;
an ETP sublayer for an independent trustworthiness plane, configured to process a trustworthiness data packet, where functions of the EIP sublayer further include encryption and decoding, and integrity protection and integrity verification; and
a TBP layer for an independent trustworthiness data plane, for trustworthiness service data transmission between the terminal, the RAN, and the core network, or between the RAN and the core network.

In this implementation, the layer 2 may implement a corresponding function by adding at least one sublayer, to support the RAN architecture in providing one or more new services.

With reference to the first aspect, in some implementations of the first aspect, the protocol layer of the air interface further includes a layer 3, and the layer 3 further includes the sublayer that supports the first function.

In this implementation, the layer 3 of the air interface protocol stack is redesigned, to support the RAN architecture including the cNode/sNode in providing a new service (for example, computing, data, intelligence, AI, and trustworthiness).

With reference to the first aspect, in some implementations of the first aspect, the RAN architecture further provides a trustworthiness function, and the trustworthiness function is decoupled from other functions of the RAN.

In this implementation, to address a conflict that security technologies need to both deeply serve a communication network and evolve independently from the communication network, this application adopts a method for decoupling between security capabilities and network capabilities. To evolve from security to trustworthiness, a method for decoupling between trustworthiness and network capabilities is adopted, enabling continuous advancement and sustained state-of-the-art performance in a trustworthiness capability.

With reference to the first aspect, in some implementations of the first aspect, the RAN architecture provides the first function, a quality of service QoS mechanism of the RAN architecture includes a QoS mechanism for the first function, the QoS mechanism for the first function includes a QoS mechanism on a network side and a QoS mechanism on a terminal side, and the first function includes one or more of computing, data, intelligence, and trustworthiness.

For the first function supported by the RAN architecture (for example, one or more new services such as computing, data, intelligence, and trustworthiness), a QoS mechanism for a task needs to be designed to ensure quality of service QoS evaluation for the task.

According to a second aspect, a terminal apparatus is provided, and includes a control plane protocol stack and a data plane protocol stack, where the control plane protocol stack includes one of the following:

the control plane protocol stack includes a first sublayer, the first sublayer supports transmission of control signaling of a first function, and the first function includes one or more of computing, data, intelligence, and trustworthiness; or

the control plane protocol stack includes a first sublayer, the first sublayer supports transmission of control signaling of a first function and a routing function, and the first function includes one or more of computing, data, intelligence, and trustworthiness; and

the data plane protocol stack of the first function supports an arbitrary routing mechanism.

Based on this technical solution, the terminal device includes the control plane protocol stack and the data plane protocol stack that support the first function (for example, new services such as computing, data, intelligence, and trustworthiness), to provide a terminal side protocol stack design solution in which a RAN architecture supports the first function.

According to a third aspect, this application provides a message transmission method, applied to a wireless communication system, where an access network device in the wireless communication system includes a cluster node and a serving node. The method includes:

The cluster node receives an RRC setup request message from UE, where the RRC setup request message is for requesting to establish an RRC connection for the UE.

The cluster node establishes the RRC connection for the UE.

The cluster node sends an initial UE message to a network access function NAF.

The NAF allocates a corresponding connectivity function-control CF-C to the UE based on the initial UE message.

The UE and the CF-C transmit a non-access stratum NAS message.

Optionally, in an implementation of the third aspect, the method further includes:

The cluster node receives an initial context setup request message from the CF-C.

The cluster node establishes a security configuration and an RRC reconfiguration of the UE.

The cluster node sends an initial context setup response to the CF-C.

Optionally, in an implementation of the third aspect, the method further includes:

The cluster node sends address information of the serving node to the CF-C, where the serving node is a serving node that is selected by the cluster node to serve the UE.

The cluster node sends a context of the UE to the serving node.

The serving node establishes a PDU session of the UE with the CF-C based on the context of the UE.

The serving node performs data transmission with the UE and the CF-C based on the PDU session.

According to a fourth aspect, this application provides a data transmission method, where the method includes:

A connectivity function CF network element receives downlink data of a UE, and buffers the downlink data.

The CF network element determines, based on a connection management CM status of the UE, to page the UE or establish a user plane of the UE.

If the UE is in a CM idle state, the CF network element pages the UE; or

if the UE is in a CM connected state, the CF network element establishes the user plane for the UE.

Optionally, in an implementation of the fourth aspect, the method further includes:

After receiving the paging, the UE initiates a service request procedure to a network.

Optionally, in an implementation of the fourth aspect, the method further includes:

That the CF network element establishes the user plane for the UE includes:

The CF network element sends PDU session information of the UE to a cluster node.

The cluster node selects a serving node for the UE based on the PDU session information.

The serving node establishes the user plane for the UE.

According to a fifth aspect, this application provides a data transmission method, applied to a wireless communication system, where an access network device in the wireless communication system includes a cluster node and a serving node. The method includes:

The cluster node receives an uplink data transmission request from a UE.

The cluster node sends a context of the UE to the serving node corresponding to the UE.

The cluster node allocates a communication resource to the UE, sends scheduling information of the UE to the serving node, and schedules the UE to perform uplink data transmission.

The UE sends uplink data to the serving node.

The serving node receives the uplink data, demodulates the uplink data, and feeds back a data demodulation result to the cluster node.

Optionally, in an implementation of the fifth aspect, the method further includes:

The cluster node determines, based on the data demodulation result, whether to retransmit the uplink data.

Optionally, in an implementation of the fifth aspect, when the cluster node determines to retransmit the uplink data, the method further includes:

The cluster node allocates a retransmission resource, sends scheduling information of the UE to the serving node, and schedules the UE to perform retransmission.

The UE performs uplink data retransmission.

The serving node receives retransmitted data, and performs demodulation.

The serving node sends demodulated retransmission data to a connectivity function CF network element.

According to a sixth aspect, this application provides a data transmission method, where the method includes: A task anchor TA receives a service workflow request.

The TA sends a data request and a computing request to a data storage function DSF and a computing anchor CA respectively based on the service workflow request.

The TA sends a task configuration delivery request of an application function AF to a connectivity function CF of a task-related UE.

The CF establishes a task connection to the corresponding target UE based on the task configuration delivery request.

A task control function TCF sends a task configuration request to a cluster node.

Optionally, in an implementation of the sixth aspect, the method further includes:

The cluster node decomposes a task based on the task configuration request of the TCF, and sends a subtask to UE and/or a serving node corresponding to the task.

The UE and/or the serving node sends feedback of the service workflow request to a service workflow request node via the CF depending on whether to execute the subtask.

According to a seventh aspect, this application provides a task collaboration method, where the method includes: A first cluster node receives a service workflow request.

The first cluster node requests a second cluster node to perform task collaboration.

If the second cluster node accepts the task collaboration, the second cluster node sends a decomposed subtask to a corresponding serving node and/or UE.

The second cluster node feeds back a task collaboration result to the first cluster node.

The second cluster node receives a result of executing the subtask by the corresponding serving node and/or UE, and summarizes execution results of the subtask to obtain a task execution result.

The second cluster node feeds back the task execution result to the first cluster node.

Optionally, the method according to any one of the third aspect to the seventh aspect may be performed by a corresponding node, or may be performed by a chip or a circuit that has a corresponding function of the node. This is not limited in this application. The node is used as an example for description in the foregoing descriptions.

In addition, optionally, the node may be replaced with a device, an entity, a network entity, a communication device, a communication module, a network element, a communication node, or the like. In this application, the device or the node is used as an example for description.

According to an eighth aspect, a communication apparatus is provided, and includes at least one processor. The at least one processor is coupled to at least one memory, and the at least one processor is configured to execute a computer program or instructions stored in the at least one memory, so that the communication apparatus has a function of the radio access network device according to the first aspect or the terminal apparatus according to the second aspect, or so that the communication apparatus performs the method according to any one of the third aspect to the seventh aspect or the implementations thereof.

According to a ninth aspect, a chip is provided, and includes a processor and a communication interface. The communication interface is configured to receive to-be-processed information and/or data, and send the to-be-processed information and/or data to the processor, and the processor is configured to process the to-be-processed information and/or data, so that a communication apparatus in which the chip is installed has a function of the radio access network device according to the first aspect or the terminal apparatus according to the second aspect, or so that the communication apparatus performs the method according to any one of the third aspect to the seventh aspect or the implementations thereof.

According to a tenth aspect, a computer-readable storage medium is provided, where the computer-readable storage medium stores computer instructions. When the computer instructions are run on a computer, a function of the radio access network device according to the first aspect or the terminal apparatus according to the second aspect is implemented, or the method according to any one of the third aspect to the seventh aspect or the implementations thereof is implemented.

According to an eleventh aspect, a computer program product is provided, where the computer program product includes computer program code. When the computer program code is run on a computer, a function of the radio access network device according to the first aspect or the terminal apparatus according to the second aspect is implemented, or the method according to any one of the third aspect to the seventh aspect or the implementations thereof is implemented.

According to a twelfth aspect, a wireless communication system is provided, and includes the radio access network device according to the first aspect. Optionally, the terminal apparatus according to the second aspect is further included.

Optionally, in the third aspect to the eleventh aspect, the radio access network device may include the sNode and/or the cNode in embodiments of this application.

For technical effects of the technical solutions in the third aspect to the twelfth aspect, refer to corresponding descriptions of the first aspect.

## BRIEF DESCRIPTION OF DRAWINGS

FIG. 1 is a diagram of a flat RAN architecture;

FIG. 2 is a diagram of an architecture of a communication system to which an embodiment of this application is applicable;

FIG. 3 is a diagram of a RAN architecture according to this application;

FIG. 4 is a diagram of a design paradigm change of a RAN architecture according to this application;

FIG. 5 is a diagram of comparison between a Hic collaboration scenario and collaboration triggered for connectivity;

FIG. 6 is a diagram of an overall system architecture applicable to this application;

FIG. 7 is a diagram of an overall architecture and interfaces of a non-SBA based RAN;

FIG. 8 is a diagram of an overall architecture and interfaces of an SBA based RAN;

FIG. 9 is a diagram of a non-SBA based connectivity architecture 1;

FIG. 10 is a diagram of a non-SBA based connectivity architecture 2;

FIG. 11 is a diagram of data transmission of a UE in a non-SBA based connectivity architecture;

FIG. 12 is a diagram of inter-station negotiation in a non-SBA based connectivity architecture;

FIG. 13 is a diagram of inter-station negotiation in an SBA based connectivity architecture 1;

FIG. 14 is a diagram of inter-station negotiation in an SBA based connectivity architecture 2;

FIG. 15 is a non-SBA based task architecture;

FIG. 16 is a diagram of task signaling and task data exchange between network elements;

FIG. 17 is a diagram of task signaling and task data exchange between network elements of an air interface;

FIG. 18 is a diagram of task signaling and task data exchange at a T-NAS;

FIG. 19 shows an SBA based task architecture;

FIG. 20 is a diagram of a terrestrial interface of a non-SBA based trustworthiness architecture;

FIG. 21 is a diagram of trustworthiness signaling exchange between a UE, an AN, and a CN in a non-SBA based trustworthiness architecture;

FIG. 22 is a diagram of an SBA based trustworthiness architecture;

FIG. 23 is a diagram of function division of a cNode and an sNode;

FIG. 24 is a diagram of a RAN architecture and service function plane options according to this application;

FIG. 25 shows two designs of a control plane protocol stack;

FIG. 26 is a diagram of a design of a data plane protocol stack for a routing layer;

FIG. 27 is a diagram of a relationship between a trustworthiness function plane and a service feature;

FIG. 28 is a diagram of a control plane protocol stack-task signaling (distributed T-NAS: RAN connectivity architecture 1);

FIG. 29 is a diagram of a control plane protocol stack-task signaling (distributed T-NAS: RAN connectivity architecture 2);

FIG. 30 is a diagram of a control plane protocol stack-task signaling (centralized T-NAS);

FIG. 31 is a diagram of a user plane protocol stack-task data;

FIG. 32 is a diagram of a control plane protocol stack-connectivity signaling;

FIG. 33 is a diagram of a user plane protocol stack-connectivity data;

FIG. 34 is a diagram of an independent computing plane protocol stack-computing plane data;

FIG. 35 is a diagram of an independent data plane protocol stack-data plane signaling;

FIG. 36 is a diagram of an independent data plane protocol stack-data plane data;

FIG. 37 is a diagram of an independent trustworthiness plane protocol stack-trustworthiness plane signaling;

FIG. 38 is a diagram of an independent trustworthiness plane protocol stack-trustworthiness plane data;

FIG. 39 is a diagram of a user plane protocol stack of a terrestrial interface;

FIG. 40 shows Y1-C and Y1-U protocol stacks;

FIG. 41 shows Y2-C and Y2-U protocol stacks;

FIG. 42 shows Y3-C and Y3-U protocol stacks;

FIG. 43 shows T2-U and T2-C protocol stacks;

FIG. 44 shows a T3-C protocol stack;

FIG. 45 shows a T4-C protocol stack;

FIG. 46 shows a T5-C protocol stack;

FIG. 47 shows a T6-C protocol stack;

FIG. 48 shows a T7-U protocol stack;

FIG. 49 shows T8-C and T8-U protocol stacks;

FIG. 50 shows T9-C and T9-U protocol stacks;

FIG. 51 shows SC-C and SC-U protocol stacks;

FIG. 52 shows SS-C and SS-U protocol stacks;

FIG. 53 shows an S-e protocol stack;

FIG. 54 shows an S-g protocol stack;

FIG. 55 is a diagram of an inter-UE/RAN task-end-to-end control plane protocol stack (connectivity architecture 1);

FIG. 56 is a diagram of an inter-UE/RAN task-end-to-end user plane protocol stack (connectivity architecture 1) for an;

FIG. 57 is a diagram of an inter-UE/RAN task-end-to-end control plane protocol stack (connectivity architecture 2) for an;

FIG. 58 is a diagram of an inter-UE/RAN task-end-to-end user plane protocol stack (connectivity architecture 2) for an;

FIG. 59 is a diagram of an inter-UE/CN task-end-to-end control plane protocol stack (task architecture 1a) for an;

FIG. 60 is a diagram of an inter-UE/CN task-end-to-end control plane protocol stack (task architecture 1b) for an;

FIG. 61 is a diagram of an inter-UE/CN task-end-to-end user plane protocol stack (task architecture 1a/1b) for an;

FIG. 62 is a diagram of an inter-UE/CN task-end-to-end control plane protocol stack (task architecture 2a/2b) for an;

FIG. 63 is a diagram of an inter-UE/CN task-end-to-end user plane protocol stack (task architecture 2a/2b) for an;

FIG. 64 is a diagram of an inter-CN/RAN task-end-to-end control plane protocol stack for an;

FIG. 65 is a diagram of an inter-CN/RAN task-end-to-end user plane protocol stack for an;

FIG. 66 is a diagram of an inter-RAN/RAN task-end-to-end control plane protocol stack for an;

FIG. 67 is a diagram of an inter-RAN/RAN task-end-to-end user plane protocol stack for an;

FIG. 68 is a diagram of a connectivity-end-to-end control plane protocol stack;

FIG. 69 is a diagram of a connectivity-end-to-end user plane protocol stack;

FIG. 70 is a diagram of an end-to-end computing plane protocol stack-computing plane data;

FIG. 71 is a diagram of an end-to-end data plane protocol stack-computing plane signaling;

FIG. 72 is a diagram of an end-to-end data plane protocol stack-data plane data;

FIG. 73 is a diagram of hierarchical collaboration of an independent intelligence plane;

FIG. 74 is a diagram of an end-to-end trustworthiness plane protocol stack-trustworthiness plane signaling;

FIG. 75 is a diagram of an end-to-end trustworthiness plane protocol stack-trustworthiness plane data;

FIG. 76 is a diagram of a connectivity data flow;

FIG. 77 is a diagram of a task data flow;

FIG. 78 is a diagram of an independent data plane-data flow;

FIG. 79 is a diagram of an independent trustworthiness plane-data flow;

FIG. 80 is a diagram of system information broadcast;

FIG. 81 shows three solutions for obtaining a connectivity anchor identifier by a task anchor;

FIG. 82 shows two solutions for a connectivity anchor to obtain a task anchor identifier;

FIG. 83 is a diagram of three manners of computing allocation;

FIG. 84 is a diagram of a logical relationship between AI use case generation, an AI service, and an AI task according to this application;

FIG. 85 shows a task-centric three-layer closed loop;

FIG. 86 shows a mapping relationship between QoS in each QoAIS indicator dimension and QoS in each resource dimension;

FIG. 87 is a diagram of core features of a task-centric architecture;

FIG. 88 is a diagram of a task-centric key technology;

FIG. 89 is a panorama of a task-centric key technology;

FIG. 90 shows impact of a task-centric framework on an interface;

FIG. 91 is a task-centric logical architecture and functions;

FIG. 92 is a deployment manner of task-centric network AI;

FIG. 93 is a diagram of a task deployment and execution procedure;

FIG. 94 is a diagram of task deployment;

FIG. 95 is a diagram of a task deployment manner for a UE in a connected state;

FIG. 96 is a diagram of a task deployment manner for a UE in an idle state;

FIG. 97 shows an interface and a protocol stack that are affected by a task;

FIG. 98 a diagram of split inference (split inference);

FIG. 99 is a diagram of AI task attributes;

FIG. 100 is a diagram of task mobility;

FIG. 101 is a diagram of a difference between single-point task configuration and collaborative task configuration;

FIG. 102 is a diagram of a collaborative task configuration solution;

FIG. 103 is a diagram of another collaborative task configuration solution;

FIG. 104 is a diagram of inter-executor configuration;

FIG. 105 is a diagram of multipath reporting for a collaborative AI task;

FIG. 106 is a diagram of an interaction scenario of task information for a collaborative AI task;

FIG. 107 shows some possible manners of carrying task data (a T-SRB/T-DRB carrying the task data);

FIG. 108 is a diagram of a task data reporting solution in a CU/DU separation and CP/UP separation scenario;

FIG. 109 is a diagram of a solution in which task data is carried by a T-DRB;

FIG. 110 is a diagram of real-time adjustment of four elements of a task when a task environment changes;

FIG. 111 is a diagram of task data transmission (task data transmission of UE in an idle state) when a task is completed;

FIG. 112 is a diagram of task data transmission (a RAN triggers a CN to perform paging) when a task is completed;

FIG. 113 is a schematic flowchart of task adjustment in a case in which a terminal performs handover;

FIG. 114 is a diagram of real-time collaboration of four elements of a task;

FIG. 115 is a diagram of task context migration in a handover scenario;

FIG. 116 is a diagram of obtaining a task configuration of a neighboring cell in advance in a UE movement scenario;

FIG. 117 is a diagram of obtaining an AI model of a neighboring cell in a UE movement scenario;

FIG. 118 is a diagram of AI model broadcast of a neighboring cell;

FIG. 119 is another diagram of AI model broadcast of a neighboring cell;

FIG. 120 is another diagram of AI model broadcast of a neighboring cell;

FIG. 121 is a diagram of a low frequency assisting a high frequency under control and data node separation;

FIG. 122 is a diagram of a low frequency assisting a high frequency under control and data node separation;

FIG. 123 is a diagram of multi-RAT aggregation under control and data node separation;

FIG. 124 is a diagram of multi-RAT aggregation (TRS layer offloading) under control and data node separation;

FIG. 125 is a diagram of a network topology under control and data node separation;

FIG. 126 is a diagram of uplink and downlink node separation;

FIG. 127 is a diagram of uplink and downlink spectrum separation;

FIG. 128 is a diagram of flexible carrier transmission under uplink and downlink spectrum separation;

FIG. 129 is a diagram of coordinated carriers under uplink and downlink spectrum separation;

FIG. 130 is a diagram of control, execution, and transmission on a computing plane;

FIG. 131 shows an example of computing state reporting;

FIG. 132 is a diagram of adjusting a model splitting point in real time;

FIG. 133 shows a computing session protocol stack;

FIG. 134 is a diagram of computing plane mobility;

FIG. 135 is a diagram of an overall framework of a data plane;

FIG. 136 is a diagram of a data pipeline (data pipeline) formed by an orchestration function module of a DA controller;

FIG. 137 is a diagram of a data pipeline;

FIG. 138 shows three link modes of a data plane bearer DDRB;

FIG. 139 shows three modes of data forwarding on a data plane;

FIG. 140 shows an example of a DFCP-U protocol layer format design of a data plane;

FIG. 141 shows another example of a DFCP-U protocol layer format design of a data plane;

FIG. 142 is a diagram of data plane mobility;

FIG. 143 is a diagram of a HiC collaboration scenario;

FIG. 144 is a diagram of efficient organization of Hic;

FIG. 145 is a diagram of a logical function architecture of Hic;

FIG. 146 shows a Hic deployment architecture;

FIG. 147 is a diagram of a Hic deployment architecture based on a RAN architecture according to this application;

FIG. 148 is a diagram of a dropout descriptor;

FIG. 149 is a diagram of delivering a dropout descriptor by a network;

FIG. 150 is a diagram of reporting a dropout descriptor by a UE;

FIG. 151 is a diagram of a downlink transmission descriptor;

FIG. 152 is a diagram of a data feature measurement process;

FIG. 153 is a diagram of transition from centralized core network control to multi-party equilibrium trust;

FIG. 154 is a diagram of an E2E initial access procedure;

FIG. 155 is a diagram of a service request procedure initiated by a network side in a connectivity procedure;

FIG. 156 is a diagram of a data receiving and sending procedure in a connectivity procedure;

FIG. 157 is a diagram of a task delivery procedure;

FIG. 158 is another diagram of a task delivery procedure;

FIG. 159 is a diagram of a communication apparatus according to this application; and

FIG. 160 is another diagram of a communication apparatus according to this application.

## DESCRIPTION OF EMBODIMENTS

The following describes technical solutions of embodiments in this application with reference to accompanying drawings.

First, related technologies and concepts in this application are briefly described.

A base station is a radio base station in a network, is also a network element in a radio access network, and is responsible for all functions related to an air interface, including but not limited to the following functions:

(1) radio link maintenance function: maintaining a radio link to a terminal, and responsible for protocol conversion between radio link data and IP data;

(2) radio resource management function, including radio link setup and release, radio resource scheduling and allocation, and the like; and

(3) a part of mobility management functions, including configuring a terminal to perform measurement, evaluating radio link quality of the terminal, determining inter-cell handover of the terminal, and the like.

The base station may send a signal to a terminal device, or may receive a signal from the terminal device.

An operator or a network management system, for example, a public land mobile network (public land mobile network, PLMN), is a network established and operated by a government or an operator approved by the government for a purpose of providing a land mobile communication service for the public, and may be, for example, China Mobile, China Unicom, and China Telecom.

A terminal device is also referred to as a user equipment (user equipment, UE) or a mobile station, and may be vehicle-mounted, portable, handheld, or the like. A physical device and a mobile user may be completely independent of each other. All user-related information may be stored in a subscriber identity module (subscriber identity module, SIM) card, and the card may be used on the mobile station. The terminal may complete direct air interface interaction with a base station. The terminal may send a signal and/or receive a signal, and for example, is referred to as a transmitting-end UE and a receiving-end UE.

Core network: Simply, a mobile network may be divided into three parts: a base station subsystem, a network subsystem, and a system support part (for example, security management). The core network is included in the network subsystem. A main function of the core network is to forward call requests or data requests from an air interface to different networks.

Main functions of the core network are to provide a user connection, manage a user, and complete service carrying, and the core network serves as a bearer network to provide an interface to an external network. Establishment of the user connection includes one or more functions such as mobility management (mobility management, MM), calling management (calling management, CM), switching/routing, and recording notification (implementing a connection relationship to an intelligent network peripheral device based on an intelligent network service). The user management includes a user description, quality of service (quality of service, QoS), user accounting (Accounting), a virtual home environment (virtual home environment, VHE) (providing a virtual home environment through a dialog with an intelligent network platform), and security (where an authentication center provides corresponding security measures, including security management for a mobile service and security processing for external network access). The bearer access includes a public switched telephone network (public switched telephone network, PSTN) to the outside, an external circuit data network and a packet data network, an internet (Internet), an enterprise intranet (Intranet), and a short message service (short message service, SMS) server. The core network can also provide basic services including mobile office, e-commerce, communication, entertainment services, travel and location-based services, telemetry (telemetry), simple message transfer services (monitoring and control), and the like.

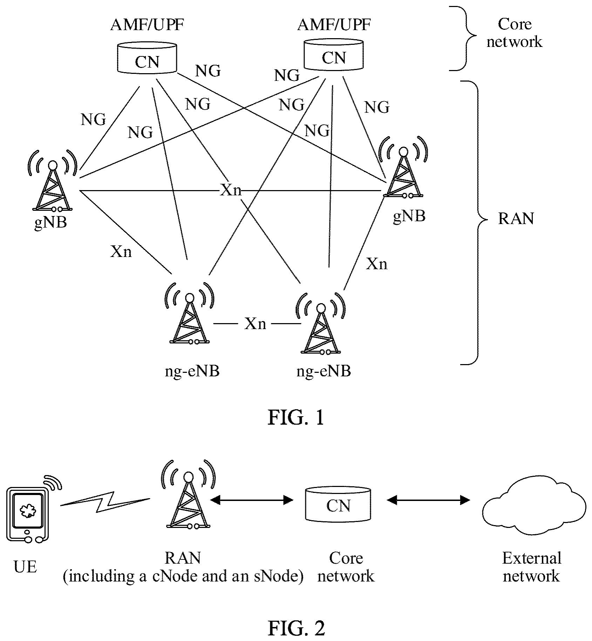

FIG. 1 is a diagram of a 5G RAN architecture. As shown in FIG. 1, the 5G RAN architecture is a flat architecture. A base station performs information exchange and negotiation with a neighboring base station through an Xn interface. Inter-station interaction and negotiation are distributed, or in other words, in a flat architecture. Therefore, inter-station negotiation efficiency is low.

The following describes the technical solutions provided in this application.

Network elements in embodiments of this application relate to a RAN node and a terminal. The RAN node may send a signal and/or data to the terminal, or may receive a signal and/or data from the terminal. The terminal may receive a signal and/or data from the RAN node, or may send a signal and/or data to the RAN node. The RAN node may specifically include a cluster node and a serving node in the following embodiments. For details, refer to the following descriptions.

Embodiments of this application are applicable to both a homogeneous network scenario and a heterogeneous network scenario. In addition, a transmission reception point is not limited. Coordinated multi-point transmission may be performed between macro base stations, between micro base stations, or between a macro base station and a micro base station. Embodiments of this application are applicable to both an FDD system/a TDD system. In addition, embodiments of this application are further applicable to a low-frequency scenario (sub 6G), a high-frequency scenario (above 6G), terahertz, optical communication, and the like.

Embodiments of this application are applicable to a 5G communication system, a 6G communication system, a future evolved communication system, another communication system, or the like. This is not limited in this application. This application is not only applicable to communication between an access network device and a terminal, but also applicable to communication between access network devices, communication between terminals, communication in an internet of vehicles, communication in an internet of things, communication in an industrial internet, and the like. In the following embodiments of this application, communication between a terminal and an access network device is used as an example for description.

FIG. 2 is a diagram of an architecture of a communication system to which an embodiment of this application is applicable. For example, the architecture may include a RAN, a terminal, a core network (core network, CN), and the like. In addition, an external network may be further included. The RAN is a RAN provided in this application, or is referred to as a RAN node, a RAN device, an access network device, or the like, and may include a cluster node and a serving node. For details, refer to the following descriptions.

The following describes in detail a RAN architecture provided in this application.

In addition to a basic connectivity service, the RAN provided in this application further needs to provide one or more of various new service capabilities (collectively referred to as a first function in this specification) such as computing, data, trustworthiness, intelligence, and sensing, to effectively enable everything as a service (everything as a service, XaaS) in a future communication system. The connectivity service is a service corresponding to a connectivity function provided inside and outside a network, for example, network access, link setup, link closing, a resource scheduling or allocation control policy, and quality of service (quality of service, QoS). Therefore, a future communication system needs to construct native collaboration capabilities of integrating and merging multi-dimensional heterogeneous resources to efficiently provide new service capabilities. This drives reconstruction of a future radio access network (radio access network, RAN) architecture.

Therefore, this application provides a hierarchical RAN architecture, to provide a conventional connectivity service and a new service other than the connectivity service more efficiently. The new service may also be referred to as a new feature. Specifically, the RAN system includes a cluster node (cluster node, cNode) and a serving node (serving node, sNode). The cNode and the sNode jointly form an access network device (or a base station). The hierarchical architecture brings the following benefits:

(1) For connectivity:

(a) On an air interface, control signaling and data of a UE can be separated (high and low frequencies).
(b) Inter-station negotiation: Centralized inter-station negotiation replaces distributed inter-station negotiation, improving collaboration efficiency.

(2) For tasks: The cNode centrally manages and collaborates computing, data, and connectivity resources of the sNode, achieving wider collaboration scope and higher efficiency.
(3) For trustworthiness: The cNode provides centralized trust guarantees for the sNode.

An overall architecture and function division of the RAN architecture are first described.

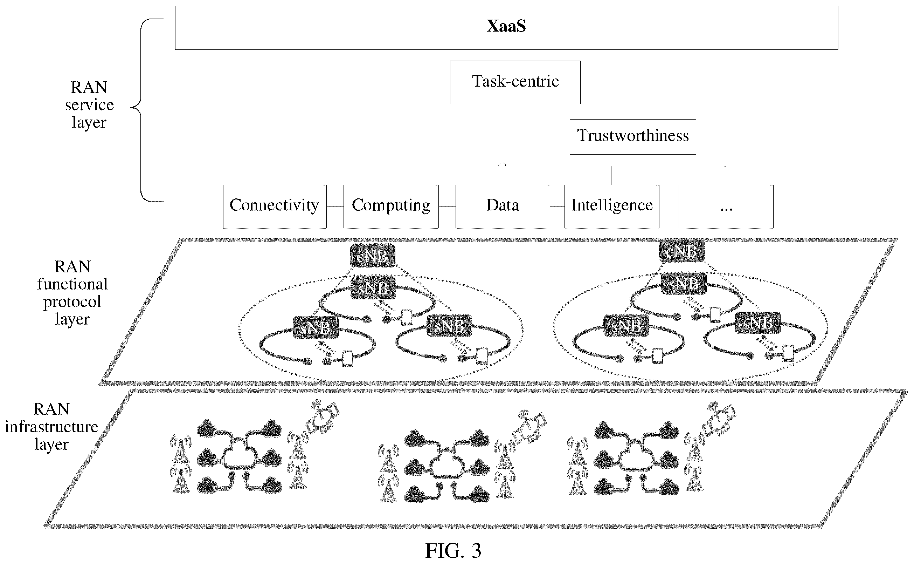

FIG. 3 is a diagram of a RAN architecture according to this application. Main functions of the RAN architecture are classified into the following three layers:

(1) RAN service layer: In addition to providing a conventional connectivity service, the RAN service layer mainly provides various new service capabilities such as a computing service, a data service, an intelligent service, a trustworthiness service, and an artificial intelligence (artificial intelligence, AI) service for a CN network element and a terminal user in a network, thereby further enriching a future network system, for example, a service capability of a sixth generation (the 6th generation, 6G).
(2) RAN function protocol layer: To support provision of the foregoing XaaS service, in addition to implementing a conventional connection capability, the RAN function protocol layer further needs to securely and efficiently coordinate various distributed heterogeneous resources (for example, computing, data, and AI models) provided by a RAN infrastructure layer, and support, in a form of tasks, the RAN service layer in providing these new service capabilities in the network. To this end, the RAN function protocol layer will add a new function plane that coordinates with a control plane and a user plane of the conventional connectivity, to efficiently manage and control multi-dimensional resources provided by the RAN infrastructure layer, thereby providing new service functions beyond the connectivity and providing a QoS guarantee for these new service functions.
(3) RAN infrastructure layer: includes multi-band spectrum resources, distributed computing resources, storage resources, ubiquitous access facilities supporting air-space-ground-sea full-scenario coverage, reconfigurable smart surfaces, sensing facilities, and various types of terminals.

RAN services implement multi-type resource and multi-node resource coordination and a service QoS guarantee in a form of tasks. This eventually brings new dimensions to future wireless communication networks (from a single dimension of connectivity services to new dimensions of services such as connectivity, computing, data, intelligence, trustworthiness, algorithm, and sensing services encapsulated and provided in a form of tasks). This implements service level agreement (service level agreement, SLA) guarantees for various AI, sensing, computing, and data services, thereby further expanding an application scenario of a wireless communication network.

The following describes core impact of the solutions provided in this application on the RAN architecture from a plurality of aspects such as tasks, computing, data, intelligence, and trustworthiness.

(1) Task

In a task-centric network architecture, a network AI orchestration function, a task control function, and a task resource layer are newly introduced. The task control function is to perform real-time control on a plurality of nodes (such as a UE, a base station, and a core network element) and four-element resources (namely, connectivity, computing, data, and an algorithm) at a resource layer in a manner of control plane signaling. Task-centric is a native network AI architecture, which makes it possible to efficiently execute AI tasks on the network.

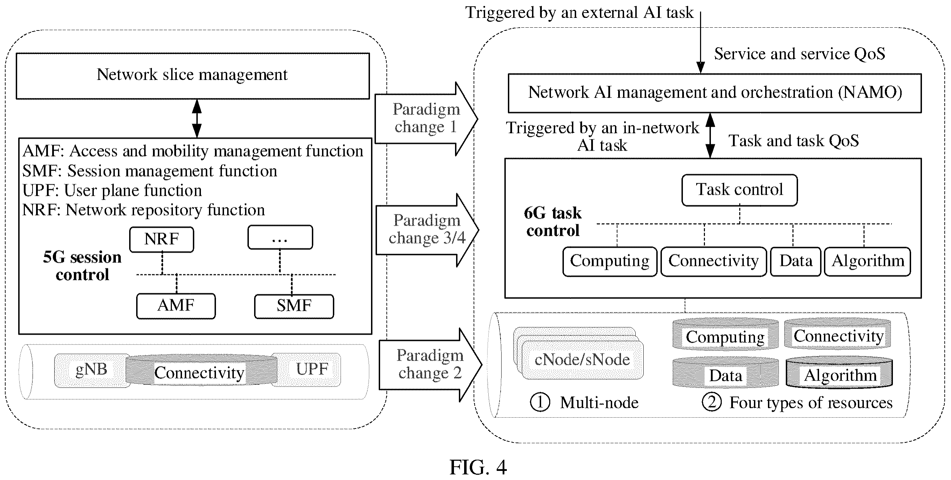

FIG. 4 is a diagram of a task architecture change. As shown in FIG. 4, due to introduction of a task, the network architecture provided in this application needs to implement the following key transformations in terms of design paradigm:

Change 1: Control objects in a wireless network system are changed from "session" to "task".
Change 2: Control resources are changed from connectivity resources to four-element resources: connectivity, computing, data, and an algorithm.
Change 3: "Session control" is changed to "task control".
Change 4: "Session QoS" is changed to "task QoS".

(2) Computing

Nodes in the 6G infrastructure provide a basic connectivity function (connectivity function, CF) and an additional computing function. To efficiently use communication resources and computing resources, a communication resource status and a computing resource status need to be sensed in real time, and the communication resources and the computing resources need to be coordinated and controlled, to ensure that QoS requirements such as end-to-end ultra-low latency, high data security and privacy, and sustainable energy saving for future new services are met in a dynamic and complex wireless network environment. Deep convergence of communication and computing can better implement new capabilities (such as native intelligence and ubiquitous sensing) of a communication network (such as a 6G network) and new services (such as immersive extended reality (extended reality, XR), digital twin, and cloud universe).

(3) Data

An existing 5G communication network is constructed based on a session. A user plane of the 5G communication network is for carrying session data, and cannot support "on-path computing" and "any topology" required by a 6G data bearer. The user plane cannot carry a new data type of a 6G network. Therefore, a new data function is introduced in this application.

The new data function provides trustworthiness data services for applications and users, and mainly provides eight types of data services. Service descriptions of the eight types of data services are generally as follows:

- Raw data: inputs collected raw data to applications such as AI.
- Data preprocessing: data cleaning, filtering, aggregation, and convergence.
- Data storage: provides centralized or distributed storage services on a data agent (data agent, DA)/data storage function (data storage function, DSF)/distributed ledge technology (distributed ledge technology, DLT).
- Data privacy and security protection: provides end-to-end data privacy and security protection technologies.
- Data sharing/transaction: trustworthiness data sharing and transaction.
- Data source tracing: distribution services such as source tracing/auditing service, public key, and decentralized identity (decentralized identity, DID).
- Data analysis: performs analysis and mining based on AI, machine learning (machine learning, ML), and big data to provide intelligent services.
- Data dictionary: wireless network feature dataset.

The data function includes data orchestration (data orchestration, DO), data control (data control, DC), data agent (data agent, DA), trust anchor agent (trust anchor agent, TAA), and a data storage function (DSF). The DC, the DA, and the TAA may be deployed on a base station. The DA may be deployed on a terminal.

(4) Hierarchical intelligent collaboration (heterarchical intelligent collaboration, HiC)

Hierarchical intelligent collaboration provides a set of native distributed collaboration mechanisms for network elements and terminals at all levels on the network. Through collaboration, intelligent flows on the network are enabled to move, improving performance and efficiency of network AI.

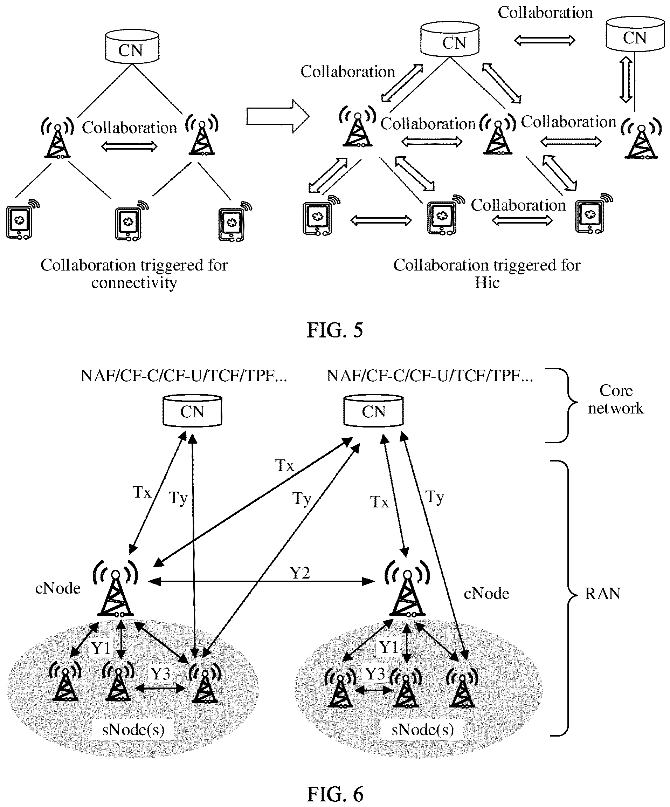

FIG. 5 is a diagram of comparison between a Hic collaboration scenario and collaboration triggered for connectivity. A HiC collaboration scenario features a large scale, large traffic, and a high degree of freedom. However, connectivity-based collaboration in a conventional network is only small-scale collaboration. Refer to the left part of FIG. 5. For example, neighboring-station switching and coordinated multi-point (coordinated multi-point, CoMP), and cannot support HiC. Therefore, an intelligent function is introduced in this application, to establish a collaboration channel between network elements and terminals at all layers of a network, efficiently organize intelligent collaboration between the network elements and the terminals, and ensure that collaboration is manageable and controllable. A Hic collaboration scenario is shown in the right part of FIG. 5.

Main functions of HiC include one or more of the following:

- Collaboration can be managed and controlled. A life cycle of a collaboration instance is managed, including collaboration instance creation, instance identifier (identifier, ID) assignment, and collaboration startup, deletion, and update.
- Collaboration instruction sets that can be combined into various collaboration patterns (pattern) are provided, to efficiently organize collaboration procedures between network elements and terminals.
- Diversified intelligent representations of transmission between network elements are supported. Intelligent knowledge is transmitted between heterogeneous devices to promote continuous network learning and evolution, continuously optimize network AI performance, and improve network AI efficiency.
- Establishment and maintenance of a large-scale collaboration set are supported. A collaboration instance can be deployed across different RAN cluster nodes, such as the foregoing cluster nodes. A network element has a capability of initiating, joining, and exiting a collaboration instance.
- A collaboration pattern can be extended to flexibly support various collaborative learning modes.

(5) Trustworthiness

A trustworthiness capability refers to a capability to meet information and cyberspace security (security), privacy protection, and risk oriented resilience (risk oriented resilience) for end-to-end networks and applications. Multi-mode trust (multi-mode trust model) is a major feature of a trustworthiness capability of a future communication network (for example, a 6G network), including a consensus (consensus) mode supported by a 6G blockchain technology, a bridge (bridge) mode supported by a home network carrier to provide authentication and authorization for users, and an endorsement (endorsement) mode based on a third party. Equilibrium trust (equilibrium trust) is a basic principle of the trustworthiness capability. To be specific, the trustworthiness capability is negotiated among a terminal side, an access network, a core network, and an application party, and an optimal result is obtained through balancing with reference to/without reference to centralized policy recommendation of network intelligence. Trustworthiness as a service (trustworthiness as a service) is a target effect of the trustworthiness capability. A trustworthiness function is provided externally as a service, including a blockchain service, a remote attestation service, and a privacy protection service.

New features of the communication network, such as task, computing, data, hierarchical intelligent collaboration, and trustworthiness, are described in detail below.

1. RAN architecture overview

For example, introduction of new features (or referred to as new capabilities) in the foregoing RAN architecture is a main driving force of RAN architecture transformation. The essence of these new features is task-based collaboration across a plurality of nodes and multi-dimensional resources (such as computing, data, an algorithm, and connectivity). From a perspective of the RAN architecture, a centralized coordinator node is required to provide intra- and inter-region task coordination. Therefore, the RAN node in this application may be classified into:

cNode (cluster node): The cluster node provides a region-level centralized collaboration function for a plurality of serving nodes and a function of inter-region collaboration between cluster nodes. In a cluster (or a corresponding area in which the cNode can provide centralized collaboration), a task anchor function is provided. On an air interface, no connectivity function is provided, or only a connectivity control function is provided (the provided function varies according to different design options of the RAN architecture).

sNode (serving node): The serving node provides task scheduling and executing functions; and on an air interface, provides connectivity control and/or data functions (the provided function varies according to different design options of the RAN architecture).

Optionally, the cNode and the sNode may also be separately referred to as network elements (network elements, NEs). This is not limited. If functions of the cNode and the sNode are enabled (a micro-service architecture is used in the base station), network functions inside the cNode and the sNode may be further defined.

In 5G, the core network functions have implemented an SBA based architecture, but the RAN is still based on a conventional non-service-oriented (non-SBA) architecture. However, in the solution provided in this application, there are two RAN architecture evolution modes: one is a conventional non-service based architecture (non-service based architecture, non-SBA), and the other is a service based architecture (service based architecture, SBA).

The following uses a 6G communication system as an example to describe the RAN architecture provided in this application. For example, a 6G-RAN is used as an example for description.

(1) RAN architecture 1: non-SBA based 6G-RAN architecture

FIG. 6 is a diagram of an overall system architecture applicable to this application. A cNode and an sNode are connected through a Y1 interface. cNodes are connected to each other through a Y2 interface. The cNode is further connected to a 6GC through a Tx interface, more specifically, to a network access function (network access function, NAF) through a T3 interface, and to a connectivity function-control (connectivity function-control, CF-C) through a T4 interface. The cNode is further connected to a task control function (task control function, TCF)/task processing function (task processing function, TPF) through a T2 interface.

sNodes are connected to each other through a Y3 interface. The sNode is further connected to the 6GC through a Ty interface, and more specifically, to the NAF through a T5 interface, to the connectivity function-control CF-C through a T6 interface, and to a connectivity function-user (connectivity function-user, CF-U) through a T7 interface.

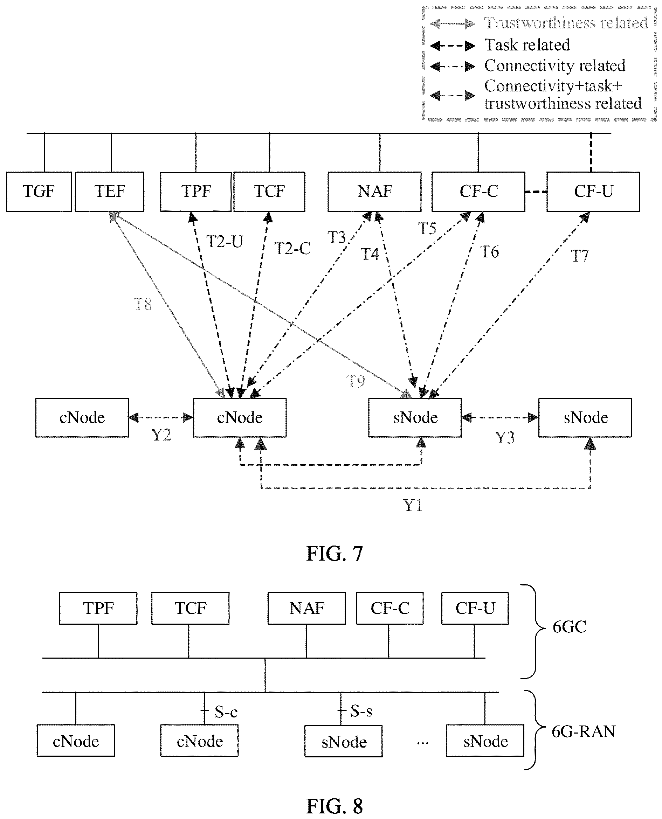

FIG. 7 is a diagram of an overall architecture and interfaces of a non-SBA based RAN. Interfaces between functions are shown in FIG. 7. Whether a user plane is serviceized is decoupled from whether a control plane is serviceized. Therefore, a CF-U may be directly connected to a BAS bus (that is, the user plane is also serviceized), or the CF-U is connected only to a CF-C and an sNodex (that is, the user plane is not serviceized).

(2) RAN architecture 2: SBA based 6G RAN architecture

FIG. 8 is a diagram of an overall architecture and interfaces of an SBA based RAN. The RAN uses an SBA interface. A CN service bus and a RAN service bus may share one bus, or may be two independent buses and have an interconnection interface. A service-based interface provided by a cNode is temporarily an S-c (referred to as a first service-based interface below), and a service-based interface provided by an sNode is temporarily an S-s (referred to as a second service-based interface below). In this figure, two independent buses are used for illustration.

Based on the foregoing overall RAN architecture, the RAN architecture is further classified into a connectivity-based architecture, a task-based architecture, and a trustworthiness-based architecture, which are respectively referred to as a connectivity architecture, a task architecture, and a trustworthiness architecture below, and are separately described below.

(a) Connectivity architecture

i. Non-SBA based architecture

For a pure connectivity architecture, there are the following two modes:

• Connectivity architecture 1 (namely, non-SBA based connectivity architecture 1)

(Air interface) CP/UP separation: On an air interface, the cNode has a control plane function for connectivity, and the sNode has a user plane function for connectivity.

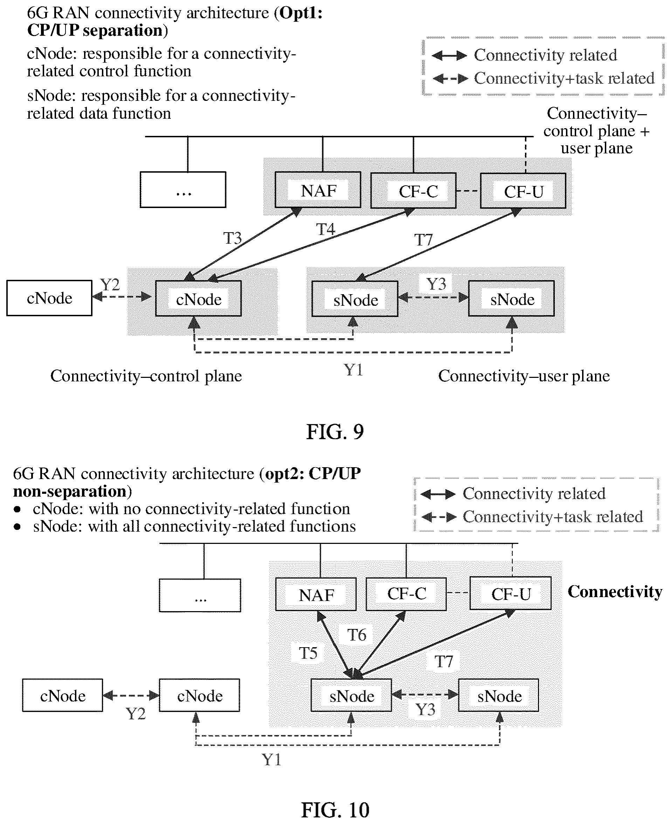

FIG. 9 is a diagram of the non-SBA based connectivity architecture 1. The cNode performs an initial UE access procedure with an NAF (UAM) through a T3 interface, and exchanges connectivity control signaling with a CF-C through a T4 interface. The sNode communicates with a CF-U through a T7 interface and transmits a data packet of the UE. cNodes exchange signaling related to UE handover through a Y2 interface, and control user data forwarding (data forwarding) of the sNode through a Y1 interface. sNodes performs user data forwarding (data forwarding) through a Y3 interface. A forwarding delay can be effectively reduced through a user-plane direct connection interface.

• Connectivity architecture 2 (namely, non-SBA based connectivity architecture 2)

(Air interface) CP/UP non-separation: On an air interface, the cNode does not have a connectivity function, and the sNode has a control plane function and a user plane function for connectivity.

FIG. 10 is a diagram of the non-SBA based connectivity architecture 2. The sNode exchanges UAM signaling with the NAF through a T5 interface, exchanges control signaling for connectivity with a CF-C through a T6 interface, and establishes a data bearer with the CF-U through a T7 interface and transmits user data. UE handover signaling exchange and data packet forwarding (data forwarding) are performed between sNodes through a Y3 interface.

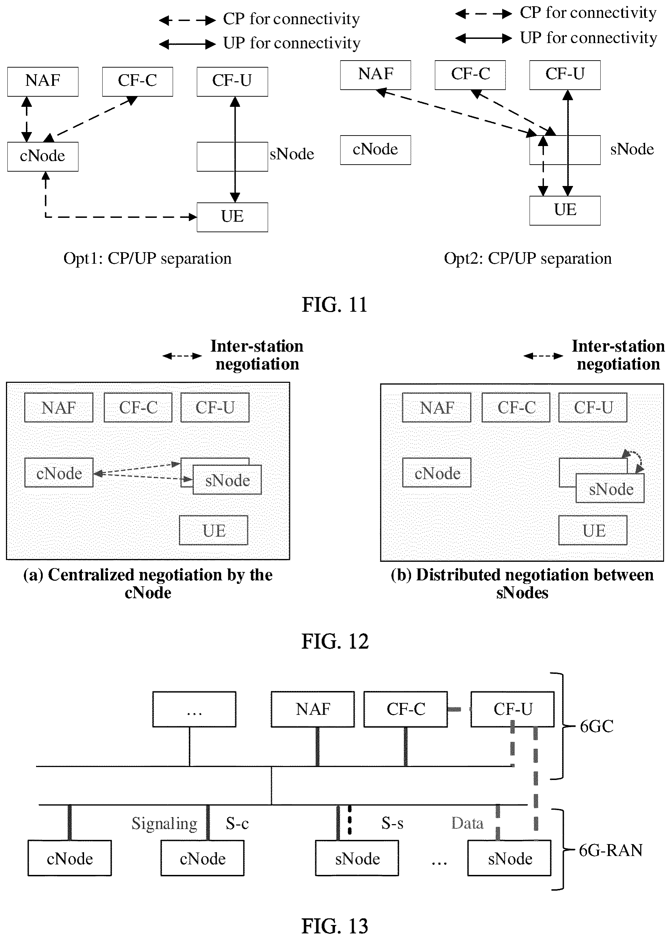

FIG. 11 is a diagram of data transmission of a UE in a non-SBA based connectivity architecture. From a perspective of the UE, different connectivity architectures have different functions.

• Connectivity architecture 1-(air interface) CP/UP separation:

The UE communicates with the RAN. The control plane directly communicates with the cNode, and the user plane directly communicates with the sNode.

The UE communicates with a CN. The control plane communicates with a CF via the cNode, and the user plane communicates with the CF via the sNode.

• Connectivity architecture 2-(air interface) CP/UP non-separation:

When the UE communicates with the RAN, the UE communicates with the sNode directly on both the control plane and the user plane.

When the UE communicates with the CN, the UE communicates with the CF through the sNode on both the control plane and the user plane.

For the foregoing two connectivity architectures, there are also two manners for specific inter-station negotiation signaling related to a connectivity service.

FIG. 12 is a diagram of inter-station negotiation in a non-SBA based connectivity architecture. Manner a: Direct negotiation is performed between cNodes, or unified negotiation is performed between sNodes by the cNode. Manner b: Direct negotiation is performed between sNodes, without participation of the cNode.

A plurality of connectivity architecture solutions 1a, 1b, 2a, and 2b may be formed by using the foregoing combination, and a specific function of each solution is not described again.

ii. SBA based architecture

• Connectivity architecture 1-(air interface) CP/UP separation (namely, SBA based connectivity architecture 1)

FIG. 13 is a diagram of inter-station negotiation in the SBA based connectivity architecture 1. In this architecture, the cNode provides an S-c interface for the NAF and the CF-C to invoke, to transmit control signaling of connectivity. In addition, the cNode is further invoked by another cNode through the S-c interface, to provide a mobility signaling function.

Connectivity between network elements is as follows:

NAF/CF-C->cNode
cNode->cNode

In this application, a character "->" indicates that there is a connection relationship between network elements. For example, NAF/CF-C->cNode indicates that the NAF/CF-C and the cNode may be connected through a corresponding interface. Details are not repeated below.

The sNode provides an S-s interface for a CF-U to invoke, to transmit user data. In addition, the sNode is further invoked by other sNodes through the S-s interface, to provide a mobility data forwarding function (data forwarding). In addition, data forwarding between sNodes is controlled by the cNode.

Connectivity between network elements is as follows:

CF-U->sNode
sNode->sNode
cNode->sNode

• Connectivity architecture 2-(air interface) CP/UP non-separation (namely, SBA based connectivity architecture 2)

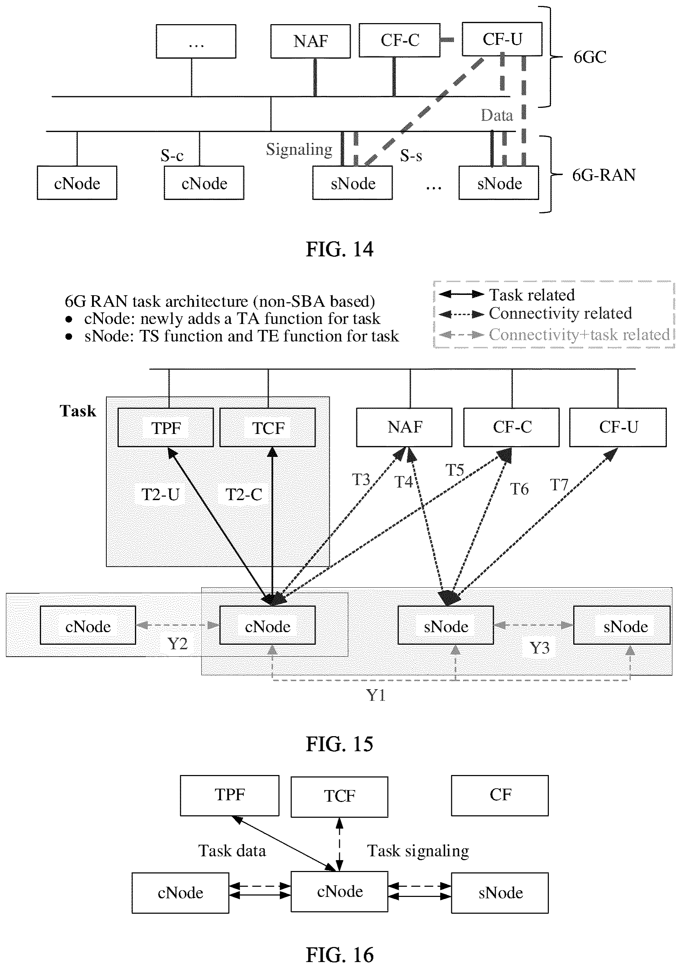

FIG. 14 is a diagram of inter-station negotiation in the SBA based connectivity architecture 2. In this architecture, the sNode provides an S-s interface for the NAF, the CF-C, and the CF-U to invoke, to transmit control signaling and user data of the connectivity respectively. In addition, the sNode is further invoked by other sNodes through the S-s interface, to provide mobility signaling exchange and data forwarding (data forwarding).

Connectivity between network elements is as follows:

NAF/CF-C/CF-U->sNode
sNode->sNode

In the SBA based connectivity architecture 2, the S-c function provided by the cNode does not provide any connectivity-related service, and provides only a task-related service.

(b) Task architecture

i. Non-SBA based architecture

FIG. 15 is a non-SBA based task architecture. The cNode is responsible for a control plane function of a newly added feature, for example, a task anchor (task anchor, TA) and a data processing function (for example, when the cNode has computing, a task scheduler (task scheduler, TS) and a task executor (task executor, TE) may also be deployed to execute a data processing task). The sNode is responsible for some control plane functions and user plane functions of new features, such as the TS and the TE. Task management is performed between the cNode and the sNode through the Y1 interface. Task negotiation is performed between cNodes through the Y2 interface. Inter-domain task negotiation is performed between the cNode and a TCF through the T2 interface. Task signaling or data exchange between TEs is performed between sNodes through the Y3 interface.

FIG. 16 is a diagram of task signaling and task data exchange between network elements. Task control between network elements may be control of the cNode on the sNode, task negotiation between cNodes, and task negotiation between the TCF and the cNode. For a new feature data service, a DC function is added to the cNode to manage a DA in a domain and DA orchestration. For a new feature HiC, a HicC function is added to the cNode to manage a collaboration instance, manage HicA, and configure a collaboration pattern.

Data plane data of the RAN is transmitted to the core network. The cNode aggregates data plane data of the sNode, and transmits the data to the TPF through a T2-U interface, or the sNode transmits the data to the TPF through a direct connection interface. When the TCF functions as a TA, the TCF performs task control on the cNode through a direct connection interface (T2-C). The task data is exchanged between the TPF and the cNode (T2-U). When the cNode functions as a TA, the cNode controls tasks and exchanges task data with the sNode through direct interfaces (Y1-C and Y1-U). When the cNode functions as a TA, the cNode negotiates task signaling and exchanges task data with a neighboring cNode through direct interfaces (Y2-C and Y2-U). Optionally, a manner of a direct connection between the sNode and the TPF may also be supported in the future.

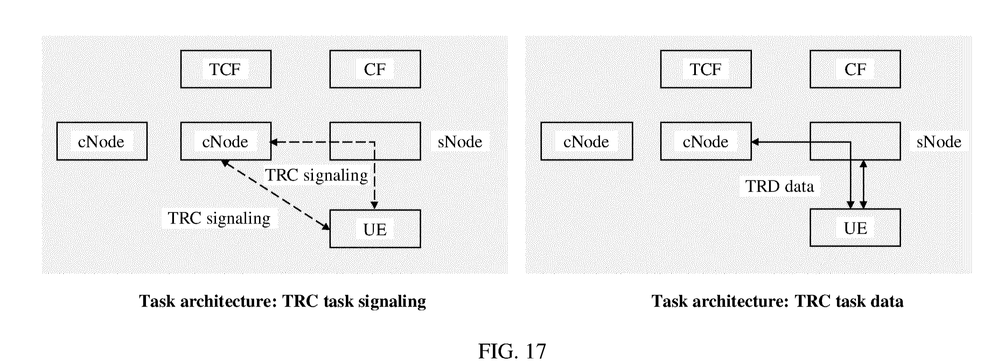

FIG. 17 is a diagram of task signaling and task data exchange on an air interface. When the cNode functions as a TA, the cNode performs task control interaction with the UE through a task resource control (task resource control, TRC) direct connection interface or via the sNode. Task data interaction between the UE and the sNode is performed through a task resource data (task resource data, TRD) data interface, and task data between the UE and the cNode is forwarded by the sNode to the cNode.

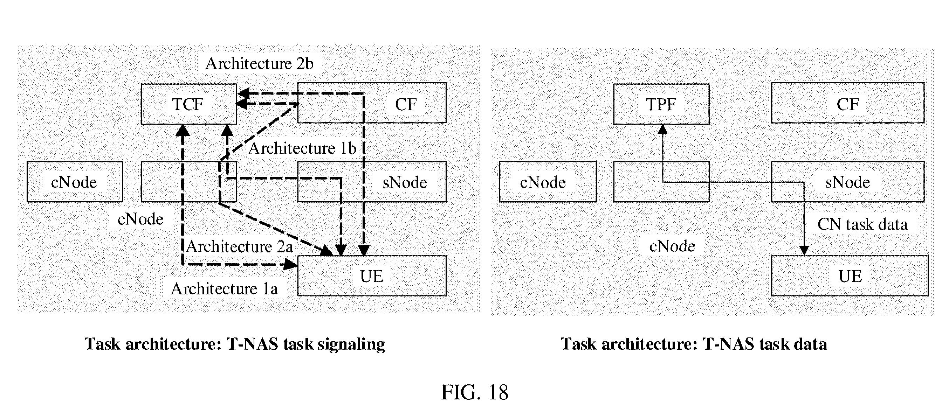

FIG. 18 is a diagram of task signaling and task data exchange at a T-NAS. When the TCF is used as a TA, the TCF performs task control signaling exchange for the UE through a T-NAS interface. The interface exists in four manners (for example, the following task architecture 1a, task architecture 1b, task architecture 2a, and task architecture 2b). Task data interaction is forwarded by the sNode to the cNode, processed by the cNode (optional), and then sent to the TPF.

(1) Task architecture 1a-distributed T-NAS

Based on the connectivity architecture 1, the TCF has a T-NAS capability. Task control performed by the TCF on the UE may be directly encapsulated into a T-NAS message, and is delivered by the cNode. Task control performed by the cNode on the UE is also directly delivered without forwarding via the sNode. In addition, because the CF-C also has a T-NAS capability for connectivity, both the TCF and the CF-C have a distributed T-NAS capability.

(2) Task architecture 1b-distributed T-NAS

Based on the connectivity architecture 1, this architecture is similar to the task architecture 1a. A difference lies in that the sNode performs forwarding.

(3) Task architecture 2a-centralized T-NAS

Based on the connectivity architecture 1, the TCF does not have a T-NAS capability. After all task control signaling is sent to the CF-C, the CF-C generates a T-NAS message, and delivers the T-NAS message to the UE via the cNode. Alternatively, the CF-C generates a T-NAS message as a proxy. In this case, only the CF-C has a T-NAS capability (that is, a T-NAS proxy). Therefore, this is referred to as centralized T-NAS.

(4) Task architecture 2b-centralized T-NAS

Based on the connectivity architecture 2, this architecture is similar to the task architecture 2a. A difference lies in that the sNode performs forwarding.

ii. SBA based architecture

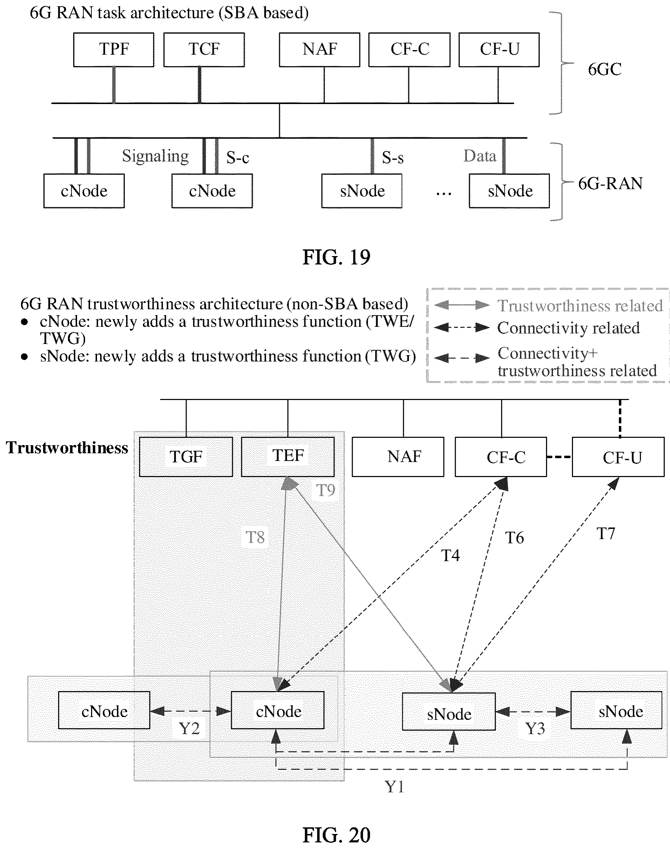

For a task architecture, an architecture using an SBA is shown in FIG. 19.

FIG. 19 is a diagram of an SBA based task architecture. The cNode provides an S-c interface for the TCF to invoke, to perform cross-region task negotiation signaling and task data transmission. The cNode is for invoking by another cNode through the S-c interface, to perform cross-cNode task negotiation signaling and task data transmission.

Connectivity between network elements is as follows:

- TCF/TPF->cNode
- cNode->cNode

The sNode provides an S-s interface for the cNode to invoke, to perform task control signaling exchange and task data transmission of the sNode by the cNode. The sNode is for invoking by another sNode through the S-s interface, to perform task data transmission between the sNodes.

Connectivity between network elements is as follows:

- cNode->sNode
- sNode->sNode

It should be noted that the RAN SBA bus and the CN SBA bus may share a same bus (such as a CN bus) or use independent buses. However, a sharing mode is more efficient.

(c) Trustworthiness architecture

i. Non-SBA based architecture

FIG. 20 is a diagram of a terrestrial interface of a non-SBA based trustworthiness architecture. For a trustworthiness plane, a trustworthiness engine (trustworthiness engine, TWE) is newly added to the cNode, to provide global decision and management information of the trustworthiness plane for a network, and in a static or dynamic manner, provide a trustworthiness policy input for a trustworthiness enabler module (trustworthiness gear, TWG) and activate and manage a trustworthiness service. Specific functions include but are not limited to one or more of the following:

a ledger anchor function includes capability discovery of a blockchain node, capability deployment, chain creation/-management/cancellation lifecycle management, chain status management, chain policy configuration, and access authorization management of a node on a blockchain (block chain, BC);
a network global trustworthiness policy function, including intelligence-based generation, storage, and notification of network global trustworthiness policies to other parties;
a remote measurement service function, including storing attestation results, reference values, and attestation evidence, generating remote attestation challenges, and verifying attestation evidence;
a privacy protection service function; and
a third-party security protection function.

The TWG is added to both the cNode and the sNode, to provide an enabler module of a trustworthiness plane for the network, accept configuration and management of the TWE, and execute the trustworthiness capability. Specific functions include but are not limited to one or more of the following:

a trustworthiness policy negotiation and decision-making capability, including negotiation mode configuration, input parameter generation and storage, and trustworthiness policy generation functions;
a cryptographic capability, supporting encryption, decryption, and signature based on symmetric and asymmetric keys, a basic hash algorithm, and invoking and configuration of homomorphic encryption and post-quantum encryption;
an authorization and authentication capability, supporting a static authorization and authentication function, and authorization and authentication based on a token (Token);
a 6G blockchain capability, including client, micro node, light node, all-node modes, and other modes, and has functions of transaction generation, query, broadcast, verification, consensus, communication, smart contract, and storage;
a situational sensing capability, supporting traffic monitoring, asset monitoring, and log collection;
a remote measurement and verification capability, supporting remote measurement and verification based on a trusted platform module (trusted platform module, TPM) and software guard extensions (software guard extensions, SGX); and
a privacy protection capability, supporting generation and storage of user permissions and invoking and configuration of privacy protection algorithms.

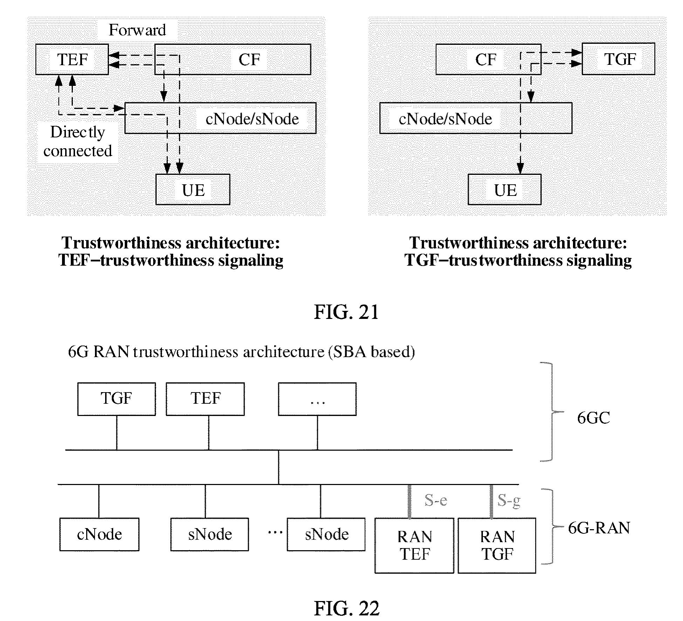

FIG. 21 is a diagram of trustworthiness signaling exchange between a UE, an AN, and a CN in a non-SBA based trustworthiness architecture. A manner of trustworthiness signaling transmission from the UE and a RAN to a trustworthiness enabler function (trustworthiness enabler function, TEF) and a trustworthiness gear function (trustworthiness gear function, TGF) of the CN is as follows:

TEF: The TEF can be connected to the cNode/sNode in the following two manners: In one connection manner, the CN TEF may be directly connected to a cNode/sNode, and T8 and T9 interfaces in FIG. 20 are supported. Trustworthiness signaling of the RAN is directly sent to the CN TEF/TGF, and trustworthiness signaling of the UE is sent to the CN TEF/TGF via the cNode/sNode, without being forwarded by another core network element. In another connection manner, the CN TEF may not be connected to a cNode/sNode, and T8 and T9 interfaces in FIG. 20 do not exist. Trustworthiness signaling between the CN TEF and the RAN/UE needs to be forwarded by the CF, and T4, T6, and T7 interfaces are reused.

TGF: The TGF is not connected to the cNode/sNode. Trustworthiness signaling between the TGF and the RAN/UE needs to be forwarded by the CF. The T4, T6, and T7 interfaces are reused.

ii. SBA based architecture

FIG. 22 is a diagram of an SBA based trustworthiness architecture. As shown in the figure, in the SBA based trustworthiness architecture, the TWE/TWG is mounted to the serial bus interface (serial bus interface, SBI) bus as a network function together with the cNode/sNode, and becomes a TEF (Trustworthiness Engine Function) and a TGF (Trustworthiness Gear Function). The RAN TEF provides an S-e interface (referred to as a third service-based interface in this specification) externally, and the RAN TGF provides an S-g interface (referred to as a fourth service-based interface in this specification) externally.

As described above, the RAN node in this application includes the cNode and the sNode. The following describes function division of the cNode and the sNode.

2. Function division

In different architectures, the cNode and the sNode have different functions.

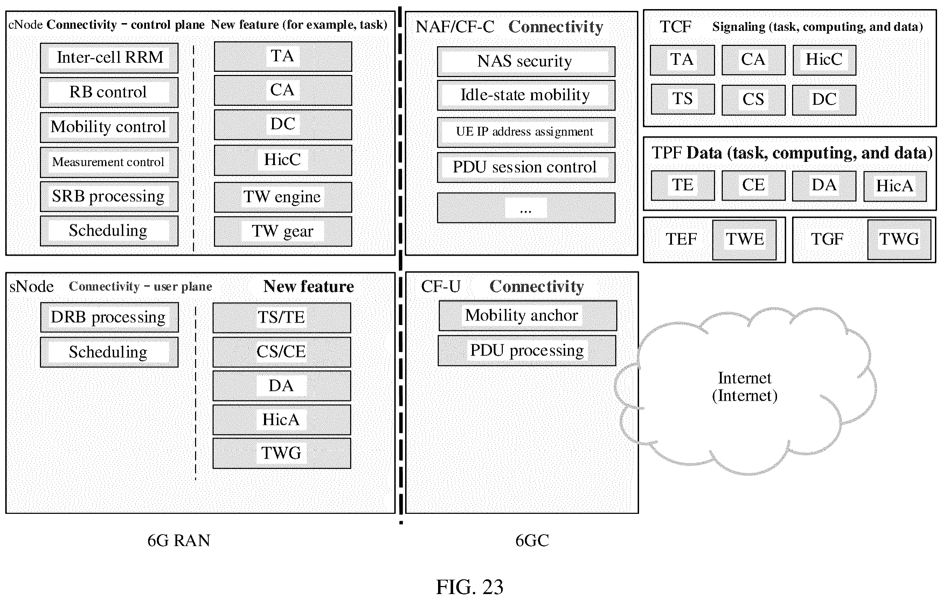

FIG. 23 is a diagram of function division of a cNode and an sNode.

For connectivity, the foregoing RAN connectivity architecture 1 is used as an example, and the cNode has one or more of the following functions:

- inter-cell resource negotiation, signaling/data bearer control, mobility management, measurement control, or the like.

For the new feature, the cNode has one or more of the following functions:

- task anchor (TA): has functions such as decomposing and combining tasks, and managing TE resources of the TA, for example, allocating a corresponding TE node to each task, and computing/data/model resources of each TE node for the task;
- computing anchor (computing anchor, CA): has functions such as decomposing and combining computing tasks, and managing TE resources under the computing anchor, for example, allocating a corresponding computing executor (computing executor, CE) node for each task, and computing resources of each CE node for the task;
- data control (DC): orchestrates data tasks at a coarse granularity, combines data pipelines based on DA capabilities and data service requests in a local domain, receives capability reports from the DA, and registers and deregisters the DA;
- hierarchical intelligent collaboration control (HicC): collects collaboration capabilities of network elements and terminals at all levels, receives collaboration requests, creates collaboration instances, configures collaboration patterns (pattern), manages collaboration QoS, and optimizes a collaboration process;
- trustworthiness engine (TWE): provides global decision-making and management information of the trustworthiness plane for a network, and in a static or dynamic manner, provides a trustworthiness policy input for the trustworthiness enabler module TWG and activates and manages a trustworthiness service, specifically including ledger anchoring, global network trustworthiness policy, remote measurement, privacy protection, and third-party security protection functions; and

- trustworthiness gear (TWG): provides an enabler module of a trustworthiness plane for a network, accepts configuration and management of the TWE, and executes a trustworthiness capability, specifically including trustworthiness policy negotiation and decision-making, password, authorization verification, 6G blockchain, situational sensing, remote measurement and verification, and privacy protection functions.

Optionally, the cNode may also deploy computing and data processing capabilities, and optionally support functions such as TE/CE/DA.

For connectivity, the sNode has one or more of the following functions:

- management of a data radio bearer and air interface resource scheduling for user data.

For the new feature, the cNode has one or more of the following functions:

- task scheduler (TS): has a resource scheduling function of a task, for example, allocating a real-time resource (a corresponding TE node, and computing/data/model resource allocation of each TE node for the task) to each task;
- task executor (TE): has a task executor function, and uses a corresponding resource to execute a specific task based on resource control/scheduling of the TA or the TS;
- computing scheduler (computing scheduler, CS): has a resource scheduling function of a computing task, for example, allocating a real-time resource (a corresponding TE node, and computing resource allocation of each TE node for the task) to each computing task;
- computing executor (CE): has a computing task executor function, and uses a corresponding resource to execute a specific computing task based on resource control/scheduling of the CA or the CS;
- data agent (DA): has a data task executor function, and executes a specific data task based on control of the DO or the DC;
- hierarchical intelligent collaboration agent (HicA): executes intelligent collaboration and executes specific collaboration processes, including parsing collaboration patterns and configuring local collaboration parameters, generating and processing collaboration interaction information, and training and inference of AI/ML; and
- trustworthiness gear (TWG), refer to a function of the foregoing TWG.

For connectivity, the CN NAF has one or more of the following functions:

- authentication and authorization for initial access; and
- selection of an initial connection.

For connectivity, the CN NF-C has one or more of the following functions:

- subsequent signaling functions other than initial access and initial selection, specifically including one or more of NAS security, mobility management, UE IP address allocation, PDU session control, and the like.

For connectivity, the CN NF-U has one or more of the following functions:

- responsible for performing mobility anchor, PDU processing, and the like.

For the new feature, the CN TCF provides the following functions:

- one or more of the foregoing functions of, for example, the TA, the CA, the HicC, the TS, the CS, and the DC.

For the new feature, the CN TPF has one or more of the following functions:

- functions of the TE, the CE, the DA, and the HicA.

For trustworthiness, the CN TEF has one or more of the following functions:

- functions of the TWE.

For trustworthiness, the CN TGF has one or more of the following functions:

- functions of the TWG.

The following describes an air interface in the RAN architecture of this application.

3. Air interface

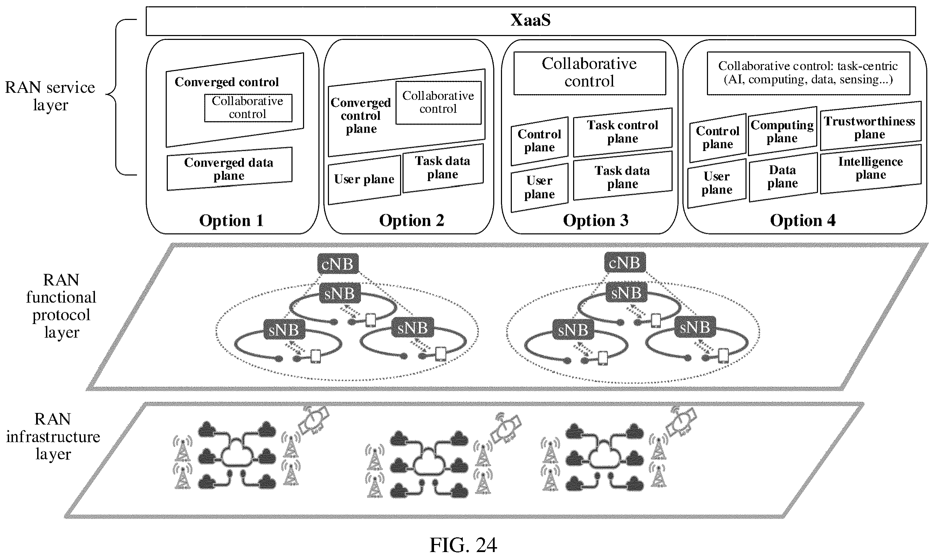

FIG. 24 is a diagram of a RAN architecture and service function plane options according to this application. As shown in FIG. 24, for a relationship between new features and connectivity, an air interface protocol stack has four design manners:

Option 1: A control plane and a user plane of the connectivity remain unchanged, and all new features (referred to as a newly added feature, a new feature, or a first function in this specification) are integrated into the control plane and the user plane.
Option 2: Based on the option 1, a task data plane is separated from the user plane of the connectivity, and other parts remain unchanged.
Option 3: The control plane and the user plane of the connectivity remain unchanged, and a task control plane and a task data plane are added.
Option 4: The control plane and the user plane of the connectivity remain unchanged, and a computing plane, a data plane, and an intelligence plane are added.

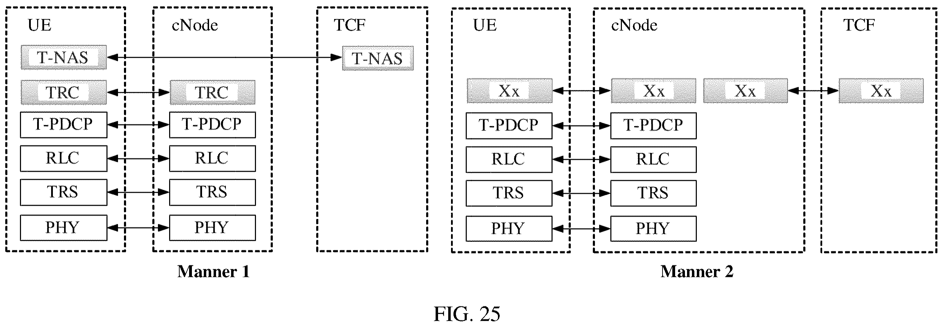

For the option 4, each newly added plane has its own control plane and user plane, which are not shown in FIG. 24. From the option 1 to the option 4, a function definition of each plane is changed from convergence to independence.
The following describes each option in detail.
Before specific options are described, a plurality of design manners of a protocol stack are first discussed, as shown in FIG. 25.
FIG. 25 is a diagram of two design manners of a control plane protocol stack of each function plane. Details are as follows:

- Manner 1: Signaling transmission between the UE and a base station/a core network (core network, CN) is performed by using a conventional RRC/NAS channel, and an application message is added to an existing channel, to support transmission of control signaling of a newly added function plane.
- Manner 2: A new layer is defined for signaling transmission between the UE and the base station/CN. The signaling at the layer may be terminated at the base station, or may be forwarded by the base station to the CN and terminated at the CN. Therefore, the newly added protocol layer is not only for transmitting function information, but also for routing purposes (terminated by the base station or the CN).

An air interface protocol stack of the UE includes a control plane protocol stack and a data plane protocol stack. The control plane protocol stack includes a first sublayer. The first sublayer supports transmission of control signaling of a first function, or the first sublayer supports transmission of the control signaling of the first function and a routing function. The first function includes one or more of computing, data, intelligence, and trustworthiness. It should be understood that the first sublayer is a sublayer that supports transmission of the control signaling of the first function. A specific implementation of the first sublayer is not limited in this application.

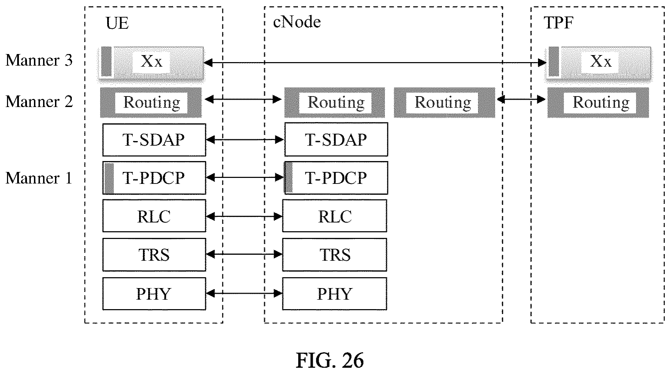

FIG. 26 is a design manner of a data plane protocol stack for a routing layer. As shown in FIG. 26, a data plane protocol stack of each function plane needs to support a mechanism of any routing. There are the following three manners for the routing layer:

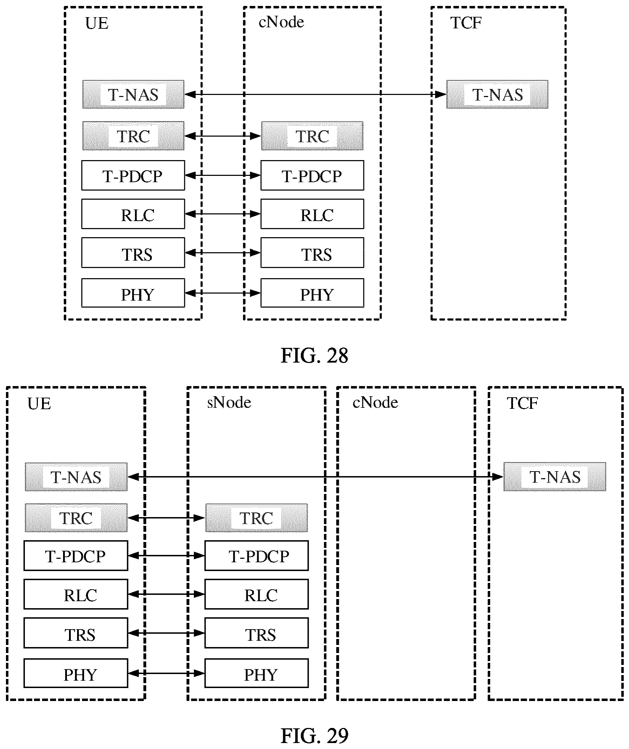

• Manner 1: Route information is added to an existing layer. For example, route identification information (such as a source node identifier, a destination node identifier, and QoS information) is added to an existing T-PDCP layer of an air interface. In an uplink, the base station parses the information and terminates the information. In a downlink, the base station adds the routing information to the layer. As shown in FIG. 28, the base station adds the routing information at the T-PDCP layer.
• Manner 2: An independent routing layer (routing layer) is added, which makes functions more decoupled and clearer in design (that is, services and routes are decoupled). The base station performs routing based on routing layer information and modifies the routing information (optional). In addition, an air interface routing layer between the UE and the RAN side and a routing layer between the RAN and the CN (TPF) may be defined independently.
• Manner 3: Routing information is added to a new service layer.

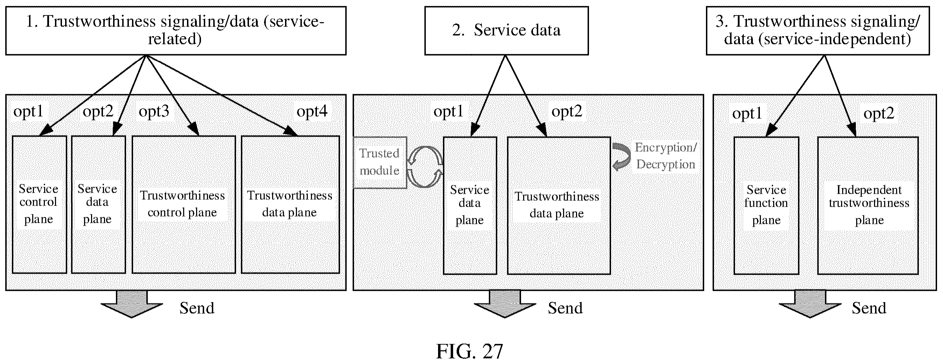

FIG. 27 is a diagram of a relationship between a trustworthiness function and a service feature.

(1) (Service data related) trustworthiness signaling/trustworthiness data transmission (for example, trustworthiness function control signaling and key data information corresponding to encryption and decryption of connectivity data)

- Opt1: on-path transmission through a control plane and a bearer (for example, transmission of key information for service data encryption and decryption) of a service.
- Opt2: on-path transmission through a data plane and a bearer (for example, transmission of key information for service data encryption and decryption) of a service.
- Opt3: independent transmission through an independent trustworthiness control plane and a signaling bearer (compared with service signaling).
- Opt4: independent transmission through an independent trustworthiness data plane and a data bearer (compared with service signaling).

(2) Data transmission related to service data (for example, service data after encryption and integrity protection)

- Opt1-service plane bearer: For a data sending end, a service invokes a function of a trustworthiness module to obtain encrypted data, and transmits, on a service plane and a bearer, service data obtained through trustworthiness processing. A receiving end performs peer-to-peer operations; and
- Opt2-trustworthiness plane bearer: For a data sending end, a service or application layer sends original data to a trustworthiness plane, and the trustworthiness plane performs data encryption. Service data obtained through trustworthiness processing is transmitted on a trustworthiness plane and a bearer. A receiving end performs peer-to-peer operations.

(3) (Service-irrelevant) trustworthiness signaling/data transmission (trustworthiness service signaling and data, for example, a blockchain)

- Opt1: on-path transmission through convergence with a service plane (an option 1 in 3.1, an option 2 in 3.2, and an option 3 in 3.3 below).
- Opt2: independent trustworthiness plane (in an option 4 in 3.4 below, a trustworthiness plane is further added, specifically including a trustworthiness control plane and a trustworthiness data plane).

3.1. Option 1: shared function plane

(1) Task

A control plane design varies based on different task architectures.

- Task architecture 1a/1b (distributed T-NAS)

For the RAN connectivity architecture 1/2 (CP/UP separation and non-separation) and the task architecture 1a/1b (distributed T-NAS), as shown in FIG. 28 and FIG. 29, a protocol stack of a control plane is shown. Specifically, FIG. 28 shows task signaling for a control plane protocol stack (distributed T-NAS: RAN connectivity architecture 1), and FIG. 29 shows task signaling for a control plane protocol stack (distributed T-NAS: RAN connectivity architecture 2).
For example, connectivity data of a user is forwarded to the NAF/CF-C, and task signaling is forwarded to the TCF. For the RAN connectivity architecture 1, forwarding is performed by a cNode. For the RAN connectivity architecture 2, forwarding is performed by an sNode to a cNode, and forwarding is performed by the cNode to the TCF.

• Task architecture 2a/2b (centralized T-NAS)

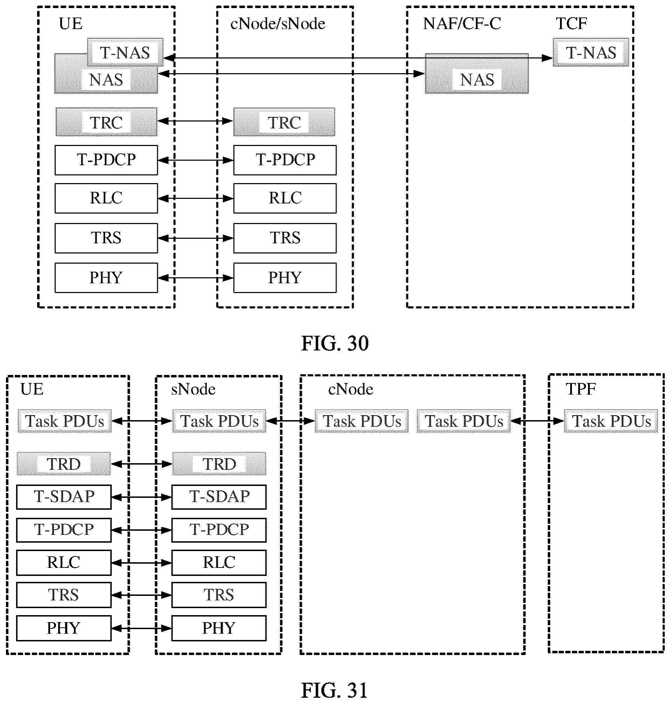

For the RAN connectivity architecture 1/2 (CP/UP separation and non-separation) and the task architecture 2a/2b (centralized T-NAS), FIG. 30 shows a protocol stack of a control plane.

- For details about functions of T-PDCP, RLC, and TRS sublayers (terminated at the cNode or the sNode on a network side), refer to descriptions of an air interface protocol layer below.
- The TRC terminates at the cNode (the RAN connectivity architecture 1) or the sNode (the RAN connectivity architecture 2) on the network side. For details about the functions of the TRC, refer to section 6.3 below.
- The T-NAS control protocol (terminated with NAF and CF-C or TCF on the network side) has functions listed in TS25.501[3], such as identity authentication, mobility management, and security control.

For the RAN connectivity architecture 1, forwarding is performed by the cNode; and for the RAN connectivity architecture 2, forwarding is performed by the sNode.

For task data, when the cNode is a TA, the UE first sends the task data to the sNode, and then the sNode sends the task data to the cNode. Finally, the cNode processes the task data (for example, combines and processes the task data with subtask data of another TE). Alternatively, the UE directly sends the task data to the sNode, and the sNode processes and terminates the data.

For task data, when the TCF is a TA, the UE first sends the task data to the sNode, the sNode sends the task data to the cNode, and the cNode processes the task data (for example, summarizes the task data) and sends processed task data to a corresponding TPF.

For the RAN connectivity architecture 1/2 (if the RAN connectivity architecture 1 is CP/UP separation, and if the RAN connectivity architecture 2 is CP/UP non-separation), FIG. 31 shows a protocol stack of a user plane. For details about functions of a TRD, a T-SDAP, a T-PDCP, an RLC, and a TRS sublayer (terminated at an sNode on a network side), refer to the following descriptions.

(2) Connectivity

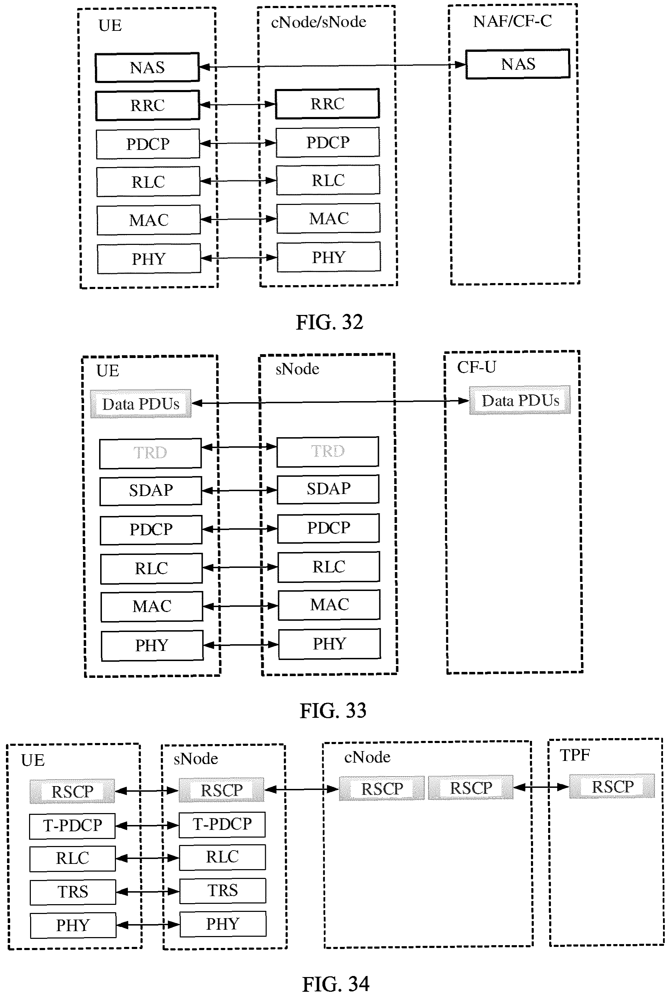

When a shared function plane is used, for connectivity-related signaling, the cNode directly interacts with the NAF/CF-C. In this case, the air interface protocol stack performs function rollback, and a task is rolled back to the connectivity protocol stack, as shown in FIG. 32:

- T-NAS: back to NAS;
- TRC: back to RRC;
- T-SDAP: back to SDAP; and
- TRS: back to MAC.

For connectivity-related data, the sNode directly interacts with the CF-U. In this case, the air interface protocol stack performs function rollback, and a task is rolled back to the connectivity protocol stack, as shown in FIG. 33:

- Task PDUs: back to data PDUs;
- TRD: back to the transparent mode;
- T-SDAP: back to SDAP; and
- TRS: back to MAC.

3.2. Option 2: converged control plane, connectivity user plane, and task data plane

In the option 2, the user plane protocol stack of the connectivity remains unchanged.

In addition, an independent task data plane is added.

In addition, the connectivity control plane and the task control plane are combined, for example, the converged control plane protocol stack in the option 1.

3.3. Option 3: connectivity control/user plane + task control/data plane

In the option 3, the control plane protocol stack and the user plane protocol stack of the connectivity remain unchanged.

The control plane protocol stack and data plane protocol stack of a task are added.

3.4. Option 4: connectivity control plane/user plane and independent function plane

3.4.1. Independent computing plane

Computing connectivity control senses a computing connectivity status in real time, supports connectivity resource control, quality control, a terminal status, and mobility for computing connectivity, controls computing connectivity required for transmitting computing data, for example, supporting establishment, change, migration, reestablishment, and deletion of computing connectivity, and allocates connectivity resources. Computing connectivity between computing execution functions is transmitted as computing wireless sessions.

Computing execution control allocates computing resources used by the computing execution function of a node, controls a quantity of computing operations to be performed, controls computing quality, and supports terminal mobility. Computing resource control senses a computing resource status in real time, and controls computing resource allocation, for example, adding, modifying, deleting, and releasing a computing resource. Computing quality control orchestrates a computing operation based on a resource quantity, precision, and a latency requirement, and configures parameters related to a computing process (such as computing precision, quantization precision, and sparseness). The computing resource control CRC may implement a computing execution control function at a TRC layer, a T-NAS layer, a Tx-AP (such as a T2 application protocol (T2AP) to a T9 application protocol (T2AP)) layer, and a Yx-AP (such as a Y1 application protocol (Y1AP) to a Y3 application protocol (Y3AP)) layer, and implement computing execution control on computing functions of a UE and a base station.

A computing service and a communication service belong to different service types. A transmission bearer of computing data and a transmission bearer of communication data (a PDU session connecting a terminal and a data network (data network, DN) includes a data radio bearer between the terminal and a base station, and a GPRS tunneling protocol for the user plane (GPRS tunnelling protocol for the user plane, GTP-U) tunnel between the base station and a CF-U (that is, a 6G UPF)) need to be distinguished, where GPRS represents a general packet radio service (general packet radio service). In addition, due to different service models, to be specific, computing data may follow a special interaction mode (for example, model split inference or training for collaboration between a terminal and a network) among network nodes participating in computing, and may impose a special requirement on connectivity quality, a new bearer protocol may be designed for transmission of computing data. For a computing plane transmission mode, a new bearer mode is introduced to a bearer layer, for example, a computing radio bearer (computing radio bearer, CRB) of an air interface part and a computing bearer (computing bearer, CB) of a 6G inter-station interface part. In addition, a new radio computing session protocol (radio computing session protocol, RCSP) is introduced to a session layer, and is referred to as an RCSP session. The RCSP implements end-to-end computing data exchange between computing execution functions and implements multi-node computing collaboration. The RCSP identifies different computing tasks based on computing session identifiers and performs corresponding QoS control.

FIG. 34 describes a protocol stack of an independent computing plane by using the RAN connectivity architecture 1 as an example. The control-plane protocol stack may be reused for a signaling part, and a new computing-plane protocol stack is used for a data part. For example, a new RSCP protocol layer is added to transmit computing data.

3.4.2. Independent data plane

Corresponding to each data service task, the DC orchestrates and selects the DA to execute the task and delivers, to each involved DA, a function (such as data collection, data preprocessing, or data analysis) that the DA needs to perform.

A data-plane control signaling message does not need to be routed. All DAs that receive the data-plane control signaling message are termination points of the message. An initial data plane control message, such as a UE-to-DC registration request and a data bearer setup message, is transmitted by using RRC signaling. Subsequent control signaling is transmitted by using DFCP-C.

A data-plane service data message supports any topology and one or more of the following three routing modes:

(1) The DC delivers routing information to each DA. A data packet carries a data service identifier (data service identifier, DSID). The DC searches a routing table based on the DSID and forwards data to a next-hop DA.
(2) The DC delivers routing information to the DA at an ingress and adds the routing information to a header of each data packet. After receiving the data packet, the DA decodes the packet header and obtains a next-hop DA based on the routing information.
(3) A DA identifier (DAID) is allocated to each DA according to a rule by using an encoding scheme, a data pipeline identity (data pipe identity, DPID) is computed, and a next-hop DA is obtained based on DPID %DAID, where the rule depends on specific implementation and is not limited.

After receiving user-plane service data reported by the UE, the base station determines, based on a DC function indication, whether to process a data packet. After processing the data packet, the base station re-encapsulates the DFCP-U data packet and sends the data packet to the next-hop DA, or terminates the data packet.

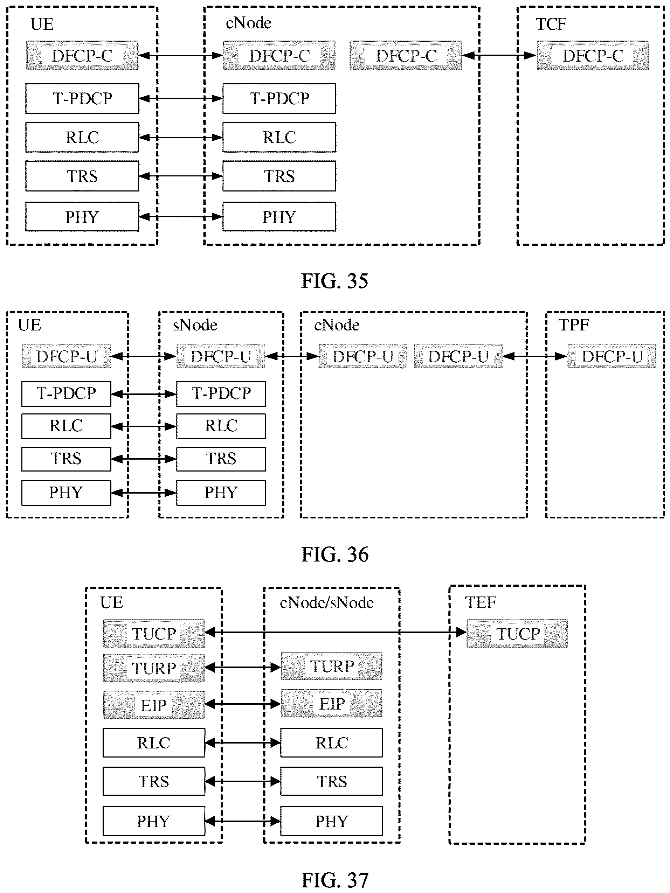

A control message protocol stack of the independent data plane is shown in FIG. 35 (a protocol stack design manner 2 is used as an example), and a service message protocol stack of the independent data plane is shown in FIG. 36.

3.4.3. Independent intelligence plane

The intelligence plane is for supporting a HiC intelligent collaboration service. Network elements at each layer need to have HiC-related logical functions and protocol interfaces so that intelligent network elements on a network can collaborate with each other. The intelligence on network elements is first various functions and features that serve the network, and then AI tasks and models deployed by a third party on the network.

A control layer of intelligent collaboration needs to ensure efficient organization of a collaboration pattern (pattern). Therefore, collaboration capabilities of all network elements need to be queried and reported. After a collaboration set is determined, a collaboration request needs to be sent, a collaboration instance needs to be created, and parameters in the collaboration pattern need to be configured. In addition, real-time configuration update and optimization need to be performed for a network change and a collaboration status change in a collaboration process.

Intelligent representations of interaction between intelligent network elements include a gradient, a model, knowledge, and the like. Different from data of previous mobile services, interaction of the intelligent representations is generated and transferred in the network, and is terminated also in the network. The air interface mainly includes collaboration and interaction between the cNode, the sNode, the core network TPF, and the UE.

3.4.4. Independent trustworthiness plane

The trustworthiness plane invokes the functions of the TWE and TWG to provide trustworthiness support for other planes such as the connectivity plane, the task plane, the computing plane, the data plane, and the intelligence plane, meeting their security requirements. Encryption and integrity protection are used as an example. After completing measurement and authentication, the trustworthiness control plane generates a NAS-like encryption key, a NAS-like integrity protection key, a T-PDCP encryption key, a T-PDCP integrity protection key, and the like, and allocates the keys to other planes, and the planes perform encryption and integrity protection.

The trustworthiness control plane performs trustworthiness establishment and configuration, including trustworthiness function management, control of enablers in a trustworthiness function, and trustworthiness negotiation. The control of internal enablers includes blockchain creation and update, blockchain/chain node management, blockchain capability deployment, capability discovery, capability activation, running parameters, chain node identity management, dynamic node addition, and dynamic node exit; identity authentication for secure access, such as obtaining of authentication vectors and authentication parameters; device trustworthiness measurement, such as obtaining of trustworthiness attestation vectors and trustworthiness attestation parameters; and key negotiation for homomorphic processing.

FIG. 37 is a diagram of an independent trustworthiness control plane protocol stack. A trustworthiness UE-Core network protocol (TUCP) is mainly responsible for trustworthiness signaling transmission between a UE and a core network, a trustworthiness UE-RAN protocol (TURP) is mainly responsible for trustworthiness signaling transmission between the UE and an access network, and an encryption and integrity protection protocol (EIP) is mainly responsible for encryption, decryption, and integrity protection of trustworthiness data. Functions of the TUCP and the TURP are implemented by the TWE and the TWG. A non-security-related function of the EIP is performed by a module other than the TWE and the TWG in the UE/sNode/cNode. Security-related functions have two options (option):

- Option 1: The TWG provides a TruA function (that is, parameters and configurations required for security negotiation and a security function, such as encryption/decryption, an integrity protection key, and a privacy protection identifier) and an Enabler function (such as encryption/decryption and integrity protection functions of Crypto Enabler).
- Option 2: The TWG provides the TruA function, and another module than the TWE and the TWG in the UE/sNode/cNode performs the function.

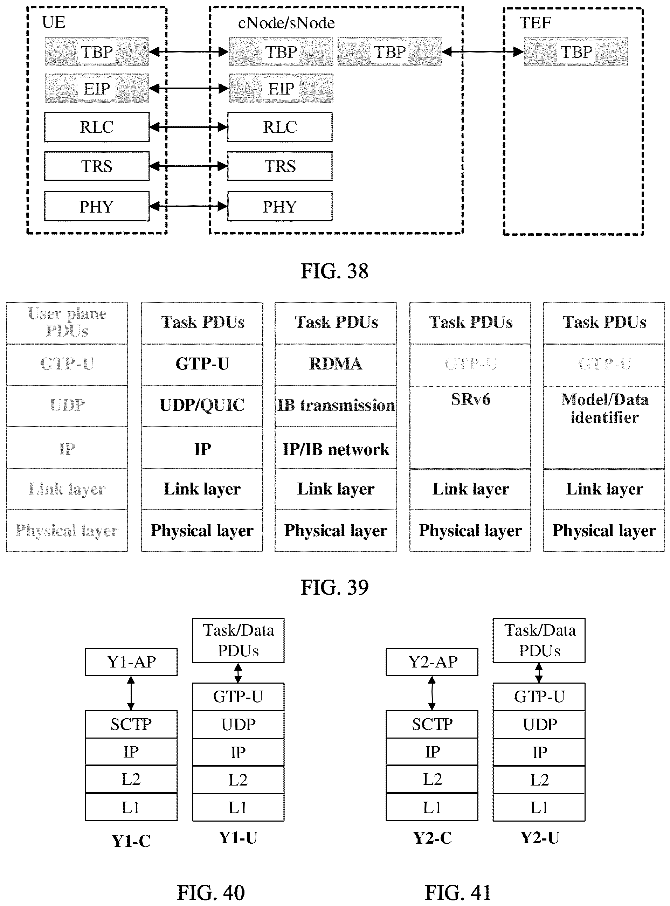

The independent trustworthiness service plane performs trustworthiness data processing and transmission, including specific service processes of the TWE and the TWG after trustworthiness establishment and configuration. The trustworthiness data may specifically include synchronization data such as a transaction/block of a blockchain, situational sensing data, data such as a homomorphic encrypted ciphertext and a computing result, trusted root management data, a key, and the like. FIG. 38 shows a protocol stack of a trustworthiness service plane. An EIP layer is mainly responsible for encryption, decryption, and integrity protection of trustworthiness data, and a trustworthiness bearer protocol (TBP) is mainly responsible for packet processing of the trustworthiness data. The TBP protocol layer may determine a termination point based on a data packet header. All functions of the TBP are performed by the TWE and the TWG, and functions of the EIP are the same as those described above.

The following describes a network element interface in the RAN architecture provided in this application.

4. Network element interface

The network element interface, also referred to as a terrestrial interface, is classified into a control-plane protocol stack and a user-plane protocol stack.

For the control plane protocol stack, if a non-SBA interface is used, a 5G solution based on "xx-AP/SCTP/IP" may be reused. If an SBA interface is used, a solution based on "restful/SCTP/IP" in the 5G CN may be reused.

For the user plane protocol stack, if a non-SBA interface is used, a plurality of enhanced solutions are considered, as shown in FIG. 39:

solution 1: reuse a 5G solution, for example, a "GTP-U/UDP/IP"-based protocol stack;
solution 2: "GTP-U/QUIC/IP"-based protocol stack;
solution 3: "RDMA/IB transmission/IB network"-based protocol stack;
solution 4: "GTP-U/SRv6"-based protocol stack; and
solution 5: "GTP-U/model or data identifier"-based protocol stack.

The following uses the solution 1 as an example to describe interfaces on the control plane and the user plane in detail.

4.1. Non-SBA interface

i. Y1 interface

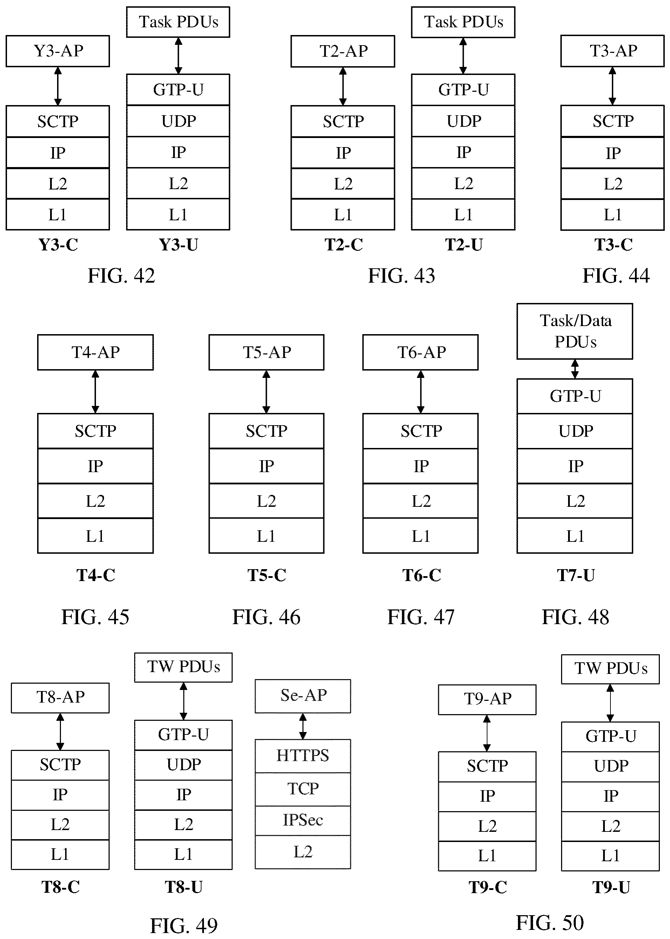

A Y1 user plane interface (Y1-U) is defined between the cNode and the sNode. A user plane protocol stack of the Y1 interface is shown in FIG. 42. A transport network layer is established above an IP transport layer. A GTP-U is for carrying a user-plane PDU between the cNode and the sNode over UDP/IP.
A Y1 control plane interface (Y1-C) is defined between the cNode and the sNode. FIG. 40 shows a control plane protocol stack of the Y1 interface. A transport network layer is established above an IP transport layer. To transmit signaling messages reliably, the stream control transmission protocol (stream control transmission protocol, SCTP) is added above IP layer. The application layer signaling protocol is referred to as Y1AP (Y1 application protocol). The SCTP layer provides guaranteed application-layer message transfer. In transmission, point-to-point transmission at the IP layer is for transmitting a signaling PDU.

ii. Y2 interface

For a user plane interface and a control plane interface of the Y2 interface, refer to FIG. 41.
The Y2 user plane interface (Y2-U) is defined between cNodes, and is configured to transmit task data or communication data of the UE (for example, data forwarding is performed when the UE is handed over between two cNodes).
The Y2 control plane interface (Y2-C) is defined between cNodes, and is not only configured to transmit connectivity-only signaling, but also configured to transmit task signaling.

iii. Y3 interface

For a user plane interface and a user plane interface of the Y3 interface, refer to FIG. 42.
The Y3 user plane interface (Y3-U) is defined between sNodes, and is configured to transmit connectivity data (communication data of the UE) or task data (for example, a context of a task in which the sNode participates is transferred to another sNode).
The Y3 control plane interface (Y3-C) is defined between sNodes, and is only configured to transmit task or connectivity signaling.

iv. T2 interface

For a user plane interface and a user plane interface of the T2 interface, refer to FIG. 43.
The T2 user plane interface (T2-U) is defined between the cNode and the TPF, and is configured to transmit task data.
The T2 control plane interface (T2-C) is defined between the cNode and the TCF, and is configured to transmit task signaling.

v. T3 interface

A T3 control plane interface (T3-C) is defined between the cNode and the NAF. Refer to FIG. 44, T3-C is configured to transmit connectivity signaling.

vi. T4 interface

A T4 control plane interface (T4-C) is defined between the cNode and the CF-C. Refer to FIG. 45, T4-C is configured to transmit connectivity signaling or transparently transmit task signaling (T-NAS).

### vii. T5 interface

A T5 control plane interface (T5-C) is defined between the sNode and the NAF. Refer to FIG. 46, T5 is configured to transmit connectivity signaling or transparently transmit task signaling (T-NAS).

### viii. T6 interface

A T6 control plane interface (T6-C) is defined between the sNode and the CF-C (connectivity architecture 2: if the cNode is unaware of the connectivity, the sNode undertakes all connectivity-related functions), and as shown in FIG. 47, is configured to transmit connectivity signaling or transparently transmit task signaling (T-NAS).

### ix. T7 interface

A T7 control plane interface (T7-U) is defined between an sNode node and a CF-U, and as shown in FIG. 48, is configured to transmit connectivity data or transparently transmit task data.

### xi. T8 interface

For a control plane interface and a user plane interface of the T8 interface, refer to FIG. 49.
The T8 control plane interface (T8-C) is defined between a cNode and a TEF, and is configured to transmit trustworthiness signaling.
The T8 data plane interface (T8-U) is defined between an sNode and the TEF, and is configured to transmit trustworthiness data.

### xii. T9 interface

For a control plane interface and a user plane interface of the T9 interface, refer to FIG. 50.
The T9 control plane interface (T9-C) is defined between an sNode and a TEF, and is configured to transmit trustworthiness signaling.
The T9 data plane interface (T9-U) is defined between the sNode and TEF, and is configured to transmit trustworthiness data.

### 4.2. SBA interface

### i. S-c interface

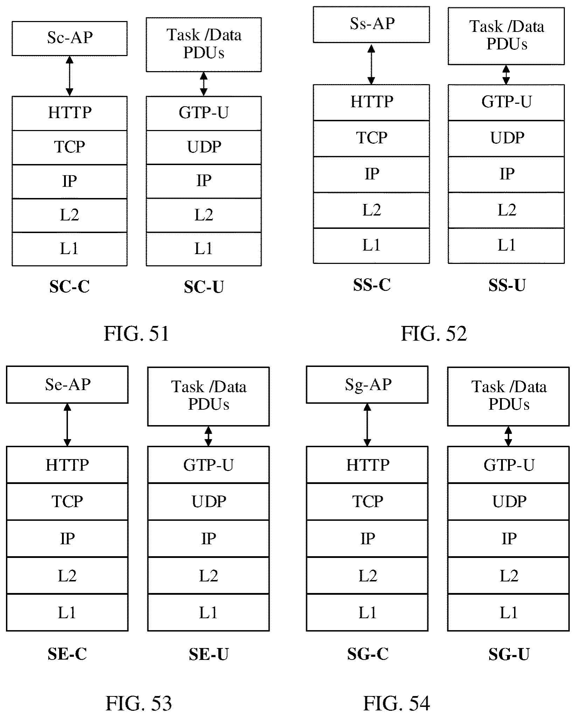

Functions provided by the S-c interface vary with the RAN connectivity architecture. For example, for the RAN connectivity architecture 1 (namely, the CP/UP separation architecture), the cNode provides a connectivity-related signaling function; for the RAN connectivity architecture 2 (namely, the CP/UP non-separation architecture), the cNode does not provide a connectivity function.
For the task architecture, the cNode provides functions of task signaling and task data transmission through the SC-C and the SC-U, as shown in FIG. 51.

### ii. S-s interface

Functions provided by the S-s interface vary with the RAN connectivity architecture. For example, for the RAN connectivity architecture 1 (the CP/UP separation architecture), the sNode provides a connectivity-related data forwarding function; and for the RAN connectivity architecture 2 (the CP/UP non-separation), the sNode provides a connectivity-related signaling control function and data forwarding function.
For the task architecture, the sNode provides functions of task signaling and task data transmission through the SS-C and the SS-U, as shown in FIG. 52.

### iii. S-e interface

The S-e (service-engine) interface is an external interface of the TWE in the SBA, and provides one or more of the following functions:

- trustworthiness service invoking (including global trustworthiness policy services, blockchain services, remote attestation services, and the like);

- trustworthiness information subscription (including capability information, global trustworthiness policy, blockchain capability information, and the like); and

- trustworthiness function management (engine hierarchical management).

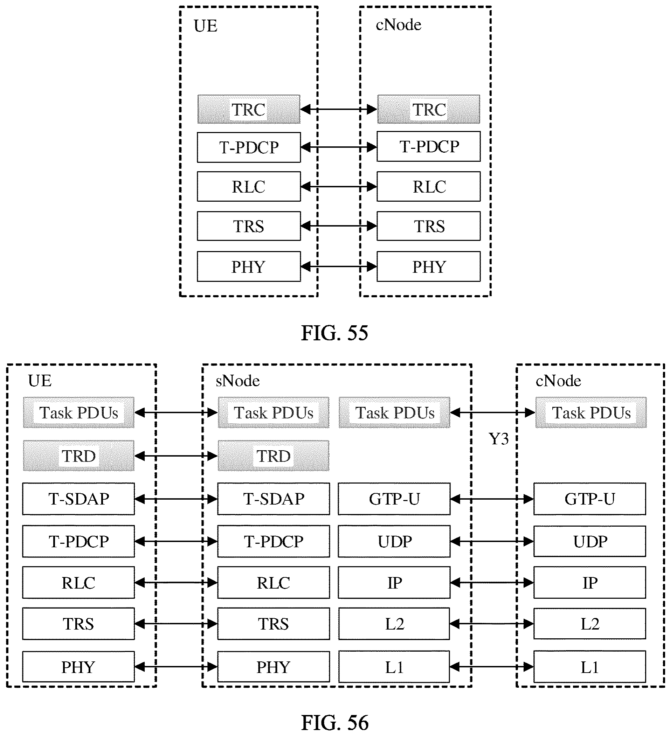

The S-e interface supports the Se-AP protocol, as shown in FIG. 55. FIG. 53 shows an S-e protocol stack.

iiii. S-g interface

The S-g (service-gear) interface is an external interface of the TWG in the SBA and provides one or more of the following functions:

- trustworthiness service invoking (security capability information, authentication, authorization, blockchain, situational sensing, remote attestation, and the like);
- trustworthiness information subscription (subscription status and capability information); and
- trustworthiness function management (TGF management by the TEF).

The S-g interface supports the Sg-AP protocol. FIG. 54 shows an S-g protocol stack.

The following describes an end-to-end protocol stack in the RAN architecture provided in this application.

5. End-to-end protocol stack

5.1. Option 1: shared function plane

Specifically, the shared function plane means that all functions (including the first function proposed in this application, for example, trustworthiness, computing, and intelligence) share one protocol stack.

5.1.1. Task

Task interfaces are classified into four types: a task interface between the UE and the RAN, a task interface between the UE and the TCF, a task interface between the RAN and the CN, and a task interface between RANs.

(1) Type 1: Task interface between the UE and the RAN

Different task architectures may be used for different connectivity architectures.

• RAN connectivity architecture 1-(air interface) CP/UP separation

For the RAN connectivity architecture 1-CP/UP separation, for task signaling and data of the UE and the cNode (the RAN serves as a TA to control the UE to execute a task), there are two solutions for an end-to-end control plane protocol stack and user plane protocol stack: non-SBA and SBA.

If a non-SBA interface is used, an end-to-end control plane protocol stack and user plane protocol stack of an inter-UE/RAN task are respectively shown in FIG. 55 and FIG. 56:

■ signaling: UE <-> cNode, where signaling communication between the UE and the cNode does not need to be relayed; and
■ data: UE <-> sNode <-> cNode, where data communication between the UE and the cNode needs to be relayed by the sNode.

If an SBA interface is used:

■ the cNode provides the S-c interface, and the sNode provides the S-s interface.

• RAN connectivity architecture 2-(air interface) CP/UP non-separation

For the RAN connectivity architecture 2-CP/UP non-separation, for task signaling and data of the UE and the cNode (the RAN serves as a TA to control the UE to execute a task), there are two solutions for an end-to-end control plane protocol stack and user plane protocol stack: non-SBA and SBA.

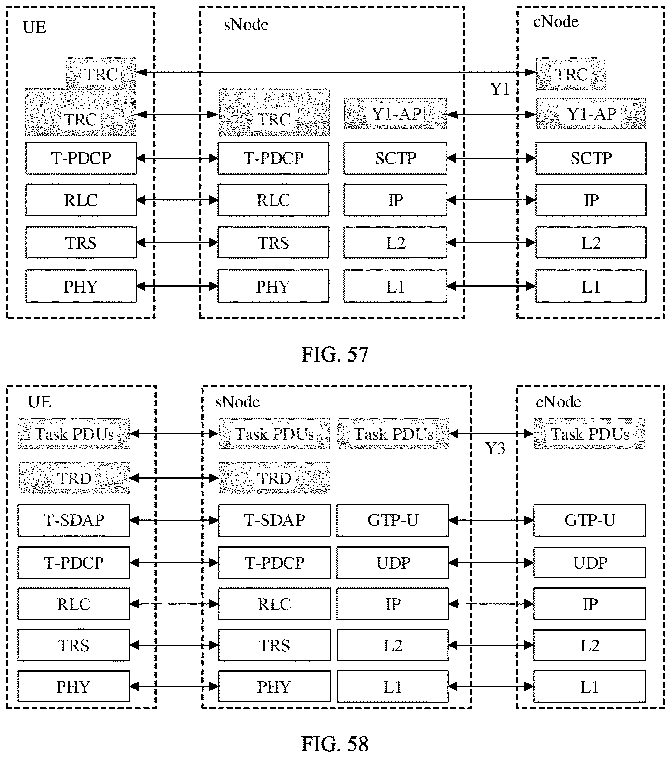

If a non-SBA interface is used, an end-to-end control plane protocol stack and user plane protocol stack of an inter-UE/RAN task are respectively shown in FIG. 57 and FIG. 58:

■ signaling: UE <-> sNode <-> cNode, where signaling communication between the UE and the cNode needs to be relayed by the sNode; and
■ data: UE <-> sNode <-> cNode, where data communication between the UE and the cNode needs to be relayed by the sNode.

If an SBA interface is used:

■ the cNode provides the S-c interface, and the sNode provides the S-s interface.

(2) Type 2: Task interface between the UE and the TCF

Different interface designs are provided for different task architectures.

• Task architecture 1a/1b (distributed T-NAS)

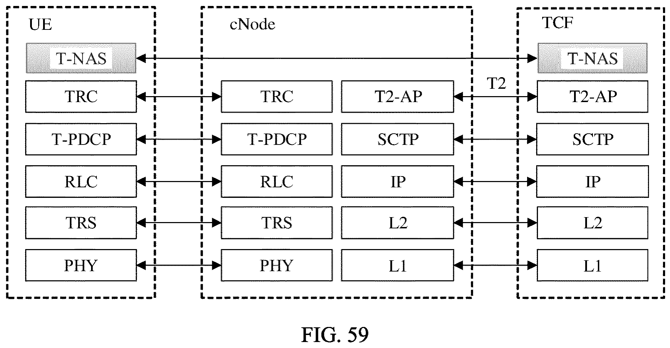

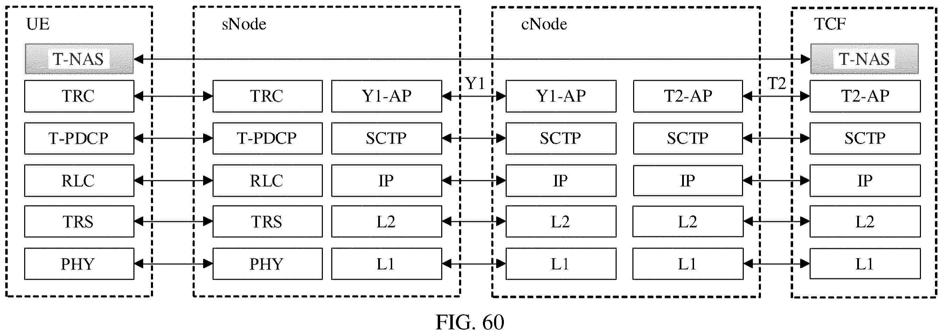

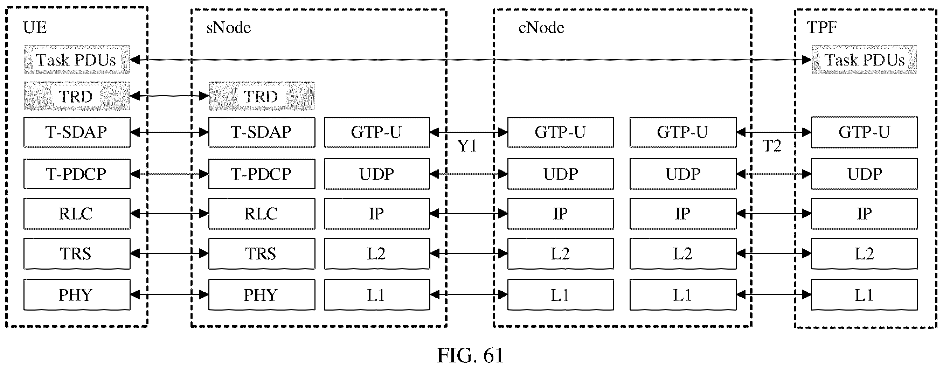

For task signaling and data between the UE and the TCF (the CN serves as a TA to control the UE to execute a task), for the task architecture 1a/1b (distributed T-NAS), there are two solutions for an end-to-end control plane protocol stack and user plane protocol stack: non-SBA and SBA.
If a non-SBA interface is used, refer to FIG. 59 to FIG. 61. FIG. 59 to FIG. 61 are respectively an end-to-end control plane protocol stack (for the task architecture 1a) of an inter-UE/CN task, an end-to-end control plane protocol stack (for the task architecture 1b) of an inter-UE/CN task, and an end-to-end user plane protocol stack (for the task architecture 1a/1b) of an inter-UE/CN task:

■ signaling: UE <-> cNode/(cNode+sNode) <-> TCF, where signaling communication between the UE and the TCF requires relaying by the cNode/(cNode+sNode); and
■ data: UE <-> sNode <-> cNode <-> TCF, where communication between the UE and the TCF requires relaying by a plurality of nodes such as the sNode and the cNode.

If an SBA interface is used:

■ the cNode provides the S-c interface, and the sNode provides the S-s interface.

• Task architecture 2a/2b (centralized T-NAS)

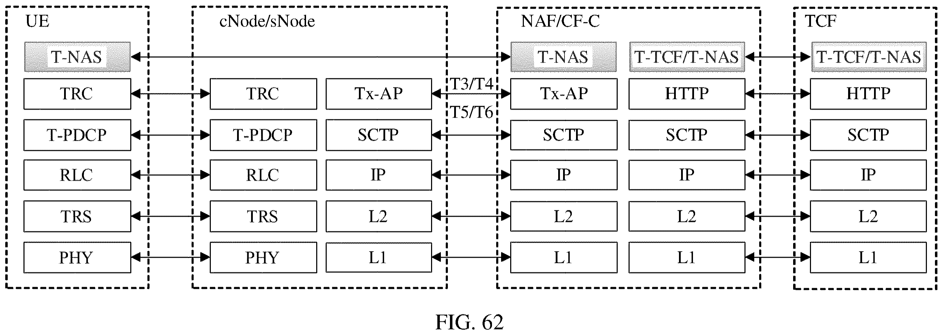

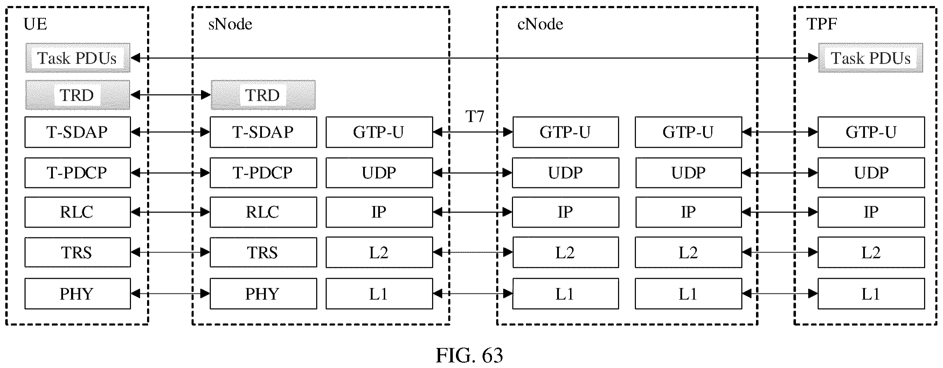

For task signaling and data between the UE and the TCF (the CN serves as a TA to control the UE to execute a task), for the task architecture 2a/2b (centralized T-NAS), there are two solutions for an end-to-end control plane protocol stack and user plane protocol stack: non-SBA and SBA.
If an SBA interface is used, refer to FIG. 62 and FIG. 63. FIG. 62 and FIG. 63 are respectively an end-to-end control plane protocol stack (for the task architecture 2a/2b) of an inter-UE/CN task and an end-to-end user plane protocol stack (for the task architecture 2a/2b) of an inter-UE/CN task:

■ signaling: UE <-> cNode/(sNode+cNode) <-> NAF/CF-C <-> TCF, where signaling communication between the UE and the TCF requires relaying by a plurality of nodes such as the cNode/(sNode+cNode) and the NAF/CF-C; and
■ data: UE <-> sNode <-> cNode <-> TPF, where data communication between the UE and the TPF requires relaying by a plurality of nodes such as the sNode and the cNode.

If an SBA interface is used:

■ the cNode provides the S-c interface, and the sNode provides the S-s interface.

(3) Type 3: Task interface between the RAN and the TCF

For task signaling and data between the RAN node and the CN node (the CN and the RAN negotiate to execute a task), there are two solutions for an end-to-end control plane protocol stack and user plane protocol stack: non-SBA and SBA.

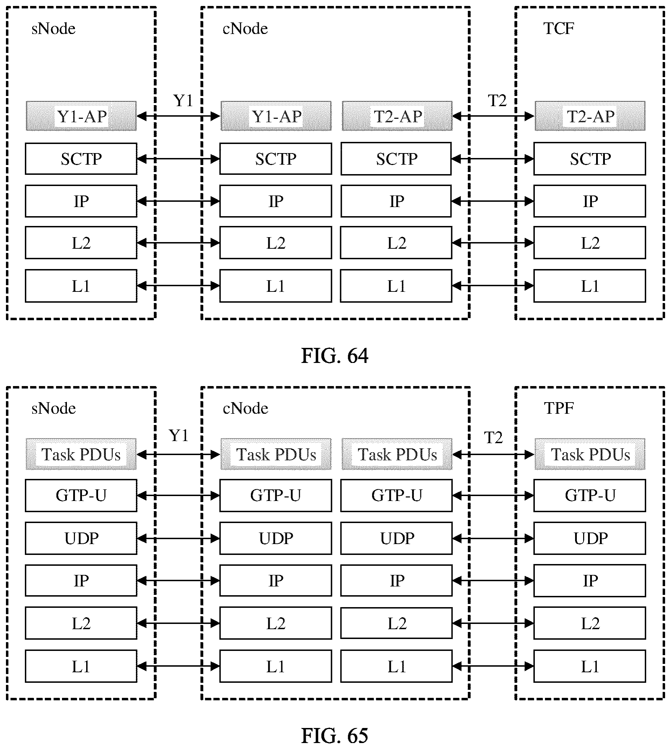

If a non-SBA interface is used, FIG. 64 and FIG. 65 are respectively an end-to-end control plane protocol stack of an inter-CN/RAN task and an end-to-end user plane protocol stack of an inter-CN/RAN task:

■ signaling: sNode <-> cNode <-> TCF, where signaling communication between the sNode and the TCF needs to be relayed by the cNode, and signaling and data exchange between the CN and the RAN for a task can be performed only via the TCF and the cNode (as the peer TA/TS); and
■ data: sNode <-> cNode <-> TCF, where data communication between the sNode and the TCF needs to be relayed by the cNode, and the cNode further decompose a TCF task for execution by the sNode (or for execution by the UE).

If an SBA interface is used:

■ the cNode provides the S-c interface, and the sNode provides the S-s interface.

(4) Type 4: Task interface between RANs

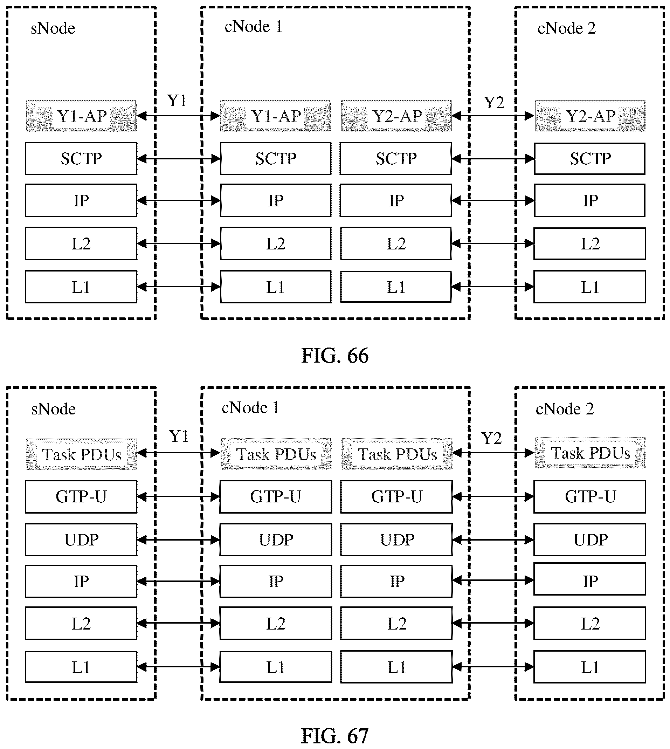

As a TA, a cNode 2 requests a neighboring cNode 1 (TA) to execute a task. There are also two solutions: non-SBA and SBA.
If a non-SBA interface is used, FIG. 66 and FIG. 67 are respectively an end-to-end control plane protocol stack of an inter-RAN/RAN task and an end-to-end user plane protocol stack of an inter-RAN/RAN task:

■ signaling: sNode/cNode 1 <-> cNode 2; and
■ data: sNode/cNode 1 <-> cNode 2.

If an SBA interface is used:

■ the cNode provides the S-c interface, and the sNode provides the S-s interface.

5.1.2. Connectivity

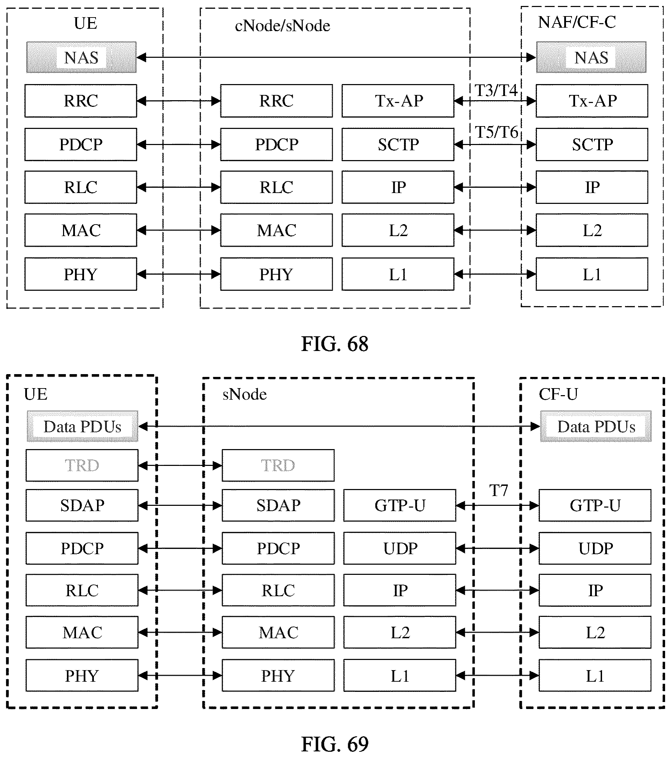

For connectivity, an end-to-end control plane protocol stack and user plane protocol stack are respectively shown in FIG. 68 and FIG. 69.
If a non-SBA interface is used:

■ signaling: UE <-> cNode <-> NAF/CF-C, where signaling communication between the UE and the NAF/CF-C needs to be relayed by the cNode; and
■ data: UE <-> sNode <-> CF-U, where data communication between the UE and the CF-U needs to be relayed by the sNode.

If an SBA interface is used:

■ terrestrial interface: the cNode provides an S-c interface, and the sNode provides an S-s interface; and
■ air interface: the cNode provides an S-c-Uu interface, and the sNode provides an S-s-Uu interface; and
■ air interface: the UE provides an S-UE-Uu interface (including a T-NAS layer service, a TRC layer service, a T-PDCP layer service, an RLC layer service, a TRS layer service, and a PHY layer service).

5.2. Option 2: converged control plane

In the option 2, the user plane protocol stack of the connectivity remains unchanged.
In addition, an independent task data plane is added.
Optionally, the connectivity control plane and the task control plane are combined, for example, the converged control plane protocol stack in the option 1.

5.3. Option 3: task control/data plane

In this option, the control plane protocol stack and the data plane protocol stack of the connectivity remain unchanged.
A control plane protocol stack and a data plane protocol stack of a task are added.

5.4. Option 4: independent function plane

Specifically, the independent function plane refers to one or more of an independent computing plane, data plane, and intelligence plane are added for the first function, and a control plane and user plane of the connectivity remain unchanged.

5.4.1. Independent computing plane

A control signaling protocol stack for the computing plane is as follows:

Air interface computing connectivity control may be implemented based on an existing RRC protocol mechanism. To be specific, computing connectivity control is supported by modifying an RRC protocol or invoking a basic function of the RRC protocol. Computing execution control is implemented by CRC. CRC may be independent of RRC, or may be integrated into xRC with RRC. xRC may be used as a sub-function of TRC. CRC is for controlling a computing resource occupied by a computing execution function, a computing operation amount, computing quality, and the like.

Computing connectivity control of a UE and a core network may support control of computing connectivity by modifying or enhancing a basic function of the NAS. Computing execution control may maintain a computing execution function address, a computing task, computing map information, and the like via a TCF (task control function).

The following separately describes the computing connectivity control function and the computing execution control function.

- The computing connectivity control function may be implemented on the TCF or through CF-C enhancement.

Computing connectivity control senses a computing connectivity status in real time, performs connectivity resource control and quality control on computing connectivity, and supports terminal status sensing and service continuity assurance in a case of mobility; controls computing connectivity required for transmitting computing data, for example, supporting establishment, change, migration, reestablishment, and deletion of computing connectivity, and allocates connectivity resources.

- The computing execution control function may be implemented in the TCF or through an independent CMF function.

Computing execution control: allocates computing resources used by the computing execution function of a node, controls a quantity of computing operations to be performed, controls computing quality, and supports terminal mobility. The computing resource control senses a computing resource status in real time and controls computing resource allocation.

Computing connectivity control and computing execution control of the base station and the core network may maintain a computing execution function address, a computing task, computing map information, and the like via the TCF. Computing execution control functions of the TCF and the base station may interact with each other based on a T2-AP mechanism.

The service protocol stack for the computing plane is as follows:

A transmission part of the computing plane is for transmitting computing data between computing execution functions of different nodes, which means that data of the computing plane does not need to be transmitted to a DN. Therefore, a transmission mechanism design of the computing plane needs to be differentiated from that of a conventional communication user plane.

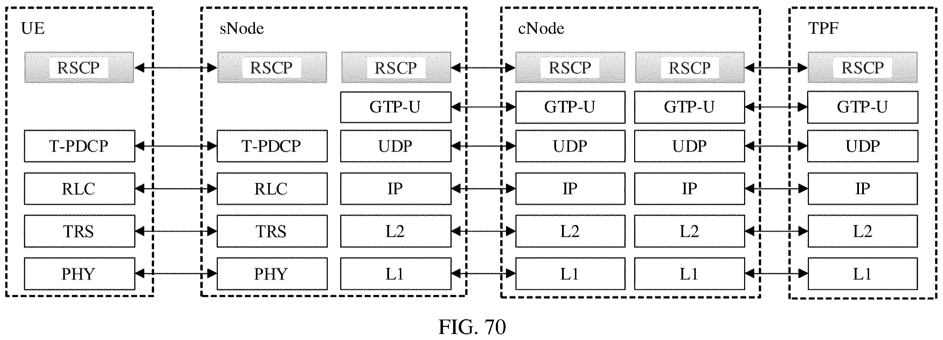

FIG. 70 is a service plane protocol stack of an end-to-end computing plane. For a computing plane transmission mode, a new bearer mode is introduced to a bearer layer, for example, a computing radio bearer (computing radio bearer, CRB) of an air interface part and a computing bearer (computing bearer, CB) of a terrestrial interface part. In addition, a new radio computing session protocol (radio computing session protocol, RCSP) is introduced to a session layer, and in this case, a computing session may also be referred to as an RCSP session. The RCSP session may include only a CRB of an air interface part (computing collaboration between the terminal and the base station), may include only a CB of the terrestrial interface part (computing collaboration between the base station and the core network), or may include both the CRB of the air interface part and the CB of the terrestrial interface part (computing collaboration between the terminal and the core network).

5.4.2. Independent data plane

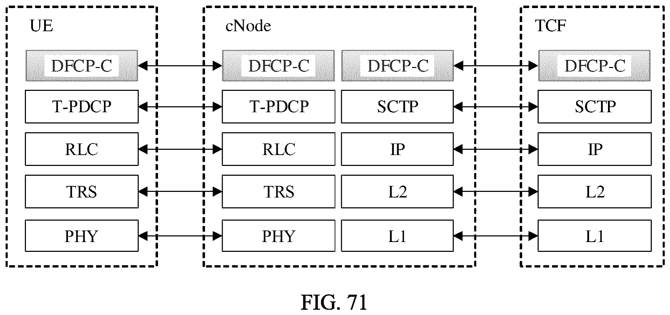

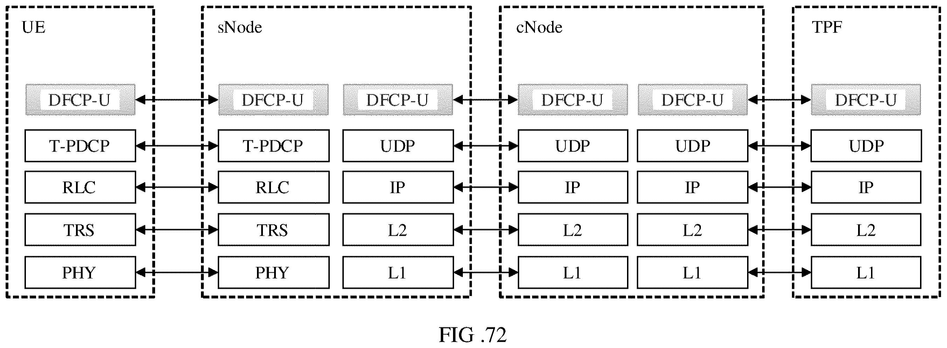

FIG. 71 and FIG. 72 are a data plane control signaling protocol stack and a data plane service protocol stack respectively. The cNode and the TCF are connected through a T2-C interface, to transmit data plane signaling. The cNode and the TPF are connected through a T2-U interface, to transmit data plane data.

### 5.4.3. Independent intelligence plane

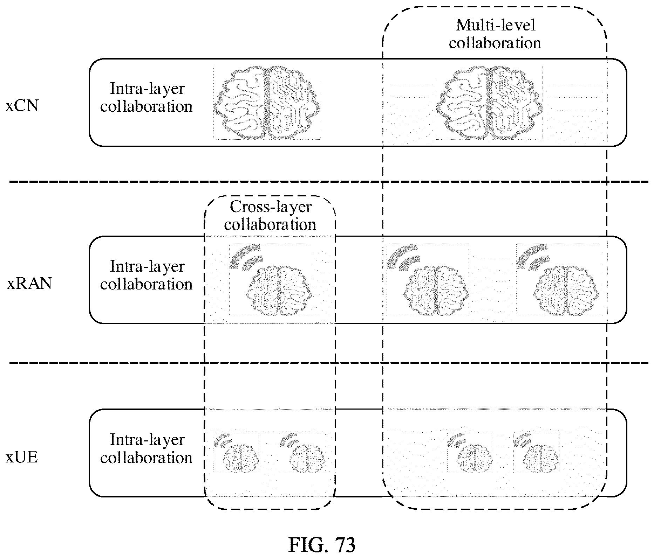

FIG. 73 is a diagram of hierarchical collaboration of an independent intelligence plane. As shown in FIG. 73, HiC supports intelligent collaboration between network elements and terminals at various layers in a network, including scenarios of collaboration between a terminal and a base station, between a terminal and a core network, between base stations, and between a base station and a core network. On a control plane, HicC can be deployed hierarchically. A local collaboration control function is deployed on the cNode for collaboration between network elements served by the cNode. A global collaboration control function is deployed on the TCF of the core network to coordinate collaboration in an area of the cNode and between a RAN domain and a core network domain.

### 5.4.4. Independent trustworthiness plane

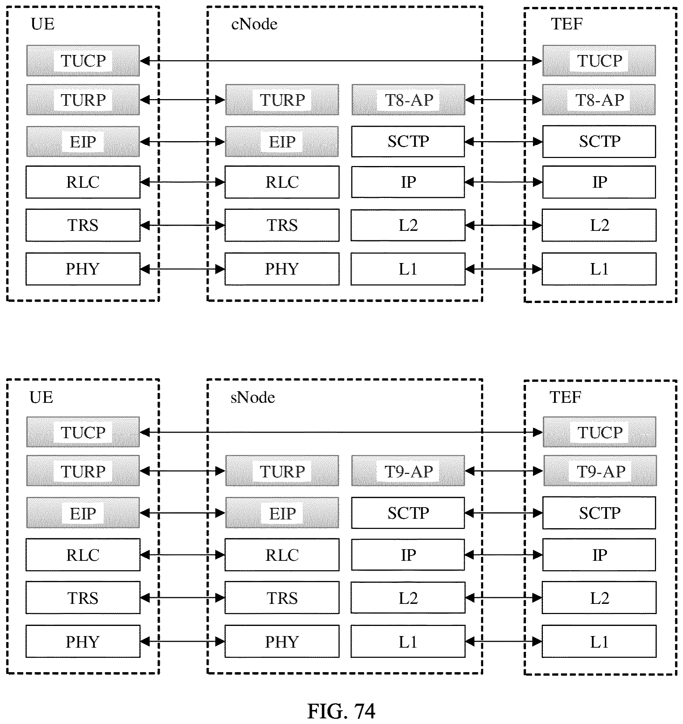

FIG. 74 shows an end-to-end trustworthiness control plane protocol stack. Trustworthiness signaling is transmitted between the UE and the CN by using the TUCP protocol, and the access network transparently transmits the trustworthiness signaling. Trustworthiness signaling is transmitted between the UE and the access network by using the TURP protocol. Trustworthiness signaling is transmitted between access network nodes by using Y1-AP, Y2-AP, and Y3-AP. Trustworthiness signaling is transmitted between the access network and the core network CF by using T8-AP and T9-AP. The EIP provides encryption, decryption, and integrity protection functions for the trustworthiness signaling. Functions of the TUCP and the TURP are all implemented by the TWE and the TWG. Functions of the EIP are the same as those described above. Trustworthiness functions of the T8-AP and the T9-AP are performed by the TWE and the TWG.

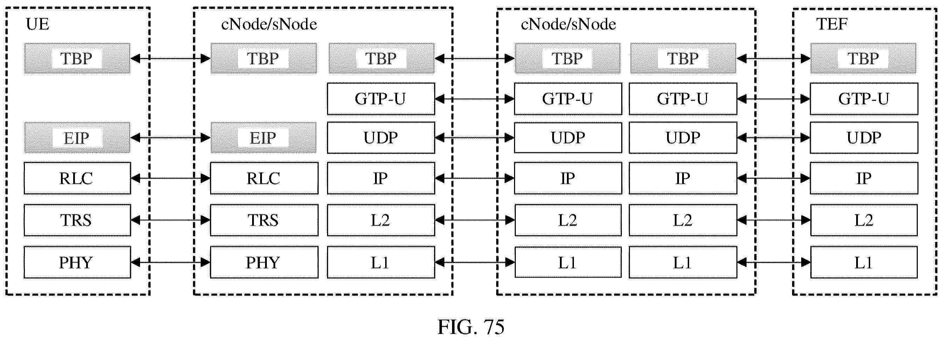

FIG. 75 shows an end-to-end trustworthiness service plane protocol stack. Trustworthiness data is transmitted between the UE, the access network, and the core network by using a trustworthiness bearer protocol (trustworthiness bearer protocol, TBP) protocol layer. The EIP provides encryption, decryption, and integrity protection functions for the trustworthiness data. All functions of the TBP are performed by the TWE and the TWG, and functions of the EIP are the same as those described above.

### 6. Air interface protocol layer

6.1. Layer 1 (physical layer): For details, refer to related descriptions in the protocol 38.300.

6.2. Layer 2 (Layer 2):

### 6.2.1. Overview

For connectivity, layer 2 of 6G is divided into the following sublayers: task resource scheduling (TRS), radio link control (RLC), packet data convergence protocol (PDCP), and task service data adaptation protocol (T-SDAP). The layer 2 provided in this application includes a sublayer supporting the first function, and the sublayer supporting the first function includes at least one of the following:

- a physical layer that provides a transport channel for a TRS sublayer;
- the TRS sublayer that provides a logical channel for an RLC sublayer;
- the RLC sublayer that provides an RLC channel for a T-PDCP sublayer;
- the T-PDCP sublayer that provides a radio bearer for a T-SDAP sublayer;
- the T-SDAP sublayer that provides a QoS flow for 6GC tasks and connectivity;
- a TRD sublayer provides task data encapsulation (only task data and HiC data);
- an RSCP sublayer provides computing data encapsulation (only for the independent computing plane);
- a DFCP sublayer provides data encapsulation (only for the independent data plane);
- comp. packet header compression or uplink data compression;
- Segm. packet segmentation; and
- control channel (for clarity, a BCCH and a PCCH are not described).

Radio bearers are classified into two groups: a data radio bearer (DRB) and a signaling radio bearer (SRB) for control plane data and user plane data.

### 6.2.2. TRS sublayer

For a connectivity feature, the TRS reuses an existing MAC function of the connectivity:

- Provided services and functions

  - mapping between a logical channel and a transport channel;
  - multiplexing/demultiplexing TRS SDUs belonging to one or different logical channels into a transport block (TB), where the transport block (TB) is transmitted to a physical layer on the transport channel/from the transport block to the transport block (TB);
  - dispatch information reporting;
  - error correction through HARQ (in a case of CA, there is one HARQ entity per cell);
  - priority processing between UEs through dynamic scheduling;
  - priority processing of logical channels of a UE through logical channel priority processing;
  - priority processing of overlapping resources of a UE; and
  - padding.

- Logical channel

The control channel is only used to transmit control signaling information:

- broadcast control channel (BCCH): a downlink channel for broadcasting system control information;
- paging control channel (PCCH): a downlink channel carrying a paging message;
- common control channel (CCCH): a channel for transmitting control information between a UE and a network, where the channel is used for a UE without an RRC connection to the network; and
- dedicated control channel (DCCH): a point-to-point bidirectional channel that transmits dedicated control information between a UE and a network, and is used by a UE with an RRC connection.

A traffic channel is used only to transmit user plane information.

- dedicated traffic channel (DTCH): a point-to-point channel dedicated to a UE for transmitting user information, where the DTCH may exist in an uplink and a downlink.

• Mapping to a transport channel

In the downlink, there are the following connections between a logical channel and a transport channel:

- the BCCH may be mapped to the BCH;
- the BCCH may be mapped to the DL-SCH;
- the PCCH may be mapped to the PCH;
- the CCCH may be mapped to the DL-SCH;
- the DCCH may be mapped to the DL-SCH; and
- the DTCH may be mapped to the DL-SCH.

In the uplink, there are the following connections between a logical channel and a transport channel:

- the CCCH may be mapped to the UL-SCH;
- the DCCH may be mapped to the UL-SCH; and
- the DTCH may be mapped to the UL-SCH.

• HARQ

- A HARQ function ensures transfer between layer 1 peer entities. When downlink/uplink spatial multiplexing is not configured at the physical layer, a single HARQ process supports transmission of one TB. When downlink/uplink spatial multiplexing is configured at the physical layer, a single HARQ process supports transmission of one or more TBs.

For new features such as task and computing, one or more of the following functions are added to the TRS:

- Provided services and functions

- mapping between a logical channel and a transport channel of a task;
- multiplexing/demultiplexing TRS SDUs of the task and connectivity and belonging to one or different logical channels into a transport block (TB), where the transport block (TB) is transmitted to a physical layer on the transport channel/from the transport block to the transport block (TB);
- computing resource scheduling information reporting;
- computing resource status information reporting;
- dynamic scheduling or semi-persistent scheduling performed by a network side for a computing resource of the UE; and
- priority processing of different tasks of a UE for a computing resource.

If an independent data plane is used, the following functions are added to the TRS for new data features:

• Provided services and functions

- mapping between a logical channel and a transport channel of data;
- multiplexing/demultiplexing TRS SDUs of the data and connectivity and belonging to one or different logical channels into a transport block (TB), where the transport block (TB) is transmitted to a physical layer on the transport channel/from the transport block to the transport block (TB); and
- scheduling priority processing for a user-plane bearer, an SRB, and a DRB.

6.2.3. RLC sublayer

For the connectivity feature, all functions of the RLC layer for connectivity are reused:

• Transmission mode: an acknowledged mode (Acknowledged Mode (AM)), an unacknowledged mode (Unacknowledged Mode (UM)), and a TM mode (Transparent Mode (TM))
• Services and functions

- transmission of an upper layer PDU;
- sequence number (UM and AM) independent of PDCP;
- error correction through ARQ (AM only);
- segmentation (AM and UM) and re-segmentation (AM only) of an RLC SDU;
- reconstruction of the SDU (AM and UM);
- repeated detection (AM only);
- RLC SDU discarding (AM and UM);
- RLC reconstruction; and
- protocol error detection (AM only).

• ARQ function

- retransmit an RLC SDU or an RLC SDU segment based on an RLC status report in ARQ;
- use polling for RLC status report when required by RLC; and
- an RLC receiver may also trigger an RLC status report after detecting a lost RLC SDU or RLC SDU segment.

6.2.4. T-PDCP sublayer

For the connectivity feature, all functions of the PDCP layer of the connectivity are reused:

- data transmission (user plane or control plane);
- PDCP SN maintenance;
- header compression and decompression using the ROHC protocol;
- header compression and decompression using the EHC protocol;
- compression and decompression of an uplink PDCP SDU: only DEFLATE-based UDC;
- encryption and decryption;
- integrity protection and integrity verification;
- SDU discarding based on a timer;
- routing for a split bearer;
- repetition;

- re-ordering and delivery in sequence;
- out-of-order delivery; and
- duplication discarding.

6.2.5. T-SDAP sublayer

For the connectivity feature, all the following functions of the SDAP layer of the connectivity are reused:

- mapping between a QoS flow and a data radio bearer; and
- marking a QoS flow ID (QFI) in DL and UL data packets.

For new features such as task, computing, data, and AI, the following functions are added to T-SDAP:

- mapping between a task ID and a task QFI;
- mapping between a task QoS flow and a data radio bearer; and
- marking a task QoS flow ID (Task QFI) and a corresponding task ID in DL and UL data packets.

6.2.6. TRD sublayer

The TRD layer is added for new task features and provides the following functions:

- newly adding AI training/inference/model processing functions (compression/pruning/quantization/security and the like)

6.2.7. Task PDUs sublayer

If a non-independent function plane is used, for a task data plane feature, a task PDU layer is added to transmit trustworthiness service data between the UE and the base station/CN, and has the following functions:

- task data format (for example, format design of computing data, definition of AI training or data format inference, and the like)

6.2.8. RCSP sublayer

If an independent computing plane is used, an RCSP layer is added for new features of the computing plane. The RCSP layer has the following functions:

- native computing resource addressing, computing data routing and forwarding, computing session identification, computing session priority processing, and the like.

6.2.9. DFCP sublayer

If an independent data plane is used, a DFCP layer is added for new features of the data plane. The DFCP layer is divided into a DFCP-C and a DFCP-U, which are configured to process control signaling and service data on the data plane, respectively.
The DFCP-C performs the following functions:

- starting and stopping of a data service task;
- configuration of routing information of the data service task;
- push and update of a data protection technology; and
- reporting of statistical information.

The DFCP-U performs the following functions:

- mapping from a data service task ID to a data plane radio bearer;
- data privacy protection (implemented by invoking an interface of the trustworthiness plane);
- compression of a data packet;
- data routing and forwarding; and

- data collection, data preprocessing, data analysis, data openness, and the like.

6.2.10. EIP sublayer

If an independent trustworthiness plane is used, for new features of the trustworthiness plane, an EIP layer is added to process a trustworthiness packet. The EIP reuses a function of a PDCP layer for connectivity, and the following functions are added:

- encryption and decryption (anti-quantum key length); and
- integrity protection and integrity verification (anti-quantum key length).

6.2.11. EIP sublayer

TBP sublayer

If an independent trustworthiness plane is used, for a trustworthiness data plane feature, a TBP layer is added, and is responsible for trustworthiness service data transmission between the UE and the base station/CN and between the base station and the CN. The TBP layer has the following functions:

- synchronization data such as blockchain transactions/blocks;
- situational sensing data;
- data such as a homomorphic encrypted ciphertext and a computing result;
- trusted root management data; and
- keys.

6.2.12. Layer 2 data flow (L2 data flow)

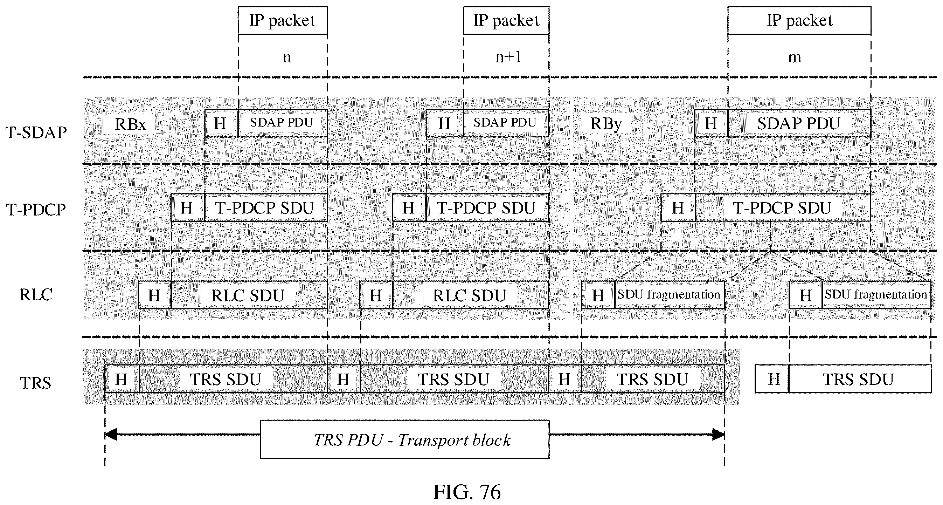

The data transmission of the connectivity may not be modified. FIG. 76 shows an example of the layer 2 data flow. The TRS generates a transport block by connecting two RLC PDUs from RBx and one RLC PDU from RBy. The two RLC PDUs from RBx correspond to one IP packet (n and n+1) separately, and the RLC PDU from RBy is a segment of an IP packet (m).

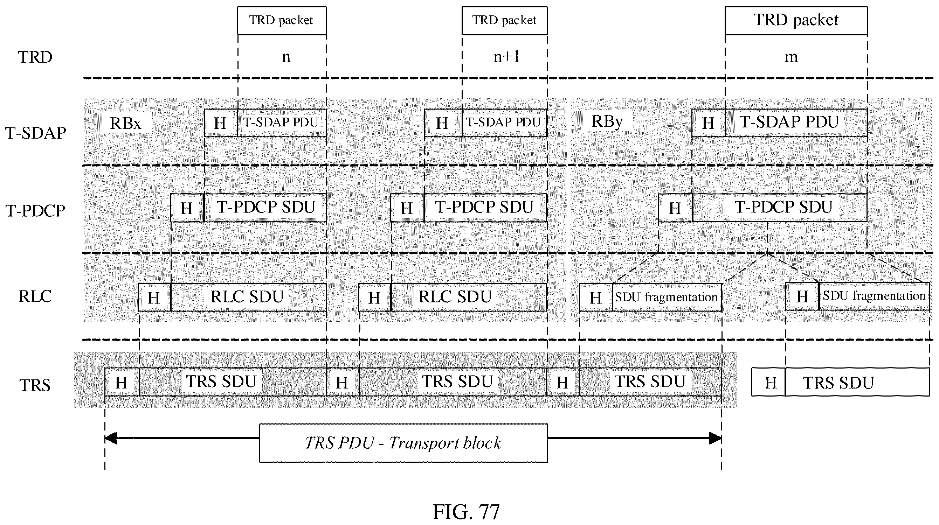

For task data transmission, a protocol stack needs to be modified. Compared with connectivity, the TRD layer is added to generate task data, for example, AI data generation (such as gradient information in federated learning) or AI model encoding and decoding. An example of the layer 2 data flow is shown in FIG. 77, where the TRS generates a transport block by connecting two RLC PDUs from RBx corresponding to different task IDs and one RLC PDU from RBy corresponding to another task ID. The two RLC PDUs from RBx correspond to one TRD packet (n and n+1) separately, and the RLC PDU from RBy is a segment of a TRD packet (m).

In addition, because a same transmission channel (air interface) is shared, a task data bearer and a connectivity data bearer may be multiplexed and encapsulated into a single TRS PDU for transmission.

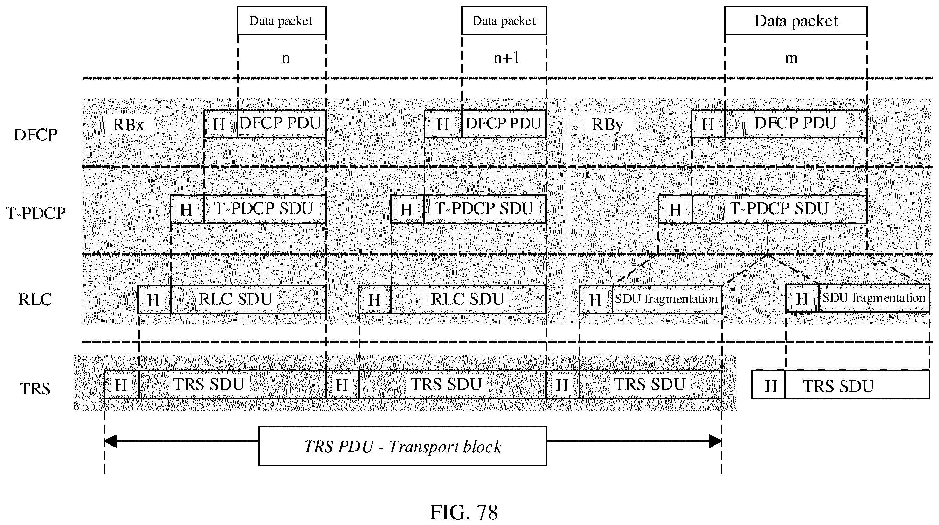

If an independent data plane is used, for transmission of data plane data, a protocol stack is modified. Compared with connectivity, an SDAP layer is reduced, and a DFCP layer is added, to generate the data plane data and map the data to a data bearer DDRB by using a data service ID. FIG. 78 is a diagram of a data flow for an independent data plane.

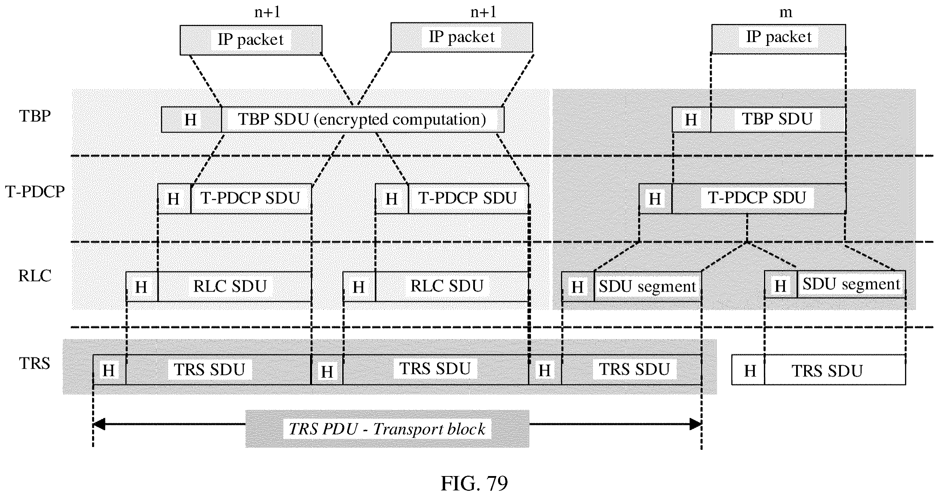

If an independent trustworthiness plane is used, for trustworthiness plane data transmission, a protocol stack is changed. Compared with connectivity, an SDAP layer is removed, and a TBP layer is added, to assemble input data into a homomorphic computing input. After homomorphic computing is performed, homomorphic output data is disassembled, and a data plane packet is forwarded. Refer to FIG. 79.

6.3. Layer 3 (layer 3)

In this application, a layer 3 of an air interface may include a sublayer supporting the first function. For example, in an implementation, the layer 3 includes a TRC layer, and the TRC layer includes an existing function of an RRC layer and a function (or the first function) related to the foregoing newly added feature. For details about the TRC layer, refer to 6.3.1.

6.3.1. TRC

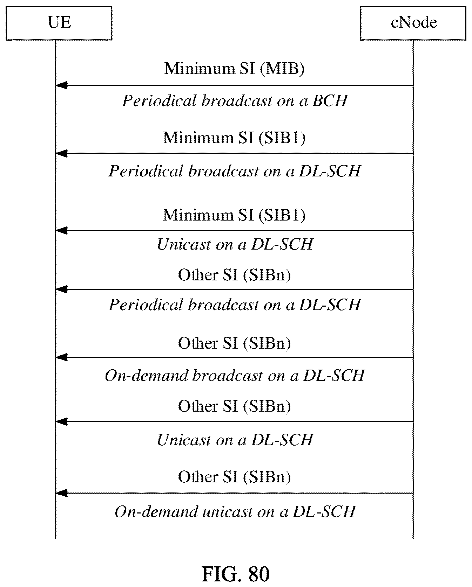

For example, in addition to existing functions (for example, RRC state maintenance (idle/inactive/connected), generation, scheduling, and transmission of a system broadcast message (MIB, SIB1 to SIBx), access control (Access control), UE capability obtaining, and NAS signaling transmission) of original RRC, functions related to new features such as task, computing, data, and AI are further added to the TRC, for example, one or more of functions such as task configuration, modification, deletion, and mobility. FIG. 80 shows system information broadcast. As shown in the figure, the cNode periodically sends a MIB message over a BCH, and periodically sends a SIB1 message over a DL-SCH. Other system information (system information, SI) (including system information that is not broadcast in a minimum system message) may be delivered by broadcast in an RRC idle/inactive state, or may be delivered by using RRC dedicated signaling in an RRC connected state, and may be delivered periodically or based on a request of the UE (that is, an on-demand sending manner).

For the connectivity feature, reused main services and functions of the RRC sublayer on the Uu interface include:

- broadcasting system information related to an AS and a NAS;
- paging initiated by a 6GC or a 6G-RAN;
- establishment, maintenance, and release of TRC connectivity between the UE and the 6G-RAN, including:

   - addition, modification, and release of carrier aggregation;
   - addition, modification, and publish of dual connectivity in the 6G-RAN or between a 5G-RAN and the 6G-RAN;
   - security functions including key management;
   - establishment, configuration, maintenance, and release of a signaling radio bearer (SRB) and a data radio bearer (DRB);
   - a mobile function, including:

      - handover and context transfer;
      - UE cell selection and reselection and cell selection and reselection control;
      - inter-RAT mobility;
      - a QoS management function;
      - UE measurement report and report control;
      - detection and recovery of a radio link fault; and
      - T-NAS messages transmitted from the core network to the UE or from the UE to the core network.

For new features such as task, computing, and HiC, one or more of the following functions are added to the TRC:

- establishment, configuration, maintenance, and release of a task signaling radio bearer (T-SRB) and a task data radio bearer (T-DRB);
- configuration, modification, and deletion of a computing resource, and allocation and scheduling (semi-static) of the computing resource;
- configuration, modification, and deletion of a data resource;
- configuration, modification, and deletion of a model resource;
- configuration, modification, and deletion of a collaboration pattern;
- task-based handover and context transfer; and
- task-based QoS management functions.

If an independent data plane is used, one or more of the following functions are added to the TRC for new data features:

- establishment, configuration, maintenance, and release of a data data radio bearer (DDRB);
- a data-based QoS management function;
- processing of a data radio bearer in a handover process;
- processing of a data radio bearer in a call reestablishment process; and
- DA registration.

For the new feature trustworthiness, TRC adds one or more of the following functions:

- establishment, configuration, maintenance, and release of a trustworthiness signaling radio bearer (Trust-SRB) and a trust data radio bearer (Trust-DRB);
- sensing, registration, and deregistration of a trustworthiness capability of a UE;
- configuration, modification, activation, and deletion of a trustworthiness capability of the UE;
- processing of a trust radio bearer in a handover process;
- processing of a trust radio bearer in a call reestablishment process;
- parsing a T-NAS (TUCP) T-NAS message and transmitting the message to/from the core network from/to the UE;

- QoS management based on a trust bearer;
- security negotiation between the UE and the base station, such as security policy negotiation and key negotiation;
- trustworthiness information subscription of the UE and the base station, such as a requirement label, a capability label, a response label, and a network global trustworthiness policy;
- authentication of the UE and base station: identity authentication for secure access, such as an authentication vector and an authentication parameter;
- authorization of the UE and the base station: static authorization and token-based authorization;
- blockchains of the UE and the base station: creation and update of a blockchain, management of a blockchain/chain node, blockchain capability deployment, capability discovery, capability activation, a running parameter, chain node identity management, dynamic node addition, and dynamic exit;
- trust measurement of the UE and the base station: trust reliability measurement, for example, a trustworthiness attestation vector and a trustworthiness attestation parameter;
- situational sensing of the UE and the base station: configuration information of situational sensing, such as a parameter type, a parameter type, and parameter information extraction; and
- homomorphic processing of the UE and the base station: key negotiation and algorithm configuration.

6.3.2. TURP

If an independent trustworthiness plane is used, a TURP layer is added for a new feature of the trustworthiness control plane, and has one or more of the following functions:

- establishment, configuration, maintenance, and release of a trustworthiness signaling radio bearer (Trust-SRB) and a trust data radio bearer (Trust-DRB);
- sensing, registration, and deregistration of a trustworthiness capability of a UE;
- configuration, modification, activation, and deletion of a trustworthiness capability of the UE;
- processing of a trust radio bearer in a handover process;
- processing of a trust radio bearer in a call reestablishment process;
- parsing a T-NAS (TUCP) T-NAS message and transmitting the message from the core network to the UE or from the UE to the core network;
- QoS management based on a trust bearer;
- security negotiation between the UE and the base station, such as security policy negotiation and key negotiation;
- trustworthiness information subscription of the UE and the base station, such as a requirement label, a capability label, a response label, and a network global trustworthiness policy;
- authentication of the UE and base station: identity authentication for secure access, such as an authentication vector and an authentication parameter;
- authorization of the UE and the base station: static authorization and token-based authorization;
- blockchains of the UE and the base station: creation and update of a blockchain, management of a blockchain/chain node, blockchain capability deployment, capability discovery, capability activation, a running parameter, chain node identity management, dynamic node addition, and dynamic exit;
- trust measurement of the UE and the base station: trust reliability measurement, for example, a trustworthiness attestation vector and a trustworthiness attestation parameter;
- situational sensing of the UE and the base station: configuration information of situational sensing, such as a parameter type, a parameter type, and parameter information extraction; and
- homomorphic processing of the UE and the base station: key negotiation and algorithm configuration.

The following describes a network element interface-protocol layer in the RAN architecture provided in this application.

7. Network element interface-protocol layer

7.1. RAN terrestrial interface-signaling

(1) Y1-AP

Main functions of Y1-AP include one or more of the following:

- The cNode and the sNode need to exchange connectivity-related context information (for the connectivity architecture 1, the cNode maintains connectivity-related control signaling and context information, and needs to notify the sNode;

for the connectivity architecture 2, the sNode maintains connectivity-related control signaling and context information, and needs to notify the cNode).

- The cNode and the sNode need to exchange task-related context information.
- If there is no Y3 interface between sNodes, transparent transmission and forwarding (forwarded by the cNode) over the Y3 interface may be performed through Y1-AP of the Y1 interface.
- The cNode and the sNode need to exchange trustworthiness-related context information.

(2) Y2-AP

Main functions of Y2-AP include one or more of the following:

- cNodes exchange connectivity-related information (such as handover signaling and inter-station RRM negotiation).
- cNodes exchange task information (such as a task request message, a task response message, a task reconfiguration message, a task deletion message, a task status query message, and a task exception reporting message).
- cNodes need to exchange trustworthiness-related context information.

(3) Y3-AP

Main functions of Y3-AP include one or more of the following:

- The sNodes exchange connectivity-related information (for the connectivity architecture 2, such as handover signaling and inter-station RRM negotiation).
- The sNodes exchange task information (for example, exchanging task data, where the task data may be a computing result, a data processing result, and an intelligent representation of multi-intelligent collaboration).
- The cNode and the sNode need to exchange trustworthiness-related context information.

(4) T2-AP

Main functions of T1-AP include:

- The cNode and the TCF exchange task information (such as a task request message, a task response message, a task reconfiguration message, a task deletion message, a task status query message, and a task exception reporting message).

(5) T3-AP

Main functions of T3-AP include:

- The cNode and the NAF exchange connectivity-related information (only for the connectivity architecture 1, such as initial access and initial selection signaling messages).

(6) T4-AP

Main functions of T4-AP include:

- The cNode and the CF-C exchange connectivity-related information (only for the connectivity architecture 1, for example, other signaling messages than initial access and initial selection signaling messages).

(7) T5-AP

Main functions of T5-AP include:

- The sNode and the NAF exchange connectivity-related information (only for the connectivity architecture 2, such as initial access and initial selection signaling messages).

(8) T6-AP

Main functions of T6-AP include:

- The sNode and the CF-C exchange connectivity-related information (only for the connectivity architecture 2, for example, other signaling messages than initial access and initial selection signaling messages).

(9) T8-AP

Main functions of T8-AP include one or more of the following:

- sensing, registration, and deregistration of a trustworthiness capability of a cNode;
- configuration, modification, activation, and deletion of a trustworthiness capability of the cNode;
- security negotiation between the cNode and the CN, such as security policy negotiation and key negotiation;
- trustworthiness information subscription of the cNode and the CN, such as a requirement label, a capability label, a response label, and a network global trustworthiness policy;
- authentication of the cNode and the CN: identity authentication for secure access, such as an authentication vector and an authentication parameter;
- encryption and integrity protection of signaling between the cNode and the BN;
- authorization of the cNode and the CN: static authorization and token-based authorization;
- blockchain control of the CN on the cNode, including creating and updating the blockchain, and managing the blockchain/chain node; blockchain capability deployment, capability discovery, capability activation, a running parameter, chain node identity management, dynamic node addition, and dynamic exit;
- situational sensing control of the CN on the cNode: a parameter type, parameter type configuration, and parameter information extraction;
- trust measurement of the cNode and the CN: device trustworthiness measurement, for example, a trustworthiness attestation vector and a trustworthiness attestation parameter; and
- homomorphic processing of the cNode and the CN: key negotiation and algorithm configuration.

(10) T9-AP

Main functions of T9-AP include one or more of the following:

- sensing, registration, and deregistration of a trustworthiness capability of an sNode;
- configuration, modification, activation, and deletion of a trustworthiness capability of the sNode;
- security negotiation between the sNode and the CN, such as security policy negotiation and key negotiation;
- trustworthiness information subscription of the sNode and the CN, such as a requirement label, a capability label, a response label, and a network global trustworthiness policy;
- authentication of the sNode and the CN: identity authentication for secure access, such as an authentication vector and an authentication parameter;
- encryption and integrity protection of signaling between the sNode and the CN;
- authorization of the sNode and the CN: static authorization and token-based authorization;
- blockchain control of the CN on the sNode, including creating and updating the blockchain, and managing the blockchain/chain node; blockchain capability deployment, capability discovery, capability activation, a running parameter, chain node identity management, dynamic node addition, and dynamic exit;
- situational sensing control of the CN on the sNode, including a parameter type, parameter type configuration, and parameter information extraction;
- trust measurement of the sNode and the CN: device trustworthiness measurement, for example, a trustworthiness attestation vector and a trustworthiness attestation parameter; and
- homomorphic processing of the sNode and the CN: key negotiation and algorithm configuration.

7.2. RAN terrestrial interface-data

The interface is configured to transmit user data, task data (including computing data, HiC data, service data, and the like), trustworthiness data, and the like.

7.2.1. Task PDUs layer

For a task data plane feature, a task PDU layer is added to transmit trustworthiness service data between the UE and the base station/CN, and has the following functions:

- task data format (for example, format designing of computing data, and definition of AI training or a data format inference).

### 7.2.2. TBP layer

If an independent trustworthiness plane is used, a TBP layer is added for a new feature of the trustworthiness data plane, and has one or more of the following functions:

- synchronization data such as blockchain transactions/blocks;
- situational sensing data;
- data such as a homomorphic encrypted ciphertext and a computing result;
- trusted root management data; and
- keys.

### 8. 6G identity (6G Identities)

### 8.1. UE identity (UE Identities)

### 8.2. Network identity (Network Identities)

As an example, the following identities are used in the 6G-RAN to identify specific network entities:

- CF-C name (CF-C Name): identifies a CN CF-C.
- NAF name (NAF Name): identifies a CN NAF.
- TCF identifier/name: identifies a CN TCF.
- TPF identifier/name: identifies a CN TPF.
- TEF identifier/name: identifies a CN TEF.
- TGF identifier/name: identifies a CN TGF.
- cNode identifier (cNode ID): identifies a cNode in a PLMN.
- sNode identifier (sNode ID): identifies an sNode in a PLMN.
- Tracking area identifier (TAI): identifies a tracking area.

### 8.3. Service identity (service identities)

As an example, the following identities are used in the 6G-RAN to identify specific service entities:

- Task ID: When a UE supports a plurality of tasks at the same time, the task ID is used to distinguish different tasks and their signaling or data.

### 8.4. TWE/TWG identity

The TWE and the TWG are distinguished by identities, and the identities are bound to deployed nodes. A node identifier of a termination point of a message may be determined based on the TWE/TWG identity.

### 9. Mobility and state transition

### 9.1. Task mobility

As described above, the 6G network has new task features, including computing, AI training, AI inference, and the like. To separately ensure QoS of connectivity and a task, the connectivity and the task may not be migrated at the same time during handover. For example, when computing resources of a target base station are insufficient, only the connectivity may be migrated, and the task may not be migrated. Therefore, the 6G network may face a situation in which a connectivity anchor and a task anchor are separated. In a scenario in which a user requests a base station to perform a task or a base station requests a user to perform a task, when the user moves out of a coverage area of a task anchor, a problem of how the task anchor communicates with the user needs to be considered. The following describes the solutions provided in this application separately for the scenario in which the user requests the base station to perform a task and the scenario in which the base station requests the user to perform a task. The base station herein may be the cNode or the sNode described above.

(1) The user requests the base station to perform a task.

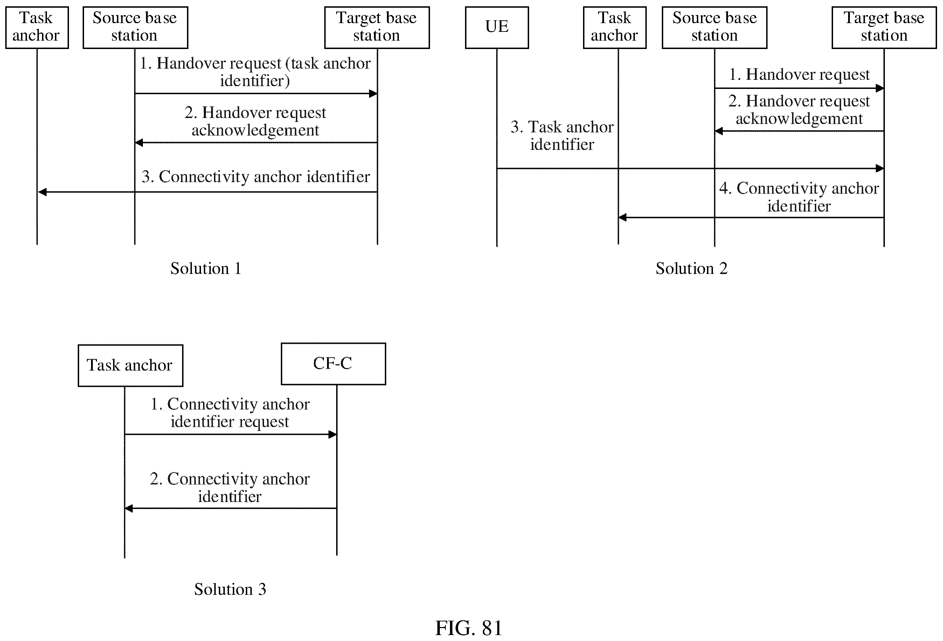

The user initiates a computing or AI task to the base station. Based on a task size, a resource of the base station, and a peripheral node resource, the base station may decompose the task and allocates the task to neighboring base stations or devices in a cell for execution. As the task anchor, the base station collects results of all executors after the task is complete and sends the results to the user. After the user initiates a task, if the user moves to a cell of a new base station, a connectivity anchor is switched to the new base station to ensure an uninterrupted connectivity service. However, the task anchor may remain unchanged. In this case, how the task anchor sends a result to the user needs to be considered.
Because the user is not in the coverage area of the task anchor, the result cannot be directly sent over an air interface. The task anchor needs to route the result to a current connectivity anchor of the user, and then the connectivity anchor sends the result to the user through an air interface. Therefore, a key to resolving the problem is how the task anchor finds the connectivity anchor of the user. The following provides three optional solutions provided in this application with reference to FIG. 81, for example, the following solution 1 to solution 3.

Solution 1

As shown in the accompanying drawing, during handover, a handover request message sent by a source base station to a target base station includes an identifier of a task anchor of a user, that is, a base station ID/IP of the task anchor, and a UE ID corresponding to the identifier of the task anchor, for example, a temporary mobile subscriber identity (temporary mobile subscriber identity, TMSI). After receiving the message, the target base station sends the identifier of the task anchor to the task anchor based on the ID or the IP of the task anchor.

Solution 2

During handover, a UE sends an identifier of a task anchor to a target base station. The identifier includes a base station ID/IP address of the task anchor and a UE ID, for example, a TMSI. Then, the target base station sends a connectivity anchor identifier, namely, the target base station ID/IP and the corresponding UE ID, to the task anchor.

Solution 3

Before sending a result, a task anchor sends a request to a CF-C of a core network to query a connectivity anchor of a user. The core network queries a current connectivity anchor of the user based on a UE ID and sends an identifier of the current connectivity anchor to the task anchor.

(2) The base station requests the user to perform a task.

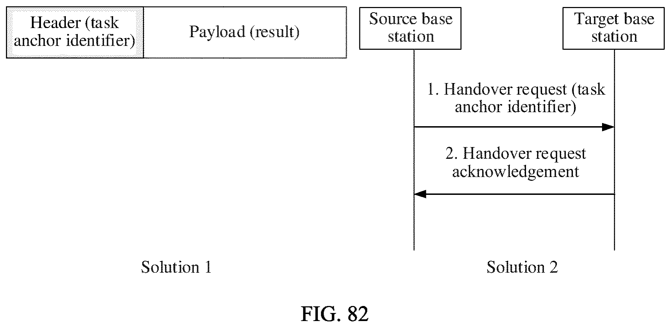

The base station allocates a subtask to a user in a coverage area of the base station for execution, and the user feeds back a result to the base station after the execution is completed. When the user moves to a cell of a new base station, the user cannot directly communicate with the task anchor. The user needs to send the task result to a connected base station, and then the connected base station sends the task result to the task anchor. Therefore, in this scenario, a key is the connected base station, namely, the connectivity anchor of the user, and how to find the task anchor. The following provides two optional solutions with reference to FIG. 82, for example, the following solution 1 and solution 2.

Solution 1

When a base station configures a task for a user, a task ID and a task anchor identifier (for example, a base station ID/IP address) are carried. Therefore, when feeding back a task result, the user may encapsulate the task anchor identifier into a packet header of the task result. After receiving a data packet, a connectivity anchor may learn of the task anchor identifier by parsing the packet header.

Solution 2

During handover, a handover request message sent by a source base station to a target base station includes an identifier of a task anchor. The identifier includes a base station ID/IP address of the task anchor and a corresponding UE ID. Compared with the solution 1, this solution can reduce transmission of air interface information.

9.2. Computing mobility

Mobility management is a basic function of a wireless network. It ensures that a user can enjoy an uninterrupted service when moving. Connected mobility management is short for handover, and ensures that a user in connected mode can continuously receive network connectivity services during movement. A handover process includes a handover preparation phase, a handover execution phase, and a handover completion phase.

In a conventional handover preparation phase, a handover request sent by a source base station includes connectivity-related context information of the UE, and a target base station determines, based on the connectivity-related context information of the UE and load information of the target base station, whether to receive a handover request of the source base station about the user. In this application, in addition to the connectivity-related context information of the UE, the handover request delivered by the source base station (source-sNode, S-sNode) of converged communication-computing needs to include the computing context information of the UE. The target base station (target-sNode, T-sNode) determines, based on the connection context information and the computing context information of the UE, and the load information of the target base station, whether to perform connectivity-related handover and computing migration, thereby ensuring computing service quality of the UE. The connectivity-related context information of the UE includes: a cell radio network temporary identifier (cell-radio network temporary identifier, C-RNTI) of the UE in the source base station, a radio resource management (radio resource management, RRM) configuration of the UE in inactive time, antenna information of the UE, a rule of mapping between a QoS flow and a data radio bearer (data radio bearer, DRB), UE capability information, and a measurement result reported by the UE. The computing context information of the UE includes information such as a computing resource status of the source base station, computing migration overheads (including communication overheads, a communication delay, a QoS guarantee, and the like), and a computing task execution status on the S-sNode.

The following describes scheduling in the RAN architecture provided in this application.

10. Scheduling

In the RAN architecture provided in this application, in addition to functions of an original medium access control (medium access control, MAC) layer, the TRS layer further has a task-related function. Because a connectivity-related function is not modified, this specification focuses on a new function of the TRS layer brought by introduction of a new feature such as a task. For content related to connectivity scheduling, such as a basic scheduling operation, uplink scheduling, downlink scheduling, a measurement mechanism related to connectivity scheduling, and uplink and downlink rate control, refer to descriptions in the protocol 38.300. Details are not described in this specification.

10.1. Task scheduling

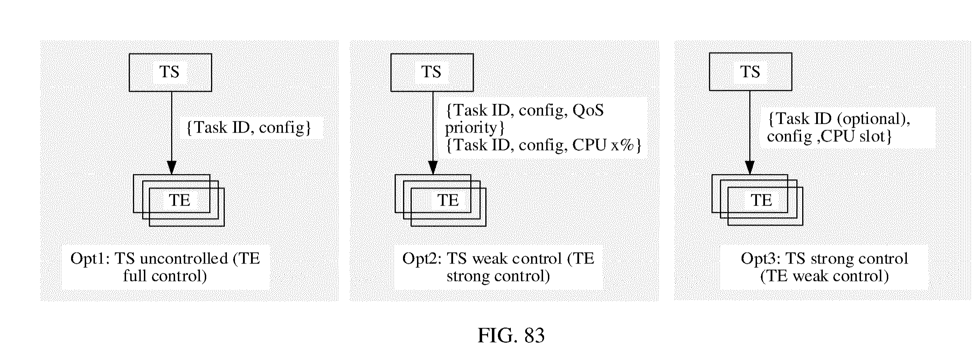

A task deployment is used as an example. The TS schedules the computing of the TE in three manners, as shown in FIG. 83.

- Opt1-no TS control and full TE control: no differentiated QoS.
- Opt2-weak TS control and strong TE control (cloud AI mode): The TE can determine allocation in each slot based on a percentage, but the TS cannot precisely control a CPU slot (slot).
- Opt3-strong TS control and weak TE control (communication mode): CPU slot allocation of the TE is controlled in real-time or quasi-real-time.

The following describes the QoS mechanism in the RAN architecture provided in this application. In summary, due to introduction of a new feature, namely, task, in addition to an original connectivity QoS mechanism, this application further proposes a task QoS mechanism. As described above, in this application, the new features are collectively referred to as a first function. Therefore, in other words, the QoS mechanism includes a QoS mechanism for the first function (for example, one or more of computing, data, intelligence, and trustworthiness).

11. QoS mechanism

11.1. Task QoS mechanism

The task QoS mechanism is a QoS mechanism for the first function, and may specifically include the following three aspects:

(1) a network-side QoS mechanism;

(2) a terminal-side QoS mechanism; and

(3) quality of AI service (Quality of AI Service, QoAIS).

Both the network-side QoS mechanism and the terminal-side QoS mechanism need to be enhanced based on an existing QoS mechanism. For example, the network-side QoS mechanism needs to be enhanced as follows: A new QoS indicator is designed; and a new mechanism in which no CN is involved and a QoS flow is not generated based on an IP quintuple is designed. In a scenario in which communication and a task share a computing resource, for example, CU cloudification deployment, and a scenario in which communication and a task share a communication resource, for example, a transmission channel/bandwidth such as an air interface RB resource and a GTP tunnel, the following enhancement may be made to the terminal-side QoS mechanism: In an example, communication is always preferred; or in another example, a unified policy for computing QoS and communication QoS is designed.

The following focuses on QoAIS.

It should be understood that, to meet various requirements of various industries for 6G network AI, it is an urgent problem to convert user requirements into network AI service capability requirements that can be understood by the network. A 6G network will no longer only a pipeline for serving a conventional communication service. Different intelligent application scenarios have different requirements for AI service quality. A set of indicator systems is required to convey user requirements in a quantitative or hierarchical manner and control of AI elements (including connectivity, computing, data, an algorithm, and the like) through network orchestration. Therefore, this specification proposes the concept of QoAIS. QoAIS is a set of indicator systems and a process mechanism for evaluating and ensuring AI service quality.

AI services on the 6G network may be classified into AI data, AI training, AI inference, and AI verification services. Each type of AI service requires a set of QoAIS. In a specific indicator system design, QoS of a conventional communication network mainly considers connectivity-related performance indicators such as the latency and the throughput of communication services. In addition to conventional communication resources, 6G networks further introduce a plurality of resource elements orchestrated by AI services, such as distributed heterogeneous computing resources, storage resources, data resources, and AI algorithms. Therefore, quality of service for network-native AI needs to be comprehensively evaluated from a plurality of dimensions, such as connectivity, computing, algorithms, and data. Therefore, in the QoAIS indicator system design in this application, a plurality of aspects such as performance, overheads, security, privacy, and autonomy are considered.

Table 1 provides a QoAIS indicator design for an AI training service.

Table 1: QoAIS indicator system for an AI training service

| AI service type | Evaluation dimension | QoAIS indicator |
|---|---|---|
| AI training | Performance | Performance indicator boundary, training time, generalization, reusability, robustness, explainability, consistency between a loss function and an optimization objective, and fairness |
| | Overhead | Storage overhead, computing overhead, transmission overhead, and power consumption |
| | Security | Storage security, computing security, and transmission security |
| | Privacy | Data privacy level and algorithm privacy level |
| | Autonomy | Full autonomy, human-supervised autonomy, and manual control |

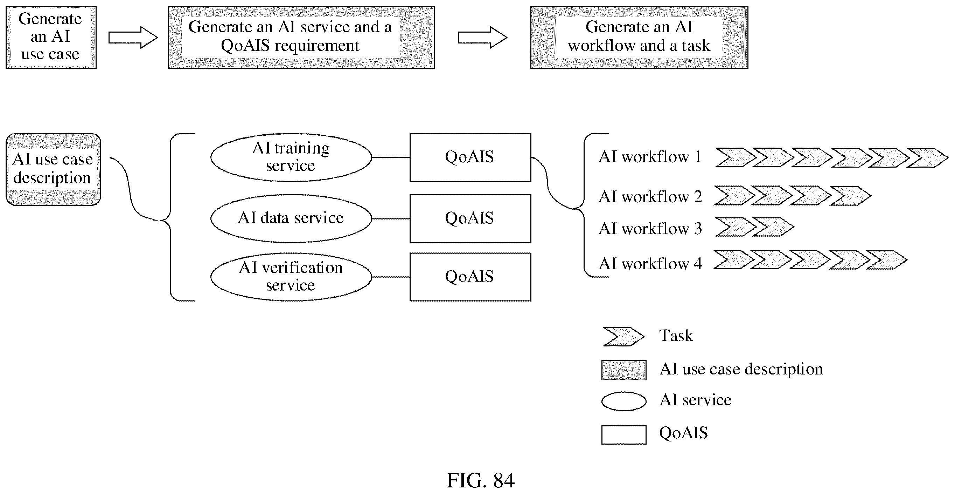

QoAIS is an important input for a management and orchestration system and a control function of network-native AI. The management and orchestration system decomposes and maps top-layer QoAIS to generate QoS requirements for an AI task, and then maps task QoS to QoS requirements for multi-dimensional resources such as connectivity, computing, data, and algorithms, to ensure continuous assurance by designing management plane, control plane, and user plane related mechanisms. FIG. 84 is a diagram of a logical relationship between an AI use case, an AI service, and an AI task according to this application. It should be noted that an AI use case is an AI service request submitted by a user to a network in an intelligent application scenario. An AI use case may involve invocation of one or more types of network-native AI services (such as AI training, verification, and inference services).

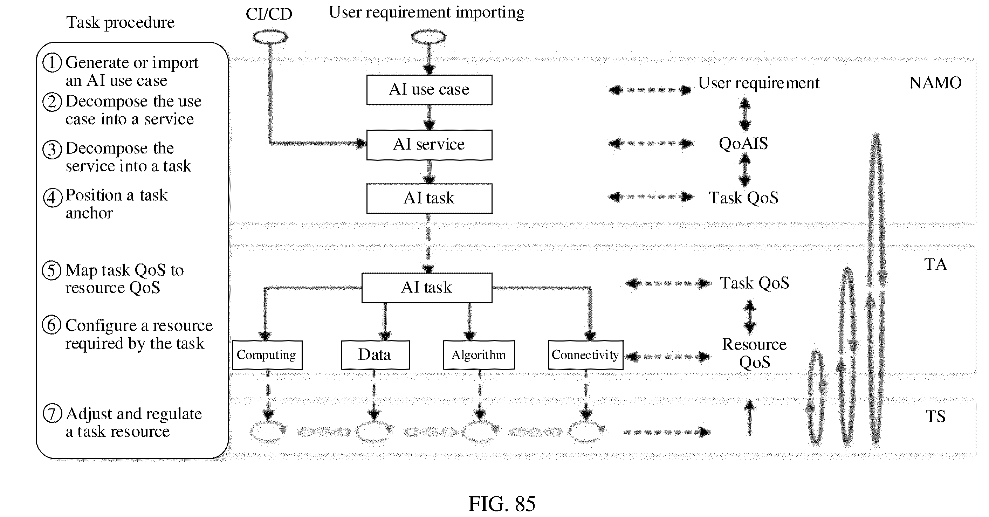

As described above, QoAIS is an important input for the 6G network AI management and orchestration (network AI management and orchestration, NAMO) system and a control function. The network AI management and orchestration system needs to decompose top-layer QoAIS and map the QoAIS to QoS requirements for various aspects such as connectivity, computing, data, and algorithms. FIG. 85 shows a logical relationship between this process and three-layer management and control function entities. As shown in FIG. 85, from a perspective of an entire end-to-end process, after receiving an external service request, the NAMO submits a corresponding AI service to the TA for execution. The entire real-time end-to-end process of the AI service includes the following functions:

① generating or importing an AI use case, where the AI use case is an AI service request submitted by a user to a network in an intelligent application scenario, and the AI use case may involve invocation of one or more types of network-native AI services (such as AI training, verification, and inference services);

② decomposing the use case into one or more AI services;

③ decomposing an AI service into one or more AI tasks (AI Task, AIT), and decomposing QoAIS corresponding to the AI service into QoS of the AI tasks;

④ determining an anchor position of the AIT;

⑤ decomposing the task QoS into resource QoS requirements, and specifying requirements of four-element resources required by the AIT, including connectivity, computing, data, and algorithms/model;

⑥ determining and configuring the four-element resources required by the task, including node selection (selecting a node that participates in computing, a node that provides data, and a node that provides an algorithm/model), connection establishment between nodes, or configuration update; and

⑦ within a range of selected nodes, determining and adjusting allocation of computing in real time, optimizing communication connection quality, determining and collecting data required for processing, and determining and replacing or optimizing an algorithm model, to ensure achievement of the task QoS and the QoAIS.

As described above, the management plane has poor real-time performance, and a wide range of network information can be obtained, but a granularity is coarse; and the control plane has strong real-time performance, and accurate information can be obtained, but a data range is limited. In addition, the management plane cannot obtain real-time information about an air interface link and a terminal-side resource status. Therefore, some functions can be implemented on the management plane or the control plane, and other functions can be better implemented through collaboration between the management plane and the control plane.

Another scenario is a network AI capability requirement generated by the control plane, for example, an AI service request submitted by a user to a network by using control signaling. An end-to-end process in this scenario needs to be further analyzed. For example, in a possible implementation, the TA first determines whether the requirement is an AI service requirement or an AI task requirement. If the requirement is an AI service requirement, the requirement is handed over to the NAMO for execution. If the requirement is an AI task requirement, the TA performs processing.

After a task triggering source transfers a service workflow to the TA, the TA maps the workflow to a task instance and deploys the task instance on a specific network element with a computing capability for execution.

There are two types of task triggering sources. One is from the network, for example, a network optimization task initiated by the RAN. The other is from a third party. The network receives a service request from the third party through capability exposure, orchestrates a received service, forms a workflow and a required QoS guarantee, and transfers the workflow and the QoS guarantee to the TA. The TA maps the workflow and the QoS guarantee to a specific task instance for execution. A workflow includes a resource required by a task and a dependency between tasks. The TA creates an instance for each task, assigns a task ID, parses QoS of each task from service QoS, and maps the service QoS to the task QoS.

To ensure QoAIS fulfillment, a hierarchical management and control logical architecture is implemented by a "three-layer closed-loop". The TS layer monitors and optimizes the four-element resources in real time to ensure fulfillment of the task QoS within a resource configuration range of the TA. When the TS layer cannot provide a task QoS guarantee, the TA layer changes an overall resource configuration, for example, adjusting a network node that participates in a task, replacing a model repository or a data warehouse. When the TA layer cannot provide a task QoS guarantee, the NAMO performs optimization. The NAMO may change an anchor position of the AI task or re-decompose the mapping between the AI service and AI task.

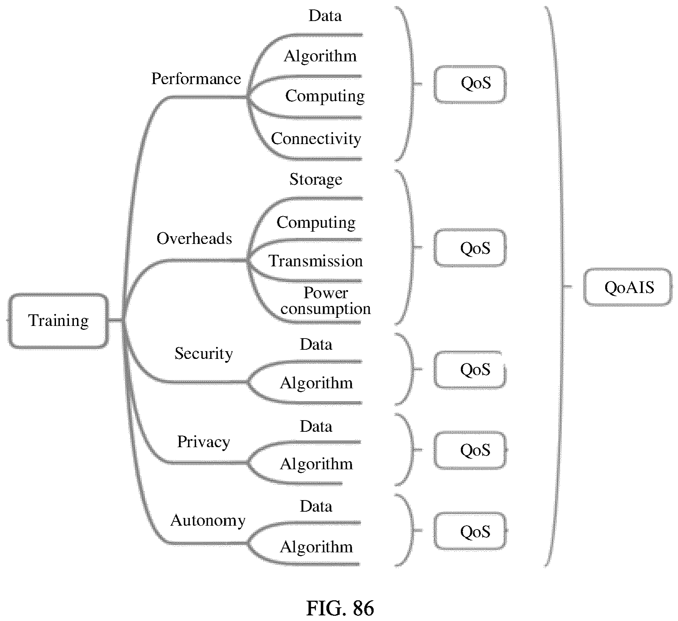

FIG. 86 shows a mapping relationship between QoS in each QoAIS indicator dimension and QoS in each resource dimension. As shown in FIG. 86, QoAIS indicators of an AI service are split into QoAIS indicators in each indicator dimension of a task, and then mapped to QoS indicators of each resource dimension. The management plane and the control plane and user plane mechanisms in each resource dimension are used to ensure the QoS indicators. The QoS indicators in each resource dimension in FIG. 86 may be classified into indicators (for example, various resource overheads) suitable for quantitative evaluation and indicators (for example, a security level, a privacy level, and an autonomy level) suitable for hierarchical evaluation. For the former type of indicators, this application provides a quantization solution to a part of indicators, for example, training time, an algorithm performance boundary, computing precision, and various resource overheads.

Table 2: Mapping between AI training service performance QoAIS and each resource dimension

| Indicator dimension | QoAIS indicator | Resource dimension | Quantifiable indicator | No quantitative solution indicators |
|---|---|---|---|---|
| Performance | Performance indicator boundary, training time, generalization, reusability, robustness, explainability, optimization objective matching degree, and fairness | Data | Feature redundancy, integrity, data accuracy, and data preparation time | Sample space balance, integrity, and sample distribution dynamics |
| | | Algorithm | Performance indicator boundary, training time, convergence, and optimization objective matching degree | Robustness, reusability, generalization, explainability, and fairness |
| | | Computing | Computing precision, duration, and efficiency | |
| | | Connectivity | Bandwidth and jitter, delay and jitter, bit error rate and jitter, reliability, and the like | |

In the foregoing process of describing the RAN architecture provided in this application, new features provided in this application, for example, task, computing, trustworthiness, and intelligence, are briefly described. To clearly and comprehensively understand the new features and their impact on the RAN architecture, the following describes in detail the new features one by one.

12. New feature of 6G: task

12.1. Driving force

This part describes why network AI is required and a relationship among network AI, cloud AI, and mobile edge computing (mobile edge computing, MEC) AI.

(1) Network AI

In the 5G era, the cloud AI architecture has been widely used to provide centralized computing, big data analysis, and AI training and inference services and the like. The conventional "end-edge-cloud" architecture is a decoupling design. To be specific, terminals provide data, mobile networks provide communication pipelines, and clouds provide AI capabilities. It is quite difficult to coordinate these independent functions and resources in a plurality of facilities to effectively provide flexible, smooth, and stable services and ensure QoE. In addition, for latency-sensitive ultra-reliable and low-latency communication (ultra-reliable low-latency communication, URLLC) services, by deploying application servers near base stations, MEC achieves closer proximity to end-users and lower latency compared to cloud AI. However, in essence, AI platforms are deployed at the application layer. Joint optimization of connections and AI resources still requires cross-layer collaboration in MEC, which cannot avoid the foregoing problems of cloud AI.

To address limitations of cloud and MEC-based AI deployment at the application layer, including a low speed, high latency, privacy risks, and excessive carbon emissions, network AI extends computing capabilities from the cloud to physically closer proximity with end-users. By providing data storage and processing and AI capabilities within the network, network AI achieves better security performance. In addition, an "end-edge-cloud" architecture is more effective in supporting computing-intensive, latency-sensitive, security-assured, and privacy-sensitive applications (such as interactive virtual-reality/augmented-reality games, self-driving, and smart manufacturing).

Therefore, in this application, a complete AI environment and a service-based AI service, namely, AIaaS, are provided in a network. Therefore, a concept of network AI is introduced for description, to clearly distinguish existing cloud AI (that is, cloud AI). Network AI is mainly designed for scenarios that require high real-time performance, high security, and high privacy or in-network data processing (that is, bring computing to data instead of traditionally bringing data to computing) to reduce total energy consumption. In addition, network AI may be a beneficial supplement to cloud AI.

(2) Application scenarios of network AI

The AI function of 6G is not limited to the application layer but is deeply integrated with the network. From a perspective of a relationship between AI and networks, AI may be used in three types of application scenarios: network element intelligence, network intelligence, and service intelligence. Network element intelligence refers to native intelligence of a network element device. Network intelligence refers to network-level group intelligence generated by collaboration of a plurality of intelligent network elements. Service intelligence refers to an intelligent service provided by an entire wireless communication system for a service, which is generally triggered by an external service and executed by a wireless network, and is especially designed for a scenario involving a terminal. Service logic may be transparent to the wireless communication system. AI services are provided for the internal network through the foregoing network element intelligence and network intelligence, and corresponding AI services are provided for the external network through service intelligence.

(3) Why native AI support is needed in a network architecture and faced challenges

To support all of the foregoing three application scenarios, the native AI architecture of the 6G network needs to be based on a unified architecture framework. In other words, a complete distributed AI environment is built in the 6G network to support different types of AI training/inference. Specifically: (1) Network AI may use various basic native AI capabilities (such as connectivity, computing, data, AI training, and inference capabilities) built in network elements and terminals. (2) On-demand (on-demand) AI, computing, and data services are provided for networks and applications. (3) AI QoS guarantee services are provided in complex environments, such as wireless heterogeneous, dynamic, and fully distributed environments.

Compared with a centralized, homogeneous, and stable AI environment provided by the cloud, the network AI architecture faces the following technical challenges: (1) Distributed AI requires deploying AI across massive core network elements, base stations, and UEs. Efficient management of the massive nodes needs to be considered in the architecture design to prevent centralized node management from becoming a bottleneck. (2) Computing, memory, data, and algorithm capabilities of different nodes vary greatly. Therefore, efficient management of heterogeneous nodes needs to be considered in architecture design. (3) Due to a real-time change of a radio environment and a dynamic change of a computing load, a real-time status update of the dynamic change needs to be considered in the architecture design. Therefore, this application shifts the architecture design from session-centric to task-centric, to resolve the foregoing challenges.

(4) Typical features of a native AI network architecture

Traditional wireless networks are session-centric, and are managed and controlled based on a session granularity and implement QoS guarantee for sessions.

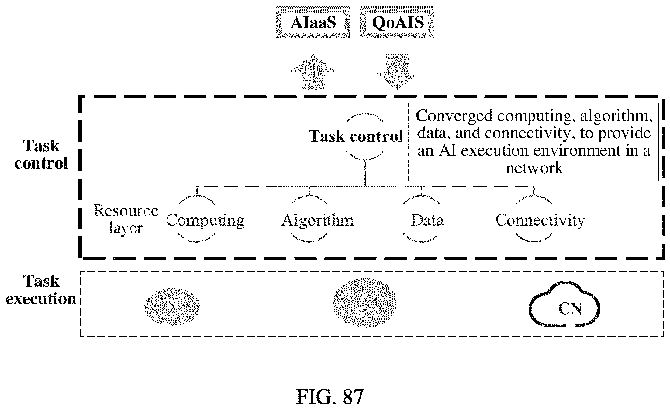

FIG. 87 shows core features of a task-centric architecture. As shown in the figure, from a perspective of an architecture, network AI proposed in this application requires a natively intelligent architecture design that fundamentally supports deep convergence of connectivity, computing, data, and algorithms at an architectural level. Therefore, a key to the native intelligent architecture design is essentially to support real-time management and control in a unit of deep convergence of four elements, that is, management and control at a task granularity, and support a task QoS guarantee mechanism. In this application, an architecture that supports the two basic capabilities is referred to as a task-centric architecture.

12.2. Task overview

Task: Computing, an algorithm, connectivity, and data are collaborated to achieve a specific target. The target comes from an AI use case, and may be one or more AI training or AI inference. A process of mapping between an AI use case to a task may be flexible. As described above, an AI use case may be first decomposed into one or more AI services, an AI service may be further decomposed into one or more AI workflows, and an AI workflow may be further decomposed into one or more tasks.

Task-centric means that tasks are used as a fundamental unit of control, to support lifecycle management of tasks, and ensure task QoS and successful task execution through collaboration and coordination of computing, an algorithm, connectivity, and data. The task QoS comes from decomposition and mapping of AI QoS of AI services, and is related to the mapping between an AI use case and a task.

Based on the foregoing analysis, the 6G network architecture needs to implement the following key transformations in terms of design paradigm:

• Change 1: Control objects are changed from "session" to "task".

Compared with conventional "session", technical objectives and technical means of AI tasks are different from those of sessions.

From a perspective of technical objectives, a conventional communication system provides session type services. A typical application scenario is to provide a session service between specific terminals or between a terminal and an application server, and a final objective is to transmit user data (including voice). A purpose of network AI is different from that of sessions. For example, network element intelligence and network intelligence are to provide intelligent services for the network to improve communication network efficiency, and service intelligence is to provide intelligent services at the app layer for third parties.

From a perspective of technical means, to transmit user data, a conventional communication service needs to maintain a user-granularity connection pipeline (for example, an end-to-end tunnel from a UE to a base station, and an end-to-end tunnel from a base station to a core network), and a lifecycle management and a QoS guarantee mechanism for the connection pipeline, to provide a data transmission service with a QoS guarantee. AI is a data- and computing-intensive service, exhibiting distinct characteristics compared to sessions: On one hand, AI introduces new resource dimensions, including computing (for example, CPUs, GPUs, and NPUs), data (for example, both used and generated by AI), and an algorithm (such as neural network models and augmented learning). Therefore, the 6G network needs to introduce new resource management mechanisms. On the other hand, a plurality of factors, such as single-point computing bottlenecks, data privacy protection, and ultra-large model storage bottlenecks, make it difficult for a single node to efficiently implement AI services. AI services can only be implemented through computing, an algorithm, and data collaboration among a plurality of nodes. Therefore, a new collaboration mechanism between nodes needs to be introduced to the 6G network.

Based on the foregoing two differences, it can be learned that the "session" system cannot support native AI. Therefore, a new "task" system needs to be designed to support the new mechanism (including a management mechanism of new resources and the new collaboration mechanism between nodes). In this specification, a specific objective is achieved by collaborating multi-node and multi-dimensional resources on the 6G network, and the objective is defined as a "task".

• Change 2: Managed and controlled resources are changed from connectivity resources to four-element resources.

The "session" system establishes a channel for data transmission of a user and allocates corresponding connections and air interface resources. The "task" system allocates four-element resources to complete AI tasks. An AI inference task is used as an example. An executor needs to first obtain resource information such as computing information, data information, and algorithm information, to execute a related task. For example, the computing information is a computing resource slot or a ratio corresponding to a task, the data information is data collected by the executor in real time or data input externally, and the algorithm information includes a possible AI model such as a graph neural network (graph neural network, GNN), a convolutional neural network (convolutional neural network, CNN), or an AI algorithm such as a reinforcement learning (reinforcement learning, RL). A federated learning task is used as an example. A plurality of executors cooperate with each other to train an AI model. In a training process, gradient information needs to be transmitted by using an allocated connectivity resource. In conclusion, due to the introduction of tasks, managed and controlled resources are changed from connectivity resources to four-element resources: connectivity, computing, data, and an algorithm.

• Change 3: From "session control" to "task control"

Different from the conventional session management and control functions, the task management and control system in network AI mainly has the following functions: (1) decomposition/mapping from external services to internal tasks. (2) decomposition/mapping of service QoS to task QoS; and (3) providing a four-element collaboration and multi-node collaboration mechanism to orchestrate and control in real time four-element resources of a plurality of nodes at an infrastructure layer. In this way, distributed serial/parallel processing and real-time QoS guarantee at a task granularity are implemented. For a simple service request, one service may be corresponding/mapped to one task. For a complex service (for example, integration of a plurality of service flows, or a service request with only one service flow having an ultra-large computing amount), the complex service may be mapped to a plurality of nodes for system execution.

The following describes the foregoing function (3) in detail. Generally, execution of a specific AI task requires collaboration in two dimensions:

(1) Collaboration of four-element resources

Execution of a task may require a part or all of four-element resources of connectivity, computing, data, and an algorithm. For example, a four-element resource configuration is provided in a task deployment phase, and four-element resource scheduling is performed in real time during task execution.

(2) Multi-node collaboration

In a conventional communication network, most connectivity-related computing processing is implemented in a single network element, and computing sharing and computing collaboration are generally not required between network elements. As AI scenarios increasingly involve large-scale AI training, large-scale AI inference, and massive sensing image processing, their computational demands far exceed those of conventional communication networks. Simply expanding a computing capacity on a per-network-element basis leads to excessively high costs for end-to-end deployment. However, distributed computing may enable task completion through shared computing resources. Consequently, a collaborative task (that is, a task involving multi-node collaboration) requires compute-level collaboration between nodes. Next, with increasingly stringent data privacy protection requirements, such as inability to upload raw UE data to the network for training due to privacy concerns, federated learning partially addresses this challenge through collaborative learning and gradient exchange. Consequently, collaborative tasks require data-level collaboration among a plurality of nodes. Finally, to support native AI, model training consumes a large quantity of computing resources and a large quantity of storage resources. A good model needs to be shared within the network to improve end-to-end network efficiency. Collaborative tasks require AI model-level collaboration among a plurality of nodes.

• Change 4: From session QoS to task QoS

A 6G network will no longer only a pipeline for serving a conventional communication service. Different intelligent application scenarios have different requirements for AI service quality. A set of indicator systems is required to convey user requirements in a quantitative or hierarchical manner and control AI elements (including connectivity, computing, data, an algorithm, and the like) through network orchestration. Therefore, a concept of QoAIS is proposed in this specification.

QoS of a conventional communication network mainly considers connectivity-related performance indicators such as the latency and the throughput of communication services. In addition to conventional communication resources, 6G networks further introduce new resource dimensions such as computing, an algorithm, and data. Therefore, corresponding evaluation indicators need to be added. Meanwhile, as the global intelligent applications industry pays more attention to data security and privacy, and with growing user demand for network autonomy, performance-related indicators will no longer remain a sole focus of users in the future. Requirements regarding overhead, security, privacy, and autonomy will progressively intensify, emerging as a new dimension for evaluating service quality. Therefore, content of the QoAIS indicator system provided in this application needs to be expanded from the foregoing two aspects.

For example, the evaluation dimension and content of the QoAIS indicators of the AI training service include:

(1) performance: performance indicator boundary, training time, generalization, reusability, robustness, explainability, consistency between a loss function and an optimization objective, fairness, and the like;
(2) overhead: storage overhead, computing overhead, transmission overhead, power consumption, and the like;
(3) security: storage security, computing security, transmission security, and the like;
(4) privacy: data privacy level, algorithm privacy level, and the like; and
(5) autonomy: full autonomy, human-supervised autonomy, manual control, and the like.

The management and orchestration system provides continuous QoAIS assurance through a design of mechanisms related to the management, control, and user layers.

12.3. Key technology

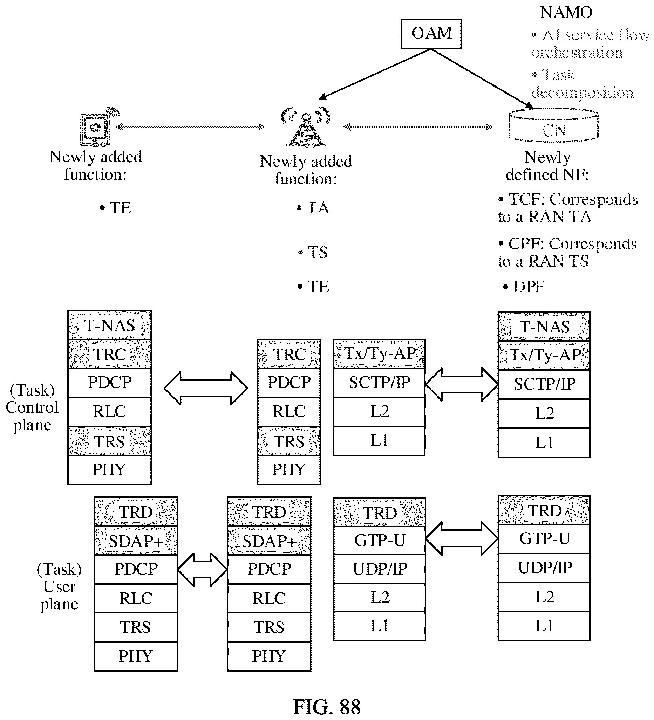

FIG. 88 is a diagram of a task-centric key technology. Compared with a conventional communication network, the task-centric framework proposed in this application involves the following changes:

• The following functions are added:

CN: Network functions (network function, NF) such as the TCF and the TPF are added.
RAN: Functions such as the TA, the TS, and the TE are added.
UE: A function such as the TE is added.

- New protocol stacks are added: task control-plane protocol stack and task user-plane protocol stack:

  Control plane: The T-NAS layer, the TRC layer, and the TRS layer are enhanced.
  User plane: The TRD layer is added and the T-SDAP layer is enhanced.

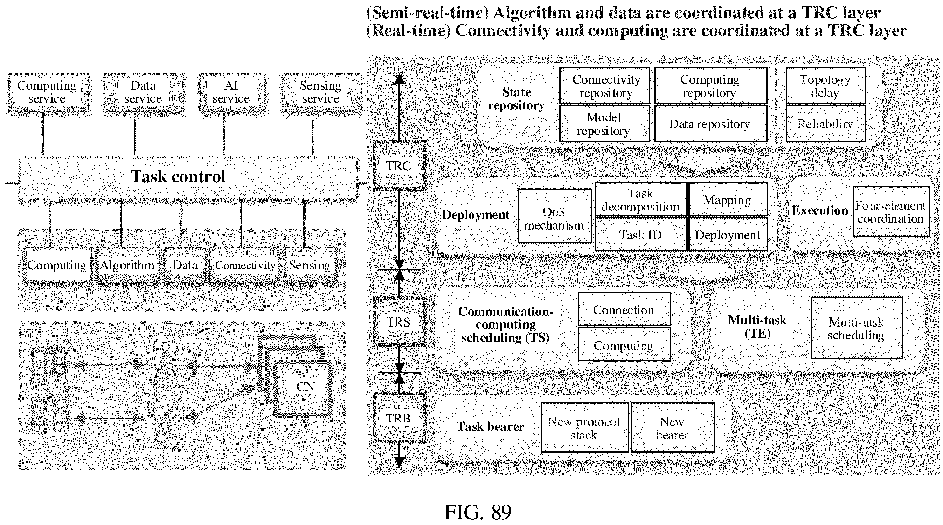

FIG. 89 is a panorama of a task-centric key technology. As shown in FIG. 89, task-granularity-based management and control have the following advantages:

  unified state maintenance: (quasi-real-time) maintenance of four-element resource repositories (for example, a connectivity repository, a computing repository, a model repository, a database repository, and the like);
  unified task management and control: task-granularity deployment, execution, and QoS guarantee, including quasi-real-time collaboration of four elements (algorithm/data and connectivity/computing collaboration) and TE adjustment, where algorithm and data collaboration is at a TRC layer, and connectivity and computing collaboration is at a TRS layer;
  unified general computing scheduling: real-time general computing scheduling for different tasks;
  unified multi-task scheduling: different tasks share resources (such as connection and computing resources) and differentiated QoS guarantees for a plurality of tasks; and
  unified bearer maintenance: task information transmission.

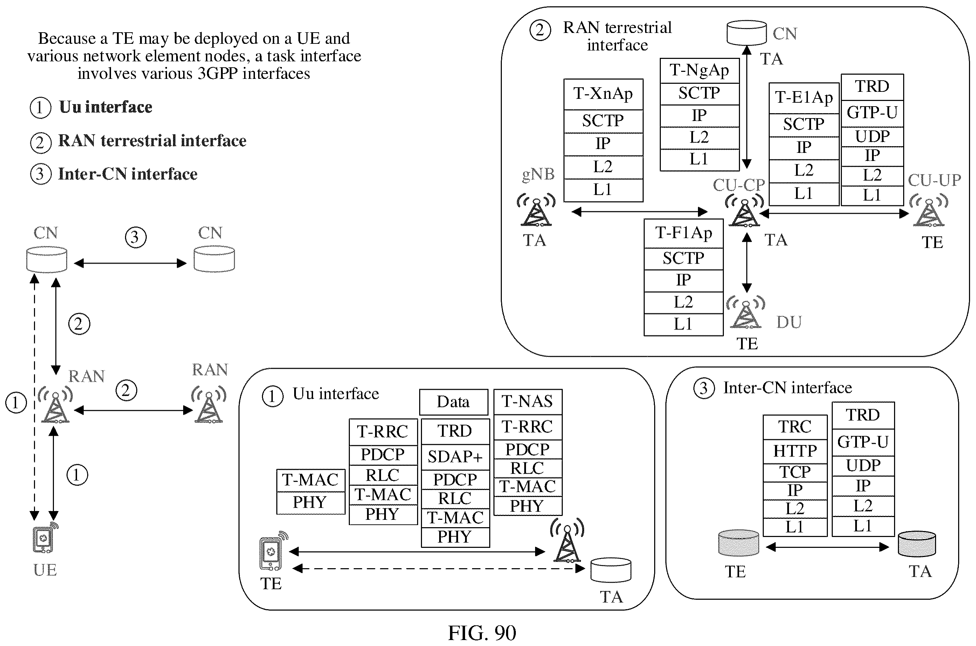

In addition, the task-centric framework will have impact on interfaces. As shown in FIG. 90, because a TE may be deployed on the UE and various network element nodes, a task interface involves various 3GPP interfaces, such as:

- Uu interface;
- RAN terrestrial interface; and
- inter-CN interface.

That is, task-related signaling needs to be transmitted over these interfaces. For specific content of the task-related signaling, refer to descriptions in other parts of this specification. Details are not described again.
To meet requirements and objectives of the task-centric architecture, the following describes a task management and control logical architecture and a deployment mode thereof.

• Task management and control logical architecture

An existing communication system includes a management domain and a control domain, where a network management device deployed in the management domain operates and manages a network element device by using non-real-time management plane signaling (usually at a minute level). The control domain includes a core network device, a base station device, and a terminal device, and control plane signaling therebetween is more real-time (usually at a millisecond level). For example, an end-to-end tunnel established when a user makes a voice call is usually completed within dozens of milliseconds.

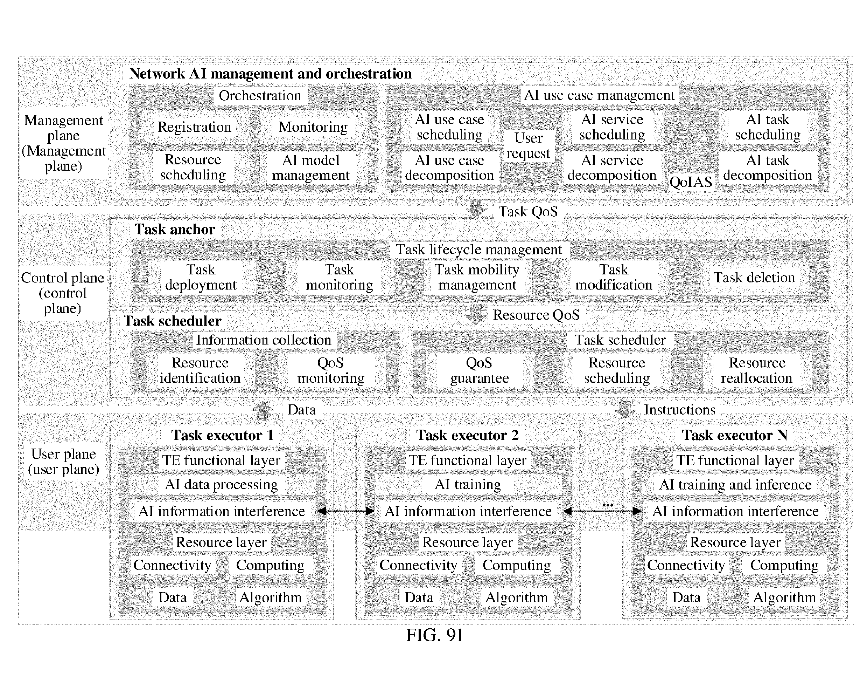

FIG. 91 is a diagram of a task-centric task management and control logical architecture and functions.
As shown in FIG. 91, task management and control include two logical functions: network AI management and orchestration and task control. Based on factors such as different real-time requirements and task management and control ranges in each task management and control phase, the NAMO is introduced in this application to complete decomposition and mapping from an AI service to a task, and AI service flow orchestration. The NAMO is usually deployed in the management domain and is non-real-time. For task management and control, a task anchor function (task anchor, TA), a task scheduler function (task scheduler, TS), and a task executer function (task executer, TE) are introduced to the control layer to control tasks by layer, to balance a task range and real-time task scheduling.
If only the NAMO of the management domain is used to manage and control tasks, the following problems may exist:

(1) The NAMO cannot directly manage the UE. The tasks related to the UE need to be deployed at an application layer, which cannot be sensed by the network. Therefore, the task QoS cannot be controlled and guaranteed through four-element collaboration.
(2) A NAMO signaling delay is long (generally at a minute level). As a result, task management and control are not performed in time, which cannot meet strict task QoS guarantee requirements.

(3) The NAMO manages a large quantity of nodes. If highly centralized task management and control are performed, signaling consumption is high.

Therefore, in the RAN architecture provided in this application, a task anchor TA is introduced to be responsible for lifecycle management and control of a task. The node is deployed at the control plane, to ensure real-time and fast transmission (at a millisecond level) of signaling, so that task control is more real-time and efficient. In a scenario with a large task range, the TA may be deployed at a high location (for example, deployed in a core network). If there is a real-time requirement for control of four-element resources, the TS may be deployed at a location close to the TE, to sense a connectivity resource status in real time, and perform QoS quality monitor and resource adjustment in real time.

Based on the three-level architecture of the TA, the TS, and the TE, the following separately describes functions and features of each logical function.

Task anchor TA function: mainly responsible for managing a lifecycle of a task, and completing task deployment, start, deletion, modification, and monitoring based on task QoS requirements, including regulation of the four-element resources to provide a coarse-grained QoS guarantee during initial task deployment.

Task scheduler TS function: mainly responsible for controlling and scheduling in a task execution phase, including two portions: information collection and resource management. The information collection means that the TS needs to sense in real time computing load, a data processing capability, a currently used algorithm model, and a communication pipeline channel condition of a plurality of nodes. Based on the foregoing information collection, the TS has a more real-time resource management capability than the TA. For example, as a network environment changes, more real-time QoS monitoring and assurance are performed through real-time adjustment of a model and data or real-time scheduling of connectivity and computing.

Task executer TE function: mainly responsible for specific task execution and possible service logic exchange of information and data. A service request may be mapped/decomposed into a plurality of tasks, which are deployed on a plurality of TEs for execution. In addition, data and information may also be exchanged between different TEs during task execution. For example, intermediate gradient information needs to be transferred between nodes to perform federated learning between a plurality of nodes. Regarding a relationship between TE and a task quantity, a single TE may execute a single task, or may support a plurality of parallel tasks. A specific task type may be computing, data processing, AI training, AI inference, or the like.

• Task management and control deployment architecture

The TA needs to manage the TE in real time and flexibly. Deploying a RAN TA in a RAN domain is more reasonable for managing a RAN TE. Similarly, a core network (core network, CN) TA in a CN domain is similar to a CN TE. This is because a status of the TE changes in real time (for example, CPU load, a memory, electricity, and a UE channel status), and nearby deployment of the TA/TS can bring a shorter management delay. In addition, according to design logic of a radio network, the CN and the RAN need to be decoupled as much as possible. For example, RAN RRM and radio transmission technology (radio transmission technology, RTT) optimization should not be sensed by the CN. If the CN TA manages the RAN TE and executes a RAN task, service logic is tightly coupled. Therefore, as proposed in this application, the TA/TS is independently deployed in both the CN domain and the RAN domain, to achieve real-time management and service decoupling. The following uses four use cases to describe necessity and rationality of the CN TA and the RAN TA. It should be noted that the use case herein is merely an example. In addition, there may be other deployment scenarios and other deployment architectures, which are not completely listed herein.

An example in which a base station and a terminal perform federated learning is used. The following describes in detail how to deploy a TA, a TS, and a TE. It should be noted that, in the following embodiments in which federated learning is used as an example, a deployment manner of the TA, the TE, and the TS is mainly described, without focusing on specific functional division of a base station as a cNode and an sNode. Therefore, the following uses a base station as a whole for description.

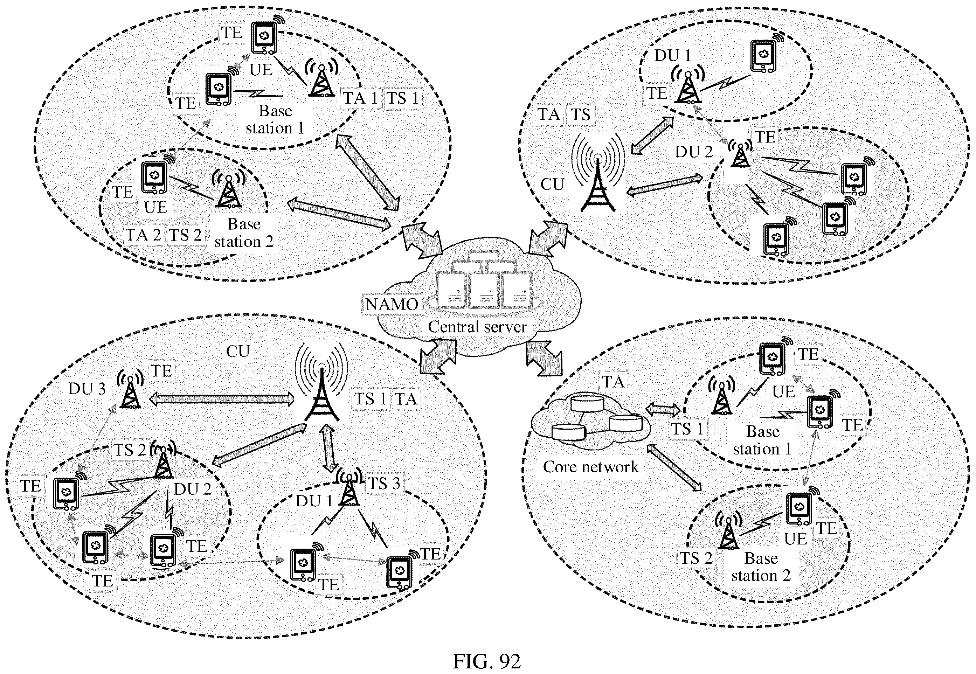

FIG. 92 is a deployment manner of task-centric network AI. A gNB corresponds to a base station in a 5G network. As an example of the base station, the gNB may be flexibly deployed in a manner in which a central unit (central unit, CU) and a distributed unit (distributed unit, DU) are separated. For example, the CU may be deployed on a cloud to satisfy non-real-time signaling control and data transmission; the DU is locally deployed closer to the UE to satisfy real-time resource allocation and data transmission/retransmission.

Scenario 1: base station (for example, gNB) + UE

In this scenario, the gNB is both a TA and a TS, and the UE is a TE. In this case, the UE is a computing provider and a task executor, and accepts task management and task-based four-element scheduling (for example, connection establishment on a UE side and the base station, real-time scheduling of air interface resources, and allocation and real-time adjustment of an AI model) from the gNB.

Scenario 2: CU of the base station + DU of the base station

In this scenario, the CU is both a TA and a TS, and the DU is a TE. In this case, the DU is a computing provider and a task executor.

Scenario 3: CU of the base station + DU of the base station + UE

In this scenario, the CU is a TA, the DU is a TS, and the UE is a TE. In this case, the UE is a computing provider and a task executor, the CU is a task manager, and the DU senses a task allocated by the CU to the UE, performs four-element resource scheduling and a real-time task QoS guarantee. In addition, the TA and the TS are separately deployed. The TS is deployed at a lower location than the TA. Therefore, a status such as connectivity, computing, an algorithm, and the like of the TE can be sensed in real time, so that task QoS is monitored in real time and four-element resources are quickly adjusted.

Scenario 4: CN + base station (for example, gNB) + UE

In this scenario, the CN is a TA, the gNB is a TS, and the UE is a TE. In this case, the UE is a computing provider and a task executor.
It can be learned from the examples of the foregoing four scenarios that the TA, the TS, and the TE are only logical functions, and these functions may be deployed on a same logical node or different logical nodes according to different scenarios. From a perspective of a logical node, a single node may have a plurality of logical functions (for example, any combination of the TA, the TS, and the TE) at the same time.
The following describes a task QoS guarantee based on the foregoing task management and control logical architecture.

• Task QoS guarantee

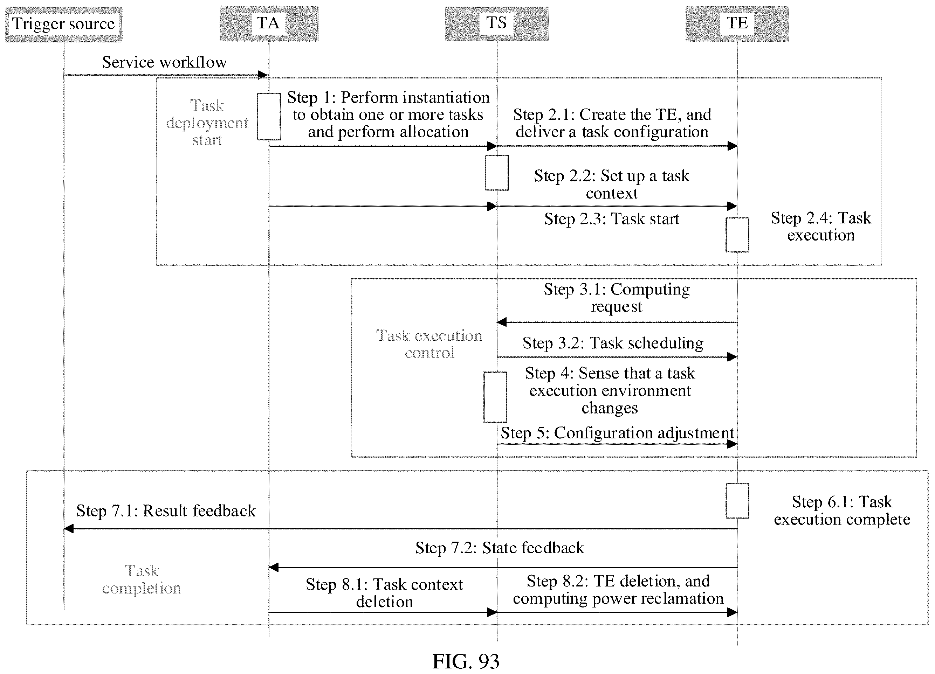

As mentioned above, to ensure QoAIS fulfillment, a hierarchical management and control logical architecture is implemented by a "three-layer closed-loop".
As shown in FIG. 93, a procedure after a task is triggered may be divided into four phases: task deployment and start, task execution, task update, and task complete.
FIG. 93 is a diagram of a task deployment and execution procedure. After a task triggering source transfers a service workflow to the TA, the TA maps the workflow to a task instance and deploys the task instance on a specific network element with a computing capability for execution. Task deployment involves the following two aspects:

(1) Task instance creation and assignment

A service workflow is received at an entry of the TA, and may be mapped to one or more tasks. The TA creates an instance for each task, assigns a task ID, and sets task QoS. Then, these tasks need to be assigned to specific network elements for execution.
The task assignment requires distribution information of computing/connectivity resources in the network. The information is managed by the TS and reported to the TA. The TS may be deployed on a core network or a base station, and manages resources in a respective domain. A base station is used as an example. The TS is deployed on the base station, and maintains a computing of each node of the base station and a computing of a connected terminal. The computing/connectivity information may be periodically reported by the TS to the TA, or may be actively queried by the TA from the TS to which the TA belongs.
The TA properly allocates resources based on a computing requirement of each task and a computing resource of a current network. For example:
A workflow is instantiated into three tasks, where a computing reported by a TS 1 may support two tasks, and a computing reported by a TS 2 may support a third task. In this case, the TA allocation solution is as follows: Tasks 1 and 2 are deployed on a resource managed by the TS 1 for execution, and a task 3 is deployed on a resource managed by the TS 2 for execution. A specific allocation scheme is related to an algorithm implementation. A plurality of aspects such as a QoS guarantee, a resource capability, and power consumption need to be considered.
In addition, in the network AI, there is a case in which some tasks have specified network elements that need to participate, for example, some terminals are specified to participate (data is on the terminals), and a mandatory option needs to be used as a constraint condition in a task assignment algorithm.

If a task instance is allocated to a resource of the TS, the TA delivers signaling to create a TE for the task. Due to a dynamic change of the wireless network and concurrent deployment of a plurality of tasks, when the TS receives the TE creation signaling, a corresponding computing resource is unavailable. In this case, the TS returns a rejection, and the TA needs to reallocate the task instance to another TS. Otherwise, the TS receives the signaling, creates a TE, and sends a receipt to the TA, where the receipt carries TE-related information.

(2) Task parameter configuration

After creating an executor TE for a task, the task can be deployed on the corresponding TE and a parameter configuration required for execution is delivered. The configuration includes:

- basic execution information such as a task input (input), output (output), and model;
- task QoS, such as convergence time, precision, and power consumption; and
- a workflow relationship between a plurality of tasks, where after the configuration, for service interaction between TEs, the TA does not need to perform instruction control.

There are two options for delivering the parameter configuration of the task to the TE:

Option 1: relay by the TS: The TS creates a task context based on the task configuration to schedule and control the task in real time.

Option 2: deliver configurations to the TS and the TE separately: The two configurations may be different. The configuration delivered to the TS is for creating a task context, and the configuration delivered to the TE is for creating executing the task.

• Task execution control

Tasks are executed on the TE based on service logic. Data exchange between TEs does not need to be additionally controlled by the TA, but is defined in the service logic. The TA only needs to configure a dependency between TEs when configuring a task parameter.

For example, federated training is performed between a plurality of TEs. After completing local training, a client TE (or referred to as a client TE) automatically pushes a gradient to a server TE (server TE), without notifying a TA so that the TA indicates a subsequent action. This is critical to preventing the TA from being overburdened by interfering with service logic.

It should be noted that, in task deployment, a plurality of tasks may be deployed on the computing/connectivity resource managed by the TS. For example, the TS is deployed on the base station, the base station may create a TE for the plurality of tasks, and a plurality of UEs connected to the base station may also create a TE to execute the tasks. When a plurality of tasks are deployed and executed at the same time, the TS needs to perform scheduling in a case of a conflict. Details are as follows:

(1) In a bandwidth sharing scenario, scheduling is classified into signaling scheduling and data scheduling, as shown in (a) and (b).

(a) Control signaling scheduling between the TS and the TE: For example, a plurality of UEs under the base station TS are executing a task. According to a parameter adjustment instruction delivered by the TS, task-signaling radio bearer (task-signaling radio bearer, T-SRB) scheduling needs to be performed.

(b) Data scheduling for service exchange between TEs: For example, the base station is deployed with a federated parameter server, and 10 UEs serve as federated clients to upload gradients to the parameter server (parameter server, PS), and the TS needs to perform task-data radio bearer (task-data radio bearer, T-DRB) scheduling.

(2) In a computing sharing scenario, a computing is scheduled based on a computing requirement of a plurality of tasks and task QoS.

A task is a process, during which the computing requirement is constantly changing and needs to be scheduled in real time. For example, for a training task of a neural network, computing required by different layers varies greatly. In addition, during task execution, task QoS fulfillment is affected due to environment changes. Therefore, the TS needs to perform real-time control. This part is incorporated into the task update of the third phase.

• Task update

A wireless network environment is unstable and changes dynamically in real time, such as user movement, an interference change, and a service burst. These changes affect ongoing tasks. Therefore, the task management and control function needs to sense a change of the task execution environment in real time, to adjust the parameter configuration of the task, so that the task can be executed smoothly and task QoS can be ensured.

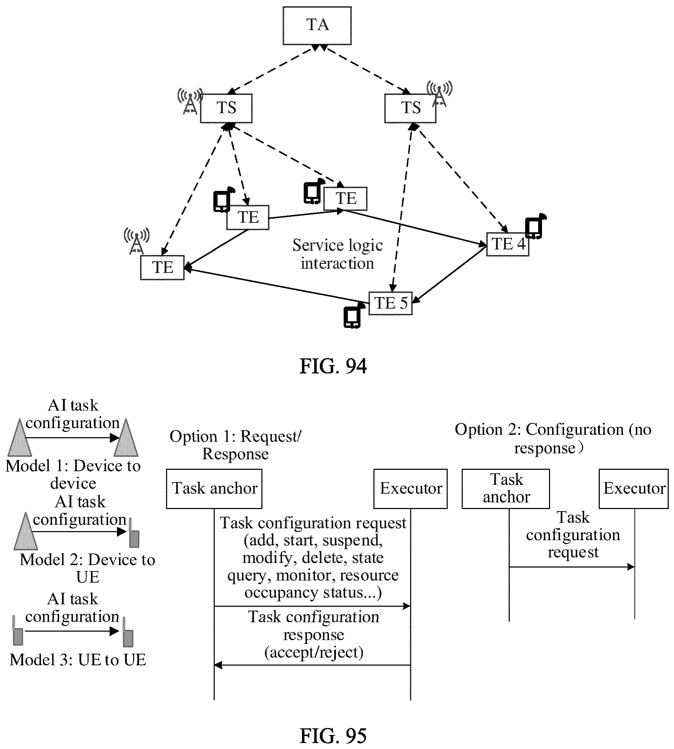

FIG. 94 shows a task deployment.

In the three-layer task management and control architecture, the TS senses a network environment change. The network environment change may be classified into two types depending on whether a task topology relationship changes. The topology relationship herein is a networking relationship between TAs/TSs/TEs after a task is deployed.

Type 1: The topology relationship does not change. For example, a link QoS change (a user moving away and interference being enhanced), a computing change (a terminal running a new app), and the like do not change the topology relationship.

Type 2: The topology relationship changes, for example, a user status changes (entering inactive/idle), handover is performed, a UE is lost, or a task needs to be stopped due to extremely low power of a terminal.

After the TS detects the change of the task execution environment, a processing policy is as follows:

(1) If the topology relationship does not change, the TS updates the configuration in real time to ensure smooth task execution and QoS guarantee. For example, if the link QoS changes when the task is jointly executed by the base station and the terminal, the base station TS can configure a new inference model splitting point to ensure that an inference task can continue.

(2) If the topology relationship changes, because the TS can only view a subordinate task, impact on an entire workflow cannot be evaluated when the topology relationship changes. Therefore, proper configuration adjustment cannot be performed, and the TA needs to be notified. The TA performs adjustment to reconfigure the topology relationship of the entire task.

• Task complete

After a task is executed, the following two operations need to be performed: feeding back a task execution result and deleting a task instance.

(1) Task execution result feedback

After a task is executed, an execution result may be reported in either of the following two manners: One is that the execution result is directly output to a trigger source, for example, a model trained by the network and an inference result.

The other is that the execution result is directly used in the network, and only an address for obtaining the result is fed back to the trigger source, for example, an AI model of an RRM algorithm type in the RAN.

A triggering mode used by the TE for the task execution result and an address of the triggering source may be delivered as parameters during task deployment, and proactively used by the TE. Alternatively, the TA may be notified that the task is complete. The TA delivers a push instruction that carries a push mode and the address of the triggering source.

(2) Task instance deletion

After a task is executed, a task instance needs to be deleted. This belongs to task lifecycle management and is managed by the TA. After the task is completed, the TE sends a message including a task ID to notify the TA that the task is completed. The TA sends an instruction for deleting a task context and a TE to a TS related to the task. After receiving the instruction, the TS deletes the task context and delivers instructions to delete the corresponding TE, reclaims computing, and updates a computing status.

12.3.1. Task deployment

1. Single-point task deployment

The following uses an AI inference task as an example to describe how to configure a single-point AI task from the following several aspects:

First aspect: operations to be performed and corresponding messages for real-time task management and control

FIG. 95 is a diagram of a task deployment manner for a connected UE. As shown in the figure, for a real-time control message of a task, a task anchor (which may be a network side device or a UE) may control an executor (which may be a network side device or a UE) in the following manners:

- Manner 1: In a request/response mode, for task configuration performed by the task anchor on the device or the UE, the executor has a corresponding response message for configuration information of each task, to notify a result (success, failure, partial success, or the like) of the current configuration.
- Manner 2: In a config mode (no response message), for an AI task (idle/inactive) configured by the task anchor for the UE, a configuration message of each task is successfully configured by default. Therefore, the executor does not need to send a response message to a configuration party.

Table 4 summarizes all task-related configuration messages and carried configuration parameters.

Table 4: Task deployment message table

| Message name | Message mode | Configuration parameter |
|---|---|---|
| 1. Add | • Req/Resp mode<br>• Config mode (without resp) | • Task **ID,** input parameter, model description, output parameter, and algorithm ID (optional)<br>• Configuration decoupling: Inputs, outputs, and models are decoupled, and are assembled based on task IDs<br>• Task attribute: area, timer, quantity of times + period, granularity, and the like |
| 2. Modify | | • Task ID (mandatory)<br>• Parameter<br>• Status (such as start/suspend/resume/delete...) |
| 3. Delete | | • Task ID (mandatory)<br>• Configuration reservation indication (optional, for example, reserved task configuration/not reserved task configuration) |
| 4. Report | • Request/Response mode<br><br>• Report mode | • Task ID (mandatory)<br>• Execution result or completion indication (optional) |
| 5. Status query | • Req/Resp mode<br>• Req/Resp + Report mode | • Task ID (mandatory)<br>• Query parameter (optional, such as a progress, a CPU load, a memory, and remaining power)<br>• Execution status (mandatory) |
| 6. Exception report | • Report mode | • Task ID (mandatory)<br>• Task exception cause (optional, for example, a software exception)<br>• Latest task status (optional, for example, suspended/resumed/started/deleted) |
| 7. Auxiliary information report | • Report mode | • Task ID (mandatory)<br>• Parameter and parameter value (mandatory). For details about the parameter, refer to a task addition message. |

Second aspect: interfaces that are configured to implement real-time task management and control

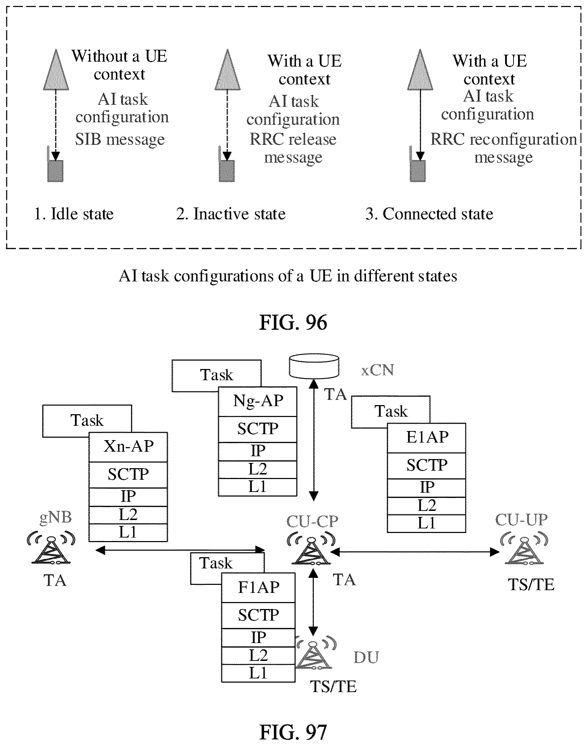

FIG. 96 is a diagram of a task deployment manner for UE in an idle state. As shown in the figure, in a scenario in which the task anchor is a RAN device and the task executor is a UE, there are the following three manners of task configuring signaling by the RAN to the UE for different TRC states of the UE:

(1) Manner 1: For an idle UE, the task is configured/reconfigured by using system information block (system information block, SIB) broadcast signaling.
(2) Manner 2: For an inactive UE, the task is configured/reconfigured by using a TRCReconfig message or a TRCRelease message. The TRCReconfig message is delivered by the base station when the inactive UE is previously in the connected state and the UE does not enter the inactive state after receiving the message. The TRCRelease message is also delivered by the base station when the inactive UE is previously in the connected state, but the UE immediately enters the inactive state after receiving the message.
(3) Manner 3: For a UE in a connected state, a TRCReconfig message is for configuring/reconfiguring the task.

Further, in a scenario in which the task anchor is a network side device (a CN network element or a RAN network element) and the task executor is also a network device, the following interface is configured to implement task configuration. A 5G interface is used as an example. The task anchor (for example, a CU) configures an AI task of the RAN device through the following interface:

- CU->DU: An F1 message is newly defined.
- CP->UP: An EI message is newly defined.
- gNB->gNB: An Xn message is newly defined.
- CN->gNB: An Ng message is newly defined.

For interfaces between devices and the newly defined messages, FIG. 97 may briefly show the interfaces and definitions.

After the configuration message is discussed above, the following describes information carried in the configuration message, to complete a specific parameter configuration of the task, as shown in the third aspect.

Third aspect: parameters that are involved in real-time task management and control

AI is used as an example. Information carried in a configuration message is classified into three types. For a configuration message, an included parameter may be any one or a combination of the three types of parameters. This is not limited.

(1) (Algorithm) AI model:

■ configuration parameters: a task ID, an input parameter, a model description, and an output parameter (optional, where if the parameters are defined in a standard protocol, the parameters do not need to be additionally defined or carried in the configuration message)
■ independent inference: algorithm ID (optional, configured only for independent inference)

♦ input parameter: "input" may be a specific parameter, for example, a parameter defined by 3GPP, or may be data collected by the UE or provided by the network (CPU offloading in this case)

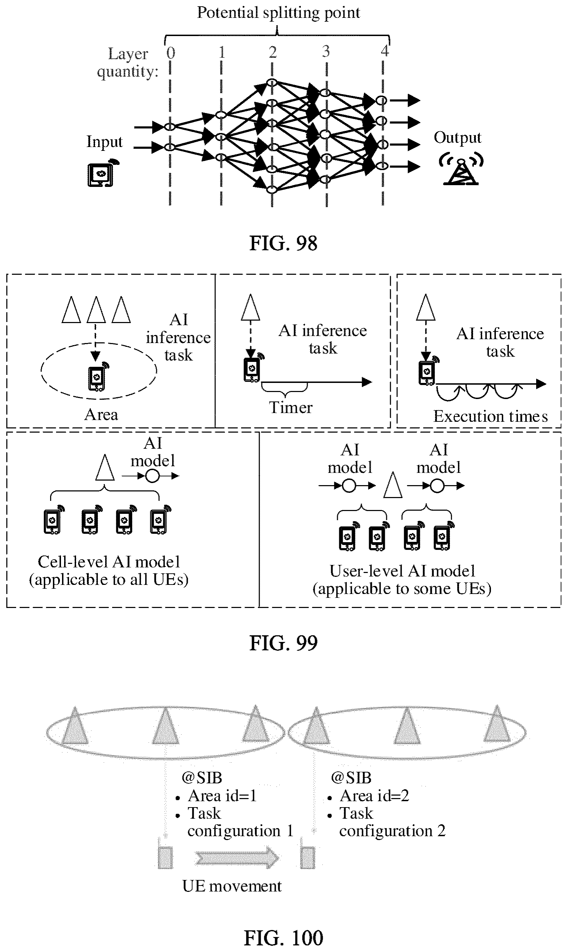

FIG. 98 is a diagram of split inference. The input parameter and the output parameter are respectively an input parameter and an output parameter of the model. In many cases, if AI/ML model inference is performed only on a terminal or a network side, computing resources and wireless communication resources between the terminal and the network are unbalanced, and security and privacy problems occur. Therefore, an AI/ML inference task may be properly segmented, so that the AI/ML inference task can be jointly inferred on both the terminal side and the network side, to reduce pressure on computing, memory, storage, power consumption, and network transmission of the device, reduce AI/ML inference delays and energy consumption, and improve inference accuracy and efficiency. The principle of AI/ML model splitting is to transfer computing that consumes a large amount of computing and energy to a network-side node, and retain computing that is delay-sensitive and that is required to be retained on a terminal under some privacy protection rules on the terminal. In an example, the terminal performs an AI/ML operation on a specific part, or executes an AI/ML model on a specific layer, and sends generated intermediate data to the network. The network-side node is responsible for performing a remaining part of the AI/ML operation or a remaining layer of the AI/ML model, and feeding back an inference result to the terminal. The model splitting points are selected based on computing consumed by each layer, a data amount, and the like, and appropriate splitting points are selected based on computing of the terminal and a network status.

(2) QoS: QoS indicator corresponding to the task, which for example, may be a combination of a delay and reliability (for example, 3 ms + 99.99%) for an AI single-point inference task

(3) AI task attributes

FIG. 99 is a diagram of AI task attributes. As shown in the figure, the AI task attributes include parameters such as a geographic area (area), a timer (timer), a quantity of execution times of an AI inference task, and an application granularity of an AI model. For example, the application granularity of the AI model includes: a cell-level AI model, that is, the AI model is applicable to all UEs in a cell, and a user-level AI model that is applicable to only some UEs.

■ Geographical range:

(1) If the idle/inactive UE is out of the geographical range, an old AI task is automatically deleted and the base station is notified (optional).
(2) If the connected UE is out of the geographic range, an old AI task is automatically deleted and a task is deleted by the base station (optional).

■ Time validity: When the timer (timer) expires, the idle/inactive/connected UE deletes the task. The configuration may be retained/deleted (which may be configured by the base station in advance or predefined in a protocol).

(1) Real-time: A Request/Response model is used, where Response carries a task result.
(2) Non-real-time: A Request/Response+Indicate model is used, where Indicate carries a task result.

■ AI inference task execution times: This is only for a non-algorithm AI inference task, and supports a one-shot, periodical (periodical), or event (event) configuration, and periodical task management based on timer+quantity (that is, the AI inference task execution times).
■ Application granularity: The application granularity is applied to a UE granularity, a UE type, a cell granularity, a cell pair granularity, a gNB granularity, a CN granularity, an area granularity (for example, a tracking area code (tracking area code, TAC), and a RAN-based notification area code (RAN-based notification area code, RANAC)), and the like.

For specific parameters of the foregoing task, the UE performs the following operations:

■ Geographical range:

It is assumed that each cell broadcasts an area ID and task configuration information (optional).
FIG. 100 is a diagram of task mobility. As shown in the figure, two cells are used as an example, and the two cells are respectively represented by a cell 1 and a cell 2. The cell 1 broadcasts an area ID 1 and a task configuration 1, and the cell 2 broadcasts an area ID 2 and a task configuration 2. For example, a broadcast message may be a system information block (system information block, SIB).

(1) If the idle/inactive UE is out of the geographical range, an old AI task is automatically deleted and the base station is notified (optional).
(2) If the connected UE is out of the geographic range, an old AI task is automatically deleted and a task is deleted by the base station (optional).
(3) Each time the idle/inactive/connected UE accesses a new cell, the UE first determines, based on a corresponding area ID in a SIB of the cell, whether to obtain a task configuration (and an AI model configuration) again; and

➢ if the area is a new area:

deletes a task configuration corresponding to the old area; and
reads the SIB again and obtain task configuration information of the cell; or

➢ if the area is not a new area:
does not need to obtain the task configuration information of the cell again.

■ Time validity: When the timer expires, the idle/inactive/connected UE deletes the task. The configuration may be retained/deleted (which may be configured by the base station in advance or predefined in a protocol).

• After receiving a timer related to the task configured by the base station and starting the task, the UE immediately starts the timer.
• After the timer on the UE side expires, the UE stops/deletes the task.

■ Task execution times: This is only for a non-algorithm AI inference task, and supports a one-shot, periodical, or event configuration, and periodical task management based on timer+quantity.

• After receiving the task-related parameter configured by the base station and starting the task, the UE counts a quantity of times of executing the task (an initial value is 0, and is increased by 1 each time the task is executed; or the initial value is N (total quantity of times), and is decreased by 1 each time the task is executed).

- After the UE executes the task for a pre-configured times (N times), the UE stops/deletes the task.

2. Collaborative task configuration

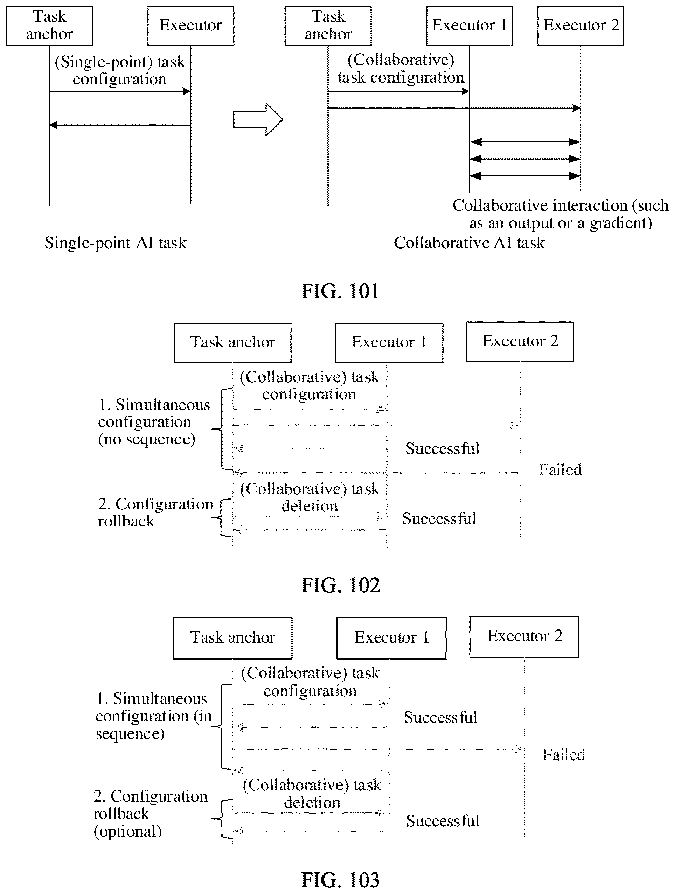

For main differences between the single-point task configuration and the collaborative task configuration, refer to FIG. 101. The main differences are as follows:

(1) Quantity of executors: A quantity of executors in a single-point task is 1. A quantity of executors in multi-point coordination is greater than or equal to 2.

(2) Successful configuration: If configuration is successfully performed for a single executor in a single-point task, the task is successful. In multi-point coordination, configuration needs to be performed for a plurality of executors at the same time. Therefore, configuration may be successfully performed for some executors and may fail to be performed for some executors. In this case, how to roll back or restore the configuration is a main problem to be solved in this scenario.

(3) Task reconfiguration: A single-point task can be configured only by an anchor for an executor. In multi-point coordination, in addition to the configuration/reconfiguration performed by the task anchor for the executor, the executor 1 can also perform reconfiguration for the executor 2.

(4) Path configuration: There are a plurality of paths for exchanging collaborative information between a plurality of executors in a collaborative task. A specific path for reporting needs to be preconfigured for the executor.

Compared with the configuration of a single-point AI task, the configuration of the collaborative AI task involves collaborative configuration of two or more executors. Therefore, more issues need to be considered, for example, configuration disconnection, inter-executor configuration, and multipath reporting.

(1) Issue 1: configuration association

Compared with the configuration of the single-point AI task, the configuration of the collaborative AI task involves collaborative configuration of two or more executors. Therefore, in the configuration of the collaborative AI task, configuration rollback needs to be additionally considered when configuration fails to be performed for one or more executors. In this case, this embodiment of this application provides two solutions, for example, the following solution 1 and solution 2.

Solution 1: simultaneous configuration (no sequence)

FIG. 102 is a diagram of a collaborative AI task configuration solution. As shown in the figure, in the single-point AI task configuration, the task anchor configures a task for only one executor. However, in collaborative AI task configuration, the task anchor may perform task configuration on a plurality of executors at the same time. Only two executors, for example, an executor 1 and an executor 2, are used as an example for description. To be specific, configuration of the executor 2 does not depend on whether configuration of the executor 1 succeeds.

However, a problem brought by this solution is: If the configuration of the executor 1 fails but the configuration of the executor 2 succeeds, the task cannot be executed cooperatively because the configuration of the executor 1 and the configuration of the executor 2 are not synchronized. In this case, additional signaling is required for configuration rollback, for example, configuration of a successfully configured cooperative task of the executor 2 is rolled back to a state before the configuration.

Solution 2: simultaneous configuration (in sequence)

FIG. 103 is a diagram of another collaborative AI task configuration solution. In this solution, configuration of the task anchor for a collaborative task of the executor 2 depends on whether configuration of the task anchor for the executor 1 succeeds. For example, if the configuration of the task anchor for the executor 1 succeeds, the task anchor continues to perform configuration for the executor 2. Otherwise, if the configuration for the executor 1 fails, the task anchor does not configure the collaborative task for the executor 2.

(2) Issue 2: inter-executor configuration

Two executors are used as an example. The inter-executor configuration means that the task anchor does not directly configure the executor 2, but the executor 1 configures the executor 2.

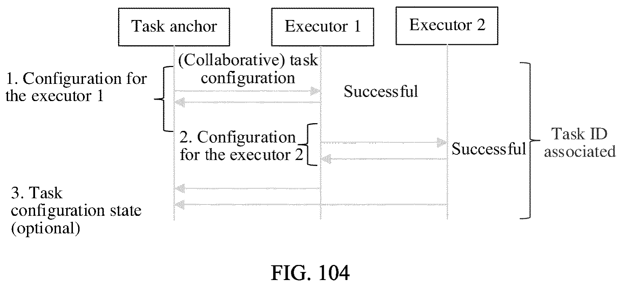

FIG. 104 is a diagram of inter-executor configuration. Specific steps are as follows.

Step 1: The configuration performed by the task anchor for the executor 1 includes a parameter list. For example, the parameter list may include a task ID, {model ID+model configuration}, and the like, and optionally carry identification information or type information of the executor 2, such as a node ID/UE ID and a node type/UE type.

Step 2: The configuration performed by the executor 1 for the executor 2 includes the following parameters:

- option 1: (task ID, {model ID+model configuration}); and
- option 2: (task ID, {model ID+model configuration}), (task ID, model ID).

Step 3: The executor 1 or the executor 2 feeds back a latest model to the task anchor, including a parameter (task ID, model ID).

(3) Issue 3: multipath reporting

In the CU/DU separation and CP/UP separation scenarios, the collaboration parties, namely, the CP, the UP, and the DU can collaborate with the UE. A reporting path is also configured by the task anchor for the UE, for example, a reported layer name and node name are configured.

- When the task anchor configures a task for the executor 1/2, a path for reporting a task result may be specified:

  opt1: node name, for example, CU-CP, CU-UP, or DU;
  opt2: layer name, for example, TRS layer, TRC layer, or T-SDAP layer; and
  opt3: node name and layer name.

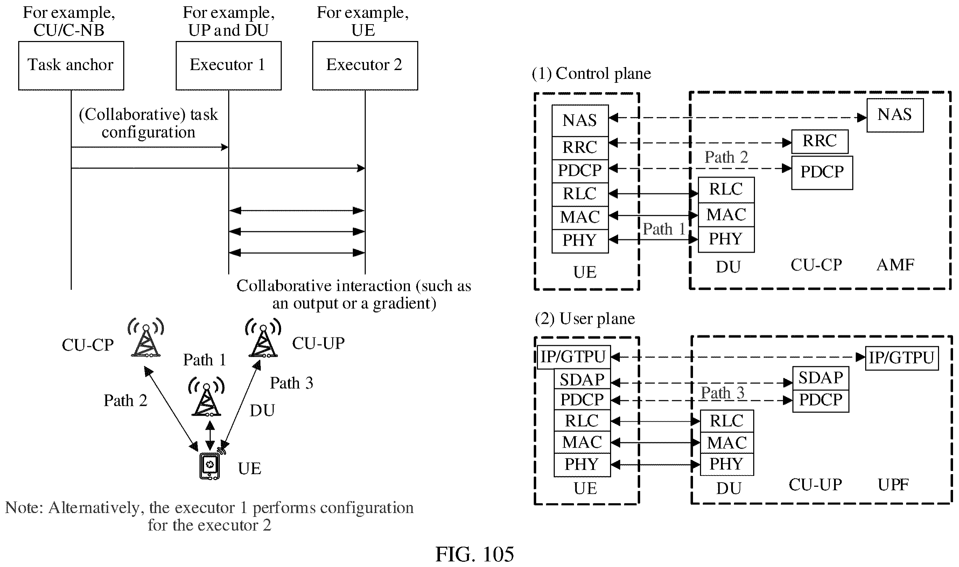

FIG. 105 is a diagram of multipath reporting for a collaborative AI task.

- When the executor 2 reports a task execution result, because it is difficult to enhance a TRS CE/T-SDAP Control PDU, the task execution result may not be directly reported to the executor 1, but is reported to another network element (for example, the task anchor). In this case, the task execution result needs to be transparently/non-transparently forwarded to the executor 1, and carry one or more of the following parameters:
  a task ID, a result (intermediate output and gradient information), or a UE identifier.

An information reporting path configuration of a collaborative task may be a configuration of the task anchor for the executor, or may be a configuration of an executor for another executor (for example, a configuration of the executor 1 for the executor 2).

For a scenario in which forwarding needs to be performed (for example, in the foregoing scenario in which the UE has different collaborative tasks with the CU-CP, the CU-UP, and the DU, and needs to report different collaborative information to the different nodes; and a reporting channel configured by the task anchor/the executor 1 for the executor 2 (the UE in this example) is a path 2 (for example, carrying collaborative information at a TRC layer), or may be another path, a solution is similar), after parsing TRC signaling and obtaining the corresponding collaborative information, the CU-CP determines that the collaborative information is not sent to the CU-CP, and needs to further forward (in a transparent transmission or non-transparent transmission manner) the collaborative information to another entity (for example, a network element such as the DU or the CU-UP). In this case, the CU-CP needs to additionally perform the following operations:

Step 1: Determine whether the information is sent to the CU-UP.

Explicit manner: For example, an identifier of another network element or a protocol layer identifier is reported in each piece of collaborative information reported by the UE:

manner 1: a network element identifier (for example, a CU-UP, a DU, or a CU-CP); and

manner 2: a protocol layer identifier (for example, a TRS/PHY needs to be subsequently forwarded to the DU, a T-SDAP needs to be forwarded to the CU-UP, or a TRC needs to be processed by the CU-CP).

Implicit manner (task ID): For example, if one task is configured, only one reporting path can be configured. In this way, the task ID and the reporting path are in a one-to-one mapping, and a corresponding forwarding entity may be further determined based on the task ID carried in the collaborative task information subsequently reported by the UE.

Step 2: If the information needs to be forwarded to another entity:

Transparent forwarding: The collaborative information is forwarded to a destination network element in a transparent transmission manner without parsing specific content of the collaborative information.

Non-transparent forwarding: Specific content is first obtained through parsing. Then, a message is recognized, and is sent to a destination network element.

The following describes a task bearer, which specifically relates to a signaling bearer and a data bearer.

12.3.2. Task bearing

12.3.2.1. Data bearer

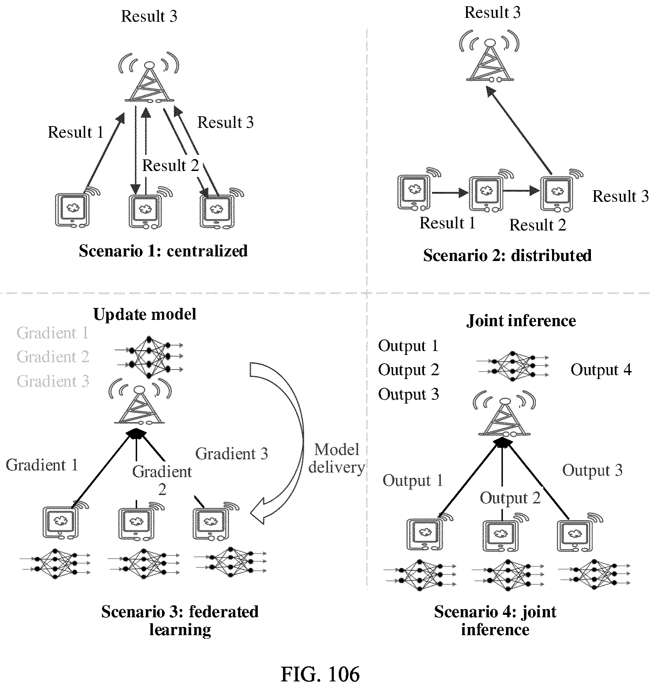

FIG. 106 shows an example of a scenario of exchanging task information. For example:

- Scenario 1: For a computing/data (serial) task, centralized service flow processing is performed.
- Scenario 2: For a computing/data (serial) task, distributed service flow processing is performed.
- Scenario 3: For an AI training task (FL), gradient reporting is performed, and model update delivery is performed.
- Scenario 4: For an AI inference task (joint inference), an intermediate output is exchanged.

To transmit task data in a wireless communication network, the following questions need to be resolved:

(1) Question 1: Is a TRB is carried in signaling or data?

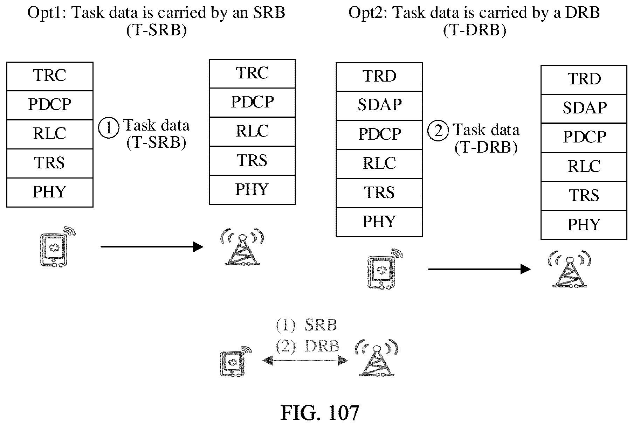

FIG. 107 shows some possible manners of carrying task data. As shown in FIG. 107, in a possible manner (for example, Opt1 in the figure), the task data is carried by using an SRB (the SRB carrying the task data is represented as a T-SRB in the figure). However, this manner may have the following problems:

(1) a limited number (3, NSA and QoE not considered);
(2) no differentiated QoS; and
(3) a maximum size (16*9k), which cannot carry an ultra-large model/data.

In another manner (for example, the opt2 in the figure), the task data is carried by using a DRB (the DRB carrying the task data is represented as a T-DRB in the figure). This manner may have the following problems:

■ Problem 1: non-transparent transmission: A current mode is a transparent transmission mode of the base station. A non-transparent transmission mode needs to be added (that is, the base station needs to parse and terminate the data).
■ Problem 2: QoS-related problems:

For example, QoS indicators: computing, AI, and sensing indicators are different from communication QoS indicators; and QoS indicators used for task QoS and communication QoS are different.

For another example, the QoS mechanism (RAN AI4NET scenario) does not involve a CN, and a mechanism of generating QoS by the CN and transmitting the QoS to the RAN cannot be reused. The IP information is not carried, and a mechanism of mapping from IP to a QoS flow cannot be reused.

■ Problem 3: protocol stack:

new TRD (task resource data) - native AI layer;
ultra-large model/data: a PDCP SDU (limited by 9k) being unable to support a large model; and
(Uu)SDAP+: a mechanism of mapping from a QoS flow to a DRB cannot be reused.

■ Problem 4: bearer:

Protocol stacks are different, and a dedicated task bearer is required.

Corresponding solutions to problems 1 to 4 existing in the DRB carrying the task data are as follows:

(1) Solution 1 to the problem 1:
A logical channel (logical channel, LCH) type is added, for example, "DRB type".

♦ "Task type" or "Data type" (conventional session data). In other words, data is classified into session data and task data, which are respectively identified by using a data type and a task type.

(2) Solution 2 to the problem 2:

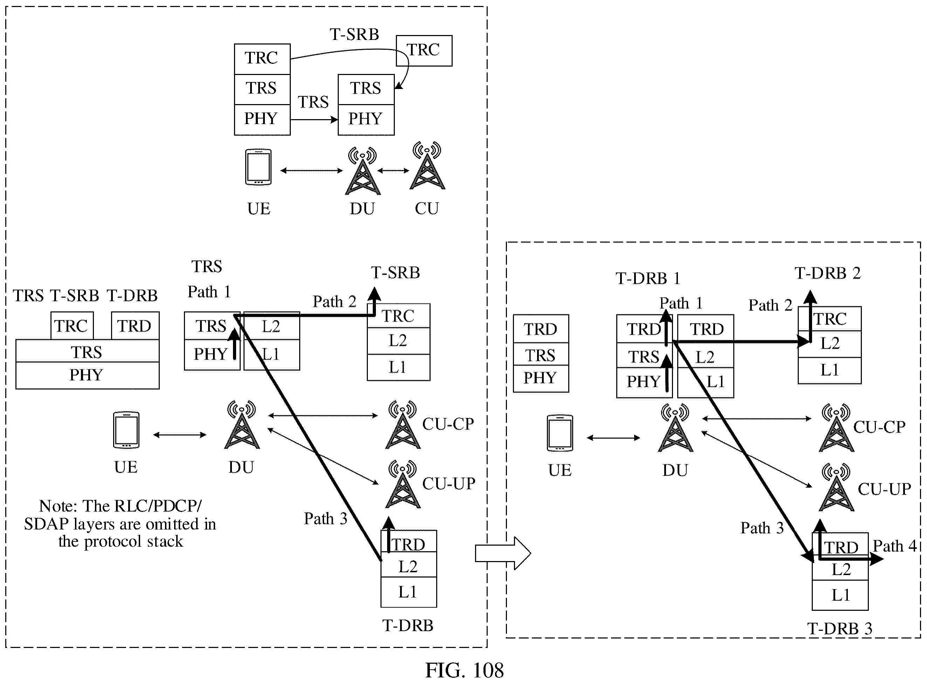

For a current situation and the solution to the problem 2, refer to FIG. 108.

Scenario 1: How to transmit gradient information when the UE and the DU perform FL? One solution is T-SRB bearer transmission and CU forwarding. The UE interacts with the CU, and the CU forwards the gradient information to the DU, resulting in an excessively large delay. In another solution, task information is carried by using DCI/UCI/MAC CE, and the DU parses and processes the DCI/UCI/MAC CE. A disadvantage is that a data amount is small and a data format is not flexible.

Scenario 2: How to transmit gradient information when the UE and the CU-CP perform FL? One solution is T-SRB bearer transmission. The UE interacts with the CU-CP. If the DU finds that the T-SRB bearer is used, the DU directly forwards the gradient information to the CU-CP. A disadvantage is similar to that of the SRB, with a limited size and no QoS level.

Scenario 3: How to transmit an intermediate computing result when the UE and the CU-UP perform computing offloading? One solution is T-DRB bearer transmission. An existing mechanism may be reused (the UE interacts with the DU, and the DU finds that the T-DRB bearer is used, and directly forwards the result to the CU-CP). However, currently, the CU-UP can only transparently transmit the T-DRB, and cannot parse and terminate the result.

The solution 2 provided in this application to resolve the foregoing problem 2 is as follows:

Full-stack T-DRB

(1) DU protocol stack:

original: PHY and TRS only; and
current: PHY, TRS, and T-DRB (PHY/MAC/RLC/PDCP/SDAP/TRD).

(2) CU-CP protocol stack:

original: T-SRB; and
current: T-SRB and T-DRB.

(3) CU-UP protocol stack:

original: T-DRB only; and
current: no additions.

DU forwarding policy:

original: the DCI/UCI/MAC CE is self-processed, the SRB is forwarded to the CU-CP, and the DRB is forwarded to the CU-UP; and
current: whether performing self-processing (path 1), performing forwarding to the CU-CP, or performing forwarding to the CU-UP is determined based on different T-DRB sequence numbers.

CU-CP forwarding policy:

original: T-DRB reception is not supported; and
current: the T-DRB is received and unconditionally terminated (path 2).

CU-UP forwarding policy:

original: the DRB is received and transparently transmitted to the UPF; and
current: whether performing self-processing (path 3) or performing forwarding to the UPF (path 4) is identified based on the T-DRB ID.

(3) Solution 3 to the problem 3:

■ (Uu)SDAP+: A mechanism of mapping from a QoS flow to a DRB cannot be reused, and a mapping from a task ID to a DRB needs to be added.
■ AI layer:

♦ Due to a limited size (9k) of the PDCP SDU, to support transmission of a larger model, a segmentation/cascading function needs to be added to the TRD layer.

♦ TRD function: Functions such as AI training/inference/model processing (compression/pruning/quantization/security and the like) are newly added.

♦ Data layer/compute layer/sensing layer: supports the data plane/computing plane, and the like.

(4) Solution 4 to the problem 4:

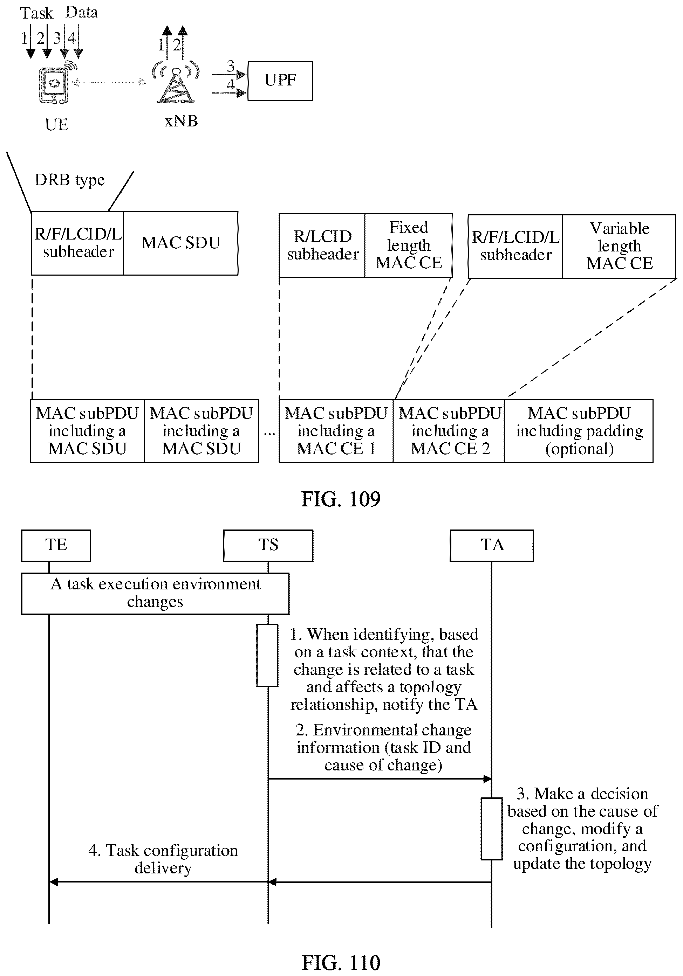

FIG. 109 is a diagram of a solution in which task data is carried by a T-DRB.

- The cNode/sNode configures and establishes different DRBs for the UE, maps task data to a DRB 1 and a DRB 2, and maps data data to a DRB 3 and a DRB 4.
- After receiving uplink DRB data, the cNode/sNode determines, based on DRB IDs, to process and terminate DRB data for DRB IDs 1 and 2, and to forward DRB data to the CF-U for DRB IDs 3 and 4.

12.3.3. Task control

1. Radio environment adaptation

The 6G network supports native AI, deeply integrates connectivity, computing, an algorithm, and data, and establishes multi-point coordination channels to provide a complete running environment for an AI task. Different from a conventional network architecture centered on a session connection, 6G native AI is task-centric and performs lifecycle management, scheduling, control, and execution on tasks.

The wireless network environment is unstable and changes dynamically in real time, such as user movement, an interference change, and a service burst. These changes affect ongoing tasks. Therefore, the task management and control function needs to sense a change of the task execution environment in real time, to adjust the parameter configuration of the task, so that the task can be executed smoothly and task QoS can be ensured.

The network environment change may be classified into two types depending on whether a task topology relationship changes.

Type 1: The topology relationship does not change. For example, a link QoS change (a user moving away and interference being enhanced), a computing change (a terminal running a new app), and the like do not change the topology. Type 2: The topology relationship changes, such as a terminal status changes (entering the inactive/idle state), terminal handover, and a TE dropout.

The procedures for processing the two types of environment changes are different. The following describes the procedures.

• The topology relationship changes.

Because the TS can only view a subordinate task, impact on an entire workflow cannot be evaluated when the topology relationship changes. Therefore, proper configuration adjustment cannot be performed, and the TA needs to be notified. The TA performs adjustment to reconfigure the topology relationship of the entire task. When a user is handed over to another base station, if the TS simply migrates a task context to a new base station, a data exchange delay between the TE and the UE on a source base station increases, and QoS of an entire service cannot be ensured. In this case, the TA needs to evaluate impact of a UE handover delay on an entire workflow and adjusts a related task configuration to ensure the QoS of the entire service.

A core processing procedure is shown in FIG. 110. FIG. 110 is a diagram of real-time adjustment of four elements of a task when a task environment changes.

Step 1: When the TS senses that a task execution environment changes and a topology relationship of the task is affected, the TS needs to notify the TA, and the TA determines to modify a task configuration and update the topology relationship.

Step 2: The TS sends a "task execution environment change notification" message to the TA. The message carries a task ID and a cause of change. The cause of change may include information elements (information element, IE) such as a category, an object, and an amplitude.

Step 3: After receiving the change notification, the TA makes an adjustment decision, modifies a task configuration, and reorganizes the topology relationship. A decision-making scheme depends on an algorithm implementation. A final configuration modification may be generally classified into the following types by level:

(1) The TS changes: A task executor remains unchanged, a related task context is created on a new TS, and the new TS is updated into a task topology. For example, after a user is handed over to a new base station, the task context is established on the new base station TS.

(2) The TE changes: An executor that is before the task is abandoned and switched to a new executor. All executed intermediate processes such as data/model/configuration need to be migrated to a new TE, and a new TS may need to be selected based on the new TE. If service interaction exists between a plurality of TEs of the task, a topology relationship between the TEs needs to be updated.

(3) The TA changes: If a topology change exceeds a management domain of a current TA and a management domain of a new TA is entered, a set of complete task execution environments needs to be established under the new TA, which is equivalent to creating a task.

Step 4: After a decision-making solution is formulated, a new configuration is delivered to a related network element.

The following uses several specific examples (case) for description:

• Case 1: Adjustment when a terminal enters an idle state

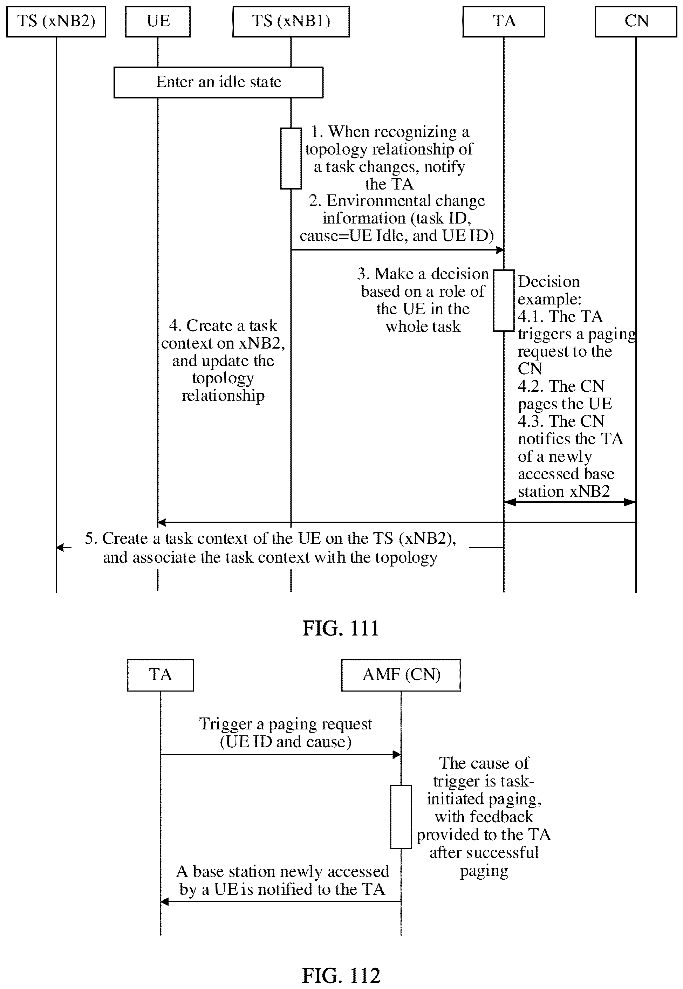

FIG. 111 is a diagram of task data transmission for a UE in an idle state. As shown in FIG. 111, when the UE enters the idle state, a task previously deployed on the UE cannot be scheduled and controlled, and the UE cannot interact with a TS or a TE. Therefore, QoS of the task cannot be ensured, and a task execution environment needs to be adjusted. The procedure is as follows.

Step 1: A TS to which xNB1 belongs identifies, based on a previously created task context, that a related task is being executed on the UE, and triggers a task environment change processing procedure. When the UE enters the idle state, xNB1 determines that this case belongs to a task topology relationship changes and a TA needs to be notified.

Step 2: xNB1 sends a task environment change notification to the TA, including a task ID, a cause of change, and the like. For example, the cause of change includes: category=UE IDLE, and object=UE ID.

Step 3: After receiving the notification, the TA identifies a phase to which the TA belongs based on a UE ID and determines an adjustment solution. As described above, the determined solution belongs to a specific algorithm implementation, and is used as an example herein: A corresponding UE is paged, a context of a task of the UE is created on a new base station xNB2, and a topology relationship is updated.

Step 4: The TA triggers a core network to page the UE and determine that the UE is newly connected to a base station xNB2.

Step 5: Deliver a configuration, create a UE task context on TS@xNB2, and update a topology. TS@xNB2 represents a task scheduler on xNB2. Details are not described again in the following embodiments.

In an example of the foregoing TA decision, in step 4, a message exchanged between the TA and the CN needs to be added, and a task sensing function needs to be added on the CN. As shown in FIG. 112, FIG. 112 is a diagram of task data transmission when a task is completed.

A RAN (specifically, the TA) triggers a paging request to the core network. A new type, namely, task, needs to be added for a cause of paging. A paging procedure of the core network may reuse an existing paging procedure, but a task sensing function needs to be added after paging is complete. After the UE accesses a new base station, the CN notifies the TA of information about the new base station.

• Case 2: Adjustment after the terminal handover

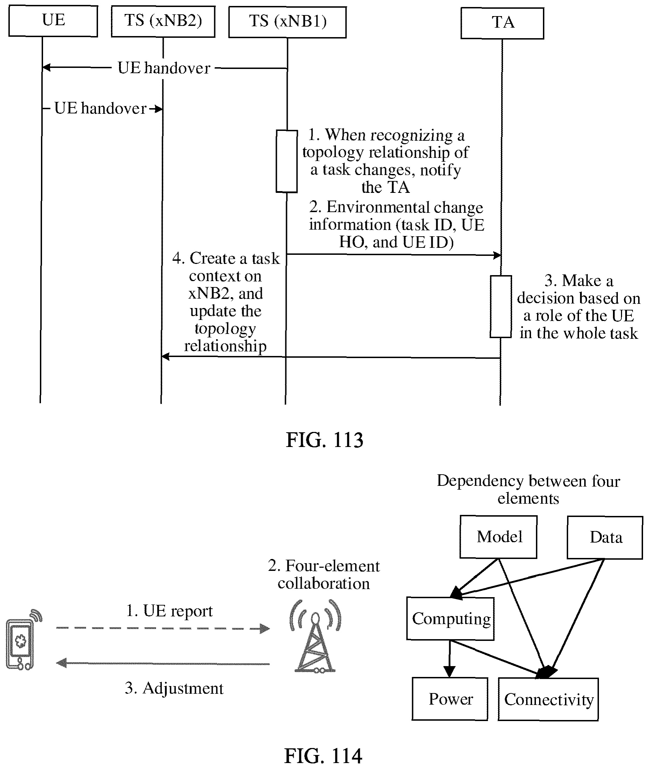

During task execution, the UE is handed over to another base station. As a result, an original base station cannot continue to perform task scheduling control on the UE, and task QoS cannot be guaranteed. Therefore, a task execution environment needs to be adjusted. For a procedure, refer to FIG. 113. FIG. 113 shows a procedure of adjusting a task during handover of a terminal.

Step 1: After the UE is handed over, a TS to which xNB1 belongs identifies, by using a previously created task context, that a related task is being executed on the UE, and triggers a task processing procedure. The UE is handed over. A task topology changes and a TA needs to be notified

Step 2: xNB1 sends a task environment change notification to the TA, including a task ID, a cause of change, and the like. In an example, the cause of change includes: category=UE HO, and object=UE ID.

Step 3: After receiving the notification, the TA identifies a phase to which the TA belongs based on a UE ID and determines an adjustment solution. As an example, the adjustment solution may be that, a base station TE remains unchanged, a context of a UE task is created on a new base station xNB2, and a topology relationship is updated.

Step 4: Deliver a configuration, create a UE task context on TS@xNB2, and update a topology.

2. Real-time collaboration of four elements

FIG. 114 is a diagram of real-time collaboration of four elements.

Real-time collaboration of four elements of a task refers to adjusting, with a change of an environment or a change of a status of a specific element, other associated elements based on a task granularity, to achieve better performance or save energy. For example:

- Connectivity-algorithm (that is, an algorithm is adjusted based on a change of a connection status): The UE and the base station perform joint inference, and the base station adjusts a model on the UE side:

  ■ UE power/UE CPU load: For example, when the power is low or the load is high, a splitting point is adjusted forward.
  ■ Connection status: For example, when bandwidth is limited, a splitting point is adjusted to a position with fewer intermediate outputs.

- Model->connectivity (that is, a connected resource is adjusted based on a model change): The UE and the base station perform federated learning:

  ■ After the base station adjusts the model of the UE, gradient information of different models or splitting points has different sizes, and therefore different air interface resources (SPS or GF) are allocated.

- Data→node (that is, a node is adjusted based on data):

  ■ The base station selects, based on a non-independent identically distribution (non-independent identically distribution, non-IID) principle, a UE for reporting.

12.3.4. Mobility

Due to mobility of the terminal, task status update is more complex, and the following questions need to be considered:

- Question 1: For an old task of a UE in a source cell, after the UE moves and hands over/camps on a target (new) cell, how to migrate a computing context of the old task and whether to migrate a TA/TS, to enable continuing execution of the old task?
- Question 2: After the UE moves to/reselects a target (new) cell, because it takes time to configure a new task of the target (new) cell, how to enable the UE to obtain a configuration of the new task as early as possible and use the configuration in advance?

For the foregoing questions, this application provides corresponding solutions, such as the following solution 1 and solution 2.

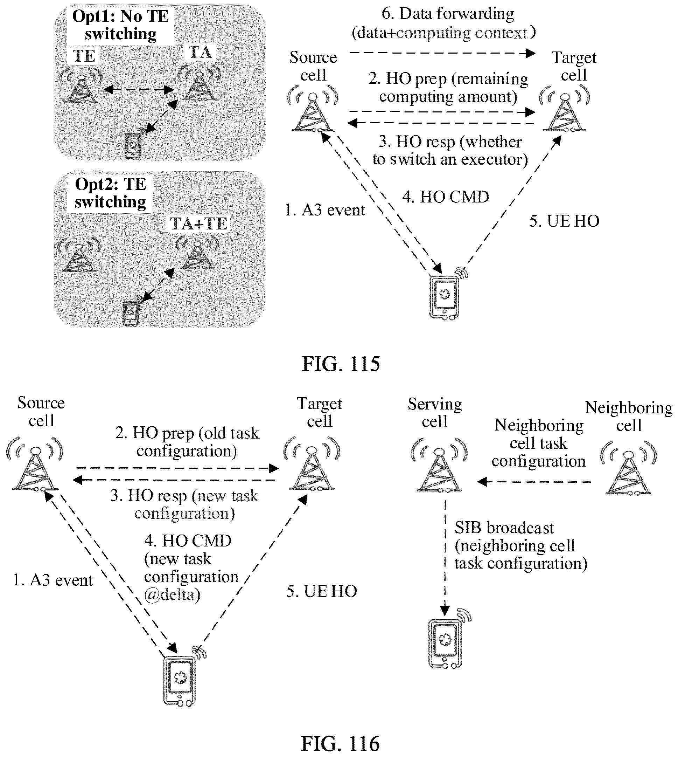

- Solution 1 to the foregoing question 1 is shown in FIG. 115. FIG. 115 is a diagram of task context migration in a handover scenario. Specifically, the solution 1 is as follows:

  ■ The executor of the old task (of the source cell) is handed over/not handed over with handover of the task anchor:

    ♦ Negotiation: Task progress information needs to be exchanged to determine whether to migrate the executor/task anchor.
    ♦ The source transfers a remaining computing amount to the target, for example, computing (a task completion rate/a remaining computing amount) and an algorithm (an AI model and data).

  ■ The target determines whether to switch the executor.

If the switching is performed, the UE computes a context and transfers the context from the source base station to the target base station:

  ♦ a training task: algorithm (learned models and gradient information that is not updated), data (unlearned), and the like; and
• an inference task: data (remaining inputs), algorithm (remaining models), and the like.

• The solution 2 to the foregoing question 2 is shown in FIG. 116. FIG. 116 is a diagram of obtaining a neighboring cell task configuration in advance in a scenario in which the UE moves. Specifically, the solution 2 is as follows:

■ New task configuration (of the target cell): To reduce configuration signaling overheads, a new/old task configuration (such as computing, an algorithm, data, and connectivity) needs to be transferred between base stations. For a UE in a connected state, handover is performed. For a UE in an idle state, reselection is performed.

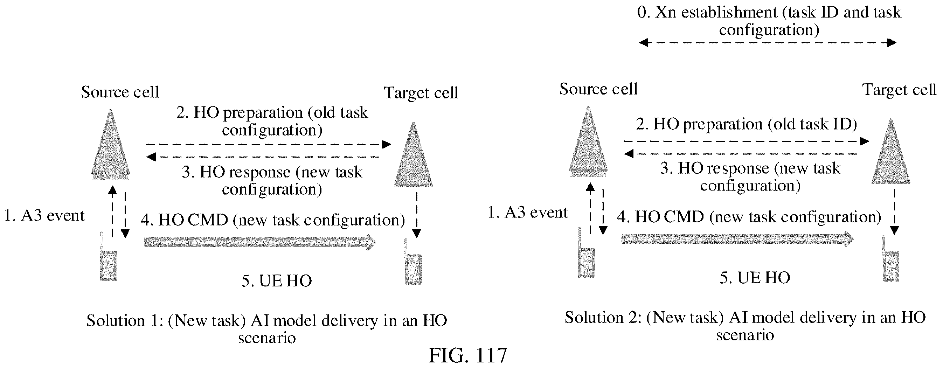

Optionally, for the UE in the connected state, there are the following two solutions. The following describes the two solutions with reference to FIG. 117.

Opt1: To reduce configuration overheads of the AI task of the target cell for the UE, the following procedure may be included:

Step 1: The source cell transfers task configuration information of the source cell to the target cell (an existing handover (handover, HO) procedure may be reused, but a task configuration is carried).
Step 2: The target cell performs delta configuration based on the obtained configuration of the old task (for example, if there are 10 parameters in total in the task and configurations of nine parameters are the same in the source cell and the target cell, the target cell needs to deliver only one parameter to the UE).
Step 3: The target cell sends the delta configuration (carrying the task configuration) to the source cell.
Step 4: The source cell transparently transmits the configuration of the target cell to the UE in an HO CMD (carrying the task configuration).

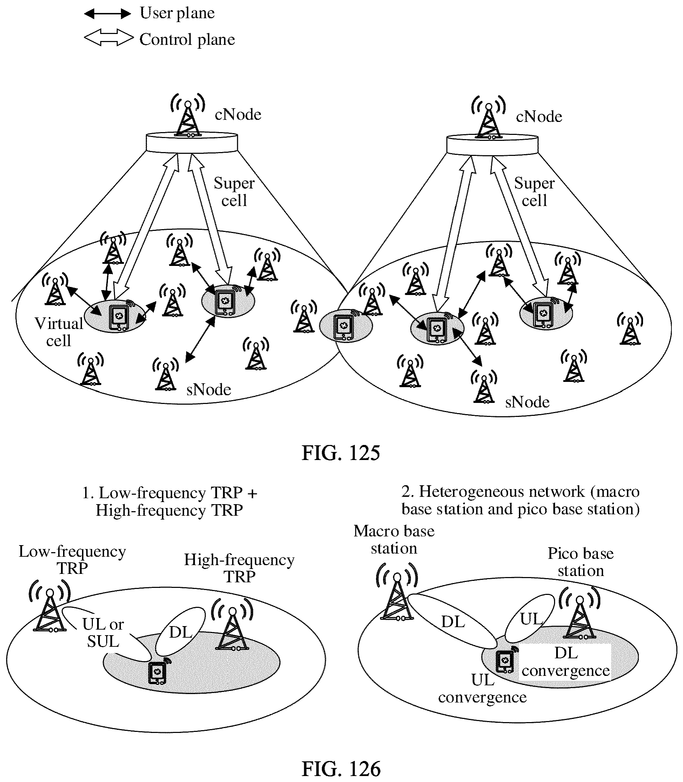

Opt2: To avoid carrying the task configuration in step 3 in the foregoing solution Opt1, only a task configuration index may be carried in this step, to reduce configuration overheads of the terrestrial interface and the air interface. However, in this case, step 0 needs to be added, so that an index relationship of {task ID, task configuration} is carried in advance by using an Xn setup message after startup of the base station, as shown in a solution 2 in FIG. 125.

For the UE in the idle state, the following three solutions (for example, an option 1, an option 2a, and an option 2b) are provided.

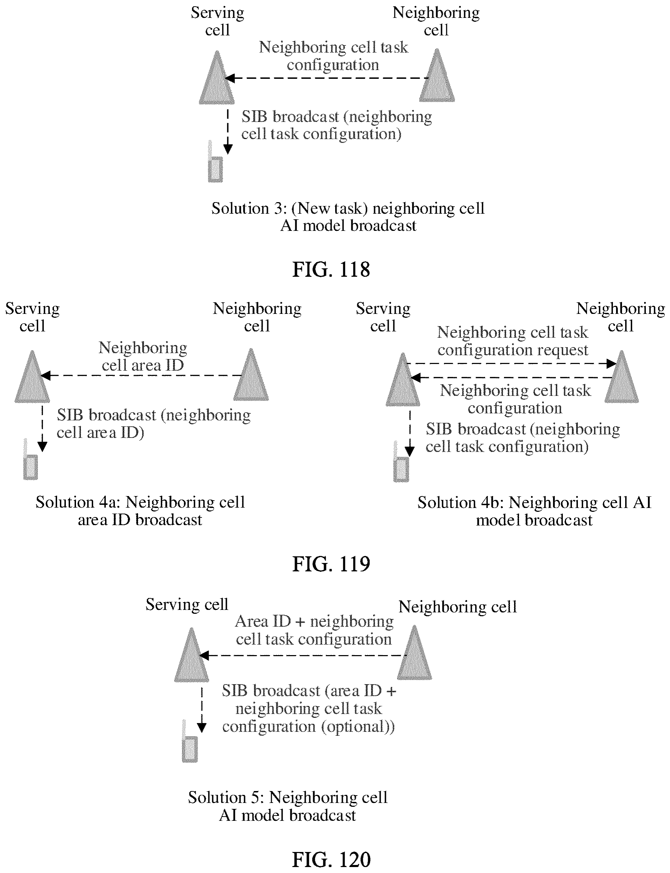

Option 1: As shown in FIG. 118, to enable the UE to quickly obtain an AI task configuration of a neighboring cell and apply the AI task configuration as soon as possible (compared with this solution, the UE needs to reselect and camp on the target cell, and obtain a task configuration of the cell by reading a SIB of the target cell; this solution can reduce time for the UE to read the SIB of the target cell), the following procedure is included:

Step 1: Obtain task configuration information of the neighboring cell through an inter-station interface startup message.
Step 2: The current cell broadcasts the task configuration information of the neighboring cell through a SIB.

Option 2a: As shown in FIG. 119, each cell broadcasts its own area ID, and the UE may consider that task configurations of cells with a same area ID are the same.

Step 1: Obtain task configuration information (including an area ID) of the neighboring cell through an inter-station interface.

Step 2: The current cell broadcasts the task configuration information (including the area ID) of the neighboring cell through a SIB.

Optionally, if an area ID of the current cell is different from an area ID of the neighboring cell, the current cell requests more task configuration information from the neighboring cell.

Step 3: The current cell requests an AI model of the neighboring cell.

Step 4: The neighboring cell provides feedback.

Step 5: The current cell broadcasts the model of the neighboring cell in the SIB.

Option 2b: As shown in FIG. 120, an area ID and a task configuration parameter (regardless of whether area IDs of two cells are the same) are exchanged through Xn setup.

Step 1: Obtain task configuration information (including an area ID and the task configuration parameter) of the neighboring cell through an inter-station interface.

Step 2: The current cell broadcasts the task configuration information (including the area ID and the task configuration parameter (optional)) of the neighboring cell through a SIB. When an area ID of the current cell is different from the area ID of the neighboring cell, the current cell broadcasts both the area ID and the task configuration parameter of the neighboring cell. Otherwise, only the area ID of the neighboring cell is broadcast (because the task configuration parameter of the neighboring cell is the same as that of the current cell).

13. New feature of 6G: connectivity+ (that is, hyper-connectivity)

A fully decoupled network architecture supports:

• Control and data node separation

Application scenario: an ultra-lean carrier (carrier dedicated solely to data transmission), ultra-energy efficiency (dynamic start/shut-down of sNodes), and radio access technology (radio access technology, RAT) hyper-convergence (centralized control of LTE, NR, and 6G by a cNode).

• Uplink and downlink node separation

Application scenario: a UL-only node (enhancing uplink coverage/throughput, enabling an asymmetric TDD configuration, and supporting full-duplex), and a heterogeneous network.

• Uplink and downlink spectrum separation

Application scenario: spectrum cloudification and separate management of uplink and downlink carriers.

• Uplink and downlink RF separation

Application scenario: unified independent radio frequency (radio frequency, RF) management (optimal RF scheduling).

• Sensing/AI control and execution separation

Application scenario: centralized AI management and control of a cNode.

13.1. Control and data node separation

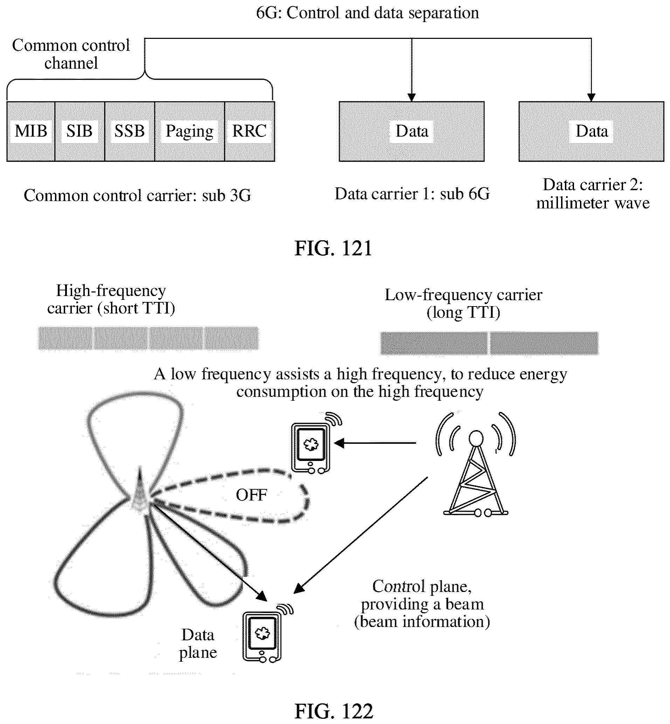

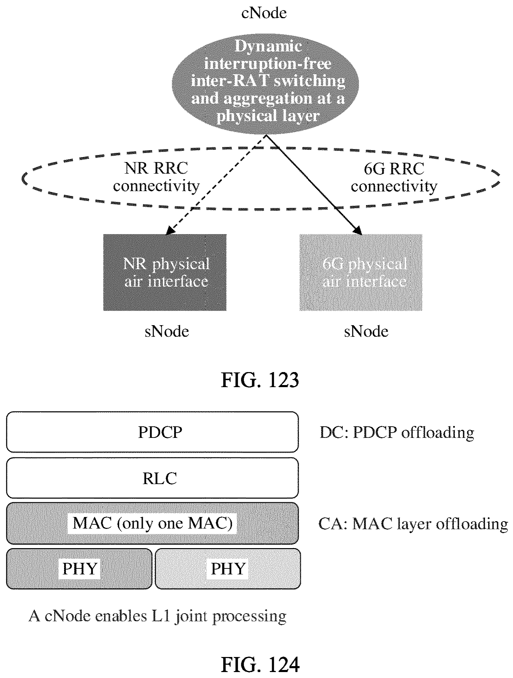

FIG. 121 is a diagram of control and data separation. As shown in the figure, a cNode provides a connectivity control function and is responsible for a CP function, including a main information block (main information block, MIB), a system information block (system information block, SIB), a synchronization signal block (synchronization signal and PBCH block, SSB), paging (paging), and task resource control (task resource control, TRC).
An sNode provides a data connectivity function. Specifically, the sNode provides a data transmission function. Physical layer control information, such as downlink control information (downlink control information, DCI) and uplink control information (uplink control information, UCI), may be carried by the sNode or the cNode, to implement an ultra-lean data carrier.
The control and data node separation may enable high-frequency efficient transmission. FIG. 122 is a diagram of a low-frequency assisting a high frequency under the control and data node separation. As shown in FIG. 122, a low-frequency cNode is for assisting a high-frequency sNode, to assist in high-frequency fast beam alignment, thereby reducing beam scanning overheads and an access delay.
The control and data node separation enables network energy saving. The cNode dynamically shuts down and starts the sNode based on a quantity of access users and a user service requirement. This reduces network energy consumption while guaranteeing data services.
The control and data node separation may enable multi-RAT hyper-convergence, for example, aggregation of 5G and 6G. As shown in FIG. 123, FIG. 123 is a diagram of multi-RAT aggregation under the control and data node separation. The cNode can provide dynamic interruption-free inter-RAT switching and aggregation at a physical layer. A terminal maintains a single-RAT TRC connection, but the cNode can enable the terminal to support interruption-free air interface switching or aggregation of two different RATs.
A protocol stack of multi-RAT hyper-convergence is shown in FIG. 124. FIG. 124 shows multi-RAT aggregation (TRS layer offloading) under the control and data node separation. The multi-RAT protocol stack shares same PDCP, RLC, and TRS layers. Different from PDCP layer splitting in dual connectivity DC or TRS layer splitting in carrier aggregation CA, hyper-convergence achieves multi-RAT splitting at a physical layer, enabling joint processing at the physical layer, to rapidly/efficiently facilitate multi-RAT collaboration.
FIG. 125 is a diagram of a network topology under the control and data node separation. As shown in FIG. 125, control is always originated from the cNode, while standalone RRUs achieve ultra-wide coverage. The cNode performs centralized connection control and uniformly performs functions such as interference coordination and resource allocation.

13.2. Uplink and downlink node separation

Uplink and downlink access nodes may be different. A UL-only node may be deployed in a network. The node has only a receiving module and does not have a sending module, for example, does not have a power amplifier (power amplifier). The UL-only node is cost-effective and easy to deploy. Dense deployment of UL-only nodes can significantly improve network performance, including one or more of the following:

an uplink SNR increase, and uplink coverage and throughput improvement;
uplink/downlink physical isolation enabling an asymmetric TDD configuration; and
uplink/downlink physical isolation enabling full-duplex.

A conventional solution to uplink coverage enhancement includes an asymmetric TDD configuration, where TDD configurations of a macro cell and a small cell are different, or a full-duplex technology is used. However, self-interference and cross-interference are main problems faced by full-duplex and the asymmetric TDD configuration. Deployment of the UL-only node may increase a distance between a DL RRH and an UL RRH, and may reduce self-interference power, thereby reducing implementation complexity of an advanced receiver. In addition, a distance between the UL RRH and the UE is shortened, thereby increasing UL received power and reducing cross interference of the neighboring DL RRH. Full-duplex or the asymmetric TDD configuration is enabled by the spatially separated DL and UL RRHs.
The uplink and downlink node separation may also be applicable to a heterogeneous network HetNet, as shown in FIG. 126, including the following scenarios:

(1) Low-frequency TRP + high-frequency TRP: The high-frequency TRP is connected in a downlink, and the low-frequency TRP (low-frequency UL or supplementary uplink (supplementary uplink, SUL)) is connected in an uplink.
(2) Macro TRP + pico TRP: When a UE is at a coverage edge of a pico base station, the UE accesses the pico base station in an uplink and accesses the macro base station in a downlink.

For the uplink and downlink node separation, key technologies include independent uplink/downlink node management, independent uplink/downlink power control, and independent uplink mobility management.

13.3. Uplink and downlink spectrum separation

5G employs paired uplink/downlink spectrum management, that is, cell-based management. A cell may use a paired uplink/downlink FDD spectrum, a TDD spectrum, or a TDD spectrum supplemented by an SUL spectrum. 6G employs independent uplink/downlink spectrum management, that is, UE-centric uplink/downlink carrier resource pool management. An optimal carrier is flexibly selected from downlink and uplink carrier resource pools for the UE. This ensures an always-on primary carrier, an always-on optimal link, zero-wait handover, and resource sharing between carrier pools for the UE, to provide optimal capacity balance and edge coverage performance.
The uplink and downlink spectrum separation includes:

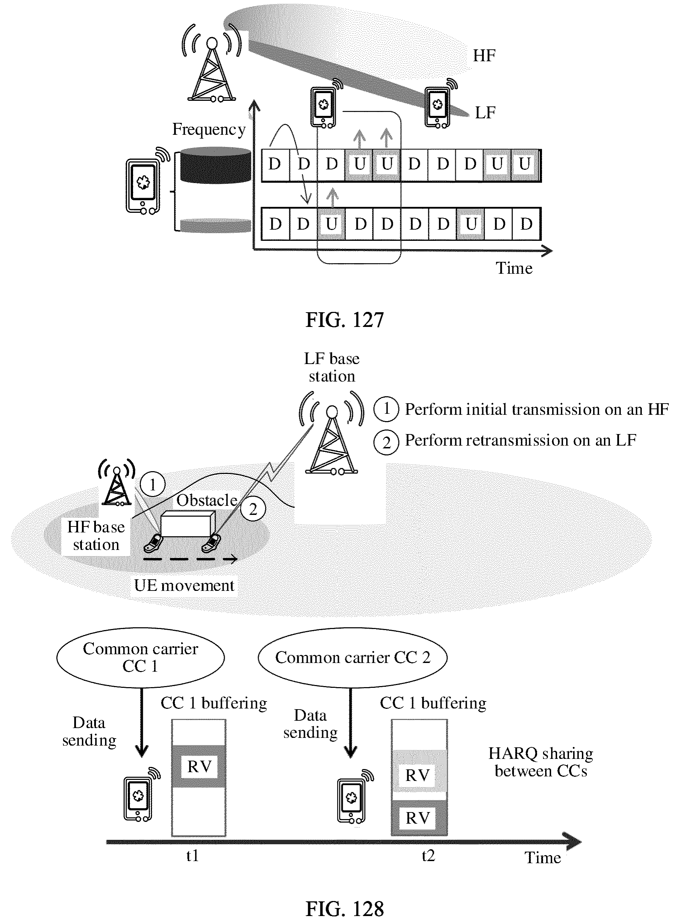

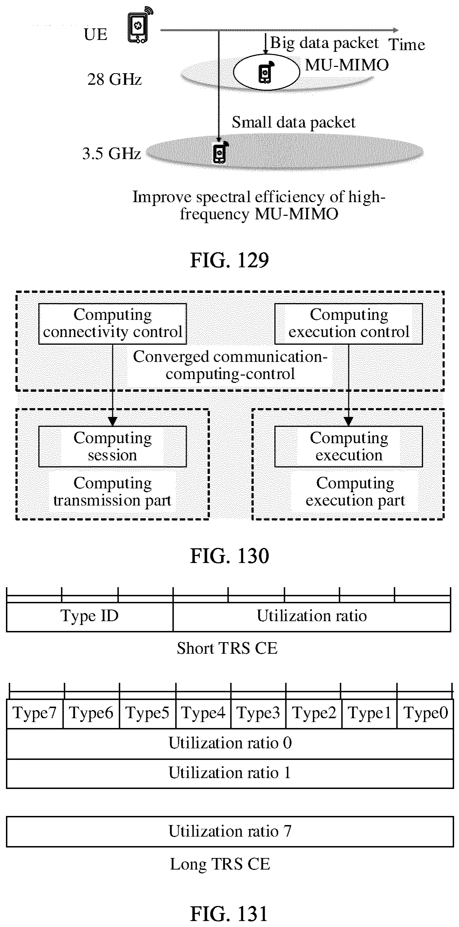

- Flexible carrier switching: As shown in FIG. 127, for coordinated TDD configurations on a plurality of carriers, the plurality of carriers are combined to form an FDD spectrum, reducing a transmission/feedback delay.
- Flexible carrier transmission: As shown in FIG. 128, for each uplink/downlink data transmission, initial transmission is sent on a high frequency. If retransmission is performed, for example, when a NACK is not successfully fed back during the initial transmission, retransmission is sent on a low frequency. Semi-persistent/Dynamic multi-carrier switching increases an uplink transmission opportunity and improves coverage. Low-frequency assisting high-frequency retransmission enhances high-frequency robustness.
- Coordinated carrier: As shown in FIG. 129, dynamic data switching is performed between a plurality of carriers. A large data packet is scheduled to be transmitted on a high frequency, and a small data packet or a UE that cannot be paired is scheduled to be transmitted or to perform transmission on a low frequency. This improves spectral efficiency of the high frequency.

13.4. Uplink and downlink RF separation

Uplink and downlink RFs are managed independently. RFs include antennas and radio frequency channels. UE RFs may be flexibly scheduled by a base station as a resource. The following functions are supported:

- Flexible indication of a quantity of antennas for data sending or receiving: When a UE sends data on a carrier, the base station may indicate a quantity of antennas used by the UE for sending, to enable super uplink. All transmit antennas are supported to be switched to one carrier.
- Flexible indication of a quantity of antennas for channel sounding: For SRS antenna selection, the base station indicates, on a carrier, a quantity of antennas and a quantity of ports used by the UE for SRS transmission. All transmit antennas are supported to be used for SRS transmission on one carrier, to facilitate fast antenna selection.
- Flexible indication of RF switching for carrier pool management: The base station indicates the UE to perform RF switching for measurement of another carrier, thereby maintaining channel quality information of each carrier in a carrier pool.
- Flexible indication of a coordinating RF group: A plurality of transceiver antennas and a plurality of transceiver channels are formed through inter-UE RF collaboration.

13.5. Sensing/AI control and execution separation

An AI control unit (AI control unit) is an AI management and control unit of one or more RANs or UEs, and is an AI training and computing center that uses collected data as an input of training and provides trained models or parameters for communication or AI services. The AI control unit is deployed on a cNode. The AI control unit may operate without involving a sensing operation, or may perform sensing-assisted AI. For example, the AI control unit may use sensing information as a part or all of an AI training input dataset of the AI control unit, to implement a sensing-based AI framework.

An AI agent (AI agent) is configured to assist an AI operation of the AI control unit. The AI agent may focus on AI model execution and a related transmission function. The AI agent is deployed on an sNode.

A sensing control unit (sensing control unit) is a sensing management and control unit of one or more RANs or UEs, and is a sensing computing and processing center that uses collected sensing data as an input to provide required measurement information for communication or sensing services. The sensing may include positioning and other sensing functions, such as the internet of things and environment sensing characteristics.

A sensing agent (sensing agent) may perform sensing operations to provide sensing and AI services, for example, may perform measurement to collect data, and may provide sensing information as a part or all of an AI training input dataset of the sensing agent.

The AI control unit and the sensing control unit on the cNode implement centralized AI and sensing management, resolving problems of complex interaction and difficult coordination of a plurality of agents in a distributed AI/sensing architecture.

14. New feature of 6G: computing service

14.1. Driving force

With technological innovations in the Internet, big data, cloud computing, artificial intelligence, and blockchain, various industries pose more urgent requirements for communication and computing. A communication network, as a pipeline for connecting a user and transmitting data, can sense computing and is configured to support efficient use of various distributed computing resources. For example, edge computing deployed in the communication network to reduce an end-to-end delay and improve service experience has become a focus of attention in the industry. Diversified computing resources and converged communication-computing (that is, convergence of communication and computing) have become important technical trends in the industry.

In a 6G network, computing resources are distributed in various infrastructures, including central clouds, edge clouds, network devices, and even terminal devices. 6G CaaS provides native computing services for users on-demand by using network-based distributed computing resources, especially providing high-performance computing services for terminals with limited computing resources or electricity power and intelligent services that have ultimate performance requirements or high data security and privacy requirements. 6G communication as a service (communication as a service, CaaS) enables on-demand "flow" of various 6G distributed computing resources, breaking through a performance limitation of single-point computing, and improving comprehensive efficiency of computing applications.

To implement 6G CaaS and better provide inclusive computing services, the 6G architecture needs to natively support converged communication-computing. This enables intelligent scheduling of ubiquitous network computing resources and deep coordination with connectivity resources, and transforms the 6G network into dual infrastructure for both communication and computing. A purpose of the converged communication-computing in the 6G network is to achieve optimal efficiency of network resources and computing resources while meeting AI QoS in a dynamic and complex wireless environment. Currently, the converged communication-computing in the industry usually exists in two forms:

external computing resources and embedded computing resources. In the external computing resources, such as edge computing, a communication resource of a network node and a computing resource of a computing node are jointly optimized by using a management plane function. For the embedded computing resources, with embedded computing resources of a network, a network node has not only control and forwarding capabilities but also a computing capability.

Deep convergence of communication and computing is an important technical feature of the native AI of the 6G network. AI services provided by conventional cloud AI require more effective basic measures to ensure data security and privacy. Distributed computing resources and AI models also require more efficient sharing methods to provide users with required AI services at a low cost and ensure service quality. The native AI capability of the 6G network, that is, providing AI services (artificial-intelligence-as-a-service, AIaaS) through network AI, is expected to address the foregoing challenges and become a beneficial supplement to cloud AI in service scenarios such as ultimate performance and high security and privacy. In the network AI scenario, how to efficiently coordinate communication resources and distributed computing resources to provide users with computing services with lower latency and jitters and higher comprehensive efficiency and ensure AI QoS services is an issue to be resolved. One of the important technical challenges is the converged communication and computing, that is, more deep and real-time coordination between communication and computing, to ensure end-to-end ultra-low latency, high data security and privacy, and sustainable energy saving requirements for new future services in the dynamic and complex wireless network environment.

14.2. Computing plane overview

FIG. 130 is a diagram of a computing plane. As shown in FIG. 130, the computing plane includes a computing control part, a computing execution part, and a computing data transmission part (referred to as a computing transmission part). The computing control part includes computing execution control and computing connectivity control. The computing execution part refers to a process in which a computing execution function of a node (such as a RAN node or a UE node) uses computing resources allocated by the computing control to execute a computing task. The computing transmission part means that computing execution functions of different nodes exchange computing data by using computing connectivity, so that different nodes collaborate to complete a computing task.

Computing connectivity control senses a computing connectivity status in real time, performs connectivity resource control and quality control on computing connectivity, and supports terminal status sensing and service continuity assurance in a case of mobility; controls computing connectivity required for transmitting computing data, for example, supporting establishment, change, migration, reestablishment, and deletion of computing connectivity, and allocates connectivity resources.

Computing execution control: allocates computing resources used by the computing execution function of a node, controls a quantity of computing operations to be performed, controls computing quality, and supports terminal mobility. During the computing resource control, a status of a computing resource is detected in real time and allocation of the computing resource, such as adding, modifying, deleting, and releasing of the computing resource, is controlled. During the computing quality control, a computing operation is orchestrated based on resource quantity, precision, and latency requirements, and computing process related parameters (such as computing precision, quantization precision, and sparseness) are configured. The computing execution control further supports terminal mobility, computing resource address management, computing service access control, computing resource control of the terminal, and computing resource management control during aggregation of a plurality of computing resource.

Based on different technology domains to which a computing control function belongs, the computing control function is classified the core network domain xCN computing control and RAN domain computing control. The RAN computing control includes: a TRC+ function for managing and controlling a computing radio bearer and a computing bearer; and a computing resource control (computing resource control, CRC) function for implementing management and control, including request, establishment, update, deletion, and the like, of an atomic computing task; real-time scheduling of computing resources; real-time sensing of a computing status; and reporting of overall computing information to the xCN computing execution control function, so that the xCN computing execution control function facilitates maintenance of global computing map information.

On one hand, in a scenario in which a plurality of nodes cooperate to complete a computing task, computing connectivity quality and computing execution quality jointly determine completion quality of the entire computing task. Therefore, joint optimization is possible. On the other hand, the computing connectivity and the communication connection share connectivity resources, intensifying connectivity resource state dynamics. These dynamically fluctuating resource states may impact the computing quality in real-time, necessitating joint optimization. Moreover, for a terminal that executes a computing task and is in a moving state, computing connectivity control and computing execution control of the terminal are synchronously performed, and a status and a quality objective of the computing connectivity and the computing resource affect a handover decision of the terminal. It can be learned that there is a requirement and possibility of convergence of computing execution control and computing connectivity control on the computing plane, that is, " converged communication-computing control ".

The converged communication-computing supports mutual sensing and collaboration of communication and computing to implement proper allocation of computing resources and computing connectivity resources. For example, for the converged communication-computing control, the computing resource control part may be used to sense in real time a change of a computing resource required by a radio bearer due to user mobility and a change of a dynamic environment of a user, to adjust the computing resource in real time; or the computing connectivity control part may be used to sense in real time a status of a computing resource and dynamically adjust a connection bandwidth of a user, to continuously ensure QoS of a computing service. For example, a function of the converged communication-computing control on the cNode/sNode may complete computing connectivity management between the terminal and the base station, and computing access control during cell handover or secondary cell addition.

14.3. Key technology

14.3.1 Computing sensing

Computing sensing means that the 6G native AI network needs to sense computing resource information, such as a computing type, a quantity of computing resources, and a usage status of the computing resources. Computing sensing enables sense of heterogeneous physical resources such as GPUs, CPUs, and field programmable gate arrays (field programmable gate arrays, FPGAs). In addition, the 6G native AI network needs to sense computing types and sizes required by different algorithms, such as artificial intelligence (AI), machine learning, and neural network algorithms, to implement proper scheduling of computing resources.

Optionally, the UE needs to report a computing capability and a computing status to the base station.

• Capability reporting

Step 1: The base station transmits, through a SIB/TRC, information indicating a mode/a manner in which the terminal reports computing, for example, a reporting type, a reporting granularity, and a reporting method.

(1) Reporting type: CPU, GPU, NPU, FPGA, or the like; or storage, memory, power, or the like. This prevents a terminal whose computing capability does not meet a base station requirement from reporting terminal computing, causing invalid reporting and a bandwidth resource waste.

(2) Reporting granularity: For example, 1/10/100 CPU scheduling granularities, 1/10/100 MB storage/memory scheduling granularities, 1%/5%/10% power scheduling granularities, or a combination of the foregoing resource scheduling granularities. This can prevent a terminal whose computing capability is lower than a base station scheduling granularity from reporting the terminal computing, reducing computing reporting overheads.

(3) Reporting method: L1, L2, and L3 signaling. The reporting method may be a manner predefined in a protocol, for example, one or more of the L1, L2, or L3 signaling.

Step 2: The terminal reports the computing capability based on the reporting mode/manner. The terminal uses the L1/L2/L3 signaling to report the computing capability based on the configured reporting granularity and reporting type.

(1) For example, L1 signaling: For example, a random access preamble indicates whether the terminal possesses a computing resource exceeding a reporting type and a reporting granularity that are broadcast by a network side (the network side broadcasts random access preamble groups, a computing capability possessed by a terminal using a group 0 preamble is below the reporting type and the reporting granularity that are broadcast by the network side, and a computing capability possessed by a terminal using a group 1 preamble exceeds or matching the reporting type and the reporting granularity that are broadcast by the network side).

(2) For example, L2 signaling: A TRS CE related to a computing capability includes a maximum quantity of computing resource combinations supported by the terminal.

(3) For example, L3 signaling: UECapabilityInformation signaling includes: computing capabilities such as UE logic, parallel computing, neural network computing, and dedicated computing capabilities, a UE storage capability, and power capability information. Specific information about the computing capabilities may include one or more of a frequency, a core quantity, a quantity of times of multiply and accumulate per second, a quantity of times of dot product computation per second, a quantity times of convolution per second, a quantity times of floating-point computation per second, a quantity of operations per second, or a quantity of supported maximum computing resource combinations.

• Computing status reporting

Step 1: The base station transmits, through a SIB/TRC, information indicating a mode/a manner in which the terminal reports computing:

(1) resource combination identifier information: a computing configuration ID, index, or the like;
(2) a resource type corresponding to a resource combination identifier: a CPU, a GPU, an NPU, an FPGA, or the like; storage, a memory, power, or the like; or a resource corresponding to a resource combination, which may be one or more of the foregoing types;
(3) a resource size corresponding to the resource combination identifier: a quantity of computing type scheduling granularities included in the computing resource, for example, 1/10/100 CPU scheduling granularities, 1/10/100 MB storage/memory scheduling granularities, or 1%/5%/10% power scheduling granularities;
(4) a resource combination status reporting manner: periodic computing reporting (a configurable timer value) and event-triggered reporting (configurable computing, storage, or power thresholds); and
(5) a reporting method: L1, L2, and L3 signaling, where the reporting method may also be a manner predefined in a protocol, for example, one or more of the L1, L2, or L3 signaling.

Step 2: The terminal reports the computing capability based on the reporting mode/manner.

During periodic reporting/event-triggered reporting, the terminal uses L1/L2/L3 signaling to report a state corresponding to the computing resource combination, for example, 0/1, where 0 indicates an idle state, and 1 indicates that the computing resource combination is occupied.

For example, a design of the L2 signaling may include a short computing TRS CE and a long computing TRS CE. The short TRS CE includes type indication information (for example, computing of a logical type, computing of a parallel computing type, computing of a neural network type, a storage capability, and battery power, for example, type0 indicates computing of a logical type, type1 indicates computing of a graphics processing unit type, type2 indicates computing of a neural network computing type, tpye3 indicates a storage capability, and type4 indicates an electricity quantity) of reported computing or includes identification information of a computing resource combination (for example, type0 indicates a resource corresponding to a resource combination 0, and the resource combination 0 may be one or more of types such as a CPU, a GPU, an NPU, an FPGA, storage, a memory, and power; type1 indicates a resource corresponding to a resource combination 1, and the resource combination 1 may be a combination of another computing resource).

Optionally, when a periodic computing reporting timer expires, the UE reports a heterogeneous computing utilization ratio of the UE by using a long computing TRS CE. When the heterogeneous computing resource utilization ratio exceeds an event-triggered computing threshold, the UE reports the heterogeneous computing utilization ratio of the UE by using a short computing TRS CE (or when the heterogeneous computing resource utilization ratio exceeds the threshold, a computing threshold timer is started; before the computing threshold timer expires, when the heterogeneous computing resource utilization ratio is less than the threshold, the timer is restarted; and after the computing threshold timer expires, the UE reports the computing utilization ratio of the UE by using the short computing TRS CE).

FIG. 131 shows an example of computing state reporting. As shown in FIG. 131, the short TRS CE includes a type identifier Type ID and a computing utilization ratio (utilization ratio). For example, a computing utilization ratio field includes five bits. The long TRS CE includes a type ID and a computing utilization ratio. For example, a computing utilization ratio field includes eight bits. Herein, a quantity of bits included in the computing utilization ratio field is merely used as an example, or may be another quantity. This is not specifically limited herein. In addition, for descriptions of type0 to type7, refer to the foregoing descriptions. Details are not described again.

The L1 signaling and the L3 signaling include indication information similar to that of the computing resource utilization ratio or utilization status in the L2 signaling.

The indication information of the resource utilization ratio includes a percentage utilization ratio, and precision of the percentage utilization ratio is related to a quantity of bits occupied by an indication field, for example, 2 bits, where 00, 01, 10, and 11 may respectively represent utilization ratios 1%-25%, 26%-50%, 51%-75%, and 76%-100%.

The computing discovery specifically means that in a running process of a network, the 6G native AI network senses a new computing resource, and may be discovery of a new computing resource node, or may be discovery of a new computing resource of an existing node.

The computing registration specifically refers to a process in which after a network discovers a new computing resource, information is exchanged with a node of the computing resource, and the new computing resource is connected to the network.

14.3.2. Converged communication-computing (convergence of communication and computing)

14.3.2.1. Converged communication-computing architecture

The control plane supports mutual sensing and mutual collaboration between computing execution and computing connectivity, implementing real-time and accurate computing resource discovery and flexible and dynamic computing resource scheduling and computing quality scheduling, and providing ubiquitous computing.

Through the computing and connectivity services, computing and connectivity resources are properly allocated. The converged control function affects the architecture as follows: ① a computing execution and computing-connectivity convergence control mechanism on a RAN side; ② a computing execution and computing-connectivity convergence control mechanism on a CN side; and ③ a computing execution and computing-connectivity collaboration mechanism across technical domains (such as RAN, CN, and management domains)

There are three manners of the converged communication-computing control:

Option 1: The computing connectivity control and the computing execution control are coordinated by using a coordination control function. An advantage of this solution is that coordination is allowed between large-scale computing connectivity control functions and large-scale computing execution control functions in a coverage area of the communication-computing coordination control function. This provides more flexible deployment options and greater choice for operators.

Option 2: The computing connectivity control and the computing execution control interact through a standardized interface. An advantage of the interaction through the standardized interface is that a connection between different vendors is allowed, and a deployment manner is more flexible.

Option 3: Alternatively, the computing connectivity control may interact with each other through an internal interface or be integrated into one control function, that is, the convergence control function. An advantage of the interaction through the internal interface is that implementation through the internal interface has good performance, which facilitates a design of a dedicated control process based on a resource feature and statistics collection about of a resource status. Further integration into a converged control function enables simultaneous decision-making for both connectivity (including communication and computing connectivity) and computing execution control, achieving optimal collaboration and real-time performance in resource control.

In the foregoing plurality of manners, the option 3 is applicable to collaboration between the computing connectivity control and the computing execution control in a RAN domain of a network element entity.

14.3.2.2. Real-time collaboration of communication and computing

Step 1: The cNode/sNode generates a plurality of pieces of computing instance configuration information, and transmits the configuration information to the UE.

A computing instance ID (which may be a task ID or in another form, may be assigned by a computing management function (computing management function, CMF)/TA, or assigned by a TS/converged scheduler (converged scheduler, CS), has a one-to-one correspondence with a computing amount related configuration, such as a computing size, a model, a location of a split learning or inference splitting point, and a local iteration quantity in federated learning. Optionally, the computing instance ID may also be a model ID, an ID of the split learning or inference splitting point, an ID of the iteration quantity in federated learning, or the like. This is not limited herein.

One executor (executor ID) may include a plurality of computing instances. Configuration information of the executor includes an executor ID and computing configuration information of the executor, and specifically includes a plurality of computing resources (for example, CPU type, storage, memory, and electricity quantity information) or a computing container (a combination of the foregoing computing types). A quantity of the computing resources of the executor is greater than or equal to a maximum quantity of computing resources required by the plurality of computing instances included in the executor.

Step 2: Dynamically adjust the computing instance.

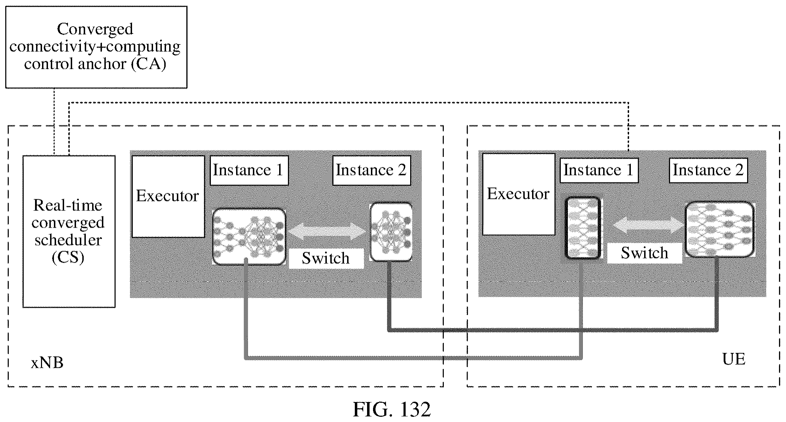

Signaling is adjusted, where L1, L2, and L3 include indication information of the computing instance ID. FIG. 132 is a diagram of adjusting a model splitting point in real time. FIG. 132 is used as an example. For example, when the terminal is at a cell center, channel quality of the terminal is good, and transmission bandwidth is large (more characteristic information needs to be exchanged by an instance 1), and both the terminal and the base station jointly complete split inference by using a neural network parameter configured for the corresponding instance 1; when the terminal is at a cell edge, channel quality of the terminal is poor, and transmission bandwidth is small (less characteristic information needs to be exchanged by an instance 2), and both the terminal and the base station may jointly complete split inference by using a neural network parameter configured for the corresponding instance 2. Therefore, when the terminal moves from the cell center to the cell edge, the network side may indicate an ID of the instance 2, so that the instance 1 is switched to the instance 2 for the terminal and the base station.

14.3.3. Efficient computing session

In conventional communication, the user plane connects a user to a data network, a transmission part of the computing plane is for transmitting computational data between computing execution functions at different nodes within the wireless network system. In other words, computing plane data is not transmitted to the data network. Therefore, a design of a computing plane transmission mechanism needs to be differentiated from the user plane in the conventional communication. For a computing plane transmission mode, a new bearer mode is introduced to a bearer layer, for example, a computing radio bearer (computing radio bearer, CRB) of an air interface part and a computing bearer (computing bearer, CB) of an Xn part. In addition, a new radio computing session protocol (radio computing session protocol, RCSP) is introduced to a session layer, and in this case, a computing session may also be referred to as an RCSP session.

RCSP is an efficient data communication protocol for computing resources in a wireless network, and supports computing data exchange between a terminal, a base station, or a computing execution function of a core network function, to support computing collaboration between different nodes and complete a computing task. QoS of a computing task is jointly determined by QoS of a computing session and QoS of computing execution. The QoS of the computing execution is affected by an allocated computing resource, a computing amount, and a computing process. Basic indicators include computing time consumption and computing precision. An endpoint location of the computing session is determined by a node location of the computing execution function.

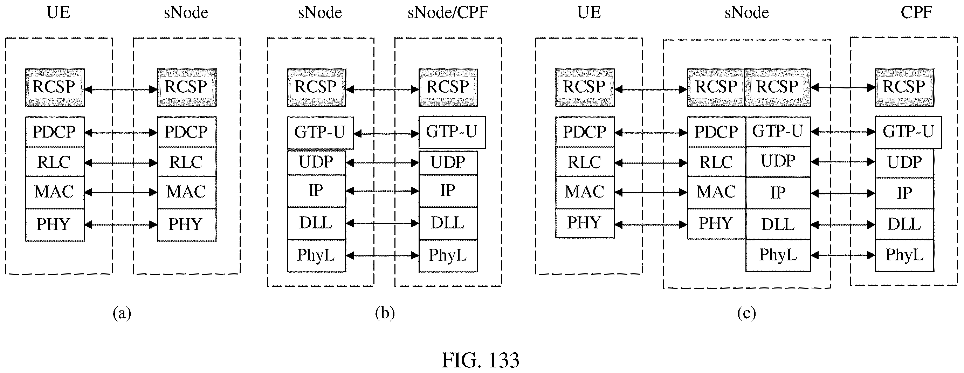

FIG. 133 is a diagram of a computing session protocol stack. For example, as shown in (a), an RCSP session includes a CRB, that is, computing data is exchanged between a terminal and a base station. As shown in (b), the RCSP session may alternatively include a computing bearer, that is, computing data is exchanged between different base stations, between a base station and a core network, or between a DU and a CU. As shown in (c), the RCSP session may alternatively include a CRB and a computing bearer, that is, computing data is exchanged between a terminal and a core network.

Table 5 shows main fields of the RCSP protocol.

Table 5

| Type (Type) | Session ID (session ID) | Class (class) |
|---|---|---|
| Source RCSP identifier (source RCSP ID) | | |
| Destination RCSP identifier (Destination RCSP ID) | | |
| Payload data (Payload Data) | | |

Type field: is an RCSP type field, and indicates a type of an RCSP data packet, which may be RCP registration signaling, session request signaling, user data, or the like based on different specified values.

- Session ID field: is an RCSP session identifier field, indicates a session in which the RCSP data packet is located, and is a unique identifier of the RCSP session. Different RCSP sessions have different session ID field values.
- Class field: The RCSP class field indicates a priority level of the RCSP data packet. The base station may be mapped to a priority of a radio bearer based on the class field, and the computing may be mapped to a priority of a computing resource based on the class field.
- Source RCSP ID field: is a source RCSP address, indicates a source address of the RCSP data packet, and may uniquely identify an RCSP source. When replying to a received RCSP message, an RCSP communication peer end (an end identified by a target RCSP address) sets a source RCSP address in the RCSP message to a target RCSP address of the replied message.
- Destination RCSP ID field: is a destination RCSP address, indicates a destination address of the RCSP data packet, and may uniquely identify an RCSP destination. When sending an RCSP message, an RCSP communication source end (an end identified by the source RCSP address) sets an address of a destination RCSP end to which the RCSP message needs to be sent to a value of this field.
- Payload data field: indicates valid payload data of the RCSP protocol, and may be RCSP signaling or service data to be transmitted by RCSP.

14.3.4. Mobility

Mobility management is a basic function of a wireless network. In this application, in addition to signal quality of a user, a cause of trigger of a handover request under a source base station (source-sNode, S-sNode) of the converged communication-computing further includes a status of a computing resource of the source base station (for example, whether the computing resource is sufficient to continue to support a current computing task of the user). When determining whether to accept a handover request of a user, a target base station (target-sNode, T-sNode) of the converged communication-computing not only needs to consider a communication resource condition of the target station, but also needs to consider a computing resource condition, a computing execution condition on the source station, and computing migration overheads (including communication overheads, a communication delay, a QoS guarantee, and the like). Communication resources and computing resources are considered to ensure that computing service quality is not affected by mobility. In addition, in a conventional handover execution phase, only a connection handover needs to be considered between a source base station and a target base station. In addition to the connection handover, a computing migration situation also needs to be considered between an S-sNode and a T-sNode in the converged communication-computing.

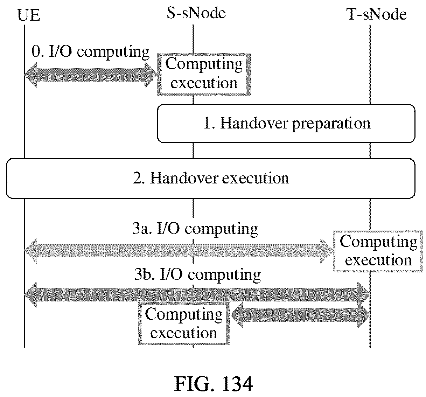

FIG. 134 is a diagram of computing plane mobility. A destination sNode determines that a source base station performs computing, which may include the following procedure.

Step 0: A computing instance of the source base station performs computing, where a computing radio bearer is for interaction between a UE and the source sNode to compute an I/O.

Optionally, the terminal transmits computing handover suggestion information to the source base station. The suggestion information may be determined based on insufficient computing resources of the terminal, or may be determined by the terminal based on channel state information.

Step 1: Handover preparation includes a handover request message and a handover request acknowledgment message.

The source base station sends the handover request message to a target base station, where the handover request message includes execution information of the computing instance, for example, cell ID information of computing execution, UE ID information, execution progress information (percentage, or the like) of the computing instance, computing resource requirement information (a computing resource container, a CPU/storage/memory, and the like) of the computing instance, a communication requirement for computing the I/O, and model information used by the computing instance. The target base station determines, based on the execution information of the computing instance sent by the source base station, computing resource information and computing load information of the target base station, whether to accept a handover request.

Corresponding to subsequent step 3a, the handover request information is acknowledged, where the handover request acknowledgment information includes terminal connectivity-related configuration information (for example, a non-contention-based random access preamble and computing bearer configuration information), configuration information of a terminal executor (an execution environment of a computing instance), such as a computing resource (for example, CPU type, storage, memory, and electricity quantity information) or a computing container (a combination of the foregoing computing types). A quantity of the computing resources of the executor is greater than or equal to a maximum quantity of computing resources required by the plurality of computing instances included in the executor. Computing instance model size model, a location of a split learning or inference splitting point, a local iteration quantity in federated learning, and other computing amount related parameters.

Corresponding to step 3b, the handover request acknowledgment information includes connectivity-related configuration information (for example, a non-contention-based random access preamble and computing bearer configuration information) of the terminal and connectivity-related configuration information (for example, computing plane channel establishment information of an inter-station interface) between the source station and the target station.

Step 2: Perform TRC reconfiguration and TRC reconfiguration complete.

Step 3a: The destination base station performs transmission through a computing radio bearer of an air interface.

Step 3b: The target base station performs transmission through a computing data channel of an X2/Xn interface and the computing radio bearer of the air interface.

15. New feature of 6G: data plane

15.1. Driving force

A data service means that data is provided as a service product based on a framework of data collection, preprocessing, distribution, release, and analysis. In the 6G era, a requirement for the data service is more urgent. Different from a conventional monolithic data service architecture, a unified data service architecture is required to meet the requirement. Data services of various industry organizations and university labs, such as the third generation partnership project (3rd generation partnership project, 3GPP), the European telecommunications standards institute (European telecommunications standards institute, ETSI), the International Telecommunication Union-Telecommunication Standardization Sector (ITU-T for ITU Telecommunication Standardization Sector, ITU-T), and an open access network (open RAN, ORAN), are analyzed. The existing data services and architectures thereof face the following problems in terms of data types collected from data sources, service cases, and the like.

(1) Types of data that can be acquired or collected are incomplete. A data source of communication network covers function nodes of a UE side, a RAN side, a TN side, a CN side, and the operation administration and maintenance (operation administration and maintenance, OAM). The data that can be acquired or collected includes a plurality of types of network data, such as various network statuses and behavior, user subscription data, AI model data, internet of things (internet of things, IoT) data, and the like acquired or collected from these nodes, especially RAN side data and CN side data. In addition, with deep integration of AI and networks and wide development of the internet of things, AI model data and IoT data will also be important data flowing on the networks. However, there is no architecture that can implement acquisition or collection of all of these data.

(2) From a perspective of trustworthiness data services, a current data service architecture provides only an authentication function between basic network functions (network function, NF), and cannot provide trustworthiness services such as data access control, source tracing, and audit, especially those that meet end-to-end (end to end, E2E) trustworthiness service requirements of laws and regulations such as (personal information protection law, PIPL)/(general data protection regulation, GDPR) for data.

(3) Single-domain intelligence: Existing data service architectures are mostly monolithic architectures and centralized deployment, provides data services only for specific types of data or network domains, and lacks capabilities of sensing and orchestrating all-domain data. As a result, agile response and flexible deployment cannot be implemented when there are new services and new requirements.

(4) Limited sharing capability: In most current data service architectures, data consumers are mostly applications inside a network. However, third parties cannot provide data sharing, exchange, and transaction services for data subjects due to a lack of trust mechanisms such as source tracing/audit.

(5) No available E2E data management: A communication network is a system project that implements end-edge-pipe-cloud collaboration. Data flows through the communication network, and needs to be processed from data collection, preprocessing, storage, analysis, to distribution. Currently, the single data service architecture lacks full-domain data sensing and cross-domain coordination capabilities, and cannot perform collaborative processing on E2E data from a global perspective or perform global collaboration in a data processing action procedure.

(6) Limited supported application scenarios and cases: The current data service architecture is used only for scenarios such as network optimization and customer experience improvement, and needs to be supported in a predefined manner.

(7) Not suitable for cloud-native and distributed Kubernetes (K8S for short) environments: With the rapid and wide development of cloud computing and container technologies, IT technologies such as cloud native and containerization are deeply integrated with communication networks. Introduction of a 5G SBA based architecture enhances security: (1) SBI encryption, where all traffic between NFs is encrypted; (2) cloud NF instantiation, which cannot be anchored on one NF; and (3) a K8S NF consisting of a plurality of PODs, where encryption can be performed between PODs. A conventional hard acquisition mode is not applicable, and built-in soft acquisition is required.

Based on analysis of data value discovery, technology development trends, and the like, the 6G era has more urgent requirements for data services. Different from the conventional monolithic data service architecture, a unified data service architecture is required to meet the requirements.

15.2. Data plane overview

With reduction of computing and storage costs and emergence of a large quantity of low-latency services and local applications, computing, storage, and intelligent algorithms that depend on the computing and the storage tend to be deployed at a network edge close to a data source, forming a data-centric network architecture. A basic function of a mobile communication network also shifts from an information transmission channel to a data management and control platform. Native sensing and intelligence are two new capabilities of the 6G network. The former uses a sensor device to detect massive data generated by a network status, a surrounding environment, and user/device behavior. The latter uses artificial intelligence (Artificial Intelligence, AI) and digital twin technologies for modeling analysis and automatic decision-making to improve network operation efficiency, improve system performance, and provide data services for intelligent applications.

Based on analysis of various application scenarios and requirements, this application classifies data services that can be provided by the data architecture into eight categories: raw data, data preprocessing, data storage, data privacy and security protection, data sharing/transaction, data source tracing, data analysis, and data dictionary.

Table 6: Comparison between data plane data bearers of 5G and 6G systems

| | | 5G user-plane data bearer | 6G data-plane data bearer |
|---|---|---|---|
| | Function | A PDU session provides an end-to-end user plane connection between a user equipment and a network | A distributed data pipeline includes functions such as data collection, preprocessing, forwarding, storage, and analysis |

(continued)

|  | 5G user-plane data bearer | 6G data-plane data bearer |
| --- | --- | --- |
| Start and end points | UE and UPF | Any network element and terminal device |
| Data forwarding | A forwarding device forwards only a data packet | The system requires on-path computing: In a data pipeline, data is converted and optimized when being forwarded, so that the data can be analyzed and applied |
| Forwarding rule | A data packet is forwarded based on a destination address | A data packet is forwarded based on a data service and a data pipeline identity |
| Topology structure | Point-to-point connection | Any topology |

As shown in Table 6, the 5G communication network is constructed based on a session, and a user plane of the 5G communication network is for carrying session data. Because "on-path computing" and "any topology" required by a 6G data bearer cannot be supported, the user plane cannot carry a new data type of a 6G network. A 5G user plane session connection implements information exchange between two communication devices. Specifically, a protocol data unit (protocol data unit, PDU) session provides an end-to-end user plane connection between a user terminal device and a network. The 6G data plane transmission includes functions such as data collection, preprocessing, forwarding, storage, and analysis. User plane transmission is for communication connections between humans or between humans and machines, and data processed on the data plane is produced and consumed by machines/algorithms. The 5G user plane session implements only data packet transmission, while the 6G data plane transmission network needs to implement on-path computing. In a data pipeline (where the communication network is used as a data transmission pipeline), data is converted and optimized to achieve states required by data analysis and intelligent applications. In terms of data forwarding behavior, a data packet of a session is forwarded based on a destination address, and in a data pipeline, a data packet is forwarded based on a data service and a data pipeline identifier. Data forwarding based on the 5G user plane session belongs to a transmission control protocol (transmission control protocol, TCP)/Internet protocol (internet protocol, IP) layer, and data forwarding on the data plane belongs to an application layer. In addition, a session-based topology is a point-to-point connection, and the 6G data plane needs to support any topology structure (such as a tree structure required for data distribution and data aggregation). If the existing user plane is for carrying all 6G network data, the data can be started and terminated only at two ends of a PDU session, that is, a UE or a user plane function (user plane function, UPF). This cannot meet distributed management and control of sensing data, AI data, network behavior, and status data. To systematically cope with data service challenges and resolve the problem that the user plane and a data-driven architecture of the existing mobile network cannot meet the requirements of new 6G services and data, an independent data plane is introduced for the 6G network based on data and data services of the 6G mobile communication network. The data plane aims to build a unified and trustworthiness data service framework to provide trustworthiness data services and implement cross-domain and cross-vendor data sharing while meeting data regulation requirements.

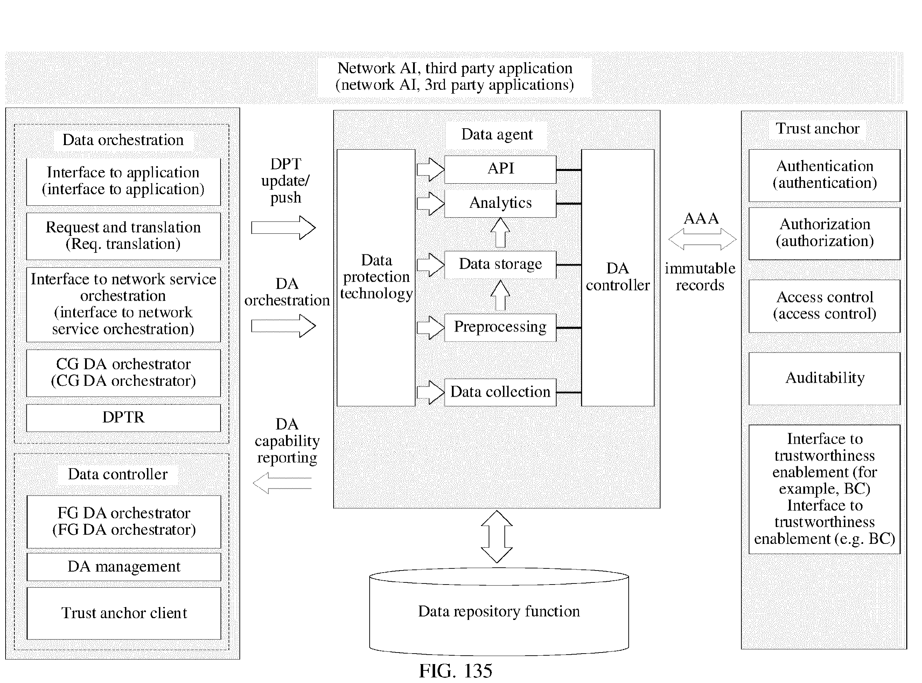

FIG. 135 is a diagram of a data plane architecture of a 6G mobile communication network. As shown in the figure, the data plane architecture includes four parts: a data orchestrator (data orchestrator, DO) and a data controller (data controller, DC), a data agent (data agent, DA), a trust anchor agent (trust anchor agent, TAA), and a data storage function (data storage function, DSF). The DO supports a programmable data pipeline and converts a data service request (constructs a data pipeline based on the data service request). The DA may be built in a network function or deployed independently to perform data collection, data preprocessing, data storage, data analysis, data sharing, and other data services orchestrated in the data pipeline. The TAA is an independent component defined in the data plane architecture to ensure 6G data reliability. During data processing and use, regulatory requirements of regulations such as PIPL/GDPR need to be complied with. If data is subject to various security and privacy attacks from both internal and external network entities, serious risks may occur. Therefore, the TAA plays an important role in protecting data confidentiality, integrity, and reliability in the 6G network. The DSF functions as a storage extension component of the DA when large-scale data storage or long-term data storage is required.

Based on a real-time requirement and a cross-domain condition of a task, the data orchestrator is classified into two types: a DO and a DC. The DO is responsible for coarse-grained and non-real-time data orchestration, and the DC is responsible for a fine-grained real-time orchestration task. The DO and the DC collaborate to implement a flexible and programmable data pipeline. The DO mainly provides the following functions: First, the DO is a portal for receiving a data service request and converting the data service request into a combined request for a data pipeline. In addition, the DO collaborates with other network services. For example, a computing network service orchestrates computing, and the DO orchestrates data. Based on the data service request and a service capability of the DA, the DO implements cross-domain coarse-grained data pipeline orchestration. In addition, the DO has a built-in data security protection and privacy protection technology repository (data protection technology repository, DPTR), including technologies such as differential privacy, homomorphic encryption, secure multi-party computing, and zero-knowledge proofs, providing data security and privacy protection capabilities, and empowering the DA with a data protection technology (data protection technology, DPT) as required. On the contrary, the DC implements fine-grained DA orchestration. In a local domain, data pipelines are combined based on the DA capabilities and the data service request to implement efficient real-time service management. Second, the DC receives a capability report of the DA, registers and deregisters the DA, and monitors the DA in real time by monitoring a DA heartbeat. In addition, the DC has a built-in trust anchor client (trust anchor client, TAC), to initiate security mechanism requests such as authentication, authorization, and access control to the TAA, and apply for source tracing and audit services for data access. The DC may be deployed on a RAN side and a CN side.

The DA is optionally deployed on each NF, RAN, TN node terminal, and OAM, while also supporting independent deployment, and establishes a dynamic data pipeline (pipeline) composed of a series of data processing units arranged on-demand and in sequence, where an output of one unit serves as an input for a next unit. In this way, a data flow that covers data collection, preprocessing, storage, and application/analysis, all of which can be output from the DA as required, is formed, while providing external interfaces for data access services.

- The data collection refers to obtaining data from a data source in subscription/notification or request/response mode. A data obtaining request indicates one or more of a trigger manner, a trigger condition, a reporting period, and a data amount of data reporting. Collection of one or more of user data, network data, AI data, and IoT data is supported. Streaming data collection, batch data collection, and real-time and non-real-time data collection are supported.
- Data preprocessing refers to a series of operations performed on collected raw data, such as "cleaning, filling, smoothing, merging, normalization, and consistency check". A purpose is to improve data quality and lay a foundation for subsequent analysis. The raw data usually includes dirty data, such as a data loss, data noise, data redundancy, and dataset imbalance.
- The data privacy protection means using technologies such as k-anonymity (k-anonymity), l-diversity (l-diversity), t-closeness, and $\varepsilon$-differential privacy (differential privacy) to process collected data. In this way, malicious attackers cannot directly obtain sensitive information from anonymized data, thereby protecting confidentiality and privacy. The data protection technologies can be pre-installed in the DA or pushed by the DO as required to protect security and privacy of data at each layer of the DA.

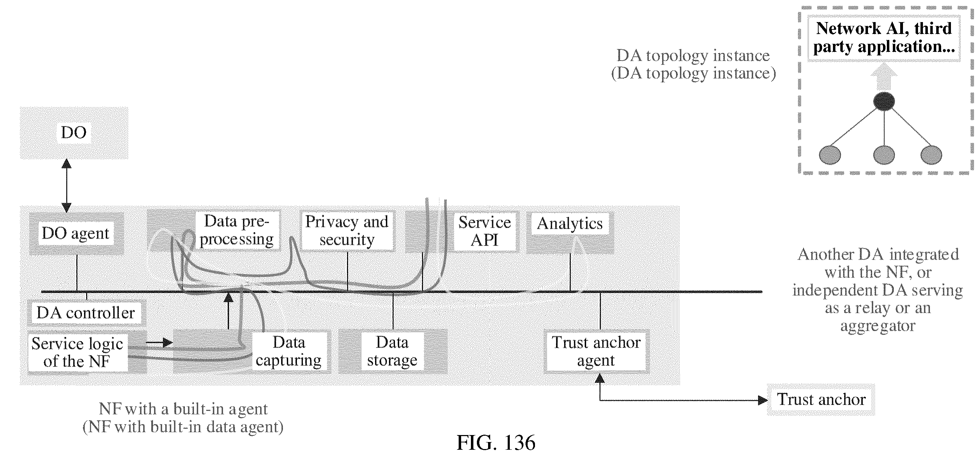

    ▪ The data analysis function is loosely coupled with the DA and can be deployed separately from the DA as required. Various data analysis technologies, such as AI/ML, Hive (a data warehouse tool), and Spark (a computing engine), are supported. The data analysis function invokes multi-tier data services of the DA, including data collection, preprocessing, and storage, through an application programming interface (application programming interface, API). A required AI model may be pre-installed or pushed by a network service. For details, refer to FIG. 136. FIG. 136 is a diagram of forming a data pipeline (data pipeline) by an orchestration function module of a DA controller.

The TAA is an agent of the 6G trustworthiness plane on the data plane, includes trustworthiness functions such as authentication, authorization, access control, audit, and source tracing, and also provides an interface for trustworthiness technologies such as a blockchain to protect confidentiality, integrity, and reliability of all data.

The DSF is responsible for storing data. Information including AI model data, key performance indicator (key performance indicator, KPI), a log, an alarm, and the like can be stored in the DSF. The DSF supports unified storage for structured/unstructured/semi-structured data, enabling dynamic classification and multi-tier storage of various types of files. The DSF employs the following diverse data storage technologies: The DSF may be implemented as either a centralized database or a distributed database, such as a distributed Hash table (distributed Hash table, DHT) or an interplanetary file system (interplanetary file system, IPFS). The DSF supports a plurality of data storage and encryption technologies, such as database surface encryption, transparent data encryption (transparent data encryption, TDE), transparent file encryption (transparent file encryption, TFE), user-defined function (user-defined function, UDF) encryption, and full disk encryption (full disk encryption, FDE).

15.3. Key technology

15.3.1. Data bearer

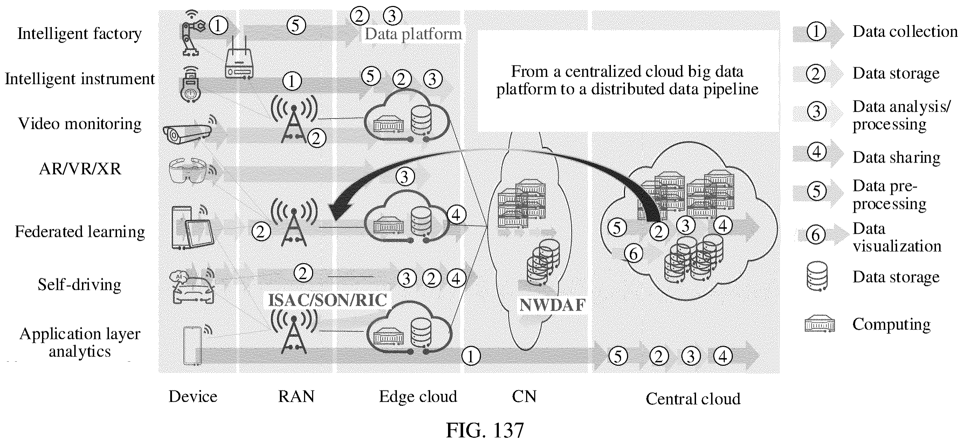

Through DO orchestration, data is managed and processed in pipeline mode. FIG. 137 is a diagram of a data pipeline. As shown in the figure, data flows in the pipeline, and different functions such as collection, transmission, storage, preprocessing, processing, visualization, and computing are completed between nodes that the data passes through. The data may be terminated on a base station side or a core network side.

An existing signaling plane bearer and user plane bearer between the UE and the base station are not suitable for data plane data transmission because:

(1) The signaling plane bearer is not suitable for a scenario in which a large amount of data is collected and reported. The signaling plane bearer has a highest scheduling priority, which affects normal running and fairness of a user service.

(2) The user plane bearer is transparently transmitted to the base station side. The base station is not allowed to parse packet content on the user plane bearer. Otherwise, user privacy and security are violated. A user plane bearer DRB has a correspondence with a PDU session in the core network and is sent to the core network through a GTPU tunnel. The data plane bearer may be terminated on the base station side. The base station side needs to parse a packet header on the data plane and forwards a packet to a data agent module for processing. A subsequent packet can be routed to another base station or a core network element through DA algorithm processing.

(3) The data plane uses an independent bearer type for processing. Scheduling priorities on the base station side are the signaling plane bearer, the user plane bearer, and the data plane bearer in sequence. The terminal performs data service related processing without affecting normal services. QoS of the user plane bearer focuses on a delay, a packet loss rate, and the like. The data plane does not have a high requirement on real-time performance. QoS of the user plane bearer focuses on data quality, such as data integrity.

This application provides a new manner of data processing: data bearing. Development of AI technologies promotes data analysis and value mining. An existing cloud-based AI architecture, including a network data analytics function (network data analytics function, NWDAF). For data processing, data is first aggregated to a cloud, then operations such as preprocessing, storage, and analysis are performed, and an analysis result is returned. A future traffic model will change, and a large amount of traffic will be terminated at a network edge. The existing centralized cloud manner is no longer applicable. The cloud-centric data processing manner needs to be decentralized across the network. In addition to forwarding data on a node, processing such preprocessing and even analysis needs to be performed. This is referred to as data bearing in this specification. To be specific, edge-oriented distribution of data traffic drives distributed data processing, thereby supporting network AI, and integrated sensing and communication, and the like.

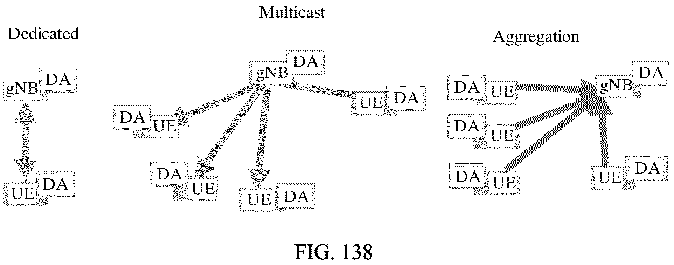

A data plane bearer (data data radio bearer, DDRB) is added on an air interface. Compared with the user plane bearer that has only a dedicated mode, the DDRB supports three link modes, as shown in FIG. 138. FIG. 138 shows the three link modes of the data plane bearer DDRB.

- Dedicated mode: is a conventional mode, which is similar to existing DRB transmission and supports bidirectional transmission.
- Multicast mode: is a unidirectional downlink mode in which a group of UEs may receive same downlink data, thereby saving downlink air interface resources and improving a resource utilization ratio.
- Aggregation mode: is a unidirectional uplink mode in which one or more terminal devices may report data to the base station through a unidirectional uplink, thereby reducing downlink interference and saving terminal power.

The base station notifies the UE that the base station has a data service capability through a SIB1. The UE reports the data service capability, including a supported data compression algorithm, a privacy protection algorithm, a data analysis capability, and the like, to meet forward and backward compatibility requirements. After receiving the data service request, the base station selects a proper UE based on a UE capability, sets up a data plane bearer, and starts data transmission. After receiving the request, the DA on the base station side performs subsequent processing.

15.3.2. Data routing and forwarding

A conventional session-oriented network is mainly for carrying a session. In other words, information exchange between two communication nodes, mainly occurs between humans and between humans and machines. The session is established based on establishment of a communication path. A node on the path is only responsible for forwarding a session packet, and does not process the packet. Specifically, forwarding is performed based on a destination address route of the packet. With generation and consumption of massive data in the future, data-oriented networks are increasingly required. For example, massive data (such as AI data and sensing data) needs to be carried in data pipelines that are formed by functions such as network collection, processing, transmission, storage, and analysis. A large amount of data is generated by machines/algorithms and consumed by machines/algorithms. Establishment of the data pipeline also depends on establishment of a communication path of an underlying network. However, each node on the data pipeline needs to perform corresponding processing (on-path-packet-processing) on a packet, and then forward the packet to a next node, specifically, forward the packet based on a data service identifier. Differences between session-oriented routing/forwarding and data-oriented forwarding are as follows:

In the session-oriented routing/forwarding manner:

- Header information for routing remains unchanged.
- A data payload of the packet remains unchanged.
- A point-to-point path is used.

In the data-oriented forwarding mechanism:

- Header information for routing remains unchanged.
- A data payload of the packet is changing (on-path processing of data).
- A flexible topology is used.

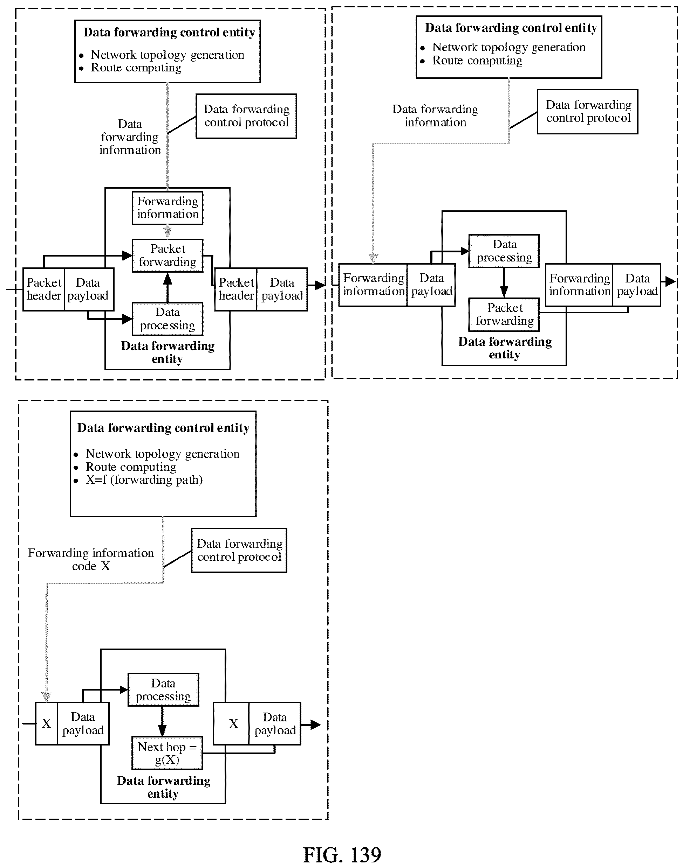

Three feasible 6G data plane data forwarding technical solutions are designed depending on whether a data packet and a data forwarding entity (for example, the DA) are stateful. FIG. 139 is a diagram of three data plane data forwarding modes.

Solution 1: When the DA is stateful and the packet is stateless, a data forwarding control entity (DO) orchestrates a data pipeline and a topology thereof based on a DA function and a service requirement, and writes a data forwarding entry into a data forwarding table of a corresponding DA. The DA forwards data to a next hop based on an entry until the forwarding entry is complete. In addition, the DA counts a quantity of forwarded data packets and bytes and reports them to the DO as required. After the data service is executed, the data pipeline is deleted, and the DA deletes the data forwarding entry.

Solution 2: When the packet is stateful but the DA is stateless, the DO orchestrates a data pipeline and a topology thereof based on a DA capability/function and a service requirement, and sends a data forwarding entry to an ingress DA. The ingress DA forwards the forwarding information as data packet header information to a next hop. A DA on a forwarding path forwards a packet based on the forwarding information carried in a packet header, and deletes the forwarding information related to the DA. An egress DA deletes address/identification information from a packet header and sends the packet to an upper-layer application. The DA counts a quantity of forwarded data packets and bytes and reports them to the DO as required. After the data service ends, an edge DA deletes a data forwarding entry of a specified data service.

Solution 3: When both a packet and a forwarding entity are stateless, the DO orchestrates a data pipeline and a topology thereof based on a DA capability/function and a service requirement. The DO encodes a data forwarding path corresponding to the data service and sends a code to the entry DA. The DA performs decoding to compute a next hop of the data packet, and forwards the data packet to the next node after completing data processing. An egress DA submits the packet to an upper-layer application. The DA reports the packet to the DO as required based on statistical data carried in the packet. An edge DA deletes the data pipeline after the data service is complete.

15.3.3. Data forwarding control protocol (data forwarding control protocol, DFCP)

The DFCP layer protocol is for controlling, processing, and transmitting data plane data between a terminal and a base station, between base stations, between a base station and a core network, and between any DAs. The DFCP layer protocol includes two parts: a DFCP control plane (denoted as DFCP-C) and a DFCP user plane (denoted as DFCP-U). For details about protocol stack deployment, refer to section 6.2.9. On an air interface side, a DFCP layer is directly deployed above a PDCP layer and is mapped to a data bearer by using a data service identifier. On a terrestrial interface side, the DFCP-C is deployed above the SCTP, and the DFCP-U is implemented as an application protocol of the UDP. The DFCP-C control message is shown in Table 7.

Table 7

| Message name | Message mode | Parameter |
|---|---|---|
| Function configuration | • Req/Resp mode (namely, request/response mode) | • Data service identity (data service identity, DSID), and DPID<br>• Configuration type (add, modify, or delete) |

(continued)

| Message name | Message mode | Parameter |
|---|---|---|
| | • Config mode (no resp) (namely, configuration mode, no response) | • Configuration function (data collection, preprocessing, storage, and analysis, and the like) |
| Forwarding information | | • DSID, and DPID<br>• Type (add, modify, or delete)<br>• Quantity of route hops<br>• Route type and one or more DAIDs of each hop |
| DPT update | | • Data protection technology (data protection technology, DPT) type<br>• DPT binary |
| Statistics reporting | • Report mode | • DSID, and DPID<br>• Quantity of transmitted messages, and quantity of bytes |
| DA information release | • Req/Resp mode | • Mapping between DAIDs and route identifiers (such as IP addresses) |

The DFCP-U is for transmitting service data of the data plane. Three data formats are provided based on the foregoing three forwarding solutions.

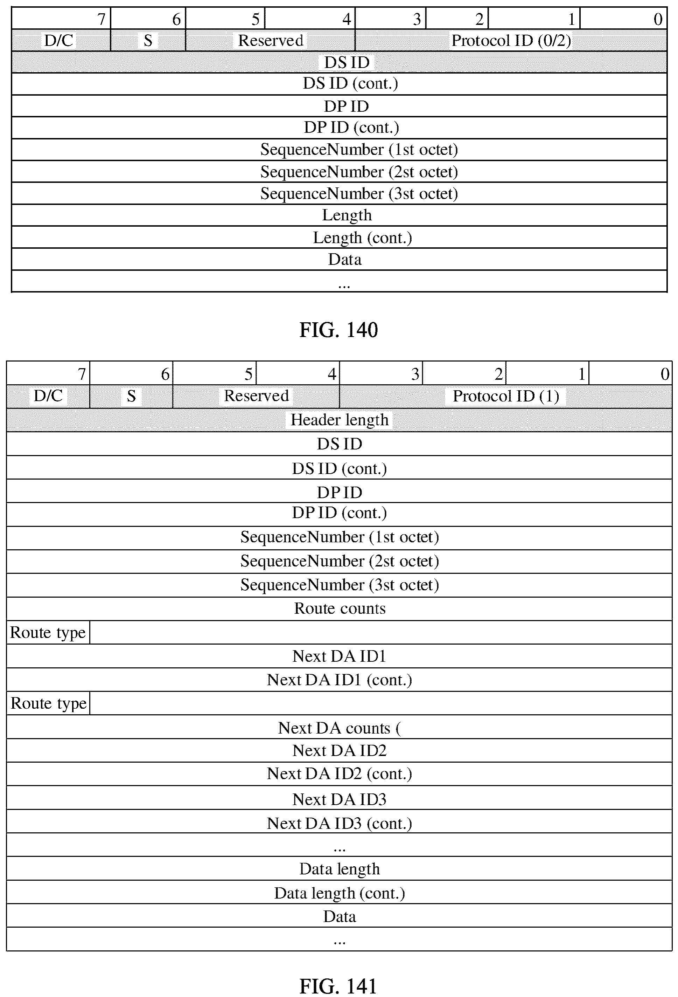

For a data format corresponding to the solution 1/2, refer to FIG. 140. FIG. 140 shows an example of a DFCP-U protocol layer format of a data plane. For a data format corresponding to the solution 3, refer to FIG. 141. FIG. 141 is another example of a DFCP-U protocol layer format of a data plane.

Fields involved in FIG. 140 and FIG. 141 and meanings of the fields are as follows:

D/C: data/control;

S: sequence number flag, where a value of the field being 1 indicates that a sequence number exists;

Reserved (reserved):

Protocol identifier (protocol ID): a value may be 0/1/2;
DSID: data service identity; and
DPID: data pipeline identity.

In FIG. 140 and FIG. 141, if protocol ID = 0, there is no path forwarding information in the packet, and the DO delivers a forwarding route to the DA. If the UE does not receive route forwarding information of a corresponding DP, data is sent to a connected base station by default. If protocol ID = 1, the data packet carries routing forwarding information. If protocol ID = 2, a Chinese remainder theorem is used. The DAID and the DPID identify an address of a next hop. In addition, route type = 0 indicates that the next hop has only one node, and route type = 1 indicates that the next hop has a plurality of nodes, that is, a multicast scenario.

15.3.4. Mobility

When the UE is located in a same base station before and after handover or before and after call reestablishment, context information of a data service of the UE does not need to be transferred, which can ensure continuity of the data service. When the UE is located in different base stations before and after handover, a source base station determines whether migrating data of the individual UE to a target base station meets an overall requirement. If the migration cannot meet the overall requirement, the data service of the UE is terminated, and the source base station determines whether to select a new UE to continue the data service.

I. In a possible case, the UE is handed over within a base station. In other words, a source base station and a target base station are a same base station.

1. The source base station indicates to retain a data plane bearer in a delivered handover command.
2. The UE accesses the target cell under the same base station, and restores the data plane bearer.

(a) The UE continues data transmission on a new data plane bearer.

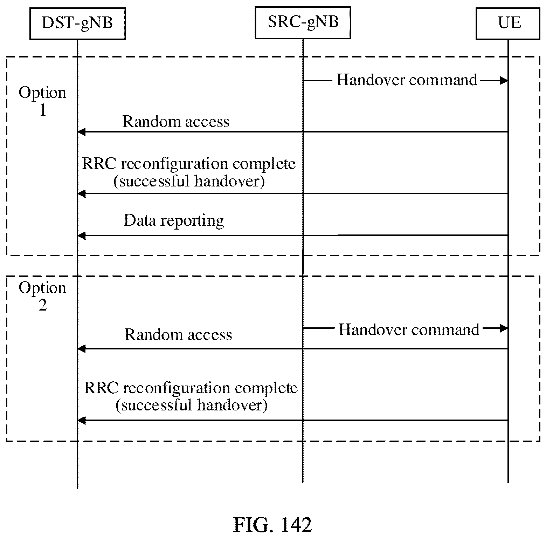

2. In another possible case, the UE is handed over between base stations, that is, a source base station and a target base station are not a same base station. In this case, there may be two options. FIG. 142 is a diagram of data plane mobility.

- Option 1: The UE terminates the current data service.

  1. The source base station (for example, an SRS-gNB) indicates not to retain a data plane bearer in a delivered handover command.
  2. The UE accesses a cell of a new base station (for example, a DST-gNB), and no data plane bearer is set up. A task of the current data service of the UE is terminated.
  3. The source base station determines whether a quantity of UEs that are currently processing a data service meets a requirement. If the quantity meets the requirement, the source base station does not perform other processing; otherwise, the source base station selects a new UE to perform the data service.

- Option 2: The UE continues the current data service.

  1. The source base station indicates to retain a data plane bearer in a delivered handover command.
  2. The UE accesses a new target base station, and restores the data plane bearer.
  3. The UE continues data transmission on a new data plane bearer.
  4. The target base station reports information about the UE (a base station on which the UE currently camps) to a DC.
  5. The DC updates the downlink routing by delivering the routing information of the UE to all other DAs.

16. New feature of 6G: intelligent collaboration service

16.1. Definition and driving force of HiC

This part is intended to describe in detail a concept of Hic proposed in this application and a driving force of the proposed Hic, to better understand Hic.

➢ Network elements tend to be intelligent

In a conventional operator network, a network function network element of the network is implemented based on prior knowledge. Once the prior knowledge becomes invalid, service experience provided by the network is difficult to satisfy a user. In a future network design, limitations of the prior knowledge are primarily reflected in three aspects:

- The increasing complexity of network functions leads to imbalanced performance of prior knowledge-based algorithms.
- The personalization of service demands renders prior knowledge-based parameter configurations "homogenized".
- The highly dynamic nature of network states renders prior knowledge-based algorithms incapable of continuous updates and timely adjustment.

Therefore, a self-learning capability needs to be introduced for each function network element in the network, so that a large amount of data and prior knowledge can be learned to cope with a more complex scenario, and a context-aware parameter configuration can be performed based on personalized data, and a continuous learning capability is provided. Through intelligent network element transformation, network functions are optimized and evolved, limitations of prior knowledge are overcome, and novel intelligent networking paradigms are established.

Currently, the 3GPP R16 has introduced the network data analytics function (network data analytics function, NWDAF) network element. The NWDAF can provide data collection and analysis services to other network elements and will continue to be enhanced in subsequent standards to deliver intelligent services to third parties. However, solely implementing intelligence in the NWDAF network function cannot fulfill intelligence requirements of the entire network. In R17, a RAN domain has further proposed deploying models at base stations, with model training executable either on the base station or OAM. In the CT industry, use cases of various intelligent application scenarios of network elements are also under research.

A common challenge in network element intelligence is that intelligence is implemented in a single network element. Each network element performs model training based on collected data to optimize existing functions and algorithms. As a result, intelligence silos are formed between network elements. This will bring about two problems:

1. Performance problem: A single network element has inherent limitations in data, computing, and an algorithm. To be specific, data samples are limited and cannot cover all environment observation scenarios. Constrained computing and memory struggle to support increasingly large model computing requirements. In addition, algorithms can typically achieve only local optimization rather than global optimization. The limitations of individual network elements constrain model complexity, which in turn determines a model capacity-ultimately restricting the performance of all AI cases implemented on a single network element. To resolve this problem, this application proposes the following solution. One solution is to boost performance by significantly improving AI learning capabilities of individual network elements, including deploying AI chips with greater computing and memory, as well as collecting more training data-though at the cost of increased hardware and time expenditures. The other solution is to establish collaboration channels between network elements to enhance AI learning capabilities through collaboration, including expanding sample spaces, deploying larger models, and designing globally optimized algorithms. In contrast, the latter is a more appropriate solution and does not conflict with the previous one.

2. Efficiency problem: For intelligence silos, each model needs to be designed from scratch and trained from zero, lacking learning from historical or peripheral experience. However, the network inherently includes numerous repetitive/similar AI tasks. Knowledge transfer through collaboration can significantly enhance AI learning efficiency. For example, an AI-based MU model that underwent beta testing in a region can be migrated to another region through collaboration for use.

➢ Proposition of hierarchical intelligent collaboration

Therefore, this application proposes that intelligence in a network flows, and intelligent network elements at all layers of the network collaborate to exchange AI-related information, to improve a network intelligence level, including improving network AI performance, model accuracy (model accuracy), and global optimality (global optimality), improving network AI development and training efficiency, reducing AI deployment costs (deployment efficiency), and the like. Therefore, in this application, collaboration between network elements at each layer of a network is referred to as hierarchical intelligent collaboration (heterarchical intelligent collaboration, HiC).

A conventional wireless network is connectivity-centric and provides a connection channel for a terminal. The connection channel is vertically siloed, with a clear function and no need for vertical collaboration. Horizontal collaboration is limited to a small scale between neighboring base stations, for example, coordinated multi-point (coordinated multi-point, CoMP) transmission and handover. This type of collaboration features a small scale and a small amount of exchanged data. Collaboration scenarios of HiC are more complex and larger. Future network collaboration will have the following three key characteristics:

(1) Large-scale collaboration: Enables multi-level horizontal and vertical collaboration across a CN, a RAN, and a UE, and supports hyper-scale collaboration instances. These collaboration instances may operate independently of a network topology, potentially spanning different RAN clusters, discontinuous air interface coverage areas, or the like.

(2) Heavy collaboration traffic: The network supports millions of collaboration instances, generating massive collaboration communication traffic that may exceed user communication traffic. This necessitates management and control to prevent degradation of network services such as communication.

(3) High collaboration flexibility: Intelligent network elements/terminals autonomously initiate, join, and exit collaboration instances, and can identify and select optimal collaboration instances, to implement knowledge/model discovery/selection/migration.

In an existing connectivity-based collaboration mechanism of the 3GPP, simply adding some IEs or adding some messages to a message instruction cannot support a HiC collaboration scenario of such a large scale, large traffic, and high flexibility. Therefore, a new HiC architecture is established to efficiently organize the collaboration between intelligent network elements and ensure that the collaboration is manageable and controllable.

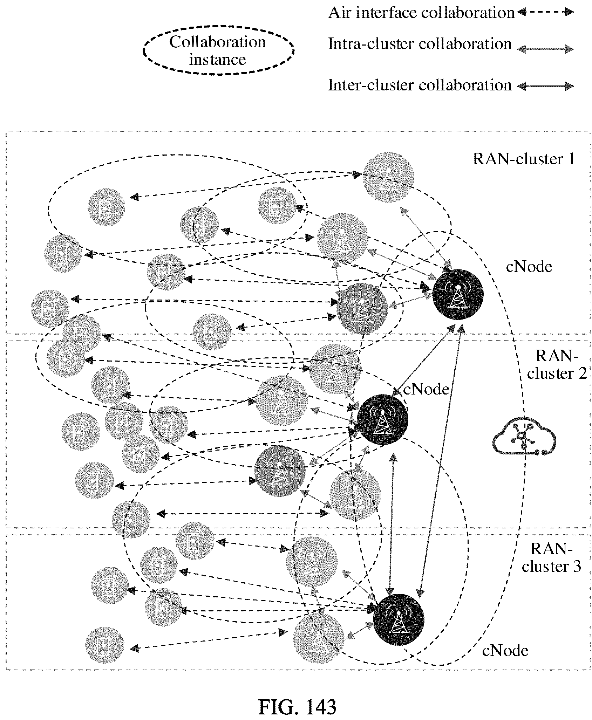

FIG. 143 is a diagram of a HiC collaboration scenario. As shown in FIG. 143, the Hic collaboration scenario may include air interface collaboration, intra-cluster collaboration, such as collaboration within a cluster 1, a cluster 2, or a cluster 3, and inter-cluster collaboration, such as collaboration between a cluster 1, a cluster 2, and a cluster 3.

16.2. Key technology of HiC

The HiC aims to provide an endogenous intelligent collaboration architecture for networks and a standard architecture for intelligent collaboration between network elements at all layers, including organizational management of collaboration, protocol interfaces, and interaction procedures. The objective is to efficiently organize collaboration between intelligent network elements and ensure manageable and controllable collaboration.

To achieve this objective, a primary consideration is collaboration orchestration, specifically, how to select a proper collaboration object from a large quantity of intelligent network elements/terminals, which collaboration manner is used, which collaborative information is exchanged, and when collaboration is performed. Therefore, an efficient collaboration mechanism needs to be designed in the HiC architecture. Then, collaboration gains and efficiency need to be considered. Specifically, how to ensure that a large quantity of collaboration instances have sufficient gains, improve collaboration efficiency, and reduce collaboration overheads needs to be considered. A solution idea for this problem in this application is to study a network characteristic, and a collaboration algorithm needs to adapt to the network characteristic for optimization. Finally, global management and control of collaboration needs to be considered. Specifically, how to efficiently manage and control massive collaboration instances, control global collaboration resources and energy consumption overheads, and ensure that a normal network service is not affected needs to be considered. Therefore, in this application, a logical function design and a deployment design are considered for the HiC architecture, to ensure that a collaboration instance is controllable and manageable in terms of a function procedure.

The following describes in detail the efficient organization of intelligent collaboration, the manageability and controllability of intelligent collaboration, and the gains and efficiency optimization of intelligent collaboration.

16.2.1. Efficient organization of intelligent collaboration

For collaboration between network elements, a collaboration object (who) needs to be selected, and an intelligent representation (what) and a collaboration pattern (how) need to be determined, to perform collaboration on a proper occasion (when). Therefore, the collaboration organization issue may be broken down into determining the four pieces of meta-information, namely, 3WH. To determine each piece of meta-information, a series of instructions are required to collect information and deliver configurations.

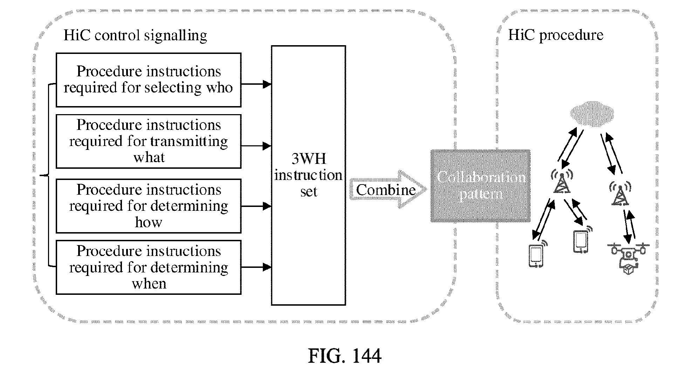

In this embodiment of this application, a 3WH four-tuple is designed to form a set of HiC instruction sets, and a required collaboration pattern (pattern) is obtained by combining the HiC instruction sets, to organize a collaboration procedure. FIG. 144 is a diagram of efficient organization of Hic. As shown in the figure, Hic control signaling includes procedure instructions for selecting a collaboration object, procedure instructions required for transmitting intelligent representation information, procedure instructions required for determining a collaboration manner, and procedure instructions for selecting a collaboration occasion. The procedure signaling is referred to as procedure signaling for selecting who, transmitting what, determining how, and determining when for short.

For details about the design of the 3WH instruction set, refer to:

• Select a collaboration object (Who to collaborate)

A collaboration set is a basis of collaboration. Collaboration in the HiC architecture includes two vector directions:

(1) Spatial vector: A multitude of network elements, each equipped with AI capabilities and executing AI tasks, engage in collaborative learning with one another, such as federated learning and multi-task learning.

(2) Temporal vector: The network continuously incorporates new AI tasks while enabling collaborative learning with historical tasks, such as transfer learning and lifelong learning.

The selection of the collaboration object in the network requires network elements/terminals to possess AI collaboration capabilities across both vector dimensions, such as historical and current AI task descriptions, model information, data characteristics (data plane interface), and whether model aggregation/training is supported. Procedure instructions required for selecting collaboration object may be classified into the following three types: (1) a series of instructions for reporting AI collaboration capabilities of the network elements/terminals; (2) a series of instructions for proactively querying the AI collaboration capabilities of the network elements/terminals; and (3) a series of instructions for delivering collaboration requests and configurations to the network elements/terminals. These instructions constitute the instruction set required for determining WHO in the collaboration set.

• Intelligent collaboration representation (What to collaborate)

A purpose of intelligent assistance between network elements is to improve AI performance and efficiency of the network elements. Transferred content is referred to as an intelligent representation, which is defined as information utilized/extracted during AI processes and can be applied to other AI processes to improve performance and efficiency.

There are many types of intelligent representations, and a most basic is raw data. For example, the NWDAF can collect data information from other network elements to provide intelligent data analytics services. For a data-based machine learning algorithm, data is a source of intelligence, and the data includes full raw information. Data collaboration can increase data sample space or feature dimension space, thereby improving model accuracy.

Intelligent representation of HiC may include but is not limited to the following several types:

(1) Model/Gradient

A model/gradient is an intermediate or final output of ML, representing learned and extracted statistical knowledge from data samples, and may be considered as a complete expression of the learned intelligence, enabling effective application to similar tasks.

In federated learning, gradient information about a model weight is transmitted between collaborating nodes. Learning statuses of all nodes can be quickly integrated through interaction and aggregation between the nodes, thereby accelerating convergence and improving model accuracy. In transfer learning, nodes interact with each other by using pre-trained models on the current nodes. A receiving node then fine-tunes the model to quickly adapt it to new tasks, avoiding retraining from scratch and significantly enhancing training efficiency.

When collaboration is performed on models/gradients, transmission overheads depend on a model size and an interaction frequency.

(2) STAR

Reinforcement learning (reinforcement learning, RL) is a very important learning method, and interaction information between the reinforcement learning and an environment is also a very important intelligent representation. S indicates an observed environment state by the intelligent network element. T indicates transition of the environment state. A indicates an action taken by the network element. R indicates feedback from the environment.

Through STAR interaction between network elements, local observation can be extended to global observation to achieve global optimality performance. Especially in a scenario in which decisions of network elements affect each other, for example, in an interference suppression scenario of a base station, STAR interaction can effectively improve global performance.

(3) Knowledge extraction

Knowledge extraction refers to a further abstract representation form obtained by extracting learned knowledge, which has smaller dimensions than raw inputs/outputs such as interaction data/models, resulting in higher communication efficiency.

(4) Correlation

Correlation is for describing a degree of relevance between tasks, and is usually added to a loss (loss) function as a constraint to help different AI tasks learn from each other. The correlation between tasks needs to be designed based on features of the tasks.

Descriptions and advantages of each intelligent representation are shown in Table 8.

Table 8

| Representation | Description | Advantage |
| --- | --- | --- |
| Model/Gradient | Intermediate or final output of learning | Complete expression of learned intelligence, enabling effective application to similar tasks |
| STAR | Information exchanged between the RL and an environment | Carries full information, with local observation being extended to global observation, to achieve global optimality performance |
| Knowledge extraction | Further abstract representation obtained by extracting learned knowledge | Smaller dimensions than raw inputs/outputs such as data/models, resulting in high communication efficiency |
| Correlation | Describes a degree of relevance between tasks, and is usually added to a loss function as a constraint | Tasks are not required to be the same, where different tasks learn from each other |

A transmission format of the representation needs to be standardized to facilitate collaboration between devices.

• Collaboration manner (How to collaborate)

In terms of the collaboration manner, the following aspects need to be considered: whether centralized servers are required for collaboration among intelligent network elements, how many epochs per interaction, and whether synchronization is needed between network elements, as shown in Table 9.

Table 9

| Collaboration pattern | Description | Detail | Remark |
|---|---|---|---|
| Collaboration topology | Geometric topology structure between collaboration objects | P2P (namely, point to point) Centralized (centralized, such as a tree structure and a star structure) Decentralized (de-centralized) | Different logical functions and interaction relationships derived from different topologies |
| Interaction period | Whether the collaboration is one-time or periodic | 0: one-time [value]: interaction period | The period may be represented by time or a quantity of times |
| Synchronization mechanism | Describes a synchronization mechanism when a plurality of intelligent representations need to be collected in a multi-object collaboration scenario | Synchronous, asynchronous, and hybrid | In the synchronization mechanism, a retransmission triggering mechanism needs to be designed, while in the hybrid mechanism, a timeout timer needs to be configured |

• Collaboration occasion (When to collaborate)

Collaboration introduces significant communication and processing overheads, and needs to balance necessity and urgency of collaboration, a current service load status of a network, and the like. Generally, collaboration is performed on a premise that a session service is not affected. For example, in multi-network-element collaborative scenarios some network elements or terminals may temporarily join the collaboration, whether a session service is affected by the collaboration needs to be considered.

To better evaluate impact of collaboration on services, a comprehensive monitoring mechanism needs to be designed to collect statistics on new key performance indicators (key performance indicator, KPI), such as a collaboration overhead ratio, a collaboration ratio in a case of computing overload, and a collaboration ratio in a case of bandwidth congestion.

The Hic KPI provided in this application and descriptions and functions thereof may be shown in Table 10.

Table 10

| HiC KPI | Description | Function |
|---|---|---|
| Collaboration traffic ingress ratio | AI collaboration traffic at a network element ingress/Total traffic at a network element ingress | Measures a collaboration amount obtained by a network element where excessive obtaining may cause a bottleneck |
| Collaboration traffic egress ratio | AI collaboration traffic at a network element egress/Total traffic at a network element egress | Measures a collaboration amount output by a network element, where excessive output may cause a collaboration traffic storm |
| Collaborative computing ratio | Computing consumed by a network element to process collaborative information/Total computing consumed by a network element | Measures computing consumption of a network element for collaborative information, which is used as a dimension for evaluating collaboration gains |

(continued)

| HiC KPI | Description | Function |
|---|---|---|
| Collaboration ratio in session congestion | Duration of transmitting AI collaborative information by a network element/Duration of session data congestion of a network element | Measures a proportion of collaborative information transmission during session transmission of the network element |

Different collaboration algorithms require different collaborative information and collaboration procedures, and corresponding 3WH instruction sets are also different. Therefore, standardization of the 3WH instruction sets may be implemented through the following steps: First, some typical collaborative learning patterns are standardized as paradigms to address a majority of collaboration scenarios. The 3WH instruction sets corresponding to the standardized collaboration paradigms are formalized in network standards for invocation by all network elements. Second, variations of typical algorithms are enabled, and may be obtained by modifying parameters in some instruction sets, to expand collaboration patterns. Finally, an open interface may be provided externally, for example, for OAM or OAM/application function (application function, AF), to support a customized collaboration pattern.

16.2.2. Manageable and controllable intelligent collaboration

• Logical function architecture

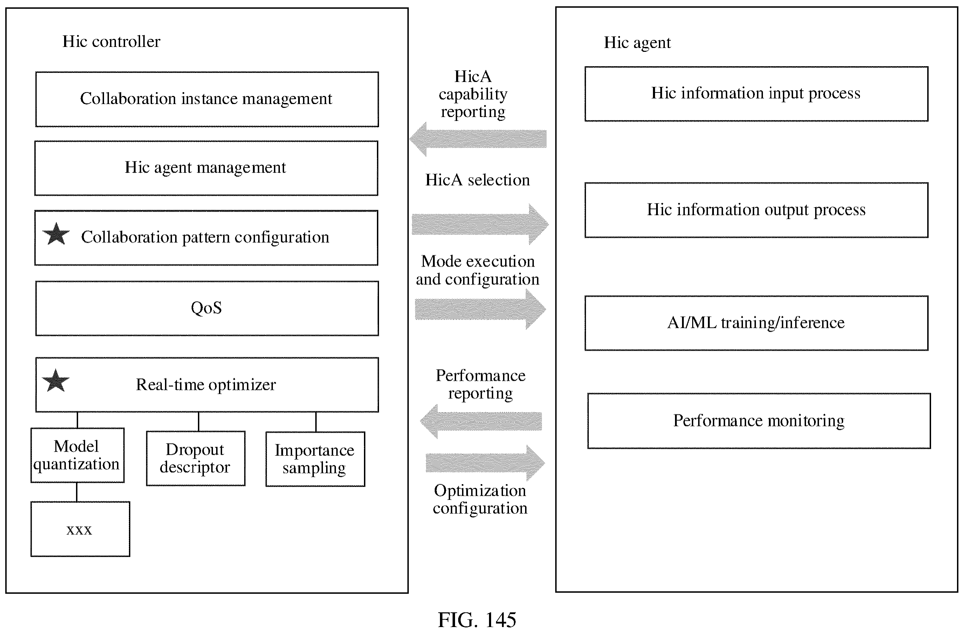

FIG. 145 is a diagram of a logical function architecture of Hic. As shown in FIG. 145, two logical functions, namely, a collaboration controller and a collaboration agent, are added, which are respectively referred to as a Hic controller and a Hic agent, and are referred to as a HicC and a HicA below. The HicC manages a lifecycle of a collaboration instance, configures a collaboration pattern, and optimizes a collaboration process in real time. The HicA executes the collaboration.
Hic controller: is a collaboration controller, including registration and management of the collaboration agent, reception of a collaboration request, creation of a collaboration instance, configuration of a collaboration pattern, and optimization in management and collaboration processes of collaboration QoS.

(1) Collaboration instance management: A specific collaboration event in the network is defined as a collaboration instance and needs to be registered with the HicC. The HicC creates a HicId.
(2) Collaboration pattern configuration: One of core functions of the HicC, where a collaboration pattern is determined to organize a collaboration set, collaboration procedures and parameters (3WH), and the collaboration pattern is configured to each HicA through 3WH instruction sets.
(3) Real-time optimizer: To cope with dynamic network changes, the real-time optimizer determines an optimization configuration in real time by monitoring collaboration performance, including a configuration of quantization bits for model transmission, a configuration of a dropout descriptor, and a configuration of a HicA importance sampling weight.

Hic Agent: is a collaboration agent, and executes a specific collaboration procedure, including collaborative information processing, local model/optimizer management, AI/ML training and inference, and the like.

• Deployment architecture

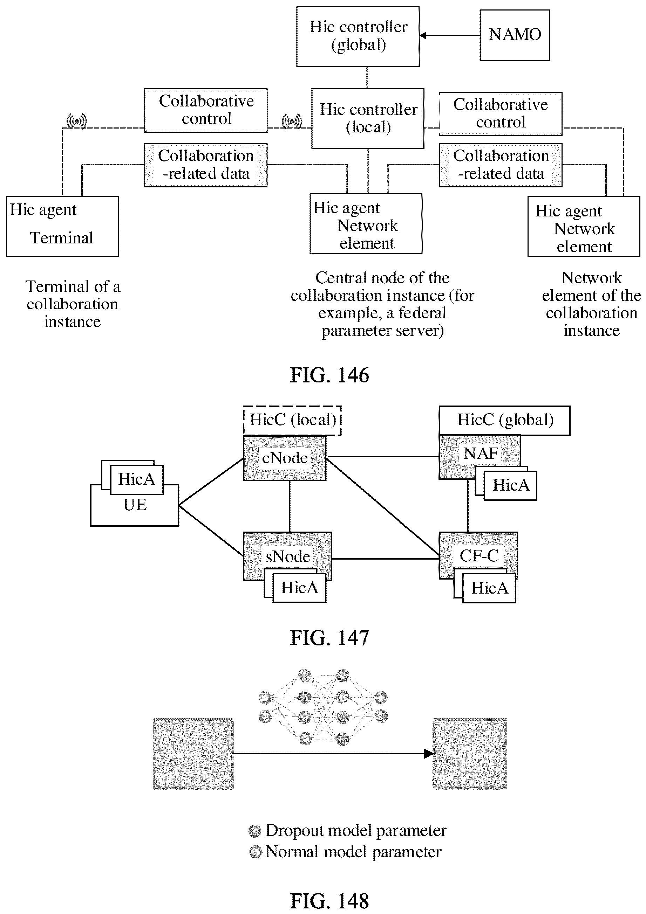

For the Hic deployment architecture, refer to FIG. 146. As shown in FIG. 146, the collaboration controller is deployed in a hierarchical manner, local control is performed in a cluster (that is, cluster), and global control enables large-scale collaboration between clusters. A coverage area of the cluster may be set, for example, a coverage area of 100 base stations. Optionally, the HicC may be a newly added device/network element, or may be integrated with an existing device/network element. For example, a local HicC is deployed on a base station, and a global HicC is deployed on a core network. This is not limited.
From a perspective of a base station including a cNode and an sNode provided in this application, a Hic deployment framework based on the RAN architecture provided in this application is shown in FIG. 147. The HicC is deployed on an NAF and the cNode. The HicC on the cNode serves as a local controller, and is configured to manage and control intelligent collaboration between sNodes and between UEs within a coverage area of the cNode. If collaboration between cNodes needs to be performed, coordination is performed by using an NAF global controller.

16.2.3. Gains and efficiency optimization of intelligent collaboration

To implement intelligent collaboration between network elements, a collaboration procedure needs to be optimized based on characteristics of a wireless network, to further ensure the collaboration gains and efficiency. The wireless network has the following characteristics:

(1) Hyper-heterogeneity: In the wireless network, there are multi-layer network elements and terminals that belong to different vendors, featuring diverse function and capability configurations. This results in heterogeneity across three dimensions: computing, models/algorithms, and data.

(2) Ultra-dynamic nature: Traditional wireless networks primarily focus on mobile terminal connectivity. The workload of base stations constantly fluctuates based on terminal mobility states. Additionally, terminals undergo various state transitions including mobility, handovers, dropouts, and idle (idle)/active (active) mode changes, resulting in extreme instability within collaboration sets.

(3) Hyper-distribution: Network elements and terminals at all layers in the wireless network are physically discretely distributed, and transmission links between the network elements and terminals are redundant or transmission bandwidth is limited.

(4) Hyper-scale: A wireless network needs to implement large-scale collaboration between millions or hundreds of millions of base stations and terminals, raising critical challenges: ensuring collaboration convergence and collaboration goal attainability, managing exponentially growing complexity in global optimization as nodes increase, and implementing dimensionality reduction and rational collaboration set partitioning.

These network characteristics necessitate more sophisticated mechanism design for in-network collaboration, enabling real-time dynamic optimization and adjustment based on evolving collaboration states. Timely updating a collaboration pattern configuration is essential to ensure collaboration gains and efficiency. Several examples of algorithms and solutions designed to enhance collaboration performance and efficiency are provided below.

• Dropout descriptor

The dropout descriptor is a manner of efficiently reducing model transmission overheads. Specifically, a full model does not need to be transmitted, but some model parameters are discarded, to reduce a transmission amount. The transmission amount can be greatly reduced with minimal accuracy loss by properly selecting the dropout part.

Because only a part of a complete model is transmitted, the dropout descriptor needs to be used to specify a parameter mapping relationship and indicate a position of a current parameter in the complete model. In addition, with a dynamic change of a network environment and a progress of a training process, the dropout descriptor also needs to be dynamically configured. FIG. 148 is a diagram of a dropout descriptor. FIG. 148 shows normal model parameters and dropout model parameters, and positions of these model parameters in the complete model.

Federated learning is used as an example. In a federated learning process, a client may freeze some model parameters without updating them. Therefore, the client does not need to perform local gradient computing and reporting, and a gradient is dropped out, thereby reducing uplink transmission overheads and local computing overheads.

Mode 1: The network delivers the dropout descriptor.

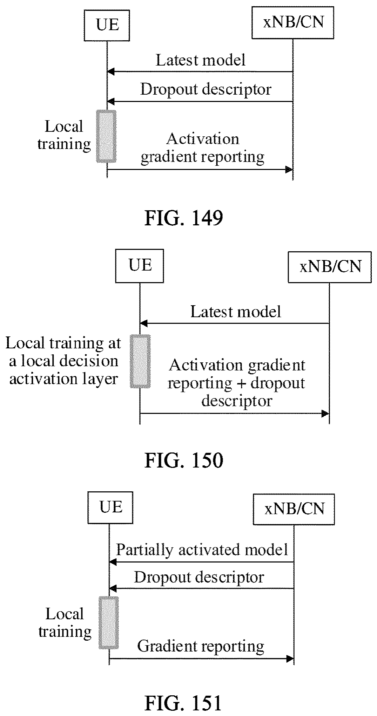

FIG. 149 is a diagram of delivering a dropout descriptor by a network.

Step 1: The network configures a dropout descriptor for each UE based on one or more of a gradient reported by each UE, a gradient after aggregation, and a UE link status, for example, a sounding reference signal (sounding reference signal, SRS) reference signal received power (reference signal received power, RSRP), a CSI state (CSI state), and computing reported by the UE.

(1) On-path delivery: A single-bit (single-bit) descriptor (for example, 1 indicates freeze, and 0 indicates activation) is added to each parameter with a global model (global model) to be delivered this time.

(2) Separate delivery: A dropout descriptor (binary matrix) is generated separately, with dimensionality identical to that of the model parameters

(3) The dropout descriptor remains effective until a new descriptor is issued. To terminate freezing, an all-zero descriptor may be delivered, or the dropout descriptor is simplified into a single piece of stop signaling

Step 2: The UE performs local training and gradient update based on the dropout descriptor configured by the network. A gradient of a frozen parameter does not need to be computed and updated, so that a local computing amount can be reduced.

Step 3: The UE uploads only an activation parameter gradient updated in a current round. Because the network side has configuration information of the dropout descriptor, the UE may directly send an activation parameter, and the network side performs mapping.

Mode 2: The UE determines the dropout descriptor by itself.

FIG. 150 is a diagram of reporting the dropout descriptor by the UE.

Step 1: After receiving a global model (global model), the UE determines, based on a gradient in a previous round, a link status (for example, CSI), and current computing, a parameter that needs to be frozen in this round of training, and generates a dropout descriptor.

Step 2: The UE performs model training, and computes a gradient of an activation parameter.

Step 3: The UE uploads only an activation parameter gradient updated in a current round. In addition, the UE uploads the dropout descriptor, and the dropout descriptor remains effective until a new descriptor is issued.

In federated learning, a server does not need to distribute a complete global model every time. Parameters that remain virtually unchanged can be omitted from transmission. Refer to FIG. 151. FIG. 151 is a diagram of a downlink transmission descriptor.

Step 1: The network obtains an aggregated global gradient. If a gradient variation is less than a threshold (statically configured), the network performs dropout processing to generate a dropout descriptor.

Step 2: The network delivers an activation parameter of a global model and the dropout descriptor. The dropout descriptor takes effect immediately but only applies to the currently delivered model.

Step 3: The UE obtains a model for current training based on a historical model, a new model delivered by the network, and the dropout descriptor.

In the foregoing solution, a parameter-level dropout descriptor is used, which maintains the same dimensionality as the model. For a large-scale model, even if a single bit is used for representation, a large amount of transmission bandwidth needs to be occupied. An optimization solution is to simplify the dropout descriptor to a layer level, that is, a layer or a plurality of layers of the model are frozen each time. Therefore, this application provides three implementations, for example, the following option 1 to option 3.

Option 1: A single-bit parameter is added to each layer of the model together with a delivered update model, to describe whether the layer is frozen or activated (for example, 1 indicates frozen, and 0 indicates activated).

Option 2: A standalone dropout descriptor (binary string) is generated separately, with dimensionality equal to a quantity of layers in the model.

Option 3: A standalone dropout descriptor is generated, including a flag bit (1 bit) and a layer sequence number.

(1) If the flag bit is 1, it indicates that a frozen layer is described currently, followed by a frozen layer sequence number. This applies to a scenario in which a quantity of frozen layers is small.

(2) The flag bit is 0, it indicates that an activation layer is described currently, followed by an activation layer sequence number. This applies to a scenario in which a quantity of activation layers is small.

Table 11 is an example of a format of the option 2.

Table 11

|  | Layer 1 | Layer 2 | Layer 3 | Layer 4 | Layer 5 |
|---|---|---|---|---|---|
| Descriptor | 1 | 1 | 0 | 0 | 0 |

Table 12 is an example of a descriptor format described in an option 3, that is, a frozen layer is separately identified.

Table 12

|  | Identifier | Layer 0 | Layer 1 |
|---|---|---|---|
| Descriptor | 1 (freeze) | 1 | 2 |

Table 13 is another example of the descriptor format described in the option 3, that is, an activation layer is separately identified.

Table 13

|  | Identifier | Layer 0 | Layer 1 | Layer 1 |
|---|---|---|---|---|
| Descriptor | 0 (active) | 3 | 4 | 5 |

• Data feature measurement

For big data-based AI algorithms, data is a core of intelligence. Prior to intelligent collaboration, it is essential to align the data feature information across all nodes. If data features among collaborating nodes fail to meet a requirement, collaboration performance is severely affected.

In a wireless network, connectivity is measured by using various reference signals to determine a resource allocation scheme, for example:

CSI measurement: The base station delivers a CSI-RS to measure a downlink channel, and the terminal feeds back channel quality.

SRS measurement: The terminal sends an SRS-RS to measure an uplink channel.

Similarly, before network elements (including terminals) in the wireless network perform collaboration, a reference model is used to measure data features first. This enables the collection of both data features and node computational capabilities, to determine a collaboration set generation solution, thereby improving collaboration efficiency.

Before the network element performs specific AI training, a training preparation phase is added to measure the data features and align collaboration capabilities. In this preparation phase:

Step 1: A network element that needs to perform model collaboration training first sends a data feature measurement message to a possible data supply network element, to measure a data feature. The feature measurement message needs to include the following several key elements:

Event: is for describing a service type of current collaborative training. Different events correspond to different datasets. Therefore, a collaboration-requiring network element needs to specify, in the measurement message, a specific event to be measured. The event is a pre-defined standardized type, for example, load balance (load balance, LB) or energy saving (energy saving, ES), or may be a dataset description manner.

Reference model (reference model): is a benchmark measurement model customized for an event and is for measuring features of a dataset corresponding to the event. The data feature is for describing distribution of a group of data. For example, for independent and identically distributed data samples, convergence can be accelerated during horizontal federated learning. The reference model is not a finally applied model, but rather serves to measure data characteristics. Therefore, a design of the reference model needs to have two features: compactness and generalizability. The compactness enables minimal computational and communication overheads when extracting data features. The generalizability means that a basic data feature of a dataset is extracted by the first reference model, and application to training of various specific AI models can be implemented.

Optionally, reference models corresponding to each event may be determined in advance, and the reference model in the feature measurement message may be default.

Measurement parameter: indicates some parameters of current measurement, for example, a quantity of epochs for training. A measurement parameter corresponding to each event has a default value. If the default value needs to be specified, this parameter is used for specification.

Step 2: After receiving the feature measurement message, the data supply network element trains a local dataset by using the reference model, to extract a data feature. A typical data feature description manner is model gradient information in training.

Meanwhile, during data feature measurement, computing may also be measured. Because a same benchmark is used, evaluation discrepancies across heterogeneous devices are eliminated. After the training ends, the data feature and the computing are fed back to the collaboration-requiring network element.

Step 3: After collecting all data feature reports, the collaboration-requiring network element computes a correlation between data features, to select an appropriate collaboration set. A correlation measurement manner is shown in $G = \sum_{j=1}^{N} \|\nabla j\|^2 / \left\|\sum_{j=1}^{N} \nabla j\right\|^2$ . A larger value indicates a larger feature difference, and may be for removing a node with larger data heterogeneity in advance in federated learning.

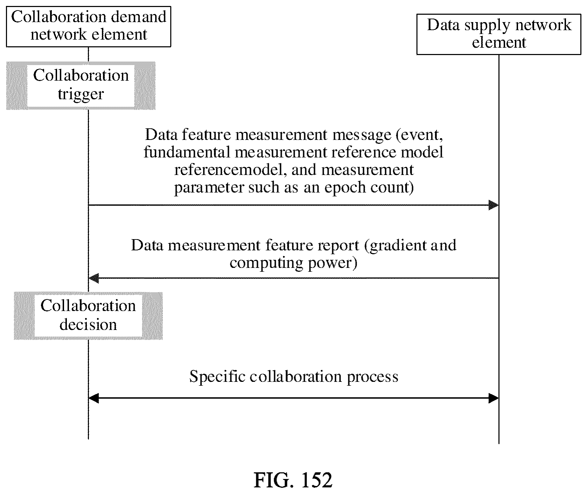

FIG. 152 is a diagram of a data feature measurement process. As shown in FIG. 152, the collaboration-requiring network element, triggered by collaboration, sends a data feature measurement request (namely, the foregoing feature measurement message) to the data supply network element. The data supply network element then obtains data features and provides the data features back to the collaboration-requiring network element through a data feature measurement report. For example, the collaboration-requiring network element may be a RAN/CN network element, and the data supply network element may be a terminal. Because the data feature evolves gradually, an interval of periodic measurement can be extended. In addition, event-triggered aperiodic measurement or the like is performed.

17. New feature of 6G: trustworthiness service

17.1. Concept of trustworthiness

In embodiments of this application, a trustworthiness capability in a broad sense is a capability to meet information and network space security (security), privacy protection, resilience (resilience), physical security (safety), reliability, and availability for end-to-end networks (for example, a 6G network) and applications. The six capabilities are collaborated and completed by all technical capabilities involved in a communication system. The generalized 6G trustworthiness framework represents a highest-level capability objective that the 6G system needs to be achieved.

A trustworthiness capability in a narrow sense refers to a capability to meet information and cyberspace security (security), privacy protection, and risk oriented resilience (risk oriented resilience) for end-to-end networks (for example, a 6G network) and applications. The 6G trustworthiness capability in a narrow sense is a technical capability achievable through information security and a cyberspace security technology cluster, and is one of the implementation technologies of the 6G trustworthiness capability in a broad sense.

The trustworthiness capability mentioned in this application refers to the trustworthiness capability in a narrow sense.

17.2. Key technology

17.2.1. Multi-mode trust (multi-mode trust model)

A service capability provided by a communication network for a user and a service capability required by the user from the communication network exist in a state of dynamic fulfillment and non-fulfillment, that is, a supply-demand relationship in flux. The supply-demand relationship, interacting with business models across generations, eventually stabilizes into changes in: a communication network technology, a deployment mode, an application, and a charging mode. Further, a trust mode of a communication network is mapping of a business model of the communication network to a trustworthiness technology capability. Communication networks in different business models lead to changes of trust models and affect evolution of existing trust models.

Mode 1: Consensus (consensus mode): is a mode for achieving multi-party consensus on information, operations, or events. In telecommunications networks, this refers to preset trustbased multi-party consensus. The multi-party consensus mode is technically represented as a 6G blockchain. Problems to be resolved are as follows: (1) Distributed tamper-proof storage and access for real-time information reporting from multi-region information collection points and real-time query from multi-region information request points, for example, real-time reporting and query of vehicle anti-collision information in an autonomous driving scenario; (2) Tamper-proof backup of 6G network control signaling, which may be for network-wide control flow analytics, such as security posture analysis and network anomaly investigation; and (3) For both 3GPP and non-3GPP users accessing 6G networks, it is required to achieve anytime-anywhere access authentication and authorization without altering an original identity generation and management mode. This imposes demands on distributed trustworthiness architectures, such as unified identity management.

Mode 2: Bridge (bridge mode): Based on centralized authorization, operators (especially home network operators) authenticate and authorize users who access the network. That is, a trust relationship between communication parties is bridged and propagated by the operators in a centralized manner. The bridge mode is a long-standing trust mode in telecommunications networks, technically implemented through user authentication and authorization by the home network operator. Ensuring high-quality interoperability is a most fundamental requirement for mobile networks. This necessitates a unified service provider capable of performing timely network configuration, maintenance, and management based on holistic network quality conditions. The centralized authentication and authorization procedure serves as a typical user access management mode, facilitating unified implementation of security policies, user identification, and administration.

Mode 3: Endorsement (endorsement mode): is a model in which one party establishes a trust or distrust relationship with another party based on conclusions of third-party testing/evaluation/verification. In a 6G era, the endorsement mode is represented as remote trust measurement between NFs or NEs based on a root of trust. The endorsing third party serves as a root of trust within a trustworthiness computing architecture based on the root of trust. A problem to be solved is as follows: Due to a globally interconnected nature of communication networks, a segment of information can flow from a start endpoint to any other endpoint worldwide under extreme conditions. Consequently, critical security vulnerabilities in any segment of an interconnected network may escalate into large-scale attacks, compromising network trustworthiness and, in worst-case scenarios, rendering the network unavailable. In 5G and previous generations, the third-party mode works in offline mode, includes file audits, function integrity verification, penetration testing, and the like, and has covered security check requirements from a detection perspective. However, from a perspective of operators, this approach lacks timely and dynamic delivery of detection reports. From a perspective of an object to be tested, trust measurement on intrinsic properties of the object fails to be provided.

A relationship between the three modes is as follows:

- The consensus mode, the bridge mode, and the endorsement mode are associated to form a 6G trust model, and are different modes of the model in different service states.
- The three models share a unified trustworthiness architecture and technical capabilities in their implementation, including functionalities, protocols, and policies.
- The consensus mode may provide policies, ecosystem-agreed by a plurality of parties, for the bridge and endorsement modes, for example, updating/writing functions and parameters to devices, upgrading network configurations, and creating/adjusting a topology structure of a useroriented/service-oriented logical network. The consensus mode may provide, for the bridge mode, distributed-scenario-optimized trustworthiness services such as fast authentication and user credential query. The consensus mode may provide capabilities such as tamper-proof authentic data storage for the endorsement mode, enabling decentralized yet standardized monitoring and evaluation by authorized inspection entities.
- The bridge mode serves as an indispensable component of the consensus mode for establishing consensus capabilities. For example, only information that has undergone authoritative review or authorization can be accepted by each consensus party as information to be agreed. The bridge mode is a prerequisite for the endorsement mode. To be specific, the bridge mode provides object materials for the third-party detection and measurement and forms operational requirements for the third-party.
- The endorsement mode serves as the foundational prerequisite for both the bridge mode and the consensus mode. To be specific, any functionality that fails third-party testing and measurement may be excluded from communication network infrastructure. Consequently, reliable trust links in the bridge mode and the trust consensus in the consensus mode cannot be implemented.

17.2.2. Equilibrium trust (equilibrium trust)

In a security domain design of 5G and previous generations of communication networks, there has always been a security domain: visibility and configurability of security (visibility and configurability of security (VI): the set of features that enable the user to be informed whether a security feature is in operation or not), which provide a capability of "being notified" to users.

In the centralized architecture of communication network, a dominant-passive network message flow mode between operators and users is determined. Security-related messages on a control plane are initiated by a network side, such as access network authentication and security context carrying and transfer. The network side exclusively defines and determines security capabilities on the network side, such as an encryption algorithm priority, an authentication occasion, and a session key update period. In scenarios with low network logic complexity and minimal security customization requirements, this purely network-side-dominant approach delivers rapid and effective execution. However, in scenarios featuring high logical complexity and diverse terminal forms and network device forms, such a rigid dominant-passive mode imposes pressure on accuracy, precision, and a speed of network-side decision-making, and cannot accommodate long-standing user demands for participatory customization of security features.

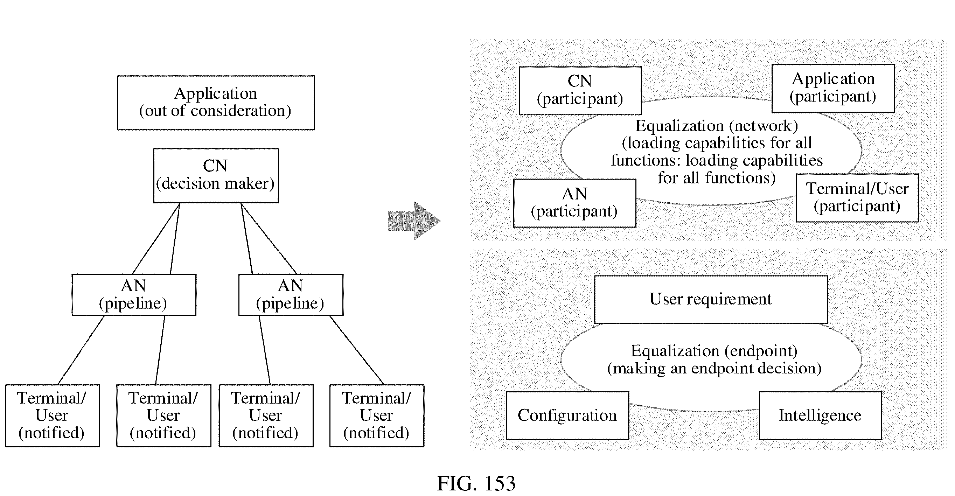

FIG. 153 is a diagram of transition from core-network-centric control to multi-party balanced trust. As shown in the figure, the trustworthiness capability is negotiated among a terminal side, an access network, a core network, and an application party, and an optimal conclusion is obtained through balancing based on/not based on centralized policy recommendation of network intelligence. The terminal side representing a user has higher decision-making rights. User sides are empowered with decision-making authority in customizing trustworthiness capabilities, advisory and execution capabilities of access networks in trustworthiness capability enforcement are enhanced, and dominance of core networks over trust relationship establishment between communicating parties is reduced. In this way, 6G users can proactively request, select, and determine their required trustworthiness capabilities. In addition, the access networks can provide localized trustworthiness services near endpoints while reducing security context transmission and request decision-making periods.

To establish trustworthiness connections between communicating parties without prior consensus on trustworthiness implementation methods, all parties need to have same trustworthiness capability units in advance, and these units need to have same external access interfaces and have same complete function sets (whether to enable these units can be considered separately). This guarantees capability-parity-based fair negotiation of trustworthiness capabilities between communicating parties. The trustworthiness capability units need to feature minimalist external interfaces and internally complete functionality with evolvable attributes.

- Terminal side

- Ability to proactively trigger trustworthiness negotiation and determine trustworthiness negotiation conclusions under specific conditions.

- Provide complete trustworthiness functions, including all functions applicable to terminals in the three features: information and cyberspace security, privacy protection, and resilience, where the trustworthiness functions satisfy all attributes in specific fine-grained function definitions.
- Users and terminal devices/virtual functions that represent the users establish strong binding relationships, where when a same physical user entity adopts different logical user identities, the binding relationships are different with authorization isolation/access.
- Terminals need to maintain trustworthiness under high-risk assumptions, including hardware and software trustworthiness, to ensure that storage, computing, and access of specific device information is trusted.

• Access network

- Ability to participate in trustworthiness negotiation. For the trust context personalized by the near-end user, the access network has higher negotiation and decision-making rights than that of the core network, and may adopt or not adopt policies recommended by the core network, such as access authentication for independent special events, local confidentiality and integrity protection policies, and privacy protection-based information processing. For basic security policies that require centralized decision-making, a unified policy issued by the core network needs to be complied with, such as initial registration of new users and network-wide collaborative defense.

- Provide complete trustworthiness capabilities, including all functions applicable to the access network in the three features: information and cyberspace security, privacy protection, and resilience, where the trustworthiness functions satisfy all attributes in specific fine-grained function definitions.

- All access network devices need to maintain intrinsic trustworthiness under "unattended operation" assumptions, including hardware and software trustworthiness, to ensure that storage, computing, and access of specific device information is trusted.

- Access network devices need to meet lightweight trustworthiness requirements when storage and computing resources are limited.

Optionally, (if) a satellite is used as a mode of a direct connection to a terminal, a corresponding access function part of the satellite also needs to meet the foregoing requirements, and needs to be migrated to a satellite communication protocol stack in a specific protocol and implementation. Other non-terrestrial communication access networks need to meet same requirements.

• Core network

- Ability to participate in trustworthiness negotiation and adopt different trustworthiness negotiation decisions in different scenarios. The core network has absolute control and decision-making rights over network-wide unified analysis and policy enforcement. For nonedge-personalized audit-critical information exchanged between public land mobile networks (public land mobile networks, PLMNs), the core network has complete archival rights. For trustworthiness services that need to be accessed through interaction between edge subnets, the core network has access and scheduling rights.
- Provide complete trustworthiness capabilities, including all functions applicable to the core network in the three features: information and cyberspace security, privacy protection, and resilience, where the trustworthiness functions satisfy all attributes in specific fine-grained function definitions.
- Provide intrinsic trustworthiness under the assumption of exposed core network boundaries, including hardware and software trustworthiness, to ensure that storage, computing, and access of specific device information is trusted.

• Management network

- Comply with an operator-customized centralized authorization access control mechanism, and strictly enforce security configurations, updates, and access operations for networks with high-security-level requirements.

- Feature hierarchical trust authorization capabilities across central and edge modes, to match requirements such as different access privileges and reporting and decision-making levels, and establish quick security management decision-making channels.

17.2.3. Decoupled trust (decoupled trust)

Communication network security technologies are interdisciplinary technologies of a communication network and security. From a 3GPP standardization perspective, security capabilities of the communication network are usually tightly coupled with other network capabilities, and security messages are embedded in control plane messages. For example, access authentication and key negotiation are embedded in a user registration procedure, terminal-side security capability reporting is embedded in a terminal capability reporting set, and private network authentication is embedded in a private network access procedure. The tight coupling between the security and communication capabilities ensures efficient utilization of network resources, enabling simultaneous communication establishment and security establishment.

Due to a plurality of factors, the tight coupling of communication network technologies and security technologies has resulted in a communication-dominant, security-supplementary paradigm. Consequently, development of security capabilities in communication networks faces multifaceted constraints. For example, due to tight coupling between security protocols and other protocols, modification on the security protocols usually involves a plurality of network functions in a procedure. When network functions need to be modified, it is difficult to objectively describe necessity of security reconstruction unless vulnerabilities have been clearly identified in the industry. When network vulnerabilities are exploited, and attacks are about to occur or have occurred, it is challenging to quickly upgrade security capabilities because security capabilities embedded in different network functions are different.

The original intent behind establishing communication network security standards was to tailor highly efficient security services specifically for communication networks, offering greater flexibility than generic security solutions in areas such as risk identification, transfer, and mitigation. Therefore, security capabilities need to be continuously evolved. However, the tight coupling relationship restricts evolution of the security capabilities and the original intent cannot be achieved. This even leads to carrying forward security risks from previous generations into subsequent generations of networks, compromising security of at least two consecutive network iterations and making dimensionality-reduction attacks difficult to eradicate.

There is a need for a solution to the problem that security technologies need to serve the communication network in depth and be independent of continuous evolution of the communication network. This application adopts a method for decoupling between security capabilities and network capabilities to address the foregoing conflict. To evolve from security to trustworthiness, a method for decoupling between trustworthiness and network capabilities is adopted, enabling continuous advancement and sustained state-of-the-art performance in a trustworthiness capability.

- The trustworthiness capabilities include three parts: Engine, Gear, and CI (credential infrustructure). The two parts, namely, the Gear and the Engine, jointly implement the trustworthiness capabilities. The CI provides required credentials (credentials) and related security materials (security materials) for execution of the Engine and the Gear, such as full lifecycle management of symmetric and asymmetric keys, and binding management between keys and identities (at varying granularities such as users, services, or sessions).
- The Gear is a unit for negotiating, executing, and self-evolving network trustworthiness capabilities.

- Enabler (enabler) module in the Gear

A trusted storage environment enabler module, a foundational cryptographic enabler module, a blockchain enabler module, and a trust measurement enabler module are enabler modules at a current stage. (1) The trusted storage environment ensures secure storage of a root of trust, high-security-level data, and function logic. (2) The foundational cryptographic enabler module includes atomic implementations of symmetric, asymmetric, hash algorithms along with their corresponding protocols, while maintaining extensibility. (3) The blockchain enabler module executes transaction consensus, chain communication, and smart contracts, while featuring open capabilities that allow customization parties to construct, by invoking the enabler module, business-specific blockchains tailored to concrete business logic, such as a distributed public key infrastructure (distributed public key infrastructure, DPKI) chain, an identity management (identity management, IDM) chain, and a network behavior record chain. (4) The measurement enabler module provides a trust measurement function based on a measurement and comparison mode. This function relies on a trusted root, trusted boot, and execution logic in the trusted storage environment, and starts working based on different trust measurement triggering occasions. The function may directly submit a measurement value and a measurement determining result to an operator, a user, and an application party or a third party that requires the information, may implement consensus storage of the information by using a blockchain, or may perform storage and authorized access in a centralized manner. (5) Any trustworthiness enabler module may be added.

- The Gear needs to support a hot-plugging capability for module additions, ensuring comprehensiveness and updatability of the trustworthiness enabler module.
- TruA(trustworthiness association) function: The Gear implements a trustworthiness alliance by performing trustworthiness capability negotiation with a communication peer end. TruA includes all capability formats and parameters that may be used by the equipment in a specific trustworthiness negotiation process, and is a unique external channel of the Gear.
- Mana_G (management_gear) function: provides an internal management function of the Gear, including Gear attributes, upgrade, module hot-plugging management, monitoring, and warning, and the like.
- FPoint_G (flowpoint_gear): A scheduling point provides a queue scheduling function between modules of the Gear to ensure a correct sequence of mutual access between functions in the Gear.
- The Engine is a central decision-making, management, and scheduling unit for network trustworthiness capabilities, and is responsible for developing a basic security policy and sending the basic security policy to communication parties, and implementing security management functions such as establishment, maintenance, and update.
- Strategy function: refers to a capability of developing a security policy (security policy) by analyzing network behavior data. After behavior information is collected, an AI capability of a 6G network may be used to analyze and output policies. Alternatively, a third-party professional service capability may be integrated, to anonymize behavior data and then send the data to a third party for analysis and policy output. Alternatively, a third-party service module (such as Defense solution) is embedded into the Engine and internalized as a part of the Engine. The trustworthiness policy output by the Engine is output by a task translator.
- LA (ledger anchor) functions: Different from a security management function of a network management plane, the LA function is for creating and managing trust connections related to service procedures online and serve services created based on blockchains in consensus mode, including blockchain creation, multi-chain communication, and the like.
- FPoint_E (FlowPoint _Engine) function: A scheduling point provides a queue scheduling function for function execution modules in the Engine to ensure a correct sequence of mutual access between functions in the Engine.

Task translator function: is a communication interface between the Engine and an external network function, is responsible for receiving a task from a management function or other network functions, translates the task, performs task flow decomposition in sequence, and sends the task to FPoint_E for execution.

- The CI (Credential Infrustructure) is independent of the Gear and the Engine, and includes two types of key infrastructure: symmetric-based and asymmetric-based, including generation, storage, and distribution of keys, and generation, issuance, and management of certificates or other credentials, for use by the Gear and the Engine.
- The trustworthiness capabilities adopt standardized external interfaces. The trustworthiness capabilities provide standardized invoked interfaces. The interfaces need to be extended to support invocation of the trustworthiness capabilities while meeting requirements of a unified capability invocation interface in the network.
- The trustworthiness capabilities ensure internal function completeness and evolvability, allowing on-demand insertion, activation, update, or deletion of enablers/functions within the trustworthiness capabilities. For example, when a service requires only a 6G blockchain service, the Gear provides only a 6G blockchain node capability, that is, a 6G blockchain node with a unified trustworthiness protocol and interface, to indicate that a blockchain is a blockchain that meets a 6G unified communication protocol.

17.2.4. 6G trustworthiness as a service

17.2.4.1. 6G blockchain service

A 6G blockchain (blockchain, BC) is a distributed ledger created by using cryptographic algorithms and dynamically built based on 6G end-to-end network infrastructure to serve 6G service requirements, executes 6G-unified protocol stacks and communication protocols, enables flexible deployment based on 6G network characteristics, supports a plurality of chain architectures, block structures, and consensus algorithms, and is one of the "trustworthiness-as-a-service" capabilities in 6G.

The blockchain enabler module executes transaction consensus, link communication, and smart contracts, while featuring open capabilities that allow customization parties to construct, by invoking the enabler module, business-specific blockchains tailored to concrete business logic, such as a DPKI chain, an IDM chain, and a network behavior record chain. Specifically, the 6G blockchain has the following features:

- The 6G communication network is used as the underlying infrastructure of a blockchain platform. The 6G BC is divided into a logical management function (LA) and an enabler entity, BC enabler. The LA manages blockchains, manages BC enabler registration, creates chains, and activates the BC enabler. The BC enabler is deployed on each communication network entity. Each entity may select a BC enabler with a different capability. The BC enabler may alternatively be deployed in the communication network as an independent node.

- The 6G BC in the communication network serves 6G services, and a secure, mutually trusted sharing platform is provided for upper-layer services based on the 6G BC. The LA receives a request for blockchain creation from a management plane or another service. A BC enabler deployed with a blockchain and a corresponding capability are selected through request analysis. The BC enabler is activated and configured to create a chain serving the service.

17.2.4.2. Remote attestation service in 6G

The trustworthiness capabilities include trustworthiness remote attestation and measurement capabilities, which combine a trust measurement technology with the 6G network. In addition, conventional single-point measurement and direct remote measurement are extended to network measurement and trust measurement services. In addition, device security measurement is included in the communication network, expanding security trustworthiness from identity authentication to device trustworthiness.

The measurement enabler module provides a trust measurement function that is based on a measurement and comparison mode. This function relies on a trusted root, trusted boot, and execution logic in the trusted storage environment, and starts working based on different trust measurement triggering occasions. The function may directly submit a measurement value and a measurement determining result to an operator, a user, and an application party or a third party that requires the information. Alternatively, the function implement consensus storage of the information by using a blockchain, or may perform storage and authorized access in a centralized manner. The measurement service provides measurement services for communication network entities. The communication network entities measure a communication peer node through a measurement service, with no need to establish a point-to-point trust measurement procedure with each communication peer.

18. E2E procedure deduction

18.1. Connection procedure deduction

18.1.1. Initial access

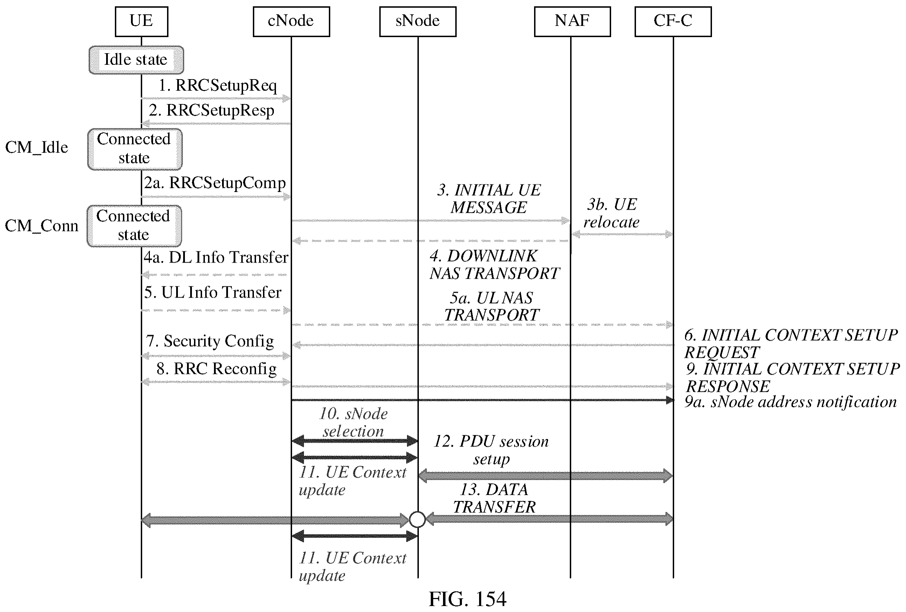

FIG. 154 is a diagram of an E2E initial access procedure. A detailed procedure is as follows:

1: A UE in a connection management idle (connection management-idle, CM-idle) state sends an RRC setup request message (RRCsetupReq) to a cNode, where the RRC setup request message is for requesting to set up an RRC connection.
2: The cNode returns an RRC setup response message (RRCsetupRes) message to the UE.
2a: The UE sends an RRC setup complete message (RRCsetupComp) to the cNode.

In 2 and 2a, the cNode completes a TRC setup process, and the UE enters a CM connected state.

3: A $1^{st}$ NAS message (initial UE message in the figure, initial UE message) of the UE with piggyback in trcsetupcomplete is sent to an NAF.
3b: The NAF allocates (relocate), based on the UE initial message, a corresponding CF-C to the UE.
4/4a/5/5a: Other NAS messages may be exchanged between the UE and the CF-C.

For example, in step 4, the NAF and the cNode transmit a downlink (downlink, DL) NAS message. In step 4a, the cNode performs DL information transfer (that is, DL Info Transfer) to the UE. In step 5, the UE performs uplink (uplink, UL) information transfer (that is, UL Info Transfer) to the cNode. In step 5a, the cNode performs UL NAS transfer (that is, UL NAS transport) to the CF-C.

6: The CF-C prepares UE context data (including a PDU session context, a security key, a UE radio function, a UE security function, and the like), and sends an initial context setup request (initial context setup request) message to the cNode.
7: The cNode completes a security configuration (security configuration) for the UE.
8: The cNode completes an RRC reconfiguration (RRC reconfiguration) for the UE.

9: The cNode sends an initial context setup response (that is, initial context setup response) to the CF-C.

The initial context of the UE is set up by performing steps 6 to 9.

9a: The cNode notifies the CF-C of an sNode address (sNode address notification).
10: The cNode sends a selection result (that is, a specific sNode that serves the UE) to the sNode (specifically, an sNode that is selected by the cNode and that provides a service for the UE, which is referred to as a serving sNode for short).
11: The cNode transfers a UE context to the corresponding sNode (the serving sNode), that is, the UE context update (UE context update).
12/13: The sNode establishes a PDU session of the UE with the CF-U, and performs data transmission.

Subsequently, if the cNode changes a context of the UE, the cNode notifies the corresponding sNode (that is, the serving sNode) periodically or through event-triggering, as shown in another step 11 in FIG. 154, that is, the UE context is updated.

18.1.2. Network-initiated service request procedure (paging)

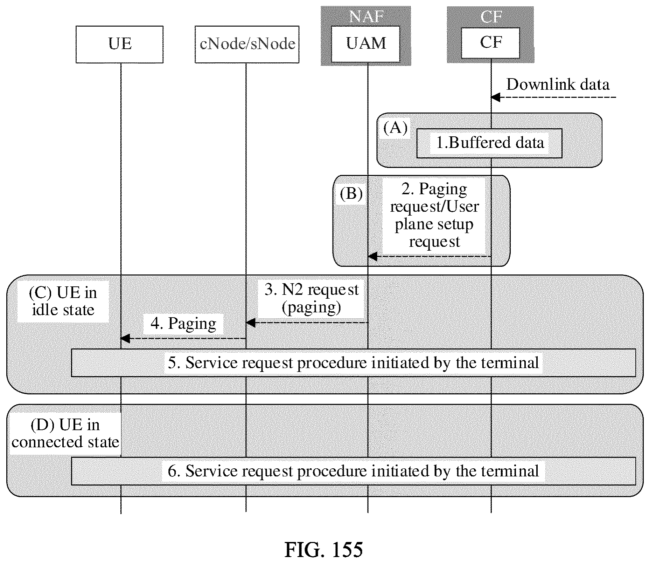

FIG. 155 is a diagram of a service request procedure initiated by a network side. A detailed procedure is as follows:

A: A CF (specifically, a CN UP in the CF) receives downlink data and buffers the downlink data. The CF determines, based on a status of a UE, whether to perform step B or step C.
B: The CF determines, based on a CM status of the UE, whether to send a paging request to an NAF (corresponding to UAM in 5G) or creating a user plane connection message.
C: If the UE is in a CM-idle state, a CF-C needs to page the UE. The CF-C sends a paging request to a RAN through the NAF, and the RAN pages the UE. The NAF forwards paging for the UE by using an N2 request message. After receiving the paging message, the UE initiates a service request procedure to a network.

Note: If the connectivity architecture 1 provided in this application is used, the RAN herein is a cNode. If the connectivity architecture 2 provided in this application is used, the RAN herein is an sNode.
D: If the UE is in a CM-connected state, the UE does not need to be paged. The CF only needs to forward PDU session information to the cNode, and the cNode selects a corresponding sNode and establishes a user plane for a user. Subsequently, the UE may initiate a service request procedure to a network.

18.1.3. Data receiving and sending procedure

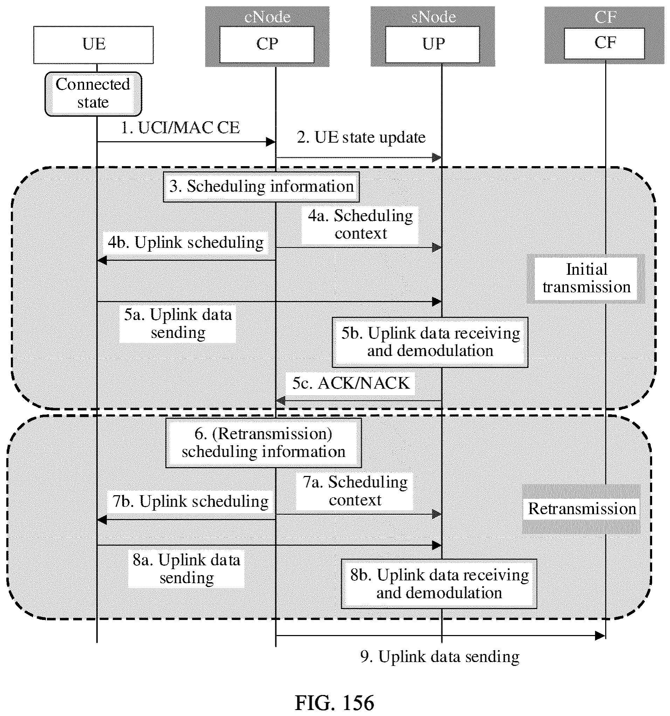

FIG. 156 is a diagram of a data receiving and sending procedure.

1: A UE sends uplink control information (uplink control information, UCI) or a medium access control-control element (medium access control-control element, MAC CE) request to a cNode.
2: The cNode (specifically, a CP of the cNode) forwards a context requirement of the UE to an sNode.
3 4a, and 4b: The cNode allocates a communication resource to the UE, sends a scheduling context to the sNode, and performs uplink scheduling on the UE. The scheduling context carries information about scheduling time.
5: The UE sends uplink data to the sNode, and the sNode receives and demodulates the data at the corresponding scheduling time, and feeds back a data demodulation result acknowledgment (acknowledgment, ACK)/negative acknowledgment (negative acknowledgment, NACK) to the cNode.

Steps 3 to 5c are initial transmission of the uplink data of the UE.
Optionally, in 6, 7a, and 7b, the cNode determines, based on an ACK/NACK feedback result, whether to allocate a retransmission resource. If retransmission is required, the cNode allocates, to the UE, a communication resource for retransmission, notifies the sNode of a scheduling context, and performs uplink scheduling on the UE.

8a and 8b: The UE retransmits the uplink data, and the sNode receives and demodulates the data.
9: The sNode forwards the uplink data of the UE to a CF-U.

Steps 6 to 9 are a retransmission of the uplink data of the UE.

18.2. Task procedure deduction

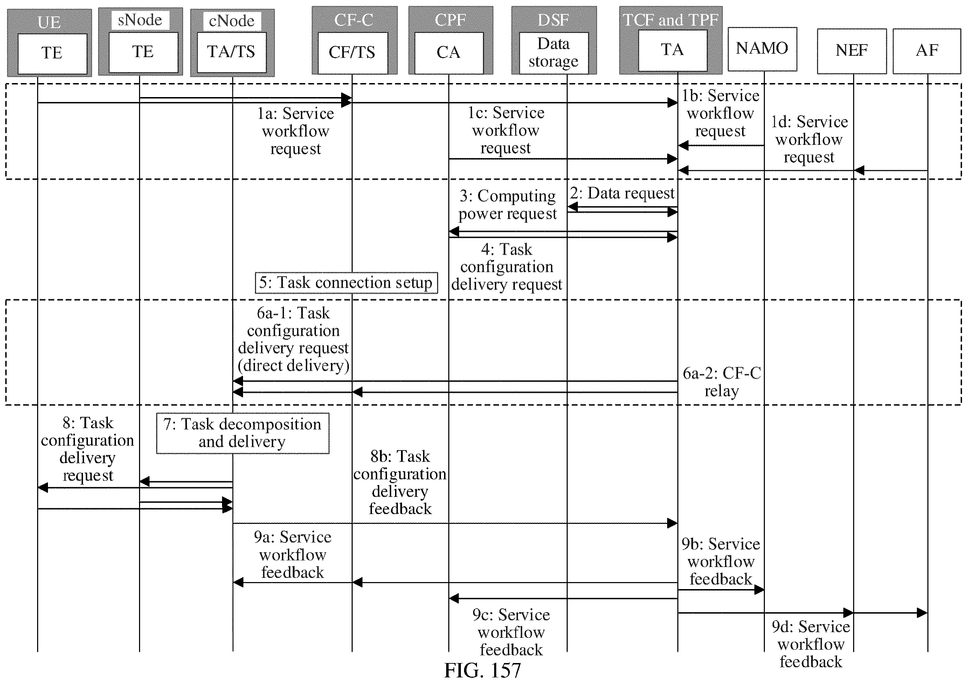

FIG. 157 is a diagram of a task delivery procedure, where a task is from a CN to a RAN.

1: A task anchor TA receives a service workflow request.

Optionally, the service workflow request may be initiated by a UE (for example, 1a), a NAMO (for example, 1b), a CPF (for example, 1c), or a third-party AF (for example, 1d) to the TA. The third-party AF may initiate a request to a network side of an operator via a network exposure function (network exposure function, NEF). The NEF sends a task delivery request to the task management function TA. The TA is a logical function of a TCF, and the NEF and the TCF may be deployed in a NAF in a centralized manner.

2 and 3: The TA sends a data request and a computing request to a DSF and a CA based on task content. A connection management related function in the CF works with the CA to manage computing and connectivity resources.
4: The TA transfers a task configuration delivery request of an AF to a CF to which a task-related UE belongs.
5: The CF establishes a task-related connection to a corresponding target UE based on the task configuration delivery request of the AF.
6: After the CF establishes the task connection to the UE, the TCF functions as a TA to send a task configuration request to the TA (cNode).

Optionally, there may be a direct connection interface or there may be no direct connection interface (message forwarding is performed via the CF, or forwarding is performed via the TCF and an sNode) between the TCF and the cNode, as shown by 6a-1 and 6a-2 separately.

7 and 8: After receiving a task from the TCF, the cNode decomposes the task and further delivers the task to a TE (the sNode and/or the UE).
9: The UE and the RAN send a feedback message of the service workflow request to a service workflow initiation node (the UE, the NAMO, the CPF, or the AF) via the CF depending on whether the task is executed. It should be understood that 9a to 9d are feedback corresponding to 1a to 1d respectively.

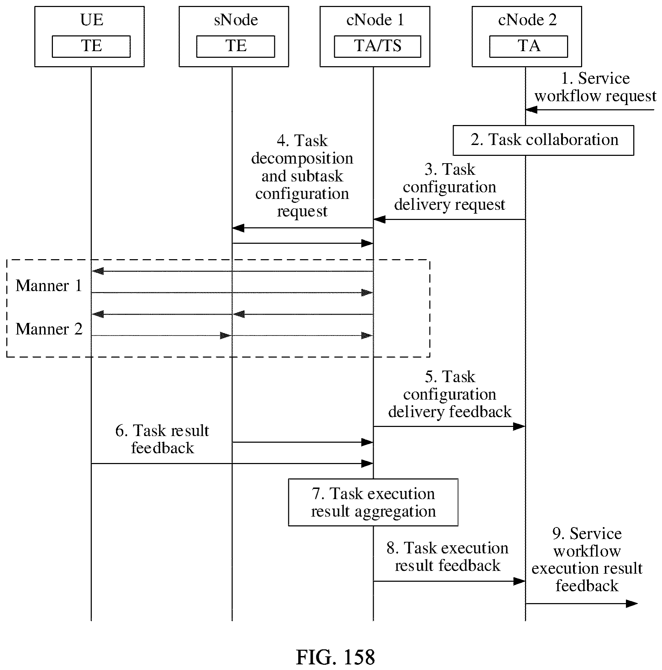

FIG. 158 is another diagram of a task delivery procedure, which is specifically a task delivery procedure between RANs.

1: A task anchor TA receives a service workflow request.

Optionally, the service workflow request may be initiated by a UE, a NAMO, a CPF, or a third-party AF to the TA. The third-party AF may initiate a request to a network side of an operator via an NEF. The NEF sends a task delivery request to the task management function (TA). The TA functions as a logical function of a cNode.

2 and 3: The TA (corresponding to a cNode 2) requests, based on task content, a peripheral device to perform task collaboration. For example, the cNode 2 requests a cNode 1 to perform task collaboration.
4: The cNode (for example, the cNode 1) evaluates whether to accept the collaborative task; and if the collaborative task is accepted, may deliver, to an sNode and/or a UE of the cNode, a subtask obtained by decomposing the collaborative task.

Optionally, a configuration by the cNode for the UE may be directly configured for the UE, for example, in a manner 1, or may be forwarded to the UE via the sNode, for example, in a manner 2.

5: The cNode 1 sends the task collaboration result to the cNode 2.
6. A TE (the UE and the sNode) feeds back a task execution result to the TA (the cNode 1).
7: Aggregate subtask execution results of all TEs.
8. The cNode 1 sends a summarized task execution result to the cNode 2.
9. The cNode 2 feeds back a service workflow execution result to a trigger source.

The foregoing describes the method embodiments in embodiments of this application, and the following describes corresponding apparatus embodiments.
To implement functions of a communication apparatus (for example, the cNode, the sNode, or the UE) in embodiments of this application, each communication apparatus may implement a corresponding function in a form of a hardware structure, a software module, or a combination of a hardware structure and a software module.

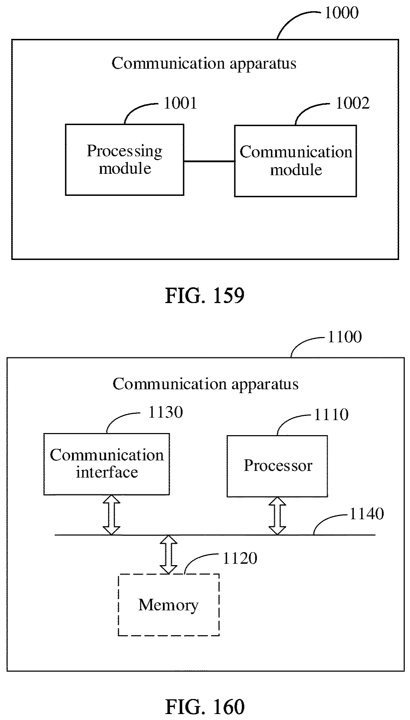

Refer to FIG. 159. FIG. 159 shows a communication apparatus 1000 according to this application.

As shown in FIG. 159, the communication apparatus 1000 includes a processing module 1001 and a communication module 1002. The communication apparatus 1000 may be a terminal device, or may be an apparatus that is used in the terminal device and that can implement a corresponding function of the terminal device, for example, a chip, a chip system, or a circuit. Alternatively, the communication apparatus 1000 may be a network device, or may be an apparatus that is used in the network device and that can implement a corresponding function of the network device, for example, a chip, a chip system, or a circuit. For example, the network device may be a cluster node (cNode) and/or a serving node (sNode) in the method embodiments of this application.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation on the terminal device or the network device in any one of the foregoing method embodiments. A component configured to implement a receiving function in the communication module may be considered as a receiving unit, and a component configured to implement a sending function in the communication module may be considered as a sending unit. In other words, the communication module includes the receiving unit and the sending unit.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/hardware circuit, the communication module may be an input/output circuit and/or a communication interface, and perform an input operation (corresponding to the foregoing receiving operation) and an output operation (corresponding to the foregoing sending operation). The processing module is an integrated circuit, a logic circuit, or the like.

Division into the modules in this application is an example, is merely division into logical functions, and may be other division during actual implementation. In addition, functional modules in examples of this application may be integrated into one module, each of the modules may exist alone physically, or two or more modules may be integrated into one module. The integrated module may be implemented in a form of hardware, or may be implemented in a form of a software function module, or a function module combining hardware and software

Refer to FIG. 160. This application further provides a communication apparatus 1100.

Optionally, the communication apparatus 1100 may be a chip or a chip system. Optionally, in this application, the chip system may include a chip, or may include a chip and another discrete component.

The communication apparatus 1100 may be configured to implement a function of any network element (for example, a terminal, a cNode, or an sNode) in the communication system described in the foregoing examples. The communication apparatus 1100 may include at least one processor 1110. Optionally, the processor 1110 (or a processing apparatus) is coupled to a memory. The memory may be located in the communication apparatus, the memory may be integrated with the processor, or the memory may be located outside the communication apparatus. For example, the communication apparatus 1100 may further include at least one memory 1120. The memory 1120 stores a computer program, instructions, and/or data necessary for implementing any one of the foregoing examples, a protocol stack of the foregoing corresponding network element (for example, the terminal, the cNode, or the sNode), and the like. The processor 1110 may execute the computer program, the instructions and/or the data, the protocol stack, and the like stored in the memory 1120, to complete a corresponding function of any network element (for example, the cNode/sNode or the UE) in any one of the foregoing embodiments.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may also be an input/output circuit, and may input information (or referred to as receiving information) and/or output information (or referred to as sending information). The processor may be an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, the processor 1110, the memory 1120, and the communication interface 1130 are connected to each other by using a bus 1140. For ease of representation, only one line is used to represent the bus in FIG. 160, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

In addition, this application further provides a terminal apparatus, including a control plane protocol stack and a data plane protocol stack.

The control plane protocol stack includes one of the following:

the control plane protocol stack includes a first sublayer, the first sublayer supports transmission of control signaling of a first function, and the first function includes one or more of computing, data, intelligence, and trustworthiness; or
the control plane protocol stack includes a first sublayer, the first sublayer supports transmission of control signaling of a first function and a routing function, and the first function includes one or more of computing, data, intelligence, and trustworthiness; and
the data plane protocol stack of the first function supports an arbitrary routing mechanism.

In addition, this application provides a communication apparatus, including at least one processor. The at least one processor is coupled to at least one memory, and the at least one processor is configured to execute a computer program or instructions stored in the at least one memory, so that the communication apparatus has a function of the RAN apparatus (or the base station, the access network device, the AN device, or the like) or the terminal apparatus in any one of the foregoing embodiments.

This application further provides a chip, including a processor and a communication interface. The communication interface is configured to receive to-be-processed information and/or data, and send the to-be-processed information and/or data to the processor. The processor is configured to process the to-be-processed information and/or data, so that a communication apparatus in which the chip is installed has a function of the RAN apparatus or the terminal apparatus in any one of the foregoing embodiments.

This application further provides a computer-readable storage medium. The computer-readable storage medium stores computer instructions. When the computer instructions are run on a computer, a function of the RAN apparatus or the terminal apparatus in any one of the foregoing embodiments is implemented.

This application further provides a computer program product, where the computer program product includes computer program code. When the computer program code is run on a computer, a function of the RAN apparatus or the terminal apparatus in any one of the foregoing embodiments is implemented.

This application further provides a wireless communication system, including the RAN apparatus in any one of the foregoing embodiments. Optionally, the terminal apparatus in any one of the foregoing embodiments is further included.

For example, the RAN apparatus in the foregoing apparatus embodiments may include the cNode and/or the sNode in embodiments of this application, or a module/device/apparatus/unit that has a corresponding function of the cNode and/or the sNode.

All or some of the technical solutions provided in this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device (for example, a server or a data center) that integrates one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

In the descriptions of embodiments of this application, the term "a plurality of" means two or more than two unless otherwise specified. "At least one item (piece) of" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In embodiments of this application, the word "example", "for example", or the like is for representing giving an example, an illustration, or a description.

Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely schematic. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A radio access network RAN architecture, deployed in a radio access network RAN and comprising a cluster node and a serving node, wherein

   the cluster node is configured to provide a region-level centralized collaboration function for a plurality of serving nodes and a cross-region collaboration function between cluster nodes; and
   the serving node is configured to provide task scheduling and executing functions.

2. The RAN architecture according to claim 1, wherein the cluster node provides a control plane function for connectivity on an air interface, and the serving node provides a user plane function for connectivity on the air interface; or
   the cluster node does not provide a function for connectivity on an air interface, and the serving node provides a control plane function and a user plane function for connectivity on the air interface.

3. The RAN architecture according to claim 1 or 2, wherein the RAN architecture is a nonservice based architecture SBA based architecture;
   the non-SBA based architecture comprises:

   the cluster node and the serving node are connected to each other through a Y1 interface;
   the cluster node and another cluster node are connected to each other through a Y2 interface; and
   the serving nodes are interconnected through a Y3 interface.

4. The RAN architecture according to any one of claims 1 to 3, wherein the cluster node is connected to a core network through one or more of the following interfaces:

   connected to a task control function TCF and a task processing function TPF of the core network through a T2 interface;
   connected to a network access function NAF of the core network through a T3 interface; and
   connected to a connectivity function-control CF-C of the core network through a T4 interface.

5. The RAN architecture according to any one of claims 1 to 4, wherein the serving node is connected to the core network through one or more of the following interfaces:

   connected to the network access function NAF of the core network through a T5 interface;
   connected to the connectivity function-control CF-C of the core network through a T6 interface; and
   connected to a connectivity function-user CF-U of the core network through a T7 interface.

6. The RAN architecture according to claim 1 or 2, wherein the RAN architecture is an SBA based architecture; and
   the SBA based architecture comprises:

   the cluster node providing a first service-based interface (S-c); and
   the serving node providing a second service-based interface (S-s), wherein
   the first service-based interface and the second service-based interface are connected to a service bus of the RAN.

7. The RAN architecture according to any one of claims 3 to 5, wherein the RAN architecture comprises one of the following connectivity architectures:

   a first connectivity architecture, wherein a control plane CP and a user plane UP of an air interface of the first connectivity architecture are separated, the cluster node has a CP function for connectivity, and the serving node has a UP function for connectivity; and
   a second connectivity architecture, wherein a CP and a UP of an air interface of the second connectivity architecture are not separated, the cluster node does not provide a connectivity function, and the serving node provides a CP function for connectivity and a UP function for connectivity.

8. The RAN architecture according to claim 6, wherein the RAN architecture comprises a third connectivity architecture, and a CP and a UP of an air interface of the third connectivity architecture are separated;

the cluster node provides the first service-based interface, wherein the first service-based interface is for invoking by a core network element to transmit control plane signaling for connectivity, and the first service-based interface is further for invoking by another cluster node to provide a mobility signaling function; and
the serving node provides the second service-based interface, wherein the second service-based interface is for invoking by a core network element to transmit user plane data, and the second service-based interface is further for invoking by another serving node to provide a mobility data forwarding function, wherein data forwarding between serving nodes is controlled by the cluster node.

9. The RAN architecture according to claim 6, wherein the RAN architecture comprises a fourth connectivity architecture, and a CP and a UP of an air interface of the fourth connectivity architecture are not separated;

the serving node provides the second service-based interface, wherein the second service-based interface is for invoking by a core network element to transmit control plane signaling for connectivity and user plane data; and
the second service-based interface is further for invoking by another serving node, to provide mobility signaling exchange and data forwarding functions.

10. The RAN architecture according to any one of claims 3 to 5, wherein the RAN architecture is a task architecture for a first function, and the first function comprises one or more of computing, data, intelligence, and trustworthiness; and the task architecture comprises:

the cluster node, configured to provide a control plane function and a data processing function of the first function; and
the serving node, configured to provide a part of control plane functions and a part of user plane functions of the first function, wherein the user plane functions comprise a task scheduler TS and a task executor TE, wherein the cluster node and the serving node perform task management through the Y1 interface, the cluster nodes perform task negotiation through the Y2 interface, the cluster node and a core network element perform task negotiation across network domains through the T2 interface, and the serving nodes perform task signaling or task data exchange between TEs through the Y3 interface.

11. The RAN architecture according to claim 6, wherein the RAN architecture is a task architecture for a first function, and the first function comprises one or more of computing, data, intelligence, and trustworthiness; and the task architecture comprises:

the cluster node provides the first service-based interface, configured to transmit task negotiation signaling and task data across network domains, wherein the first service-based interface is further configured to be invoked by another cluster node, to transmit task negotiation signaling and task data across regions; and
the serving node provides the second service-based interface, which is used by the cluster node to perform task control signaling exchange and task data transmission for the serving node, wherein the second service-based interface is further configured to be invoked by another serving node, to perform task data transmission between serving nodes.

12. The RAN architecture according to any one of claims 3 to 5, wherein the RAN architecture further comprises a trustworthiness engine TWE and a trustworthiness gear TWG, the cluster node comprises the TWE and the TWG, and the serving node comprises the TWG, wherein

the TWE is configured to: provide global decision-making and management information of a trustworthiness plane for a network, provide a trustworthiness policy input for the TWG, and activate and manage a trustworthiness service; and
the TWG is configured to receive configuration and management of the TWE to execute a trustworthiness capability.

13. The RAN architecture according to claim 6, wherein the RAN architecture further comprises a trustworthiness enabler function TEF and a trustworthiness gear function TGF, and the TEF and the TGF are separately mounted on the service bus of the RAN;

the TEF is configured to: provide global decision-making and management information of a trustworthiness plane for a network, provide a trustworthiness policy input for the TGF, and activate and manage a trustworthiness service; and the TGF receives configuration and management of the TEF to execute a trustworthiness capability;
the TEF provides a third service-based interface (S-e); and
the TGF provides a fourth service-based interface (S-g), wherein
both the third service-based interface and the fourth service-based interface provide one or more of the following functions:
trustworthiness service invoking, trustworthiness information subscription, and trustworthiness function management.

14. The RAN architecture according to any one of claims 1 to 13, wherein the RAN supports connectivity and the first function excluding the connectivity, and the first function comprises one or more of computing, data, and intelligence; and
for a relationship between the connectivity and the first function, an air interface protocol stack is designed by using one of the following options:

option 1: the first function is integrated into a control plane of the connectivity and a user plane of the connectivity;
option 2: the first function is integrated into the control plane of the connectivity to form a converged control plane, the user plane of the connectivity remains unchanged, and an independent task data plane for the first function is added;
option 3: a task control plane and a task data plane are added for the first function, and the control plane and the user plane of the connectivity remain unchanged; and
option 4: an independent computing plane, data plane, and intelligence plane are added for the first function, and the control plane and the user plane of the connectivity remain unchanged.

15. The RAN architecture according to any one of claims 3 to 5, wherein the Y1 interface comprises a Y1 user plane interface Y1-U and a Y1 control plane interface Y1-C;

the Y2 interface comprises a Y2 user plane interface Y2-U and a Y2 control plane interface Y1-C;
the Y3 interface comprises a Y3 user plane interface Y3-U and a Y3 control plane interface Y3-C;
the T2 interface between the cluster node and the core network comprises a T2 user plane interface T2-U and a T2 control plane interface T2-C, wherein T2-U is an interface between the cluster node and the task processing function TPF of the core network and is configured to transmit task data, and T2-C is an interface between the cluster node and the task control function TCF of the core network and is configured to transmit task signaling;
the T3 interface between the cluster node and the core network comprises a T3 control plane interface T3-C, wherein T3-C is an interface between the cluster node and the network access function NAF of the core network and is configured to transmit connectivity signaling;
the T4 interface between the cluster node and the core network further comprises a T4 control plane interface T4-C, configured to transmit connectivity signaling or transparently transmit task signaling;
the T5 interface between the serving node and the core network further comprises a T5 control plane interface T5-C, configured to transmit connectivity signaling or transparently transmit task signaling;
the T6 interface between the serving node and the core network further comprises a T6 control plane interface T6-C, configured to transmit connectivity signaling or transparently transmit task signaling; and
the T7 interface between the serving node and the core network further comprises a T7 user plane interface T7-U, configured to transmit connectivity data or transparently transmit task data.

16. The RAN architecture according to any one of claims 1 to 13, wherein the RAN supports connectivity and the first function excluding the connectivity, and the first function comprises one or more of computing, data, and intelligence; and
an end-to-end protocol stack uses one of the following options:

option 1: the first function is integrated into a control plane of the connectivity and a user plane of the connectivity;
option 2: the first function is integrated into the control plane of the connectivity to form a converged control plane, the user plane of the connectivity remains unchanged, and an independent task data plane for the first function is added;

option 3: a task control plane and a task data plane are added for the first function, and the control plane and the user plane of the connectivity remain unchanged; and
option 4: an independent computing plane, data plane, and intelligence plane are added for the first function, and the control plane and the user plane of the connectivity remain unchanged.

17. The RAN architecture according to any one of claims 1 to 16, wherein a protocol layer of the air interface comprises a layer 2, and the layer 2 comprises a sublayer that supports the first function.

18. The RAN architecture according to claim 17, wherein the layer 2 comprises at least one of the following sublayers:

a task resource scheduler TRS sublayer;
a task packet data convergence protocol T-PDCP sublayer;
a task service data adaptation protocol T-SDAP sublayer, wherein
the TRS sublayer provides a logical channel for an RLC sublayer, the T-PDCP sublayer provides a radio bearer for the T-SDAP sublayer, and the T-SDAP provides a quality of service QoS flow for a task and connectivity of the core network;
a task resource data TRD sublayer, wherein the TRD sublayer comprises one or more of the following functions: artificial intelligence AI training, AI inference, and AI model processing, protocol mode parsing and local collaboration parameter processing, procedure execution of a collaboration pattern, and receiving, sending, and processing of collaboration interaction information;
a task PDU sublayer for a task data plane, wherein the task PDU sublayer is for data transmission of a trustworthiness service between a terminal, the RAN, and the core network;
an RCSP sublayer for a computing plane, functions of the RCSP sublayer comprise native computing resource addressing, computing data routing and forwarding, computing session identification, and computing session priority;
a DFCP sublayer for an independent data plane, configured to process control signaling and service data of the independent data plane;
an ETP sublayer for an independent trustworthiness plane, configured to process a trustworthiness data packet, wherein functions of the EIP sublayer further comprise encryption and decoding, and integrity protection and integrity verification; and
a TBP layer for an independent trustworthiness data plane, for trustworthiness service data transmission between the terminal, the RAN, and the core network, or between the RAN and the core network.

19. The RAN architecture according to claim 17 or 18, wherein the protocol layer of the air interface further comprises a layer 3, and the layer 3 further comprises the sublayer that supports the first function.

20. The RAN architecture according to any one of claims 1 to 19, wherein the RAN architecture further provides a trustworthiness function, and the trustworthiness function is decoupled from other functions of the RAN.

21. The RAN architecture according to any one of claims 1 to 20, wherein the RAN architecture provides the first function, a quality of service QoS mechanism of the RAN architecture comprises a QoS mechanism for the first function, the QoS mechanism for the first function comprises a QoS mechanism on a network side and a QoS mechanism on a terminal side, and the first function comprises one or more of computing, data, intelligence, and trustworthiness.

22. A terminal apparatus, comprising a control plane protocol stack and a data plane protocol stack, wherein the control plane protocol stack comprises one of the following:

the control plane protocol stack comprises a first sublayer, the first sublayer supports transmission of control signaling of a first function, and the first function comprises one or more of computing, data, intelligence, and trustworthiness; or
the control plane protocol stack comprises a first sublayer, the first sublayer supports transmission of control signaling of a first function and a routing function, and the first function comprises one or more of computing, data, intelligence, and trustworthiness; and
the data plane protocol stack of the first function supports an arbitrary routing mechanism.

23. A communication apparatus, comprising at least one processor, wherein the at least one processor is coupled to at least one memory, and the at least one processor is configured to execute a computer program or instructions stored in the at least one memory, so that the communication apparatus has a function of the RAN architecture according to any one of claims 1 to 21 or a function of the terminal apparatus according to claim 22.

24. A chip, comprising a processor and a communication interface, wherein the communication interface is configured to receive to-be-processed information and/or data, and send the to-be-processed information and/or data to the processor, and the processor is configured to process the to-be-processed information and/or data, so that a communication apparatus in which the chip is installed has a function of the RAN architecture according to any one of claims 1 to 21 or a function of the terminal apparatus according to claim 22.

25. A computer-readable storage medium, wherein the computer-readable storage medium stores computer instructions; and when the computer instructions are run on a computer, a function of the RAN architecture according to any one of claims 1 to 21 or a function of the terminal apparatus according to claim 22 is implemented.

26. A computer program product, wherein the computer program product comprises computer program code; and when the computer program code is run on a computer, a function of the RAN architecture according to any one of claims 1 to 21 or a function of the terminal apparatus according to claim 22 is implemented.

27. A wireless communication system, comprising the radio access network RAN architecture according to any one of claims 1 to 21 and/or the terminal apparatus according to claim 22.

FIG. 1

FIG. 2

FIG. 3

FIG. 4

EP 4 686 319 A1

**FIG. 5**

**FIG. 6**

FIG. 7

FIG. 8

6G RAN connectivity architecture (**Opt1: CP/UP separation**)

cNode: responsible for a connectivity-related control function

sNode: responsible for a connectivity-related data function

FIG. 9

6G RAN connectivity architecture (**opt2: CP/UP non-separation**)
- cNode: with no connectivity-related function
- sNode: with all connectivity-related functions

FIG. 10

CP for connectivity

UP for connectivity

| NAF | CF-C | CF-U |

cNode   sNode

UE

Opt1: CP/UP separation

CP for connectivity

UP for connectivity

| NAF | CF-C | CF-U |

cNode   sNode

UE

Opt2: CP/UP separation

**FIG. 11**

Inter-station negotiation

| NAF | CF-C | CF-U |

cNode   sNode

UE

**(a) Centralized negotiation by the cNode**

Inter-station negotiation

| NAF | CF-C | CF-U |

cNode   sNode

UE

**(b) Distributed negotiation between sNodes**

**FIG. 12**

| ... | NAF | CF-C | CF-U | 6GC

Signaling   S-c          S-s        Data

cNode   cNode   sNode   ...   sNode   6G-RAN

**FIG. 13**

FIG. 14

6G RAN task architecture (non-SBA based)
- cNode: newly adds a TA function for task
- sNode: TS function and TE function for task

Task related
Connectivity related
Connectivity+task related

FIG. 15

FIG. 16

119

Task architecture: TRC task signaling                    Task architecture: TRC task data

FIG. 17

Task architecture: T-NAS task signaling          Task architecture: T-NAS task data

FIG. 18

EP 4 686 319 A1

6G RAN task architecture (SBA based)

FIG. 19

6G RAN trustworthiness architecture (non-SBA based)
- cNode: newly adds a trustworthiness function (TWE/ TWG)
- sNode: newly adds a trustworthiness function (TWG)

Trustworthiness related
Connectivity related
Connectivity+ trustworthiness related

FIG. 20

Forward

| TEF | | CF |
| cNode/sNode |

Directly
connected

UE

**Trustworthiness architecture:**
**TEF−trustworthiness signaling**

| CF | | TGF |
| cNode/sNode |

UE

**Trustworthiness architecture:**
**TGF−trustworthiness signaling**

FIG. 21

6G RAN trustworthiness architecture (SBA based)

| TGF | TEF | ... |

6GC

| cNode | sNode | ... | sNode | RAN TEF | RAN TGF |

S-e    S-g

6G-RAN

FIG. 22

| cNode Connectivity – control plane | New feature (for example, task) |
|---|---|
| Inter-cell RRM | TA |
| RB control | CA |
| Mobility control | DC |
| Measurement control | HicC |
| SRB processing | TW engine |
| Scheduling | TW gear |

| sNode Connectivity – user plane | New feature |
|---|---|
| DRB processing | TS/TE |
| Scheduling | CS/CE |
| | DA |
| | HicA |
| | TWG |

**NAF/CF-C Connectivity**

NAS security

Idle-state mobility

UE IP address assignment

PDU session control

...

**CF-U Connectivity**

Mobility anchor

PDU processing

**TCF** Signaling (task, computing, and data)

| TA | CA | HicC |
|---|---|---|
| TS | CS | DC |

**TPF Data (task, computing, and data)**

| TE | CE | DA | HicA |
|---|---|---|---|

| TEF | TWE | TGF | TWG |
|---|---|---|---|

Internet (Internet)

6G RAN       6GC

FIG. 23

EP 4 686 319 A1

FIG. 24

**Manner 1**                                        **Manner 2**

FIG. 25

FIG. 26

FIG. 27

| UE | cNode | TCF |
|---|---|---|
| T-NAS | ← → | T-NAS |
| TRC | ← → TRC | |
| T-PDCP | ← → T-PDCP | |
| RLC | ← → RLC | |
| TRS | ← → TRS | |
| PHY | ← → PHY | |

**FIG. 28**

| UE | sNode | cNode | TCF |
|---|---|---|---|
| T-NAS | ← | → | T-NAS |
| TRC | ← → TRC | | |
| T-PDCP | ← → T-PDCP | | |
| RLC | ← → RLC | | |
| TRS | ← → TRS | | |
| PHY | ← → PHY | | |

**FIG. 29**

| UE | | cNode/sNode | | NAF/CF-C | TCF |
|---|---|---|---|---|---|

T-NAS ↔ T-NAS

NAS ↔ NAS

TRC ↔ TRC

T-PDCP ↔ T-PDCP

RLC ↔ RLC

TRS ↔ TRS

PHY ↔ PHY

**FIG. 30**

| UE | sNode | cNode | | TPF |
|---|---|---|---|---|

Task PDUs ↔ Task PDUs ↔ Task PDUs   Task PDUs ↔ Task PDUs

TRD ↔ TRD

T-SDAP ↔ T-SDAP

T-PDCP ↔ T-PDCP

RLC ↔ RLC

TRS ↔ TRS

PHY ↔ PHY

**FIG. 31**

## FIG. 32

UE

- NAS
- RRC
- PDCP
- RLC
- MAC
- PHY

cNode/sNode

- RRC
- PDCP
- RLC
- MAC
- PHY

NAF/CF-C

- NAS

## FIG. 33

UE

- Data PDUs
- TRD
- SDAP
- PDCP
- RLC
- MAC
- PHY

sNode

- TRD
- SDAP
- PDCP
- RLC
- MAC
- PHY

CF-U

- Data PDUs

## FIG. 34

UE

- RSCP
- T-PDCP
- RLC
- TRS
- PHY

sNode

- RSCP
- T-PDCP
- RLC
- TRS
- PHY

cNode

- RSCP
- RSCP

TPF

- RSCP

FIG. 35

FIG. 36

FIG. 37

**FIG. 38**

| User plane PDUs | Task PDUs | Task PDUs | Task PDUs | Task PDUs |
|---|---|---|---|---|
| GTP-U | GTP-U | RDMA | GTP-U | GTP-U |
| UDP | UDP/QUIC | IB transmission | SRv6 | Model/Data identifier |
| IP | IP | IP/IB network | | |
| Link layer | Link layer | Link layer | Link layer | Link layer |
| Physical layer | Physical layer | Physical layer | Physical layer | Physical layer |

**FIG. 39**

| Y1-AP | Task/Data PDUs | | Y2-AP | Task/Data PDUs |
|---|---|---|---|---|
| SCTP | GTP-U | | SCTP | GTP-U |
| IP | UDP | | IP | UDP |
| L2 | IP | | L2 | IP |
| L1 | L2 | | L1 | L2 |
| **Y1-C** | L1 | | **Y2-C** | L1 |
| | **Y1-U** | | | **Y2-U** |

**FIG. 40**            **FIG. 41**

Task PDUs

Y3-AP

| GTP-U |
|---|
| SCTP | UDP |
| IP | IP |
| L2 | L2 |
| L1 | L1 |

**Y3-C**     **Y3-U**

FIG. 42

Task PDUs

T2-AP

| GTP-U |
|---|
| SCTP | UDP |
| IP | IP |
| L2 | L2 |
| L1 | L1 |

**T2-C**     **T2-U**

FIG. 43

T3-AP

| SCTP |
|---|
| IP |
| L2 |
| L1 |

**T3-C**

FIG. 44

T4-AP

| SCTP |
|---|
| IP |
| L2 |
| L1 |

**T4-C**

FIG. 45

T5-AP

| SCTP |
|---|
| IP |
| L2 |
| L1 |

**T5-C**

FIG. 46

T6-AP

| SCTP |
|---|
| IP |
| L2 |
| L1 |

**T6-C**

FIG. 47

Task/Data PDUs

| GTP-U |
|---|
| UDP |
| IP |
| L2 |
| L1 |

**T7-U**

FIG. 48

T8-AP

TW PDUs

| SCTP | GTP-U | Se-AP |
|---|---|---|
| IP | UDP | HTTPS |
| L2 | IP | TCP |
| L1 | L2 | IPSec |
| | L1 | L2 |

**T8-C**    **T8-U**

FIG. 49

T9-AP

TW PDUs

| SCTP | GTP-U |
|---|---|
| IP | UDP |
| L2 | IP |
| L1 | L2 |
| | L1 |

**T9-C**    **T9-U**

FIG. 50

**FIG. 51**

| SC-C | SC-U |
|---|---|
| Sc-AP | Task /Data PDUs |
| HTTP | GTP-U |
| TCP | UDP |
| IP | IP |
| L2 | L2 |
| L1 | L1 |

**FIG. 52**

| SS-C | SS-U |
|---|---|
| Ss-AP | Task /Data PDUs |
| HTTP | GTP-U |
| TCP | UDP |
| IP | IP |
| L2 | L2 |
| L1 | L1 |

**FIG. 53**

| SE-C | SE-U |
|---|---|
| Se-AP | Task /Data PDUs |
| HTTP | GTP-U |
| TCP | UDP |
| IP | IP |
| L2 | L2 |
| L1 | L1 |

**FIG. 54**

| SG-C | SG-U |
|---|---|
| Sg-AP | Task /Data PDUs |
| HTTP | GTP-U |
| TCP | UDP |
| IP | IP |
| L2 | L2 |
| L1 | L1 |

UE

cNode

TRC ↔ TRC

T-PDCP ↔ T-PDCP

RLC ↔ RLC

TRS ↔ TRS

PHY ↔ PHY

FIG. 55

UE | sNode | | cNode

Task PDUs ↔ Task PDUs    Task PDUs ↔ Task PDUs

TRD ↔ TRD                                    Y3

T-SDAP ↔ T-SDAP    GTP-U ↔ GTP-U

T-PDCP ↔ T-PDCP    UDP ↔ UDP

RLC ↔ RLC    IP ↔ IP

TRS ↔ TRS    L2 ↔ L2

PHY ↔ PHY    L1 ↔ L1

FIG. 56

FIG. 57

FIG. 58

FIG. 59

FIG. 60

FIG. 61

FIG. 62

| UE | sNode | | cNode | | TPF |
|---|---|---|---|---|---|
| Task PDUs | | | | | Task PDUs |
| TRD | TRD | | | | |
| T-SDAP | T-SDAP | GTP-U | GTP-U | GTP-U | GTP-U |
| T-PDCP | T-PDCP | UDP | UDP | UDP | UDP |
| RLC | RLC | IP | IP | IP | IP |
| TRS | TRS | L2 | L2 | L2 | L2 |
| PHY | PHY | L1 | L1 | L1 | L1 |

T7

FIG. 63

| sNode | | cNode | | | TCF |
|---|---|---|---|---|---|
| Y1-AP | ←Y1→ | Y1-AP | T2-AP | ←T2→ | T2-AP |
| SCTP | ↔ | SCTP | SCTP | ↔ | SCTP |
| IP | ↔ | IP | IP | ↔ | IP |
| L2 | ↔ | L2 | L2 | ↔ | L2 |
| L1 | ↔ | L1 | L1 | ↔ | L1 |

## FIG. 64

| sNode | | cNode | | | TPF |
|---|---|---|---|---|---|
| Task PDUs | ←Y1→ | Task PDUs | Task PDUs | ←T2→ | Task PDUs |
| GTP-U | ↔ | GTP-U | GTP-U | ↔ | GTP-U |
| UDP | ↔ | UDP | UDP | ↔ | UDP |
| IP | ↔ | IP | IP | ↔ | IP |
| L2 | ↔ | L2 | L2 | ↔ | L2 |
| L1 | ↔ | L1 | L1 | ↔ | L1 |

## FIG. 65

FIG. 66

FIG. 67

| UE | | cNode/sNode | | | NAF/CF-C |
|---|---|---|---|---|---|
| NAS | | | | | NAS |
| RRC | | RRC | Tx-AP | T3/T4 | Tx-AP |
| PDCP | | PDCP | SCTP | T5/T6 | SCTP |
| RLC | | RLC | IP | | IP |
| MAC | | MAC | L2 | | L2 |
| PHY | | PHY | L1 | | L1 |

**FIG. 68**

| UE | | sNode | | | CF-U |
|---|---|---|---|---|---|
| Data PDUs | | | | | Data PDUs |
| TRD | | TRD | | | |
| SDAP | | SDAP | GTP-U | T7 | GTP-U |
| PDCP | | PDCP | UDP | | UDP |
| RLC | | RLC | IP | | IP |
| MAC | | MAC | L2 | | L2 |
| PHY | | PHY | L1 | | L1 |

**FIG. 69**

EP 4 686 319 A1

| UE | sNode | | cNode | | TPF |
|---|---|---|---|---|---|
| RSCP | RSCP | RSCP | RSCP | RSCP | RSCP |
| | | GTP-U | GTP-U | GTP-U | GTP-U |
| T-PDCP | T-PDCP | UDP | UDP | UDP | UDP |
| RLC | RLC | IP | IP | IP | IP |
| TRS | TRS | L2 | L2 | L2 | L2 |
| PHY | PHY | L1 | L1 | L1 | L1 |

FIG. 70

FIG. 71

FIG .72

FIG. 73

| UE | | cNode | | | TEF | |
|---|---|---|---|---|---|---|
| TUCP | ← | | | | → | TUCP |
| TURP | ← | TURP | | T8-AP | ← → | T8-AP |
| EIP | ← → | EIP | | SCTP | ← → | SCTP |
| RLC | ← → | RLC | | IP | ← → | IP |
| TRS | ← → | TRS | | L2 | ← → | L2 |
| PHY | ← → | PHY | | L1 | ← → | L1 |

| UE | | sNode | | | TEF | |
|---|---|---|---|---|---|---|
| TUCP | ← | | | | → | TUCP |
| TURP | ← → | TURP | | T9-AP | ← → | T9-AP |
| EIP | ← → | EIP | | SCTP | ← → | SCTP |
| RLC | ← → | RLC | | IP | ← → | IP |
| TRS | ← → | TRS | | L2 | ← → | L2 |
| PHY | ← → | PHY | | L1 | ← → | L1 |

FIG. 74

FIG. 75

FIG. 76

FIG. 77

FIG. 78

FIG. 79

| UE | | cNode |
|---|---|---|

Minimum SI (MIB)

*Periodical broadcast on a BCH*

Minimum SI (SIB1)

*Periodical broadcast on a DL-SCH*

Minimum SI (SIB1)

*Unicast on a DL-SCH*

Other SI (SIBn)

*Periodical broadcast on a DL-SCH*

Other SI (SIBn)

*On-demand broadcast on a DL-SCH*

Other SI (SIBn)

*Unicast on a DL-SCH*

Other SI (SIBn)

*On-demand unicast on a DL-SCH*

FIG. 80

**Solution 2**

Target base station

1. Handover request
2. Handover request acknowledgement
4. Connectivity anchor identifier

Source base station

Task anchor

3. Task anchor identifier

UE

**Solution 1**

Target base station

1. Handover request (task anchor identifier)
2. Handover request acknowledgement
3. Connectivity anchor identifier

Source base station

Task anchor

**Solution 3**

CF-C

1. Connectivity anchor identifier request
2. Connectivity anchor identifier

Task anchor

FIG. 81

| Header (task anchor identifier) | Payload (result) |
|---|---|

| Source base station | Target base station |
|---|---|

1. Handover request (task anchor identifier)

2. Handover request acknowledgement

Solution 1                           Solution 2

## FIG. 82

TS

{Task ID, config}

TE

Opt1: TS uncontrolled (TE full control)

TS

{Task ID, config, QoS priority}
{Task ID, config, CPU x%}

TE

Opt2: TS weak control (TE strong control)

TS

{Task ID (optional), config ,CPU slot}

TE

Opt3: TS strong control (TE weak control)

FIG. 83

Generate an AI use case

Generate an AI service and a QoAIS requirement

Generate an AI workflow and a task

AI use case description

AI training service

AI data service

AI verification service

QoAIS

QoAIS

QoAIS

AI workflow 1

AI workflow 2

AI workflow 3

AI workflow 4

Task

AI use case description

AI service

QoAIS

FIG. 84

FIG. 85

FIG. 86

AIaaS  QoAIS

Task control

Task control

Converged computing, algorithm, data, and connectivity, to provide an AI execution environment in a network

Resource layer  Computing  Algorithm  Data  Connectivity

Task execution

CN

FIG. 87

FIG. 88

FIG. 89

Because a TE may be deployed on a UE and various network element nodes, a task interface involves various 3GPP interfaces

① **Uu interface**

② **RAN terrestrial interface**

③ **Inter-CN interface**

FIG. 90

## Network AI management and orchestration

### Orchestration

| Registration | Monitoring |
|---|---|
| Resource scheduling | AI model management |

### AI use case management

| AI use case scheduling | User request | AI service scheduling | | AI task scheduling |
|---|---|---|---|---|
| AI use case decomposition | | AI service decomposition | QoIAS | AI task decomposition |

**Management plane (Management plane)**

↓ Task QoS

## Task anchor

### Task lifecycle management

| Task deployment | Task monitoring | Task mobility management | Task modification | Task deletion |
|---|---|---|---|---|

↓ Resource QoS

## Task scheduler

### Information collection

| Resource identification | QoS monitoring |
|---|---|

### Task scheduler

| QoS guarantee | Resource scheduling | Resource reallocation |
|---|---|---|

**Control plane (control plane)**

↑ Data          ↓ Instructions

### Task executor 1

TE functional layer

AI data processing

AI information interference ◄───►

Resource layer

| Connectivity | Computing |
|---|---|
| Data | Algorithm |

### Task executor 2

TE functional layer

AI training

AI information interference ◄─ ••• ─►

Resource layer

| Connectivity | Computing |
|---|---|
| Data | Algorithm |

### Task executor N

TE functional layer

AI training and inference

AI information interference

Resource layer

| Connectivity | Computing |
|---|---|
| Data | Algorithm |

**User plane (user plane)**

FIG. 91

FIG. 92

Trigger source | TA | TS | TE

Service workflow

Task deployment start

Step 1: Perform instantiation to obtain one or more tasks and perform allocation

Step 2.1: Create the TE, and deliver a task configuration

Step 2.2: Set up a task context

Step 2.3: Task start

Step 2.4: Task execution

Step 3.1: Computing request

Step 3.2: Task scheduling

Step 4: Sense that a task execution environment changes

Step 5: Configuration adjustment

Task execution control

Step 6.1: Task execution complete

Step 7.1: Result feedback

Step 7.2: State feedback

Task completion

Step 8.1: Task context deletion

Step 8.2: TE deletion, and computing power reclamation

FIG. 93

FIG. 94

FIG. 95

EP 4 686 319 A1

AI task configurations of a UE in different states

FIG. 96

FIG. 97

171

FIG. 98

FIG. 99

FIG. 100

Task anchor — Executor

(Single-point) task configuration

Single-point AI task

Task anchor — Executor 1 — Executor 2

(Collaborative) task configuration

Collaborative interaction (such as an output or a gradient)

Collaborative AI task

FIG. 101

Task anchor — Executor 1 — Executor 2

1. Simultaneous configuration (no sequence)

(Collaborative) task configuration

Successful

Failed

2. Configuration rollback

(Collaborative) task deletion

Successful

FIG. 102

Task anchor — Executor 1 — Executor 2

1. Simultaneous configuration (in sequence)

(Collaborative) task configuration

Successful

Failed

2. Configuration rollback (optional)

(Collaborative) task deletion

Successful

FIG. 103

FIG. 104

For example,
CU/C-NB

For example,
UP and DU

For example,
UE

| Task anchor | Executor 1 | Executor 2 |

(Collaborative) task configuration

Collaborative interaction (such as an output or a gradient)

CU-CP

Path 1

CU-UP

Path 2

Path 3

DU

UE

Note: Alternatively, the executor 1 performs configuration for the executor 2

(1) Control plane

NAS — NAS

RRC — Path 2 — RRC

PDCP — PDCP

RLC — RLC

MAC — Path 1 — MAC

PHY — PHY

UE    DU    CU-CP    AMF

(2) User plane

IP/GTPU — IP/GTPU

SDAP — SDAP

PDCP — Path 3 — PDCP

RLC — RLC

MAC — MAC

PHY — PHY

UE    DU    CU-UP    UPF

EP 4 686 319 A1

FIG. 105

Scenario 1: centralized

Scenario 2: distributed

Scenario 3: federated learning

Scenario 4: joint inference

FIG. 106

Opt1: Task data is carried by an SRB
(T-SRB)

| TRC |
|---|
| PDCP |
| RLC |
| TRS |
| PHY |

① Task data
(T-SRB)

| TRC |
|---|
| PDCP |
| RLC |
| TRS |
| PHY |

Opt2: Task data is carried by a DRB
(T-DRB)

| TRD |
|---|
| SDAP |
| PDCP |
| RLC |
| TRS |
| PHY |

② Task data
(T-DRB)

| TRD |
|---|
| SDAP |
| PDCP |
| RLC |
| TRS |
| PHY |

(1) SRB
(2) DRB

FIG. 107

FIG. 108

Task   Data

1 2 3 4

1 2

3
4 → UPF

UE          xNB

DRB type

| R/F/LCID/L subheader | MAC SDU | | R/LCID subheader | Fixed length MAC CE | | R/F/LCID/L subheader | Variable length MAC CE |
|---|---|---|---|---|---|---|---|

| MAC subPDU including a MAC SDU | MAC subPDU including a MAC SDU | ... | MAC subPDU including a MAC CE 1 | MAC subPDU including a MAC CE 2 | MAC subPDU including padding (optional) |
|---|---|---|---|---|---|

## FIG. 109

| TE | TS | TA |
|---|---|---|

A task execution environment changes

1. When identifying, based on a task context, that the change is related to a task and affects a topology relationship, notify the TA

2. Environmental change information (task ID and cause of change)

3. Make a decision based on the cause of change, modify a configuration, and update the topology

4. Task configuration delivery

## FIG. 110

FIG. 111

FIG. 112

FIG. 113

FIG. 114

**Opt1: No TE switching**

TE          TA

**Opt2: TE switching**

TA+TE

Source cell

6. Data forwarding (data+computing context)

Target cell

2. HO prep (remaining computing amount)

3. HO resp (whether to switch an executor)

1. A3 event

4. HO CMD

5. UE HO

## FIG. 115

Source cell

2. HO prep (old task configuration)

Target cell

3. HO resp (new task configuration)

4. HO CMD (new task configuration @delta)

1. A3 event

5. UE HO

Serving cell

Neighboring cell task configuration

Neighboring cell

SIB broadcast (neighboring cell task configuration)

## FIG. 116

Solution 1: (New task) AI model delivery in an HO scenario

Solution 2: (New task) AI model delivery in an HO scenario

FIG. 117

Serving cell        Neighboring cell

Neighboring cell task configuration

SIB broadcast (neighboring cell task configuration)

Solution 3: (New task) neighboring cell AI model broadcast

## FIG. 118

Serving cell    Neighboring cell

Neighboring cell area ID

SIB broadcast (neighboring cell area ID)

Solution 4a: Neighboring cell area ID broadcast

Serving cell    Neighboring cell

Neighboring cell task configuration request

Neighboring cell task configuration

SIB broadcast (neighboring cell task configuration)

Solution 4b: Neighboring cell AI model broadcast

## FIG. 119

Serving cell      Neighboring cell

Area ID + neighboring cell task configuration

SIB broadcast (area ID + neighboring cell task configuration (optional))

Solution 5: Neighboring cell AI model broadcast

## FIG. 120

6G: Control and data separation

Common control channel

| MIB | SIB | SSB | Paging | RRC | | Data | | Data |

Common control carrier: sub 3G

Data carrier 1: sub 6G

Data carrier 2: millimeter wave

FIG. 121

High-frequency carrier (short TTI)

Low-frequency carrier (long TTI)

A low frequency assists a high frequency, to reduce energy consumption on the high frequency

OFF

Data plane

Control plane, providing a beam (beam information)

FIG. 122

cNode

Dynamic
interruption-free
inter-RAT switching
and aggregation at a
physical layer

NR RRC
connectivity

6G RRC
connectivity

NR physical
air interface

6G physical
air interface

sNode

sNode

**FIG. 123**

| PDCP |
|---|

DC: PDCP offloading

| RLC |
|---|

| MAC (only one MAC) |
|---|

CA: MAC layer offloading

| PHY | PHY |
|---|---|

A cNode enables L1 joint processing

**FIG. 124**

User plane
Control plane

FIG. 125

1. Low-frequency TRP +
High-frequency TRP

2. Heterogeneous network (macro
base station and pico base station)

FIG. 126

FIG. 127

FIG. 128

Improve spectral efficiency of high-
frequency MU-MIMO

## FIG. 129

## FIG. 130

| Type ID | Utilization ratio |
|---------|-------------------|

Short TRS CE

| Type7 | Type6 | Type5 | Type4 | Type3 | Type2 | Type1 | Type0 |
|-------|-------|-------|-------|-------|-------|-------|-------|
| Utilization ratio 0 | | | | | | | |
| Utilization ratio 1 | | | | | | | |

| Utilization ratio 7 |
|---------------------|

Long TRS CE

## FIG. 131

FIG. 132

EP 4 686 319 A1

CPF

sNode

UE

| RCSP |
| GTP-U |
| UDP |
| IP |
| DLL |
| PhyL |

| RCSP | RCSP |
| PDCP | GTP-U |
| RLC | UDP |
| MAC | IP |
| PHY | DLL |
| | PhyL |

| RCSP |
| PDCP |
| RLC |
| MAC |
| PHY |

(c)

sNode/CPF

sNode

| RCSP |
| GTP-U |
| UDP |
| IP |
| DLL |
| PhyL |

| RCSP |
| GTP-U |
| UDP |
| IP |
| DLL |
| PhyL |

(b)

sNode

UE

| RCSP |
| PDCP |
| RLC |
| MAC |
| PHY |

| RCSP |
| PDCP |
| RLC |
| MAC |
| PHY |

(a)

FIG. 133

FIG. 134

Network AI, third party application
(network AI, 3rd party applications)

**Data orchestration**

Interface to application
(interface to application)

Request and translation
(Req. translation)

Interface to network service
orchestration
(interface to network
service orchestration)

CG DA orchestrator
(CG DA orchestrator)

DPTR

**Data controller**

FG DA orchestrator
(FG DA orchestrator)

DA management

Trust anchor client

DPT
update/
push

DA
orchestration

DA
capability
reporting

**Data agent**

Data
protection
technology

API

Analytics

Data storage

Preprocessing

Data collection

DA
controller

AAA

immutable
records

**Trust anchor**

Authentication
(authentication)

Authorization
(authorization)

Access control
(access control)

Auditability

Interface to
trustworthiness
enablement (for
example, BC)
Interface to
trustworthiness
enablement (e.g. BC)

Data repository function

FIG. 135

Network AI, third party application...

DA topology instance
(DA topology instance)

Another DA integrated with the NF, or independent DA serving as a relay or an aggregator

Trust anchor

Trust anchor agent

Analytics

Service API

Privacy and security

Data pre-processing

Data storage

Data capturing

DA controller

Service logic of the NF

DO agent

DO

NF with a built-in agent
(NF with built-in data agent)

FIG. 136

FIG. 137

FIG. 138

FIG. 139

| 7 | 6 | 5 | 4 | 3 | 2 | 1 | 0 |
|---|---|---|---|---|---|---|---|
| D/C | S | Reserved | | Protocol ID (0/2) | | | |
| DS ID | | | | | | | |
| DS ID (cont.) | | | | | | | |
| DP ID | | | | | | | |
| DP ID (cont.) | | | | | | | |
| SequenceNumber (1st octet) | | | | | | | |
| SequenceNumber (2st octet) | | | | | | | |
| SequenceNumber (3st octet) | | | | | | | |
| Length | | | | | | | |
| Length (cont.) | | | | | | | |
| Data | | | | | | | |
| ... | | | | | | | |

FIG. 140

| 7 | 6 | 5 | 4 | 3 | 2 | 1 | 0 |
|---|---|---|---|---|---|---|---|
| D/C | S | Reserved | | Protocol ID (1) | | | |
| Header length | | | | | | | |
| DS ID | | | | | | | |
| DS ID (cont.) | | | | | | | |
| DP ID | | | | | | | |
| DP ID (cont.) | | | | | | | |
| SequenceNumber (1st octet) | | | | | | | |
| SequenceNumber (2st octet) | | | | | | | |
| SequenceNumber (3st octet) | | | | | | | |
| Route counts | | | | | | | |
| Route type | | | | | | | |
| Next DA ID1 | | | | | | | |
| Next DA ID1 (cont.) | | | | | | | |
| Route type | | | | | | | |
| Next DA counts ( | | | | | | | |
| Next DA ID2 | | | | | | | |
| Next DA ID2 (cont.) | | | | | | | |
| Next DA ID3 | | | | | | | |
| Next DA ID3 (cont.) | | | | | | | |
| ... | | | | | | | |
| Data length | | | | | | | |
| Data length (cont.) | | | | | | | |
| Data | | | | | | | |
| ... | | | | | | | |

FIG. 141

FIG. 142

FIG. 143

FIG. 144

**Hic controller**

Collaboration instance management

Hic agent management

★ Collaboration pattern configuration

QoS

★ Real-time optimizer

Model quantization

Dropout descriptor

Importance sampling

xxx

HicA capability reporting

HicA selection

Mode execution and configuration

Performance reporting

Optimization configuration

**Hic agent**

Hic information input process

Hic information output process

AI/ML training/inference

Performance monitoring

FIG. 145

Terminal of a
collaboration
instance

Central node of the
collaboration instance (for
example, a federal
parameter server)

Network
element of the
collaboration
instance

FIG. 146

FIG. 147

◉ Dropout model parameter
◎ Normal model parameter

FIG. 148

FIG. 149

FIG. 150

FIG. 151

FIG. 152

Application (out of consideration)

CN (decision maker)

AN (pipeline)

AN (pipeline)

Terminal/ User (notified)

Terminal/ User (notified)

Terminal/ User (notified)

Terminal/ User (notified)

Terminal/ User (notified)

Application (participant)

Terminal/User (participant)

CN (participant)

AN (participant)

Equalization (network) (loading capabilities for all functions: loading capabilities for all functions)

User requirement

Intelligence

Configuration

Equalization (endpoint) (making an endpoint decision)

FIG. 153

EP 4 686 319 A1

| UE | cNode | sNode | NAF | CF-C |
|----|-------|-------|-----|------|

Idle state

1. RRCSetupReq

2. RRCSetupResp

CM_Idle    Connected state

2a. RRCSetupComp

*3. INITIAL UE MESSAGE*    *3b. UE relocate*

CM_Conn    Connected state

4a. DL Info Transfer    *4. DOWNLINK NAS TRANSPORT*

5. UL Info Transfer    *5a. UL NAS TRANSPORT*

7. Security Config    *6. INITIAL CONTEXT SETUP REQUEST*

8. RRC Reconfig    *9. INITIAL CONTEXT SETUP RESPONSE*

*9a. sNode address notification*

*10. sNode selection*

*12. PDU session setup*

*11. UE Context update*

*13. DATA TRANSFER*

*11. UE Context update*

FIG. 154

FIG. 155

FIG. 156

FIG. 157

FIG. 158

1000

Communication apparatus

1001

Processing module

1002

Communication module

## FIG. 159

1100

Communication apparatus

1130

Communication interface

1110

Processor

1140

1120

Memory

## FIG. 160

## INTERNATIONAL SEARCH REPORT

| International application No. |
| --- |
| **PCT/CN2023/083141** |

**A. CLASSIFICATION OF SUBJECT MATTER**

H04W84/02(2009.01)i; H04W84/20(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, 3GPP: RAN, 簇, 协同, 调度, 任务, 节点, SBA, cluster, node, cooperate, scheduler

**C. DOCUMENTS CONSIDERED TO BE RELEVANT**

| Category* | Citation of document, with indication, where appropriate, of the relevant passages | Relevant to claim No. |
| --- | --- | --- |
| Y | CN 109792613 A (HUAWEI TECHNOLOGIES CO., LTD.) 21 May 2019 (2019-05-21) description, paragraphs [0001] and [0024]-[0031] | 1, 23-27 |
| Y | CN 115835339 A (CHINA MOBILE COMMUNICATION LTD., RESEARCH INSTITUTE et al.) 21 March 2023 (2023-03-21) description, paragraphs [0003] and [0036], and figure 5 | 1, 23-27 |
| A | CN 107277824 A (XIDIAN UNIVERSITY et al.) 20 October 2017 (2017-10-20) entire document | 1-27 |
| A | CN 109417829 A (TELEFONAKTIEBOLAGET LM ERICSSON (PUBL)) 01 March 2019 (2019-03-01) entire document | 1-27 |
| A | CN 113906716 A (TELEFONAKTIEBOLAGET LM ERICSSON (PUBL)) 07 January 2022 (2022-01-07) entire document | 1-27 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 October 2023** | **12 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083141**

| Patent document cited in search report | | | Publication date (day/month/year) | Patent family member(s) | | | Publication date (day/month/year) |
|---|---|---|---|---|---|---|---|
| CN | 109792613 | A | 21 May 2019 | WO | 2018059680 | A1 | 05 April 2018 |
| | | | | US | 2019223088 | A1 | 18 July 2019 |
| | | | | US | 10999783 | B2 | 04 May 2021 |
| | | | | EP | 3510805 | A1 | 17 July 2019 |
| | | | | EP | 3510805 | B1 | 29 July 2020 |
| CN | 115835339 | A | 21 March 2023 | None | | | |
| CN | 107277824 | A | 20 October 2017 | CN | 107277824 | B | 26 January 2021 |
| CN | 109417829 | A | 01 March 2019 | US | 2018242392 | A1 | 23 August 2018 |
| | | | | US | 10506663 | B2 | 10 December 2019 |
| | | | | EP | 3476179 | A1 | 01 May 2019 |
| | | | | EP | 3476179 | A4 | 20 November 2019 |
| | | | | EP | 3476179 | B1 | 15 September 2021 |
| | | | | WO | 2018000185 | A1 | 04 January 2018 |
| CN | 113906716 | A | 07 January 2022 | WO | 2020245835 | A1 | 10 December 2020 |
| | | | | EP | 3981106 | A1 | 13 April 2022 |
| | | | | US | 2022166848 | A1 | 26 May 2022 |
| | | | | EP | 3981106 | A4 | 21 December 2022 |

Form PCT/ISA/210 (patent family annex) (July 2022)